# EUROPÄISCHE PATENTSCHRIFT

(11) **EP 3 102 028 B1**
(45) Veröffentlichungstag und Bekanntmachung des Hinweises auf die Patenterteilung: **21.08.2024**
(21) Anmeldenummer: 15702503.2
(22) Anmeldetag: 05.02.2015
(51) Int. Cl.: A01K 31/00, A01K 31/07, A01K 45/00, B65D 85/50

(54) **EINHEIT AUS MASTHÄHNCHENKONTAINERN**
UNIT OF BROILER CONTAINERS
UNITÉ DE CONTENEURS DE POULET

(30) Priorität: 05.02.2014 DK 201470061; 05.02.2014 DK 201470064; 05.02.2014 DK 201470062; 05.02.2014 DK 201470060; 05.02.2014 DK 201470063; 05.02.2014 DK 201470058
(43) Veröffentlichungstag der Anmeldung: 14.12.2016
(60) Teilanmeldung: 18171003.9
(73) Patentinhaber: BAADER Food Systems Denmark A/S, 8380 Trige (DK)
(72) Erfinder: THRANE, Uffe, 8450 Hammel (DK)
(74) Vertreter: Stork Bamberger Patentanwälte PartmbB
(86) Internationale Anmeldenummer: PCT/EP2015/052398
(87) Internationale Veröffentlichungsnummer: WO 2015/118062

(56) Entgegenhaltungen:
- CN-U- 201 856 956
- CN-Y- 2 344 338
- CN-Y- 2 871 426
- CN-Y- 2 887 785
- KR-A- 20120 032 717
- US-A- 1 619 895
- US-A- 4 454 837
- US-B1- 6 581 544

## Beschreibung

Die vorliegende Erfindung betrifft eine Einheit (im Folgenden auch Transporteinheit oder Masthähnchentransporteinheit genannt), ausgebildet und eingerichtet zum Aufnehmen und Halten von lebenden Masthähnchen während der Aufzucht und/oder während des Transports der Masthähnchen zum Schlachthaus und/oder während des Wartens der lebenden Masthähnchen vor der Verarbeitung im Bereich des Schlachthauses, umfassend mindestens zwei Masthähnchencontainer mit einem Boden und Seitenwänden, die ein Innenvolumen definieren, der zum Aufnehmen und Halten von wenigstens fünf lebenden Masthähnchen ausgebildet und eingerichtet ist, wobei die Masthähnchencontainer stapelfähig mit Masthähnchencontainern gleicher Bauart ausgebildet und eingerichtet sind und wenigstens eine Belüftungsöffnung und wenigstens eine Entlüftungsöffnung aufweisen.

Masthähnchencontainer (im Folgenden auch Masthähnchentransportcontainer, Transportcontainer oder Container genannt) dieses Typs sind beispielsweise aus der GB 2 129 672 A und der EP 0 867 113 A2 bekannt und haben beim Transport von Geflügel von Farmen zu Schlachthäusern sehr breite Anwendung gefunden. Die CN 2 887 785 Y, CN 2 344 338 Y, CN 2 871 426 Y, CN 201 856 956 U und die US 2 900 955 A beschreiben auch Container zum Aufnehmen von Geflügel und weisen mindestens eine Belüftungssäule auf, die durch das Innenvolumen verläuft. Die US 1 619 895 A befasst sich mit einer Box zum Transportieren von Tieren mit horizontal verlaufenden Lüftungsschlitzen.

Masthähnchen können in Masthähnchentransporteinheiten wie in der WO 2011/010329 und der US 6,382,141 beschrieben von Farmen zu Schlachthäusern transportiert werden, wobei den Masthähnchen während des Transports Frischluft durch natürliche Belüftung zugeführt wird, die durch die Bewegung des Anhängers bewirkt wird, und es kann Belüftungsluft zur Außenseite der Masthähnchentransporteinheiten geführt werden, wenn der Anhänger stillsteht.

Masthähnchen sind schlachtfertige Hühner oder Hennen oder Truthähne, die gezüchtet werden, um zum Schlachten für die Lieferung von Fleisch an Verbraucher bereit zu sein, und sie haben ein vollständig entwickeltes Gefieder und ein erhebliches Gewicht von wenigstens 1,6 kg pro Masthähnchen.

Eine Übersicht über derzeitige Praktiken wird von der Europäischen Lebensmittelsicherheitsbehörde in dem wissenschaftlichen Bericht "Overview on current practices of poultry slaughtering and poultry meat inspection" von Dr. Ulrich Löhren, Supporting Publications 2012: EN-298, gegeben. In dem Bericht werden die Transportcontainer als Kisten bezeichnet und sind von Linern, bei denen es sich um am Lkw befestigte Käfige handelt, die nicht abgeladen werden können, und von Containersystemen, die Transporteinheiten mit mehreren Böden in einem festen Rahmen sind, wie beispielsweise in der EP 0 384 530 A1 beschrieben, zu unterscheiden. Laut dem Bericht erfolgen 30 % der derzeitigen (Jahr 2012) Masthähnchentransporte in den für die vorliegende Erfindung relevanten Masthähnchentransportcontainern, und 70 % erfolgen in Containersystemen.

Wie in der GB 2 129 672 A beschrieben, verlangen europäische Vorschriften Masthähnchencontainer mit festen Böden, deren Hauptzweck darin besteht, zu verhindern, dass Vogelausscheidungen von Containern, die sich oben in einem Containerstapel befinden, auf Vögel in Containern darunter herabfallen. Einheiten, umfassend mindestens zwei Masthähnchencontainer, sind beispielsweise aus der EP 1 330 952 B1 und der EP 0 384 530 A1 bekannt und haben beim Transport von Geflügel von Farmen zu Schlachthäusern sehr breite Anwendung gefunden und stellen eine sehr hohe Transportkapazität bereit. Die Masthähnchentransportcontainer beruhen darauf, dass sie in Rahmensystemen wie beispielsweise in der EP 1 330 952 B1 beschrieben platziert und während des Transports darin gehalten werden. Auch diese Rahmen müssen gereinigt werden und erfordern aufgrund ihrer Größe recht große Waschmaschinen.

Transporteinheiten mit mehreren Böden werden durch Füllen eines Bodens zurzeit beginnend mit dem unteren Boden gefüllt. Ein Beispiel hierfür ist in der EP 0 384 530 A1 beschrieben, wo ein Teil der oberen Böden zur Seite geschoben wird, um Zugang zum unteren Boden zu erhalten. Nach dem Beladen des unteren Bodens wird der Boden darüber geschlossen und der Ladevorgang wird auf diesem Boden fortgesetzt, usw., bis die Transporteinheit fertig beladen ist. Das Verschieben von Bodenbereichen zum Öffnen und Schließen von Zugang ist einfach und kann schnell und sicher erfolgen. Dies wird als einer der Faktoren angesehen, die den umfangreichen Einsatz von Transporteinheiten für den Masthähnchentransport erklären. Systeme zum Einfangen und Füttern von Masthähnchen sind weit verbreitet, da sie ein mechanisches Einfangen der Masthähnchen ermöglichen. Ein Masthähnchenfänger ist in der US 4,508,062 beschrieben, und solche Systeme liefern derzeit Masthähnchen mit Raten von 50 pro Minute bis zu mehr als 200 pro Minute. Das Laden von Masthähnchen in die Transporteinheiten erfolgt somit schnell, und ein leichter und sicherer Betrieb der Transporteinheit beim Beladen ist ein zu berücksichtigender Faktor. Die US 6 581 544 B1 beschreibt einen Transportanhänger mit einem Belüftungssystem, das Ventilatoren umfasst, mittels denen der Transportraum des Transportanhängers belüftet werden kann.

Diese Vorschriften wurden jedoch aufgehoben, da es sich als praktisch unmöglich erwiesen hat, eine ausreichende Belüftung von Masthähnchentransportcontainern mit festen Böden zu erzielen. Das Problem von Vogelausscheidungen ist zwar sehr relevant, aber eine unzureichende Belüftung führt nicht nur dazu, dass eine größere Zahl von Vögeln während des Transports verendet, sondern auch zu verminderter Fleischqualität aufgrund der erhöhten Stressniveaus in den lebenden Vögeln. Die Zahl der Vögel, die tot am Schlachthaus ankommen (DOA = *dead on arrival*), und die Häufigkeit von so genanntem PSE-Fleisch (*pale, soft exudative* = blass, weich, nässend), das ein Anzeichen von Stress ist, sind weithin benutzte Parameter bei der Beurteilung der Effizienz des Masthähnchentransports.

Öffnungen in den Böden der Masthähnchentransportcontainer sind andererseits mit dem Risiko behaftet, dass sich Vögel darin verfangen, besonders bei längeren Transporten, bei denen beispielsweise ein in eine Öffnung vorstehender Zeh anschwellen und den Zeh am Boden einklemmen kann.

Selbst bei Masthähnchentransportcontainern bzw. bei aus mehreren Container gebildeten Einheiten mit einer sehr großen Zahl von Öffnungen sowohl in den Böden als auch in den Seitenwänden hat es sich als schwierig erwiesen, eine ausreichende Belüftung zu gewährleisten, besonders bei warmen Witterungsbedingungen, selbst wenn der Transport während der Nacht oder in den frühen Morgenstunden durchgeführt wird.

Wenn ein Anhänger oder Lkw nicht fährt, z.B. wenn der die Masthähnchentransportcontainer oder Stapel davon transportierende Lkw zum Stillstand kommt, z.B. bei einem Verkehrsstau, dann nimmt die natürliche Belüftung ab, weil der beim Fahren entstehende Fahrtwind wegfällt. Um eine zuverlässigere Belüftung zu erzielen, wurden Anhänger oder Lkws mit mechanischer Belüftung versehen, indem Ventilatoren am Ende des Fahrzeugs platziert wurden, die einen Gang belüften, oder indem an der Seite des Fahrzeugs Ventilatoren platziert werden, die quer über das Fahrzeug belüften. Trotz dieser Bemühungen ist der Prozentanteil an qualitätsgemindertem Fleisch aufgrund von stressbezogenen Unvollkommenheiten wie PSE immer noch erheblich, und das Wohlergehen der Masthähnchen beim Transport ist ein Anliegen.

Sowohl die Masthähnchentransportcontainer als auch die Containersysteme sind ausgezeichnet, wenn man nur den Transport von der Farm zum Schlachthaus betrachtet, aber die Erfahrung hat gezeigt, dass sie sich relativ schwer reinigen lassen, was zu einem Risiko von Kreuzinfektionen zwischen Farmen führt, wenn Masthähnchencontainer oder Containersysteme für den Gebrauch in einem anderen Transportzyklus zurückgeführt werden. Um diesem potentiellen biologischen Sicherheitsproblem entgegenzuwirken, sind die meisten Schlachthäuser mit fortschrittlichen Reinigungssystemen ausgestattet, einschließlich hoch spezialisierter Containerwaschvorrichtungen und häufig auch Einweichtanks.

Sowohl die Rahmen als solche als auch insbesondere die Masthähnchentransportcontainer können ein besonderes Kreuzinfektionsproblem mit sich bringen, das Schmutzansammlungen in der Bodenstruktur beinhaltet, da sie gewöhnlich direkt auf den Boden des Stalls abgesetzt werden, der von Natur aus mit Vogelausscheidungen kontaminiert ist. Die Verstärkungsrippen am Boden der Masthähnchentransportcontainer verlaufen typischerweise in sich kreuzenden Mustern, was zur Folge hat, dass ein Boden viele Reihen von kubischen Hohlräumen hat, in denen Schmutz sich ansammeln und an den Seiten der Rippen haften kann. Die Rahmen weisen Aussparungen für die Gabeln eines Gabelstaplers auf. Beim Fahren mit dem Rahmen im Stall unmittelbar vor dem Laden auf den Transportanhänger kommt es vor, dass Schmutz vom Boden in die Aussparungen geschabt und zusammen mit dem Rahmen mit den die lebenden Masthähnchen tragenden Masthähnchentransportcontainern auf den Anhänger übertragen wird. Eine solche Schmutzansammlung kann dazu führen, dass eine große Menge Schmutz auf den Anhänger geladen wird.

Die Erfindung betrifft auch eine Anordnung, umfassend mindestens eine Einheit nach einem der Ansprüche 1 bis 27 sowie mindestens ein Belüftungssystem.

Die Erfindung betrifft auch einen Transportanhänger, ausgebildet und eingerichtet zum Transportieren von Einheiten zum Aufnehmen und Halten von lebenden Masthähnchen zu einem Schlachthaus.

Die Tragfähigkeit eines Transportanhängers ist typischerweise auf etwa 24 t für einen Standardanhänger begrenzt, und die Ladekapazität ist höhenmäßig typischerweise auf 2,7 m für einen Standardanhänger begrenzt. Andere Grenzen können für spezielle Anhängergrößen gelten, wie z.B. für Anhänger mit doppelachsigen Fahrgestellen oder für Anhänger mit zusätzlichen Fahrgestellen, extragroße Lkws usw. Vom Anhängertyp unabhängig ist jedoch das Problem mit derzeitigen Masthähnchentransportanhängern und Masthähnchentransportcontainersystemen, nämlich dass sich Schmutz ansammelt und Schmutzansammlungen in den Bodenbereichen auf den Anhänger getragen werden.

Die Erfindung betrifft auch ein Verfahren zum Belüften lebender Masthähnchen während der Aufzucht und/oder während des Transports der Masthähnchen zum Schlachthaus und/oder während des Wartens der lebenden Masthähnchen vor der Verarbeitung im Bereich des Schlachthauses. Die Masthähnchentransporteinheiten werden auf der Farm mit Masthähnchen beladen und werden dann auf den Masthähnchentransportanhänger geladen und zum Schlachthaus transportiert, wo die Masthähnchentransporteinheiten vor dem Verarbeiten der Masthähnchen vom Anhänger abgeladen werden. Die Masthähnchentransporteinheiten mit Masthähnchen können abgeladen und am Schlachthaus gelassen werden, und es können zum Beispiel leere Masthähnchentransporteinheiten auf den Anhänger geladen werden, der dann für eine erneute Beladung mit Masthähnchen zur Farm gefahren wird.

Wenn ein Anhänger oder Lkw nicht fährt, z.B. wenn der die Masthähnchentransporteinheiten transportierende Lkw zum Stillstand kommt, z.B. bei einem Verkehrsstau, nimmt die natürliche Belüftung ab, weil der beim Fahren entstehende Geschwindigkeitswind wegfällt. Um eine zuverlässigere Belüftung zu erzielen, wurden Anhänger oder Lkws mit mechanischer Belüftung versehen, indem Ventilatoren am Ende des Fahrzeugs platziert wurden, die einen Gang belüften, oder indem an der Seite des Fahrzeugs Ventilatoren platziert werden, die quer über das Fahrzeug belüften.

Die Erfindung betrifft auch ein Geflügelschlachthaus mit einem Geflügelwartestellbereich für lebendes Geflügel.

Wartestallbereiche werden zum Unterbringen des Geflügels nach dem Abladen von dem sie zum Schlachthaus transportierenden Fahrzeug bis zu ihrer Aufnahme im Verarbeitungssystem des Schlachthauses benutzt. Der Wartestallbereich dient als Puffer und toleriert durch Verkehr und andere Umstände bedingte Transportverzögerungen. Verschiedene Länder haben unterschiedliche Stallungsanforderungen, aber Vorschriften verlangen im Allgemeinen, dass jedes Tier vor widrigen Witterungsbedingungen geschützt ist und dass jedes Tier, das hohen Temperaturen bei feuchter Witterung ausgesetzt ist, mit geeigneten Mitteln gekühlt wird. Um diese Anforderungen zu erfüllen und zu verhindern, dass die Stallungszeit die Stressniveaus des Geflügels erhöht, was die Fleischqualität negativ beeinflussen könnte, haben viele große Schlachthäuser stark in große Wartestallgebäude investiert. Diese Gebäude sind klimatisiert und häufig auch mit speziellen Beleuchtungs- und Fördersystemen zum Transportieren der Geflügeltransporteinheit ausgestattet, um die Zuführung des Geflügels zu Betäubungs- und Schlachtabschnitten des Schlachthauses zu optimieren. Dies funktioniert sehr gut, ist aber mit erheblichen Investitions- und Betriebskosten verbunden.

Es ist eine Aufgabe der vorliegenden Erfindung, eine Einheit aus mindestens zwei Masthähnchencontainern bereitzustellen, die das Halten der Masthähnchen insbesondere beim Transport mit weniger Stress und verbesserter Hygiene für die Masthähnchen zulässt, um das Wohlergehen der Masthähnchen und die resultierende Qualität des Fleischs zu verbessern. Die Aufgabe besteht weiterhin darin, ein entsprechendes Verfahren vorzuschlagen.

Im Hinblick darauf ist die Einheit gemäß der vorliegenden Erfindung dadurch gekennzeichnet, dass jeder Masthähnchencontainer wenigstens ein Segment einer Belüftungs- oder Entlüftungssäule umfasst, das durch das Innenvolumen verläuft und wenigstens eine Belüftungs- oder Entlüftungsöffnung mit Abstand zu den Seitenwänden aufweist, wobei jedes Segment der Belüftungs- oder Entlüftungssäule zum Anschluss an korrespondierende Segmente von Masthähnchencontainern gleicher Bauart sowie zum Anschluss an ein aktives Belüftungssystem ausgebildet und eingerichtet ist, wobei korrespondierende Segmente der Belüftungs- oder Entlüftungssäulen der die Einheit bildenden und aneinander und/oder übereinander liegenden Masthähnchencontainer jeweils gemeinsame und durch alle Innenvolumina verlaufenden Belüftungs- oder Entlüftungssäulen bilden, und dass die Einheit weiterhin eine Palette zur Aufnahme des aus mindestens zwei Masthähnchencontainer gebildeten Stapels sowie ein Abdeckelement zum Schließen des im Stapel am weitest oben befindlichen Innenvolumens umfasst, wobei die Palette Adapter in Form von Belüftungs- oder Entlüftungssäulenabschnitten umfasst, die zum Verbinden der Belüftungs- oder Entlüftungssäulen zweier übereinander angeordneter Einheiten ausgebildet und eingerichtet sind.

Der Begriff "Segment" im Zusammenhang mit der Belüftungs- oder Entlüftungssäule bedeutet, dass es sich um einen längsaxialen Abschnitt einer Säule oder um einen Querschnittsabschnitt einer Säule handeln kann. Am Beispiel einer zylindrischen Säule kann das Segment für einen längsaxialen Abschnitt einen Abschnitt einer Säule mit einem kreisförmigen Querschnitt beschreiben, also eine Säule geringer Höhe. Das Segment für einen Querschnittsabschnitt kann aber auch einen im Querschnitt halbkreisförmigen oder viertelkreis-förmigen Abschnitt der Säule beschreiben. Das Zusammenfügen mehrerer Segmente benachbarter Container führt in allen Fällen zu einer gemeinsamen Säule. Jede Belüftungssäule kann auch Entlüftungssäule sein, abhängig davon, ob durch das Belüftungssystem ein Überdruck oder ein Unterdruck erzeugt wird. Von daher kann im Folgenden an den Positionen, an denen von einer Belüftungssäule die Rede ist, entsprechend auch die Entlüftungssäule gemeint sein und umgekehrt. Im Folgenden wird auch allgemein nur von der Säule gesprochen._Sowohl die Palette als auch das Abdeckelement sind zum Anschluss an ein aktives Belüftungssystem ausgebildet und eingerichtet. Beispielsweise können die Adapter einer Palette an ein korrespondierendes Anschlussstück des Abdeckelementes angepasst sein, um einen geschlossenen Belüftungskreislauf zu bilden.

Vorzugsweise sind mindestens zwei Masthähnchencontainer übereinandergestapelt, wobei das oder jedes Segment einer Belüftungs- oder Entlüftungssäule, das in dem individuellen Masthähnchencontainer vom Boden nach oben verläuft, an wenigstens ein Segment einer Belüftungs- oder Entlüftungssäule in den anderen Masthähnchencontainern des Stapels gefügt ist, so dass wenigstens eine gemeinsame Belüftungs- oder Entlüftungssäule in der Einheit gebildet ist.

So kann ein Belüftungsluftstrom durch mehrere übereinander angeordnete Masthähnchentransportcontainer ziehen, so dass potentiell eine Belüftungseinheit den zum Belüften einer gemeinsamen Belüftungssäule oder von mehreren gemeinsamen Belüftungssäulen in allen Containern in einem Stapel benötigten Luftstrom zuführen kann.

Vorzugsweise weist die Einheit wenigstens drei Böden auf, die die Innenvolumina definieren und in jedem Innenvolumen ist wenigstens eine Belüftungs- oder Entlüftungsöffnung der gemeinsamen Belüftungs- oder Entlüftungssäule vorgesehen.

Besonders vorteilhaft kann die Einheit zum Anschließen an ein zentrales System zur Versorgung der Masthähnchen mit Nahrung und/oder an ein zentrales System zur Zwangsbelüftung der Masthähnchen mit einem Gas ausgebildet und eingerichtet sein.

Eine bevorzugte Weiterbildung zeichnet sich dadurch aus, dass die wenigstens eine Belüftungs- oder Entlüftungssäule in Abschnitten gefertigt ist, und dass wenigstens einer der Böden beweglich ist und an einen Abschnitt der Belüftungs- oder Entlüftungssäule gefügt ist.

Vorzugsweise ist der Masthähnchencontainer zum Transport der Masthähnchen bemessen sowie ausgebildet und eingerichtet. Optional kann der Masthähnchencontainer aber auch stationär zur Aufzucht (dem so genannten "nesting") oder während des Wartens der lebenden Masthähnchen vor der Bearbeitung im Bereich des Schlachthauses, die das Betäuben (das so genannte "gas stunning") der Masthähnchen einschließt, eingesetzt werden.

Vorzugsweise hat der Masthähnchencontainer eine Tragfähigkeit von wenigstens 45 kg/m² und die wenigstens eine Belüftungs- oder Entlüftungsöffnung des Segments der Belüftungs- oder Entlüftungssäule befindet sich in dem Innenvolumen in einem Abstand von wenigstens 0,17 m von den Seitenwänden. Für einen ausreichend effizienten Masthähnchentransport ist es wichtig, dass der Masthähnchentransportcontainer einen Boden mit einer Tragfähigkeit von wenigstens 45 kg/m² aufweist. In Verbindung mit der vorliegenden Erfindung wurde erkannt, dass es, wenn die Tragfähigkeit des Bodens geringer als 45 kg/m² ist, nicht möglich ist, wenigstens 28 Masthähnchen pro Quadratmeter zu laden, und dies würde die Möglichkeit zulassen, dass Masthähnchen beim Transport Unbehagen erfahren, weil sie sich umher bewegen können. Masthähnchen sind Herdentiere, die sich dicht beieinander wohl fühlen. Dieses Verhalten kann man im Brutbereich beobachten, wo der Boden typischerweise eine sehr große Fläche hat. Zu Beginn, wenn die Vögel klein sind, neigen sie dazu, sich in einem kleinen Bereich zusammenzuscharen, und wenn sie wachsen, nehmen sie einen immer größeren Teil der Bodenfläche ein. Wenn sie auf eine schlachtbereite Masthähnchengröße angewachsen sind, füllen sie typischerweise die ganze Bodenfläche aus, und dies ist dann bereits für einige Zeit der Fall gewesen. Der Transport ist eine völlig neue Erfahrung für die Masthähnchen, und es wird als Vorteil angesehen, wenn sie alle recht dicht beieinander gehalten werden. Am besten wäre es, wenn sie so dicht stehen könnten, dass sie sich auch seitlich abstützen können, wenn der Anhänger um eine Kurve fährt. Aber je näher sie beieinanderstehen, desto schwieriger wird es, die richtige Belüftung für Masthähnchen in den inneren Teilen des Innenvolumens bereitzustellen.

Das Vorsehen von wenigstens einer Belüftungsöffnung im Innenvolumen des Masthähnchentransportcontainers in einem Abstand von den Seitenwänden stellt eine ausreichende Belüftung für die Masthähnchen bereit, die sich in dem Innenvolumen hinter wenigstens einer Außenreihe von anderen Masthähnchen befinden. In Containern des Standes der Technik mit vielen Belüftungsöffnungen in den Seitenwänden und im Boden wird die Belüftung für Masthähnchen innerhalb des Containers nicht unter allen Transportbedingungen als ausreichend oder effektiv genug gehalten, und man glaubt jetzt, dass dies durch das voll entwickelte Gefieder der Masthähnchen verursacht wird.

Beim Transport kann die äußerste Linie oder Reihe von Masthähnchen die Belüftung von außen in den Masthähnchentransportcontainer durch die Seitenwände blockieren oder behindern, und die durch den Boden nach oben strömende Belüftungsrate kann ebenfalls unzureichend sein, weil das Gefieder der Masthähnchen eine Barriere für die Belüftung in vertikaler Richtung im Innenvolumen des Masthähnchentransportcontainers darstellt. Wenn die Masthähnchen aufgeregt werden, zum Beispiel beim Fahren über eine holprige Straße, können sie die Flügel aufstellen und dadurch auch den Kopfraum im oberen Teil des Innenvolumens blockieren. Der Masthähnchentransportcontainer weist wenigstens eine Belüftungssäule auf, die in das Innenvolumen verläuft, und diese Belüftungssäule verbessert die Belüftungsbedingungen für Masthähnchen, die sich von anderen Masthähnchen umgeben in dem Container befinden, in einem erheblichen Ausmaß.

Wenigstens eine Belüftungsöffnung befindet sich im Innenvolumen mit einem Abstand von wenigstens 0,17 m zwischen der Öffnung und allen Seitenwänden. Der Abstand von wenigstens 0,17 m gewährleistet, dass sich eine Belüftungsöffnung innerhalb des Innenvolumens zum Zuführen von Belüftung zu Masthähnchen hinter Masthähnchen befindet, die entlang den Seitenwänden stehen. Beim Transport von Masttruthähnen kann es zweckdienlich sein, den Abstand der wenigstens einen Belüftungsöffnung von den Seitenwänden zu vergrößern. Weitere Belüftungsöffnungen im Innenvolumen der Masthähnchentransporteinheit können in größeren Abständen von den Seitenwänden vorgesehen werden, besonders dann, wenn der Masthähnchentransportcontainer zum Transportieren vieler von Masthähnchen bemessen ist.

Die wenigstens eine in das Innenvolumen verlaufende Belüftungssäule und die wenigstens eine von den Seitenwänden beabstandete Belüftungsöffnung lassen es zu, dass jeder Masthähnchentransportcontainer von innerhalb des Containers nach außen belüftet wird, was im Gegensatz zu Masthähnchentransportcontainern des Standes der Technik steht, bei denen die Belüftung von der Außenseite durch Seitenwände und Boden nach innen erfolgt. Durch die Belüftung von innerhalb des Innenvolumens erhalten Masthähnchen, die in dem Innenvolumen hinter anderen Masthähnchen an den Seitenwänden stehen, bessere Belüftung, und die Vögel können die Wärme besser abführen, die bei ihrem Aufenthalt im Transportcontainer entsteht. So erhalten die Masthähnchen bessere Bedingungen, und die durch Überhitzung verursachten extremen Stresssituationen werden minimiert oder vermieden. Es wird erwartet, dass das Auftreten von PSE-Fleisch im sich ergebenden Fleisch nach dem Schlachten sehr niedrig ist.

In einer Ausführungsform weist der Masthähnchentransportcontainer vier Seitenwände aufweist, die zwei Paare von gegenüberliegenden Seitenwänden bilden, dass das wenigstens eine Segment zur Bildung wenigstens einer Belüftungs- oder Entlüftungssäule vom Boden nach oben durch das Innenvolumen verläuft, dass die wenigstens eine Belüftungs- oder Entlüftungssäule vorzugsweise einstückig mit dem Boden gebildet ist und dass sich die wenigstens eine Belüftungs- oder Entlüftungssäule optional in wenigstens einer Reihe zwischen einem Paar von gegenüberliegenden Seitenwänden mit einem Abstand von etwa D/(N+1) befindet, wobei D der Abstand zwischen dem einen Paar gegenüberliegender Seitenwänden ist und N die Anzahl von Belüftungs- oder Entlüftungssäulen in der wenigstens einen Reihe ist. Vorzugsweise ist die wenigstens eine Belüftungssäule einstückig mit dem Boden, z.B. zusammen mit dem Boden spritzgegossen. Indem die Belüftungssäule vom Boden nach oben verläuft, kann sich die wenigstens eine Belüftungsöffnung in einer solchen Höhe in dem Innenvolumen und mitten unter den Masthähnchen befinden, dass Belüftungsluft über der Brusthöhe der stehenden Masthähnchen bereitgestellt wird, so dass die Hälse der Masthähnchen frei in Frischluft sind. Das Gefieder von einigen Masthähnchen versperrt somit keine Luft zu in der Nähe befindlichen Masthähnchen. In dieser Ausführungsform wird die Belüftungsluft auf eine ausreichend gleichmäßige Weise zu den Innenbereichen des Innenvolumens in dem Masthähnchentransportcontainer zugeführt, zum Vorteil des Wohlergehens der Masthähnchen. Die Ausführungsform mit der Beabstandung von etwa D/(N+1) ist besonders mit Bezug auf Symmetrie vorteilhaft, weil die Masthähnchentransportcontainer mit dem einen Ende oder dem anderen Ende dem Bediener zugewandt gestapelt werden können und die wenigstens eine Belüftungssäule trotzdem zu einer entsprechenden Belüftungssäule in dem unteren Masthähnchentransportcontainer passt, und es ist hilfreich für den Bediener, dass ein Masthähnchentransportcontainer beim Stapeln nicht falsch ausgerichtet werden kann, besonders deshalb, weil die letzte Platzierung eines leeren Containers zur selben Zeit stattfinden kann, zu der die Position einer Masthähnchenzuführungsöffnung in einer Masthähnchenladevorrichtung zum Zuführen von Masthähnchen in den leeren Container verschoben werden kann.

Die Belüftungssäule bietet ferner eine Unterteilung des Bodenbereichs, die einer Neigung von Masthähnchen im Container entgegenwirken kann, sich alle in Richtung auf eine Stelle zu bewegen, wo einige von ihnen eingeklemmt werden können, und der Abstand zwischen den Seitenwänden und der Säule gewährleistet, dass sich Masthähnchen immer noch in dem Bereich zwischen der Säule und den Seitenwänden befinden können, ohne eingeklemmt zu werden. So verbessert die Belüftungssäule auch in dieser Hinsicht das Wohlergehen der Masthähnchen, besonders dann, wenn der Masthähnchentransportcontainer groß ist und drei, vier oder fünf Belüftungssäulen pro Container vorgesehen sind.

Der Masthähnchentransportcontainer kann auch eine dreieckige Grundfläche und drei Seitenwände oder eine polygonale Grundfläche und fünf oder mehr Seitenwände haben.

Form und Größe der wenigstens einen Belüftungssäule sollten vorzugsweise unter gebührender Berücksichtigung davon gewählt werden, dass ein relativ großer Innenboden-Oberflächenbereich für die Masthähnchen verfügbar gehalten wird. In einer Ausführungsform hat die wenigstens eine Belüftungssäule einen ringförmigen Querschnitt mit einer hohlen Mitte, die über die Höhe der Säule verläuft. Eine solche Konstruktion bietet regelmäßige Oberflächen, vorzugsweise ohne Ecken in der Säule, was für das Reinigen nach jedem Masthähnchentransport von Vorteil ist.

Das Füllen von Masthähnchen in den Masthähnchentransportcontainer kann sehr schnell erfolgen, z.B. mit einer Geschwindigkeit von 50 bis mehr als 200 Masthähnchen pro Minute, und die einzelnen Masthähnchen können mit recht hoher Geschwindigkeit in den Masthähnchentransportcontainer eintreten. Es ist von Vorteil, wenn die wenigstens eine Säule auf eine solche Weise geformt ist, dass sie für einen Kontakt mit Masthähnchen geeignet ist, die mit einiger Geschwindigkeit an die Säule schlagen, da das Risiko von Verletzungen wie Prellungen und gebrochene Flügel vorzugsweise minimiert werden sollte. Wenn die Belüftungssäule einen Außendurchmesser im Bereich von 7 cm bis 30 cm, wie z.B. im Bereich von 10 cm bis 24 cm, vorzugsweise im Bereich von 12 cm bis 21 cm hat, ist das Verletzungsrisiko für die Masthähnchen niedrig. Wenn der Durchmesser weit unter 7 cm liegt, kann ein Flügel zu hohen örtlichen Belastungen ausgesetzt werden, wenn das Masthähnchen mit hoher Geschwindigkeit im Container ankommt. Wenn der Durchmesser weit über 30 cm liegt, nimmt die Säule zu viel Bodenfläche ein. Es wird derzeit als besonders vorteilhaft angesehen, wenn die Säule sowohl abgerundet ist, möglicherweise sogar einen kreisförmigen Querschnitt hat, als auch einen Durchmesser innerhalb der oben angegebenen Intervalle hat.

Im Allgemeinen reduziert eine größere Oberfläche der einzelnen Belüftungssäulen das Verletzungsrisiko, aber die Form der Säulen und insbesondere das Fehlen von scharfen Kanten sind ebenfalls vorteilhaft. Eine große Oberfläche (z.B. mit einem großen Durchmesser) der individuellen Säule bietet auch eine bessere Möglichkeit, die Belüftungsöffnungen auf der Säule über einen größeren Teil des Innenvolumens zu verteilen und somit eine gleichmäßigere Verteilung von Belüftungsluft zu Masthähnchen zu gewährleisten, die sich in den Innenbereichen des Innenvolumens aufhalten.

Größe und Form der einzelnen Belüftungsöffnungen können stark variieren, beispielsweise je nach Größe und Form und Positionen der Belüftungssäulen, aber in einer bevorzugten Ausführungsform haben die Öffnungsflächen der Belüftungsöffnungen in der wenigstens einen Belüftungssäule eine Gesamtfläche im Bereich von 0,5 % bis 10 % der Fläche oder des Bodens des Masthähnchentransportcontainers. Diese Öffnungsflächen dienen zum Zuführen von Belüftungsluft in das Innenvolumen, und es können zusätzlich andere Belüftungsöffnungen zum Transportieren von Luft aus dem Innenvolumen vorgesehen werden. Die Öffnungsflächen müssen eine bestimmte Größe haben, um eine gute Luftverteilung zu allen Masthähnchen im Innenvolumen des Masthähnchentransportcontainers zu erzielen, und die Öffnungsfläche beeinflusst auch die Geschwindigkeit der durch die Belüftungsöffnungen strömenden Luft für eine gegebene Belüftungsrate. Wenn die Gesamtfläche größer als 10 % ist, wird die Luftgeschwindigkeit möglicherweise zu langsam, damit Luft über eine ausreichende Distanz von der Öffnung in das Innenvolumen gelangen kann. Andererseits wird, wenn die Gesamtfläche kleiner als die genannten 0,5 % ist, die Geschwindigkeit der Luft so hoch, dass nahe an der Belüftungsöffnung stehende Masthähnchen durch das Einströmen von Luft gestresst werden.

Wenn die Belüftungsöffnungen in der Belüftungssäule eine Gesamtfläche im Bereich von 1,5 % bis 7 % der Fläche oder des Bodens aufweisen, können alle Masthähnchen mit einer ausreichenden Menge Belüftungsluft versorgt werden, um sie auf einem solchen Komfortniveau zu halten, dass die Masthähnchen ohne schweres Atmen zur Hitzeentlastung schlafen können, und liegen gleichzeitig die Belüftungsluftgeschwindigkeiten innerhalb der Komfortniveaus.

Wenn die Belüftungsöffnungen in der Belüftungssäule eine Gesamtfläche im Bereich von 2 % bis 4 % der Fläche oder des Bodens aufweisen, haben die meisten Masthähnchen ausgezeichnete Bedingungen. Einige der in den größten Abständen von Belüftungsöffnungen befindlichen Masthähnchen haben eventuell weniger optimale Bedingungen, aber immer noch Bedingungen, bei denen nicht erwartet wird, dass sie in Bezug auf Wohlergehen und Auftreten von PSE im Fleisch zu Besorgnis Anlass geben könnten.

Mit Bezug auf die Fläche der Belüftungsöffnungen in der Belüftungssäule wird bemerkt, dass sich die Öffnungen im Innenvolumen des Masthähnchentransportcontainers befinden und dass die Belüftungsöffnungsfläche als solche nicht mit Belüftungsöffnungsflächen für Öffnungen in der Seitenwand oder im Boden des Containers vergleichbar ist.

Es wird auch bemerkt, dass es möglich ist, in den Belüftungssäulen entweder einen Überdruck zum Zuführen von Luft in das Innenvolumen über die Belüftungsöffnungen oder einen Unterdruck zum Abziehen von Luft aus dem Innenvolumen über die Belüftungsöffnungen anzulegen, aber in jedem Fall wird das Innenvolumen von innerhalb des Innenvolumens und nicht nur über Luft belüftet, die von außerhalb der Seitenwände oder des Bodens des Masthähnchentransportcontainers eingeblasen wird. Es ist möglich, in einer Belüftungssäule eines Masthähnchentransportcontainers einen Überdruck und in einer anderen einen Unterdruck zu haben, so dass Luft über das

Innenvolumen von der einen zur anderen strömt, aber wenn mehr als eine Säule vorhanden ist, kann es möglicherweise zweckmäßig sein, denselben Drucktyp in allen Säulen zu haben und Belüftungsöffnungen in den Seitenwänden oder dem Boden des Containers vorzusehen, damit Luft zwischen den Säulen und diesen Öffnungen strömt.

Vorzugsweise ist zusätzlich zu dem oder jedem wenigstens eine Belüftungs- oder Entlüftungsöffnung aufweisenden Segment einer Belüftungs- oder Entlüftungssäule, das zu allen Seitenwänden beabstandet ausgebildet ist, mindestens ein weiteres wenigstens eine Belüftungs- oder Entlüftungsöffnung aufweisendes Segment einer Belüftungs- oder Entlüftungssäule vorgesehen ist, das in den Seitenwänden ausgebildet ist. Ein Segment kann dann die Belüftungssäule und das andere Segment die Entlüftungssäule bilden. Besonders bevorzugt ist das oder jedes Segment einer Belüftungs- oder Entlüftungssäule, dessen Belüftungs- oder Entlüftungsöffnungen beabstandet zu den Seitenwänden ausgebildet sind, selbst beabstandet zu den Seitenwänden angeordnet und weist einen kreisförmigen Querschnitt auf, während das oder jedes Segment einer Belüftungs- oder Entlüftungssäule, dessen Belüftungs- oder Entlüftungsöffnungen in den Seitenwänden ausgebildet sind, Teil einer Seitenwand ist und wahlweise einen halbkreisförmigen oder viertelkreisförmigen Querschnitt aufweist. Natürlich kann der Querschnitt der Segmente grundsätzlich und insbesondere der Segmente im Bereich der Seitenwand, also von den Segmenten, die sich an der bzw. in der Seitenwand ausbilden, auch andersförmig ausgebildet sein.

Um eine gleichmäßige Verteilung der Belüftungsluft noch weiter zu erleichtern, kann zusätzlich zu wenigstens einer Belüftungssäule, die sich in einem Abstand von den Seitenwänden befindet, wenigstens eine Seitenwand mit wenigstens einer Belüftungssäulenteilwand mit Belüftungsöffnungen vorgesehen werden. Dies ist besonders in Masthähnchentransportcontainern mit Seitenwänden ohne oder mit nur einer begrenzten Zahl von Belüftungsöffnungen darin vorteilhaft. Solche Belüftungssäulenabschnitte oder lokalisierten Belüftungsöffnungen in den Seitenwänden sind geeignet, um den Strom von Belüftungsluft außerhalb der Innenvolumen der Masthähnchentransportcontainer zu steuern, und dies kann mehrere Vorteile wie z.B. den regulierten Eingang von verbrauchter Belüftungsluft und deren teilweise Rückführung erbringen, um ein ausreichend warmes Belüftungsluftgemisch zu erzielen, wenn das Umgebungsklima kalt ist. Ein anderer Vorteil ist, dass die komplette Steuerung von Ein- und Ausfluss von Belüftungsluft in von den Belüftungssäulen definierten Kanälen und in den von den Seitenwänden definierten Belüftungskanäle es zulässt, dass das Belüftungssystem von Druckänderungen entlang der Länge des Anhängers oder Lkws weitgehend unabhängig ist, die durch das Fahren des Lkws oder Anhängers auf der Straße und durch Änderungen der Fahrgeschwindigkeit aufgrund von Straßen- und Verkehrsbedingungen verursacht werden.

Wenn zwei Transportcontainer nebeneinander mit ihren Seitenwänden dicht beieinander angeordnet werden, können solche Belüftungssäulenabschnitte in den Seitenwänden der beiden Container zusammen eine gemeinsame Belüftungssäule bilden, die bei der Belüftung der Container benutzt wird.

In einer Ausführungsform verläuft die wenigstens eine Belüftungssäule von einer Seitenwand in das Innenvolumen in Richtung auf eine andere Seitenwand in dem Masthähnchentransportcontainer. Dies kann dann nützlich sein, wenn der Anhänger mit Belüftungseinrichtungen in einer Seitenwand des Anhängers versehen ist, so dass die Belüftungseinrichtungen Belüftungsluft zu den horizontal angeordneten Belüftungssäulen in den Masthähnchentransportcontainern führen. Mit Bezug auf die Bereitstellung von Belüftung an das Innenvolumen in dem Container zum Erzielen von Belüftung von innen nach außen ist es durchaus möglich, die Belüftungssäulen in horizontaler Richtung oder hauptsächlich in horizontaler Richtung anzuordnen, wie sie auch in vertikaler Richtung oder hauptsächlich in vertikaler Richtung angeordnet werden können. Die individuelle Belüftungssäule kann über ihre Länge mit einer Reihe von Belüftungsöffnungen, um mehrere separate Belüftungsöffnungen über die Breite des Innenvolumens des Containers bereitzustellen, oder mit wenigstens einer länglichen Öffnung, die einen gleichförmigen Luftstrom entlang eines Abschnitts der Belüftungssäulenlänge bereitstellt, versehen werden. Die Belüftungssäule kann in Verbindung mit dem Boden des Masthähnchentransportcontainers angeordnet werden, wobei der Boden möglicherweise einen Wandabschnitt der Belüftungssäule bildet. Die Belüftungssäule kann vorzugsweise auch in einem Abstand über dem Boden angeordnet werden, vorzugsweise in einer Höhe entsprechend der Höhe der Hälse der Masthähnchen oder sogar in einer noch größeren Höhe, damit Masthähnchen unter der Säule vorbeigehen können, möglicherweise indem sie die Köpfe einziehen.

Eine weitere Ausführungsform hat sowohl wenigstens eine hauptsächlich vertikal verlaufende Belüftungssäule, die in das Innenvolumen verläuft, als auch wenigstens eine hauptsächlich horizontal verlaufende Belüftungssäule, die in das Innenvolumen verläuft.

In einer Ausführungsform weist die wenigstens eine Belüftungssäule einen im Wesentlichen hohlen Verteilungskanal auf, vorzugsweise ein hohles Zentrum, das über die Länge der Säule verläuft. Die Belüftungssäule kann intern in mehrere Verteilungskanäle unterteilt sein, wie beispielsweise durch Versehen der Innenseite der Säule mit einer mittleren Abtrennung oder mit quer verlaufenden Trennwänden, die das Volumen in der Säule beispielsweise in vier Verteilungskanäle unterteilen, wobei die mittlere Abtrennung oder sich gegenseitig kreuzende Trennwände entlang der Länge der Säule verlaufen. Es wird jedoch bevorzugt, dass die Belüftungssäule ein hohles Zentrum ohne interne Unterteilungen hat. Der hohle Verteilungskanal kann eine im Wesentlichen konstante Querschnittsgröße und -form über ihre Länge haben, die zu einem sehr energieeffizienten Luftstrom führt, aber Abschnitte mit reduzierter Größe oder sich verjüngende Kanäle können andererseits zum Steuern des Luftstroms beitragen. Es ist sogar möglich, die Belüftungssäule aus einem weichen Material herzustellen, das kollabiert, wenn es nicht gebraucht wird, und beim Gebrauch von dem Belüftungsluftstrom aufgeblasen wird. Ein Vorteil hiervon ist, dass die Belüftungssäule sehr weich ist, wenn die Masthähnchen mit hoher Geschwindigkeit in den Container geladen werden.

In einer Ausführungsform hat die wenigstens eine Belüftungssäule, die vom Boden nach oben verläuft, eine solche Höhe, dass sie an eine Belüftungssäule in einem weiteren Masthähnchentransportcontainer gefügt wird, der auf den Masthähnchentransportcontainer gestellt wird. Auf diese Weise werden die Belüftungssäulen in den einzelnen Masthähnchentransportcontainern aneinander gefügt, um gemeinsame Belüftungssäulen zu bilden, und dies ergibt ein sehr einfaches Design für Zwangsbelüftung, weil lediglich Zwangsbelüftung angeschlossen zu werden braucht, um die gemeinsame Belüftungssäule zu belüften, anstatt angeschlossen zu werden, um die Belüftungssäule in dem individuellen Masthähnchentransportcontainer zu belüften.

In einer Ausführungsform weist der Masthähnchentransportcontainer am oberen Ende der wenigstens einen Belüftungssäule eine Masthähnchenbarriere auf. Eine solche Masthähnchenbarriere kann als Kreuz geformt sein, das über die nach oben gewandte Endöffnung der Belüftungssäule verläuft, oder kann eine gerundete Struktur am oberen Ende der Belüftungssäule sein. Die Masthähnchenbarriere verhindert, dass Masthähnchen nach dem Laden in den Masthähnchentransportcontainer in die Belüftungssäule geraten oder sich darin verfangen. Das Laden kann schnell erfolgen und typischerweise, während das obere Ende der Belüftungssäule gegenüber der Umgebung freiliegend ist, weil noch kein anderer Masthähnchentransportcontainer auf den geladenen Masthähnchentransportcontainer gesetzt wurde. In dieser Situation wird bei hohen Ladegeschwindigkeiten eine Masthähnchenbarriere bevorzugt, um Ladeunterbrechungen aufgrund eines schlecht platzierten Masthähnchens zu vermeiden.

Bei den Masthähnchentransportcontainern bietet die wenigstens eine Belüftungssäule Belüftung von innerhalb des Innenvolumens und von außen, und durch Versehen des Containers mit so vielen Belüftungssäulen wie nötig, um das Wohlergehen der Masthähnchen beim Transport zu wahren, kann der Masthähnchentransportcontainer in verschiedenen Größen ohne Einschränkung der Größe für Belüftungszwecke gefertigt werden. Mit Schwerpunkt auf Handhabung wird bevorzugt, dass die Länge des Masthähnchentransportcontainers im Bereich von 0,50 m bis 1,30 m, vorzugsweise in einem der folgenden Bereiche liegt: a) 0,50 m bis 0,70 m, b) 0,70 m bis 0,90 m und c) 1,10 m bis 1,30 m, vorzugsweise bei etwa 1,2 m, und dass die Breite des Masthähnchentransportcontainers im Bereich von 0,50 m bis 1,30 m und vorzugsweise in einem der folgenden Bereiche liegt: a) 0,50 m bis 0,70 m, b) 0,70 m bis 0,90 m und c) 1,10 m bis 1,30 m, und besonders bevorzugt_bei etwa 1,2 m.

Die Konstruktion der Seitenwände und des Bodens des Masthähnchentransportcontainers kann auch benutzt werden, um zu beeinflussen, wie die Belüftungsluft im Innenvolumen strömt. Eine oder mehrere der Seitenwände und der Boden können völlig geschlossen werden, ausgenommen örtliche Bereiche, wo ein Bereich der Seitenwand zu einem Teil einer Belüftungssäule gemacht wird, um Luft aus dem Innenvolumen zu leiten, oder die Seitenwände können plattenförmig und mit Belüftungsöffnungen versehen sein, wie beispielsweise eine einzelne Reihe von Belüftungsöffnungen, die sich in der oberen Hälfte der Seitenwand befinden. Das Vorsehen von Belüftungsöffnungen am oberen Ende der Seitenwände und/oder Belüftungssäulen kann die Regelung des Luftstroms in der oberen Hälfte des Containers zulassen, wo sich die Köpfe der Masthähnchen befinden.

Masthähnchentransportcontainer können aus einem beliebigen Material hergestellt werden, das stark und stabil genug ist, damit der Container mit Masthähnchen gefüllt werden kann, und das eine gründliche Reinigung aushalten kann. Es wird derzeit bevorzugt, dass der Masthähnchentransportcontainer aus einem Plastikmaterial gefertigt ist, vorzugsweise durch Spritzgießen. Geeignete Plastikmaterialien umfassen hochdichtes Polyethylen (HDPE) und Polypropylen, aber es ist auch möglich, die Container aus Stahl, Edelstahl, Aluminium, Metallen oder Verbundstoffen wie z.B. Carbonfaserverbundstoffen herzustellen, und/oder sie mit Verstärkungseinlagen aus einem anderen Material als dem Rest des Containers zu versehen.

Vorzugsweise sind mindestens zwei Belüftungs- oder Entlüftungssäulen vorgesehen, die vom Boden nach oben durch das Innenvolumen verlaufen. Diese Masthähnchencontainer sind zum Aufnehmen und Halten von mindestens zehn lebenden Masthähnchen ausgebildet und eingerichtet. Besonders bevorzugt weist die oder jede Belüftungs- oder Entlüftungssäule bzw. jedes Segment einer Belüftungs- oder Entlüftungssäule längliche Belüftungs- oder Entlüftungsöffnungen auf, jeweils mit einer Längsachse, die mit der Längsachse in Längsrichtung der Belüftungs- oder Entlüftungssäule orientiert ist. Bevorzugt liegt die Länge des Masthähnchencontainers mit der größeren Aufnahmekapazität im Bereich von 2,10 m bis 2,80 m, vorzugsweise bei etwa 2,4 m, und die Breite des Masthähnchencontainers liegt im Bereich von 0,70 m bis 2,6 m, vorzugsweise im Bereich von 0,70 m bis 0,90 m und besonders bevorzugt bei etwa 0,80 m.

Eine besonders bevorzugte Weiterbildung zeichnet sich dadurch aus, dass der Masthähnchencontainer mindestens eine Zuführung aufweist, die zum Zuführen von Nahrungsmitteln in das Innenvolumen ausgebildet und eingerichtet ist. Diese Ausführungsform kommt insbesondere dann zum vorteilhaften Einsatz, wenn die Container zum Aufnehmen und Halten der Masthähnchen während der Aufzucht verwendet werden. Mit einem solchen Container besteht die Möglichkeit, die Masthähnchen vom ersten Tag bis zum Abtransport in Richtung Geflügelschlachthaus durchgängig und ohne Containerwechsel zu halten. Dadurch wird eine raumsparende Aufzucht der Masthähnchen in mehreren Etagen ermöglicht, die einerseits jedem Masthähnchen individuell mehr Platz bietet und andererseits eine ausreichende Belüftung und eine ausreichende und gleichmäßige Versorgung der Masthähnchen mit Nahrung gewährleistet.

Vorteilhafterweise ist mindestens eine Seitenwand insbesondere als Inspektionsklappe bewegbar ausgebildet, derart, dass sie auf und zu klappbar ist. Dadurch ist die Zugänglichkeit zu den einzelnen Containern insbesondere dann, wenn diese als Stapel aufeinandergeschichtet sind, sichergestellt.

Bevorzugt ist für jeden Masthähnchencontainer jeweils eine Zuführung für Wasser und eine Zuführung für Futter im Bereich der Seitenwände vorgesehen. Damit kann die Versorgung der Masthähnchen noch besser sichergestellt werden.

Besonders bevorzugt ist ein Masthähnchencontainer, der sich dadurch auszeichnet, dass mindestens eines der vom Boden nach oben durch das Innenvolumen verlaufende Segmente der beabstandet zu allen Seitenwänden angeordneten Belüftungs- oder Entlüftungssäulen als Stützelement ausgebildet ist, derart, dass das Stützelement die Höhe zum Abstützen des Bodens eines weiteren, gestapelten Masthähnchencontainers aufweist. Damit ist auf besonders einfache und effektive Weise eine sichere und stabile Stapelung der Container beim Transport, bei der Haltung der Masthähnchen während der Aufzucht oder beim Warten vor dem Geflügelschlachthaus sichergestellt. Durch die Doppelfunktion jedes Segmentes bzw. jedes Säulenabschnitts bzw. jeder Säule, nämlich zur Verbesserung der Belüftung einerseits und der Stützung andererseits, wird ein kompakter, in der Hygiene verbesserter und trotz schwerer Lasten stapelbarer Container geschaffen.

Da sich die Stützsäule vom Boden erstreckt, können sich die Füße der Masthähnchen nicht an der Säule verfangen, da es zwischen Boden und Säule keine Hohlräume gibt, und der Abstand zwischen der Säule und allen Seitenwänden verhindert auch, dass ein Masthähnchen zwischen Säule und Seitenwand eingeklemmt und verletzt wird.

Die zusätzliche Abstützung in einem Abstand von den Seiten des Containers, die durch die wenigstens eine Säule gegeben ist, lässt es insbesondere auch zu, dass der Boden des Masthähnchentransportcontainers von einem Aufbau mit weniger oder ohne Verstärkungsrippenstruktur im Bodenbereich ist, wodurch Schmutzansammlungen minimiert werden und das Reinigen erleichtert wird. Die wenigstens eine Säule nimmt zwar etwas Bodenbereich ein, der anderweitig für die Masthähnchen zur Verfügung stünde, aber das Gewicht des Masthähnchentransportcontainers pro Kilo an auf den Masthähnchentransportcontainer geladenen Masthähnchen ist vergleichbar mit oder niedriger als bei den derzeitigen Masthähnchentransportsystemen.

Das Vorsehen der wenigstens einen Stützsäule bietet eine Abstützung für Container, die zu einem Stapel aufeinandergestellt werden, um die Notwendigkeit für Verstärkungsrippen zu reduzieren und es zuzulassen, Container mit glatteren Außenflächen herzustellen, die sich leichter reinigen lassen. Die Masthähnchentransportcontainer können in Rahmen wie in den Systemen des Standes der Technik eingesetzt werden, aber sie sind besonders zum Aufeinanderstapeln ohne Verwendung eines Rahmens geeignet, um eine rahmenlose Transporteinheit zu bilden. Aufgrund des Wegfalls des separaten Rahmens können die Waschanlagen im Schlachthaus vereinfacht werden, und Kreuzinfektionen über den Rahmen sind völlig ausgeschlossen. Wenn kein Rahmen benutzt wird, ist auch die Handhabung effizienter, und es wird eine erhebliche Reduzierung des Gesamtgewichts des Transportsystems selbst erzielt, so dass das Gewicht der geladenen Masthähnchen, d.h. das Nettogewicht, höher sein kann.

Der Boden des Masthähnchentransportcontainers kann zwar mit Löchern im Bodenbereich versehen werden, in einer Ausführungsform des Masthähnchentransportcontainers ist es aber bevorzugt, dass der Boden eine Außenfläche hat, die flach geformt ist und keine Öffnungen in den Bereichen zwischen der wenigstens einen Stützsäule und den Seitenwänden aufweist. Dadurch ergeben sich ein leichteres Reinigen und ein geringeres Verschmutzungsrisiko, weil Schmutz nicht leicht an einer ebenen Oberfläche ohne Öffnungen anhaftet.

Der Boden als solcher braucht sich nicht in einer Ebene zu befinden, sondern kann mehrere planare, plattenförmige Abschnitte aufweisen, wobei ein Beispiel ein Boden ist, der als trapezförmiges Blech ausgestaltet ist. In anderen Ausführungsformen kann der Boden mit Variationen in der Materialdicke in den Bereichen zwischen der wenigstens einen Stützsäule und den Seitenwänden gefertigt werden, wobei die dickeren Bereiche vorzugsweise zwischen gegenüberliegenden Seitenwänden verlaufen. Falls der Container keine quadratische Basis hat, verlaufen die dickeren Bereiche vorzugsweise zwischen den gegenüberliegenden Seitenwänden, die sich am weitesten voneinander entfernt befinden.

Die Gesamtform des Masthähnchentransportcontainers sowie Anzahl und Position von Stützsäulen in Bezug auf die Seitenwände hängen unter anderem von der Größe des Containers und vom Gewicht der zu transportierenden Masthähnchen ab. Es wird derzeit bevorzugt, dass der Masthähnchentransportcontainer vier Seitenwände hat, die zwei Paare von gegenüberliegenden Seitenwänden bilden, dass die wenigstens eine Stützsäule auf dem Boden etwa in der Mitte zwischen einem Paar gegenüberliegender Seitenwänden und verteilt zwischen dem anderen Paar gegenüberliegender Seitenwänden mit einem Abstand von etwa D/(N+1) positioniert ist, wobei D der Abstand zwischen dem anderen Paar von gegenüberliegenden Seitenwänden und N die Anzahl von Stützsäulen in dem Masthähnchentransportcontainer ist. Diese Ausführungsform ist besonders im Hinblick auf Symmetrie vorteilhaft, weil der Masthähnchentransportcontainer mit dem einen Ende oder dem anderen Ende dem Bediener zugewandt gestapelt werden kann und die wenigstens eine Stützsäule trotzdem mit einer entsprechenden Stützsäule im unteren Masthähnchentransportcontainer zusammenpasst. Der Füllvorgang kann schnell erfolgen, z.B. mit einer Geschwindigkeit von 50 bis zu mehr als 200 Masthähnchen pro Minute, und es ist hilfreich für den Bediener, dass ein Masthähnchentransportcontainer beim Stapeln nicht falsch orientiert werden kann, insbesondere weil die endgültige Platzierung eines leeren Containers zur selben Zeit stattfinden kann, zu der eine Masthähnchenzufuhröffnung in einer Masthähnchenladevorrichtung zum Zuführen von Masthähnchen an den leeren Container verschoben wird.

Form und Größe der wenigstens einen Stützsäule sollten im Hinblick auf die Beibehaltung einer relativ großen für die Masthähnchen zur Verfügung stehenden inneren Bodenfläche gewählt werden. In einer Ausführungsform weist die wenigstens eine Stützsäule einen ringförmigen Querschnitt mit einem hohlen Zentrum auf, das entlang der Höhe der Säule verläuft. Eine solche Konstruktion ergibt regelmäßige Flächen, vorzugsweise ohne Ecken in der Säule, die sich nach jedem Masthähnchentransport leicht reinigen lassen.

Um die Masthähnchentransportcontainer relativ zueinander beim Anordnen zu einem Stapel zu befestigen, um eine rahmenlose Transporteinheit zu bilden, kann jeder Masthähnchentransportcontainer obere korrespondierende Bereiche und untere korrespondierende Bereiche aufweisen, wobei die oberen korrespondierenden Bereiche auf die unteren korrespondierenden Bereiche eines weiteren Masthähnchentransportcontainers passen, der auf den Masthähnchentransportcontainer gestellt wird. Die auf einer Palettenauflage zu einer Transporteinheit gestapelten Masthähnchentransportcontainer stützen sich dann über die oberen korrespondierenden Bereiche und die unteren korrespondierenden Bereiche gegenseitig ab. Paletten, die zum Bilden der Basis von Transporteinheiten und zum Stützen der Masthähnchentransporteinheiten benutzt werden, können ebenfalls mit oberen korrespondierenden Bereichen versehen werden, die zum Eingreifen in die unteren korrespondierenden Bereiche am untersten Masthähnchentransportcontainer eines Stapels ausgelegt sind. Auf diese oberen und unteren korrespondierenden Bereiche kann verzichtet werden, wenn ein Rahmen zum Regulieren der gegenseitigen Positionierung der Container benutzt wird.

In einer Ausführungsform können die korrespondierenden Bereiche so vorgesehen sein, dass die wenigstens eine Stützsäule ein oberes Ende und ein unteres Ende aufweist, und können mit einem oberen korrespondierenden Bereich am oberen Ende und einem unteren korrespondierenden Bereich am unteren Ende versehen werden. Dies kann beispielsweise einfach dadurch erzielt werden, dass die Säulen mit konischen oder kegelstumpfförmigen Endbereichen versehen werden, so dass das obere Ende wenigstens einer Säule an einem Container in ein hohles Zentrum im unteren Ende einer entsprechenden Säule an einem anderen Container passt.

Um den Eingriff zwischen den oberen korrespondierenden Bereichen und den unteren korrespondierenden Bereichen der Säulen zu ergänzen oder um als Alternative dazu zu dienen, können die Seitenwände ein oberes Ende und ein unteres Ende aufweisen und können mit oberen korrespondierenden Bereichen am oberen Ende und unteren korrespondierenden Bereichen am unteren Ende versehen sein. Ein Beispiel für solche korrespondierenden Bereiche ist, dass der Masthähnchentransportcontainer mit einer Aussparung am Boden jeder Seitenwand versehen ist, so dass der Boden des Containers in die Öffnung am oberen Ende eines anderen Containers passt, wobei die Aussparung als unterer korrespondierender Bereich dient und die oberen Ränder der Seitenwände als obere korrespondierende Bereiche dienen. Alternativ können die oberen Ränder von wenigstens zwei gegenüberliegenden Seitenwänden mit L-förmigen Flanschen versehen werden, die nach außen und oben vorstehen, so dass sie die unteren äußeren Ecken an den unteren Enden der Seitenwände eines anderen Containers umschließen. In noch einer anderen Ausführungsform sind die Seitenwände und/oder die Außenfläche des Bodens mit passenden Öffnungen und Vorsprüngen wie z.B. Löchern und Stiften oder Federn und Nuten versehen, aber da solche korrespondierenden Bereiche schwerer zu reinigen sind, werden sie derzeit nicht bevorzugt.

Die korrespondierenden Bereiche brauchen nicht über die gesamte Länge der Seitenwände zu verlaufen. Stattdessen können die oberen korrespondierenden Bereiche an den Seitenwänden an Zwischenabschnitten der Seitenwand nach oben vorstehen und Öffnungen zwischen oberen Enden der Zwischenabschnitte und einem weiteren Masthähnchentransportcontainer lassen, der auf den Masthähnchentransportcontainer gestapelt ist. Zum Beispiel können die oberen korrespondierenden Bereiche nur an Ecken des Containers vorhanden sein, an denen sich Seitenwände treffen, so dass Öffnungen im Wesentlichen von einer Ecke über die Zwischenabschnitte zur anderen verlaufen. Wenn der Container länger und/oder breiter ist, dann kann es auch zweckdienlich sein, nach oben vorstehende obere korrespondierende Bereiche z.B. in der Mitte einer Seitenwand vorzusehen, so dass Öffnungen im Wesentlichen von den Ecken zur Mitte des Containers verlaufen, oder es können bei Bedarf sogar noch weitere solcher oberen korrespondierenden Bereiche vorgesehen werden. Wenn der Masthähnchentransportcontainer vier Seitenwände aufweist, die zwei Paare von gegenüberliegenden Seitenwänden bilden, können obere korrespondierende Bereiche dieses Typs zwischen einem oder beiden Paaren von gegenüberliegenden Seitenwänden mit einem Abstand von etwa D/(N+1) wie oben für die Säulen beschrieben verteilt werden, und in einigen Ausführungsformen können diese oberen korrespondierenden Bereiche und die Säulen auf dieselbe Weise beabstandet werden.

Mit Bezug auf Größe und Abmessungen des Masthähnchentransportcontainers ist es möglicherweise aus Gründen einer effizienten Handhabung sinnvoll, wenn die Container so groß wie möglich sind, um den mit der Handhabung von Containern beim Füllen auf der Farm und beim Leeren am Schlachthaus assoziierten Arbeitsaufwand zu reduzieren. Arbeitsumweltgesetze in Bezug auf das Höchstgewicht, das von Farmpersonal gehandhabt werden darf, und die Möglichkeit einer praktischen Handhabung der Container schreiben jedoch Obergrenzen für die Größe von Containern des Standes der Technik vor. Mit den Masthähnchentransportcontainern gemäß der vorliegenden Erfindung wird derzeit bevorzugt, dass die Länge des Masthähnchentransportcontainers im Bereich von 2,10 m bis 2,80 m, vorzugsweise bei etwa 2,4 m liegt und dass die Breite des Masthähnchentransportcontainers im Bereich von 0,70 m bis 2,6 m, vorzugsweise im Bereich von 0,70 bis 0,90 m und besonders bevorzugt bei etwa 0,80 m liegt. Eine Breite von 2,4 m entspricht der Breite der Plattform, die an den Lkws zu finden ist, die heute typischerweise für den Transport von Masthähnchen benutzt werden, und bei solchen Masthähnchentransportcontainern ist es somit nicht notwendig, zwei oder mehr Transporteinheiten nebeneinander zu laden, sondern stattdessen kann die Plattform des Anhängers mit einer einzigen Reihe von Masthähnchentransportcontainerstapeln gefüllt werden. Ein Transport mit anderen Mitteln kann andere Größen erfordern, wobei ein Beispiel der Schienentransport ist, bei dem Waggons eine verfügbare Plattformbreite von bis zu 2,8 m haben können.

Wie oben mit Bezug auf den Boden des Containers erläutert, lassen sich ebene Flächen leicht reinigen, und es wird daher auch bevorzugt, dass die Seitenwände im Wesentlichen eben und vorzugsweise plattenförmig ohne andere Öffnungen als mögliche Belüftungsöffnungen sind. Die Konstruktion von wenigstens einer der Seitenwände kann jedoch derart sein, dass Belüftung ermöglicht wird, entweder indem eine Öffnung zwischen den jeweiligen Seitenwänden von aufeinander angeordneten Masthähnchentransportcontainern vorgesehen wird oder indem Belüftungsöffnungen durch die Seitenwand vorgesehen werden.

Masthähnchentransportcontainer können aus einem beliebigen Material hergestellt werden, das stark und stabil genug ist, damit die Container mit Masthähnchen gefüllt werden können, und das eine gründliche Reinigung aushalten kann. Es wird derzeit bevorzugt, dass der Masthähnchentransportcontainer aus einem Plastikmaterial gefertigt ist, vorzugsweise durch Spritzgießen. Geeignete Plastikmaterialien umfassen hochdichtes Polyethylen (HDPE) und Polypropylen, aber es ist auch möglich, die Container aus Stahl, Edelstahl, Aluminium, Metallen oder Verbundstoffen wie z.B. Carbonfaserverbundstoffen herzustellen, und/oder sie mit Verstärkungseinlagen aus einem anderen Material als dem Rest des Containers zu versehen.

Der Container kann als Einzelkomponente eingesetzt werden, insbesondere dann, wenn das Innenvolumen durch einen Deckel nach oben hin verschlossen ist, so dass ein allseitig umschlossenen Aufnahmeraum gebildet ist, der nur durch die Belüftungs- und Entlüftungsöffnungen und ggf. über die Zuführung für die Nahrungsmittel mit der Umgebung (insbesondere dem Belüftungs- und Entlüftungssystem sowie der Zuführung für die Nahrungsmittel) in Kontakt steht. Wie im Folgenden ausgeführt, kann jeder Container erfindungsgemäß aber auch Bestandteil eines übergeordneten Systems sein, wie z.B. einer Einheit (Stapel aus mindestens zwei Containern, im Folgenden auch als Transporteinheit oder Masthähnchentransporteinheit bezeichnet), einer Anordnung (Einheit mit einem aktiven Belüftungssystem) und eines Transportanhängers. Alles, was zu den einzelnen Containern beschrieben wurde und weiter unten beschrieben wird, gilt in gleicher Weise korrespondierend auch für die Einheit, die Anordnung und den Transportanhänger.

Die erfindungsgemäße Einheit zeichnet sich dadurch aus, dass wenigstens eine Belüftungssäule in die Masthähnchentransporteinheit verläuft und wenigstens eine Belüftungsöffnung in jedem Innenvolumen aufweist. Das Vorsehen von wenigstens einer Belüftungsöffnung an der wenigstens einen Belüftungssäule in dem individuellen Innenvolumen bedeutet, dass eine ausreichende Belüftung auch für Masthähnchen erzielt wird, die in dem Innenvolumen hinter wenigstens einer Außenreihe von anderen Masthähnchen stehen. In Einheiten des Standes der Technik mit vielen BelüftungsÖffnungen in den Seitenwänden und im Boden wird die Belüftung für Masthähnchen im Inneren der Einheit nicht unter allen Transportbedingungen als ausreichend oder effektiv genug gehalten, und man glaubt jetzt, dass dies durch das voll entwickelte Gefieder der Masthähnchen verursacht wird.

Beim Transport kann die äußerste Linie oder Reihe von Masthähnchen die Belüftung von außen in die Masthähnchentransporteinheit durch die Seitenwände blockieren oder behindern, und die durch den Boden nach oben strömende Belüftung kann ebenfalls unzureichend sein, weil das Gefieder der Masthähnchen eine Barriere für die Belüftung in vertikaler Richtung im Innenvolumen der Masthähnchentransporteinheit darstellt. Die Masthähnchentransporteinheit gemäß der vorliegenden Erfindung hat wenigstens eine Belüftungssäule, die in das Innenvolumen verläuft, und die Belüftungssäule verbessert die Belüftungsbedingungen für hinter anderen Masthähnchen befindliche Masthähnchen in einem erheblichen Ausmaß.

In einer Ausführungsform verläuft die wenigstens eine Belüftungssäule nach unten durch die obersten Innenvolumen. Auf diese Weise kann auch das unterste Innenvolumen mit Belüftungsluft versorgt werden, sogar wenn die wenigstens eine Belüftungssäule mit einer im untersten Innenvolumen an der Decke befindlichen Endöffnung endet. Es wird jedoch bevorzugt, dass die wenigstens eine Belüftungssäule durch alle Innenvolumen zu einer nach unten weisenden Endöffnung an der Unterseite der Masthähnchentransporteinheit verläuft, weil dies eine Stapelung von Masthähnchentransporteinheiten erlaubt, wobei die Belüftungssäulen aneinandergereiht werden. In einer weiteren Ausführungsform verläuft eine Belüftungssäule in einige der Innenvolumen, und eine andere Belüftungssäule verläuft in andere der Innenvolumen.

Eine Belüftungsvorrichtung kann über der Transporteinheit angeordnet werden oder die Belüftungsvorrichtung kann sich in der unteren Tragstruktur der Transporteinheit befinden, so dass die Belüftungsvorrichtung die wenigstens eine Belüftungssäule mit Belüftungsluft versorgt. Eine Belüftungsvorrichtung in einer Belüftungsanordnung ist vorzugsweise auf dem für den Transport benutzten Anhänger vorgesehen, und nach dem Beladen des Anhängers wird die wenigstens eine Belüftungssäule mit der assoziierten Belüftungsvorrichtung verbunden, die ein Belüftungskanal sein kann, der Teil eines gemeinsamen Belüftungssystems bildet, oder ein lokaler Ventilator, der an der Belüftungssäule positioniert ist. Es kann mehr als eine Belüftungssäule in der Transporteinheit vorhanden sein, und eine Belüftungsvorrichtung kann für jede Belüftungssäule in der Einheit vorgesehen werden.

In einer weiteren Ausführungsform bilden Belüftungssäulen in zwei aufeinander gestapelten Transporteinheiten gemeinsame Belüftungssäulen, vorzugsweise über Belüftungssäulenabschnitte in einer Auflagepalette oder durch eine in der Palette integrierte Belüftungseinrichtung. Falls die individuelle Transporteinheit eine geringere Höhe hat als die auf dem Anhänger verfügbare Höhe, können möglicherweise zwei oder mehr Transporteinheiten aufeinandergestapelt werden, und in diesem Fall ist es von Vorteil, wenn die Belüftungssäulen gemeinsame Belüftungssäulen bilden, weil es leichter wird, Belüftung vorzusehen und an die Belüftungssäulen anzuschließen.

Vorzugsweise wird/werden, wenn die Transporteinheiten auf ein beladene Transporteinheiten tragendes Transportfahrzeug geladen werden, die Belüftungssäule oder - säulen in jedem Einheitsstapel mit Zwangsbelüftung versorgt. Da die Belüftung in den Innenvolumen zwangsweise erfolgt, ist die Belüftung unabhängig davon, ob das Transportfahrzeug fährt oder nicht, und es kann eine sehr gleichmäßige Belüftungsrate über alle Innenvolumen erzielt werden, da der spezifische Ort der Transporteinheit auf dem Fahrzeug (wie z.B. in der Mitte) keinen wirklichen Einfluss auf die dem Innenvolumen zugeführten Belüftungsraten hat.

In einer Ausführungsform bilden wenigstens zwei Masthähnchentransportcontainer in gestapelter Konfiguration eine Transporteinheit, bei der Belüftungssäulen, die vom Boden nach oben in den einzelnen Masthähnchentransportcontainern verlaufen, an entsprechende Belüftungssäulen in den anderen Masthähnchentransportcontainern in der Transporteinheit gefügt werden, um gemeinsame Belüftungssäulen zu bilden. So kann ein Belüftungsluftstrom durch mehrere aufeinander gestapelte Masthähnchentransportcontainer strömen und es potentiell zulassen, dass eine Belüftungseinheit den zum Belüften aller Innenvolumen in der Transporteinheit nötigen Luftstrom über eine gemeinsame Belüftungssäule oder über mehrere gemeinsame Belüftungssäulen bereitstellt, die zu allen Containern in dem Stapel verlaufen. Es kann auch einen einzelnen Belüftungsluftzufuhrkanal für jede gemeinsame Belüftungssäule in der Transporteinheit geben. Da der Masthähnchentransportcontainer wenigstens zwei Belüftungssäulen hat, gibt es wenigstens zwei gemeinsame Belüftungssäulen, die jedes Innenvolumen in Masthähnchentransportcontainern mit Belüftung versorgen, und durch die Verwendung von wenigstens zwei Belüftungseinheiten oder zwei unabhängigen Belüftungsluftzufuhrkanälen wird die Zuverlässigkeit der Belüftungsluftversorgung erhöht.

Wenn zwei Transporteinheiten nebeneinander mit ihren Seitenwänden dicht beieinander angeordnet werden, können solche Abschnitte einer Belüftungssäule in den Seitenwänden der beiden Einheiten zusammen eine gemeinsame Belüftungssäule bilden, die beide Einheiten belüftet, wie z.B. ein Ausströmen von Belüftungsluft aus beiden Einheiten, wenn die wenigstens eine Belüftungssäule innerhalb des Innenvolumens von einer der Einheiten mit einströmender Belüftungsluft versorgt wird.

Die Masthähnchentransportcontainer können ohne Verwendung eines separaten Rahmens zum Halten der einzelnen Container z.B. in einer gestapelten Konfiguration als eine Transporteinheit mit 3 bis 14 Masthähnchentransportcontainern in einem einzelnen Stapel oder in einem Stapel von 6 bis 12 Masthähnchentransportcontainern oder in einem Stapel von 3 bis 5 Masthähnchentransportcontainern angeordnet werden. Der Stapel von Masthähnchentransportcontainern in der Transporteinheit kann auf einer Auflage oder auf einer Palettenauflage angeordnet werden, oder der unterste Masthähnchentransportcontainer kann mit einer integrierten Auflage ausgelegt werden, so dass die gesamte Transporteinheit angehoben werden kann, oder eine Auflage kann Teil der Oberfläche sein, auf die die Transporteinheit gestellt wird.

In einer anderen Ausführungsform bilden Belüftungssäulen in wenigstens zwei aufeinander gestapelten Transporteinheiten eine oder mehrere gemeinsame Belüftungssäulen. Falls die individuelle Transporteinheit eine geringere Höhe hat als die auf dem Anhänger verfügbare Höhe, können eventuell zwei oder mehr Transporteinheiten aufeinander gestapelt werden, und in diesem Fall ist es von Vorteil, wenn die Belüftungssäulen gemeinsame Belüftungssäulen bilden, da diese sich dann leichter anordnen und an die Belüftung zu den Belüftungssäulen anschließen lassen.

In der zuvor genannten Ausführungsform bilden wenigstens zwei Masthähnchentransporteinheiten in einer gestapelten Konfiguration einen Transportstapel, wobei wenigstens eine Belüftungssäule, die vom Boden nach oben in der individuellen Masthähnchentransporteinheit verläuft, an einer entsprechenden Belüftungssäule in einer anderen Masthähnchentransporteinheit in dem Transportstapel angefügt ist, um eine gemeinsame Belüftungssäule zu bilden. So kann ein Belüftungsluftstrom durch zwei oder mehr übereinander angeordnete Masthähnchentransporteinheiten ziehen. Die wenigstens eine Belüftungssäule befindet sich somit in der Verlängerung einer entsprechenden wenigstens einen Belüftungssäule in einer weiteren Masthähnchentransporteinheit, die auf die Masthähnchentransporteinheit gestapelt ist. Ein Vorteil davon ist die Fähigkeit, die Belüftungssäulen in mehreren Einheiten mit einer gemeinsamen Belüftungsvorrichtung oder einer einzigen Verbindung der Säule mit einem Belüftungsversorgungskanal gemeinsam zu belüften, wie z.B. einem auf einem Transportanhänger vorgesehenen Versorgungskanal. Die Konstruktion der Belüftungsanordnung auf dem Anhänger ist somit vereinfacht, weil eine gemeinsame Belüftungssäule in zwei oder mehr gestapelten Einheiten mit der Belüftungsanordnung an einer einzigen Stelle verbunden ist.

Es kann für jede gemeinsame Belüftungssäule in der Transporteinheit einen individuellen Belüftungsluftzufuhrkanal geben. Die Masthähnchentransporteinheit kann wenigstens zwei Belüftungssäulen haben, und in diesem Fall gibt es wenigstens zwei gemeinsame Belüftungssäulen, die jedes Innenvolumen in Masthähnchentransporteinheiten belüften, und durch Verwenden von wenigstens zwei Belüftungseinheiten oder zwei unabhängigen Belüftungsluftzufuhrkanälen wird die Zuverlässigkeit der Belüftungsluftzufuhr zu jedem Innenvolumen erhöht.

In einer Ausführungsform ist die mindestens eine Belüftungssäule in Abschnitten gefertigt, und wenigstens einer der Böden ist beweglich und ist an einen Abschnitt der Belüftungssäule angefügt. Ein Vorteil hiervon ist, dass ein Teil des Bodens mit Bezug auf einen anderen Teil des Bodens beweglich oder verschiebbar ist und der Säulenabschnitt sich dann auf dem beweglichen Teil des Bodens befindet und zusammen mit diesem Teil bewegt werden kann. Es ist somit möglich, die innere Säule in Abschnitten auf den assoziierten Bodenabschnitten bereitzustellen und die Säulenabschnitte beim Laden der Masthähnchen zu bewegen. Auf diese Weise kann eine große Beladungsöffnung trotz der Platzierung der wenigstens einen Belüftungssäule in dem Innenvolumen erzielt werden. Alternativ kann ein beweglicher Teil des Bodens eine offene Aussparung aufweisen, die sich an der Position der Belüftungssäule befindet, die dann am unbeweglichen Teil des Bodens befestigt werden kann. Als weitere Alternative verläuft die wenigstens eine Belüftungssäule von einer Seitenwand, so dass die Funktionsfähigkeit des Bodens durch die Anwesenheit der wenigstens einen Belüftungssäule unbehindert bleibt.

In einer Ausführungsform haben die Belüftungssäulen längliche Belüftungsöffnungen, jeweils mit einer längeren Achse und mit der längeren Achse in der Längenrichtung der Belüftungssäule orientiert. Dies ergibt einen gleichförmigen Luftstrom und ein geringeres Risiko, dass die Öffnungen durch Masthähnchen oder Schmutz blockiert werden, aber es ist auch möglich, eine Reihe von Belüftungsöffnungen entlang der Länge der Belüftungssäule bereitzustellen, um mehrere separate Belüftungspunkte vorzusehen. Dies gilt unabhängig davon, ob diese Belüftungssäulen horizontal oder vertikal und/oder mit Säulen in anderen Einheiten zum Bilden einer gemeinsamen Belüftungssäule gekoppelt sind.

Der Belüftungsluftstrom zu den Belüftungssäulen kann durch natürliche Belüftung oder durch Zwangsbelüftung oder durch eine Kombination von beiden bereitgestellt werden. Es wird bevorzugt, dass jeder Einheitsstapel mit Zwangsbelüftung zu den Belüftungssäulen versehen wird, wenn der Transport auf einem Transportfahrzeug stattfindet, das beladene Transporteinheiten trägt. Eine solche Zwangsbelüftung kann entweder in Form von den Belüftungssäulen zugeführter oder von davon abgeführter Luft vorliegen. Wenn die Luft in die Säulen geführt wird, d.h. wenn eine Belüftungseinheit den Belüftungssäulen Luft mit Überdruck zuführt, kann die in die Masthähnchentransportcontainer eingeblasene Luft klimatisiert werden, z.B. durch Regeln der Temperatur und/oder der Luftfeuchtigkeit der Belüftungsluft. Bei kalter Witterung kann ein Teil der Belüftungsluft zurückgeführte Belüftungsluft sein. Auf diese Weise wird die Wärme von den Masthähnchen genutzt, und der Energieverbrauch für die Luftklimatisierung wird minimiert.

In einer Ausführungsform, die unter anderem für Belüftungssäulen gilt, die vom Boden nach oben verlaufen, können die Belüftungssäulen längliche Öffnungen jeweils mit einer längeren Achse haben, wobei die längere Achse in Längenrichtung der Belüftungssäule orientiert ist.

Mit Bezug auf Größe und Abmessungen des Masthähnchentransportcontainers ist es möglicherweise aus Gründen einer effizienten Handhabung sinnvoll, wenn die Container so groß wie möglich sind, um die Arbeit in Verbindung mit der Handhabung von Containern beim Füllen auf der Farm und beim Leeren am Schlachthaus zu reduzieren. Mit den Masthähnchentransportcontainern gemäß der vorliegenden Erfindung bieten die Belüftungssäulen Belüftung vom Inneren des Innenvolumens nach außen, und indem der Container mit so vielen Belüftungssäulen versehen wird, wie für ein ständig gutes Wohlergehen der Masthähnchen nötig ist, können die Masthähnchentransportcontainer mit großen Maßen gefertigt werden. Es wird derzeit bevorzugt, dass die Länge des Masthähnchentransportcontainers im Bereich von 2,10 m bis 2,80 m, vorzugsweise bei etwa 2,4 m liegt und dass die Breite des Masthähnchentransportcontainers im Bereich von 0,70 m bis 2,6 m, vorzugsweise im Bereich von 0,70 bis 0,90 m und besonders bevorzugt bei etwa 0,80 m liegt. Eine Breite von 2,4 m entspricht der Breite der Plattform, die auf den Lkws zu finden ist, die heute typischerweise für den Transport von Masthähnchen benutzt wird, und bei solchen Masthähnchentransportcontainern ist es somit nicht notwendig, zwei oder mehr Transporteinheiten nebeneinander zu laden, sondern stattdessen kann die Plattform des Anhängers mit einer einzigen Reihe von Masthähnchentransportcontainerstapeln gefüllt werden. Der Transport mit anderen Mitteln kann andere Größen erfordern, wobei ein Beispiel der Schienentransport ist, bei dem Waggons eine verfügbare Plattformbreite von bis zu 2,8 m haben können.

Vorzugsweise weist die Einheit wenigstens drei Böden auf, die die Innenvolumina definieren und in jedem Innenvolumen ist wenigstens eine Belüftungs- oder Entlüftungsöffnung der gemeinsamen Belüftungs- oder Entlüftungssäule vorgesehen.

Vorteilhafterweise umfasst die Einheit weiterhin eine Palette zur Aufnahme des aus mindestens zwei Masthähnchencontainer gebildeten Stapels sowie ein Abdeckelement zum Schließen des im Stapel am weitest oben befindlichen Innenvolumens. Sowohl die Palette als auch das Abdeckelement sind zum Anschluss an ein aktives Belüftungssystem ausgebildet und eingerichtet.

Besonders bevorzugt umfasst die Palette Adapter in Form von Belüftungs- oder Entlüftungssäulenabschnitten, die zum Verbinden der Belüftungs- oder Entlüftungssäulen zweier übereinander angeordneter Einheiten ausgebildet und eingerichtet sind. Beispielsweise können die Adapter einer Palette an ein korrespondierendes Anschlussstück des Abdeckelementes angepasst sein, um einen geschlossenen Belüftungskreislauf zu bilden.

Besonders vorteilhaft kann die Einheit zum Anschließen an ein zentrales System zur Versorgung der Masthähnchen mit Nahrung und/oder an ein zentrales System zur Zwangsbelüftung der Masthähnchen mit einem Gas ausgebildet und eingerichtet sein. Eine bevorzugte Weiterbildung zeichnet sich dadurch aus, dass die wenigstens eine Belüftungs- oder Entlüftungssäule in Abschnitten gefertigt ist, und dass wenigstens einer der Böden beweglich ist und an einen Abschnitt der Belüftungs- oder Entlüftungssäule gefügt ist.

Das Design der Seitenwände und Böden der Masthähnchentransporteinheit kann auch benutzt werden, um zu beeinflussen, wie die Belüftungsluft in den Innenvolumen strömt. Eine oder mehrere der Seitenwände sowie die Böden können völlig geschlossen werden, ausgenommen lokale Bereiche, wo die Seitenwand lokal zu einem Teil einer Belüftungssäule gemacht wird, um Luft aus den Innenvolumen hinaus zu leiten. Die Seitenwände können alternativ plattenförmig und mit Belüftungsöffnungen versehen sein, wie beispielsweise eine einzelne Reihe von Belüftungsöffnungen, die sich in der oberen Hälfte des Innenvolumens befinden. Das Vorsehen von Belüftungsöffnungen am oberen Ende des Innenvolumens kann die Regelung des Luftstroms in der oberen Hälfte des Innenvolumens zulassen, wo sich die Köpfe der Masthähnchen befinden.

In einer Ausführungsform sind die Böden ohne Öffnungen, mit Ausnahme der wenigstens einen Belüftungssäule. Dies erleichtert eine gleichmäßige Verteilung der Belüftungsluft, und das Wohlergehen von Masthähnchen wird erhöht, weil ihre Füße oder Zehen nicht in kleinen Öffnungen steckenbleiben können. Die Seitenwände können auch plattenförmig sein und haben geschlossene Flächen, mit Ausnahme von Belüftungsöffnungen an einer lokalen Belüftungssäule.

Beim Be- und Entladen der Masthähnchentransporteinheit ist diese natürlich offen. In einer Ausführungsform hat die Masthähnchentransporteinheit geschlossene Seitenwände und Endwände, ausgenommen an den Stellen für Belüftungsöffnungen und - säulen. Dies gewährleistet nicht nur eine effiziente Belüftung der Transporteinheit, sondern macht die Innenvolumen im geschlossenen Zustand auch dunkel, so dass die Masthähnchen dazu neigen, beim Transport zu schlafen. Dies gilt unabhängig vom Design der Belüftungssäulen und Belüftungsöffnungen.

Vorzugsweise können die Masthähnchentransportcontainer in einer gestapelten Konfiguration mit 3 bis 14 Masthähnchentransportcontainern in einem einzelnen Stapel oder in einem Stapel von 6 bis 12 Masthähnchentransportcontainern oder in einem Stapel von 3 bis 5 Masthähnchentransportcontainern angeordnet werden, ohne Verwendung eines separaten Rahmens zum Halten der einzelnen Container. Letzterer entspricht in seiner Anzahl derzeitigen Kistensystemen mit einem Rahmen, der drei bis fünf Kisten aufnimmt. Der Stapel von Masthähnchentransportcontainern kann auf einer Auflage oder auf einer Palettenauflage angeordnet werden und bildet eine Einheit (im Folgenden auch als Transporteinheit bezeichnet) mit einem Grundgewicht und einer Gesamtbodenfläche, wobei die Gesamtbodenfläche die Summe der Bodenflächen der Masthähnchentransportcontainer in der Transporteinheit ist. In einer Ausführungsform liegt das Grundeinheitsgewicht (in kg) dividiert durch die Gesamtbodenfläche (in m²) bei höchstens 24,0 (kg/m²), und das Grundeinheitsgewicht (in kg) dividiert durch die Gesamtbodenfläche (in m²) liegt vorzugsweise im Bereich von 5 bis 24 kg/m², besonders bevorzugt im Bereich von 10 bis 20 kg/m². Im Vergleich dazu beträgt das Grundeinheitsgewicht dividiert durch die Gesamtbodenfläche des Standes der Technik, der separate Masthähnchentransportcontainer und einen Rahmen einsetzt, typischerweise bei etwa 60-100 kg/m². Das Grundeinheitsgewicht wird so verstanden, dass es alle Elemente einer Transporteinheit umfasst, d.h. nicht nur die Masthähnchentransportcontainer, sondern auch alle Auflagen, Paletten, Deckel oder Abdeckungen, die zusammen mit den Masthähnchentransportcontainern bei deren Bewegung als gestapelte Einheit oder gestapelte Einheiten beim Laden auf einen Anhänger benutzt werden, wobei allerdings das Gewicht der Masthähnchen im Grundeinheitsgewicht nicht enthalten ist. Die Masthähnchentransportcontainer werden vorzugsweise auf einer Palettenauflage gestapelt, um die Handhabung der Transporteinheit zu erleichtern, aber die Verwendung von Alternativen wie beispielsweise eine einfache Anordnung des untersten Masthähnchentransportcontainers eines Stapels auf einfachen Abstandshaltern, die von der Transporteinheit abgelöst sind, um sie über der Auflagefläche zu halten und Raum für die Gabeln eines Gabelstaplers zu lassen, ist nicht ausgeschlossen. Die Palettenauflage kann auch die Form eines speziellen Containertyps haben, der als unterste Lage in einem Stapel benutzt wird, wobei die Auflage in diesem untersten Container mit dem Containerboden integriert ist. Die Konstruktion der Palette und/oder des untersten Masthähnchentransportcontainers sollte derart sein, dass das Risiko, dass sich bei der Handhabung auf der Farm Schmutz und Vogelausscheidungen ansammeln, niedrig ist, um sowohl die Hygiene zu verbessern als auch den Transport von unnötiger Totlast zu vermeiden.

Das Grundeinheitsgewicht (in kg) dividiert durch die Gesamtbodenfläche (in m²) beträgt zwar vorzugsweise höchstens 24,0 (kg/m²), aber es ist in bestimmten Fällen wünschenswert, dass das Grundeinheitsgewicht höher ist, wie z.B. dann, wenn der Masthähnchentransportcontainer die Last eines sehr hohen Stapels wie z.B. 15 mit Masthähnchen beladene Masthähnchentransportcontainern aushalten soll.

Ein besonders niedriges Gewicht des Masthähnchentransportcontainers kann erzielt werden, wenn der Stapel nur in der Situation mit Masthähnchen gefüllt wird, in der der Boden des einzelnen Containers von unten abgestützt wird, entweder durch Abstützung von einer Palette oder einer anderen Auflage (gilt für den untersten Container in einem Stapel), oder durch Abstützung von der wenigstens einen Säule in dem Masthähnchentransportcontainer, der sich unterhalb des Containers befindet (gilt für Container, die über dem untersten Container gestapelt sind). Es ist vorteilhaft, die Masthähnchen zunächst in den untersten Container zu füllen, dann den nächsten Container auf den untersten zu stellen und Masthähnchen dann in den nächsten Container zu laden usw., während die Transporteinheit aufgebaut wird, und beim Leeren der Container mit dem obersten Container anzufangen und nach unten fortzufahren. Der einzelne Masthähnchentransportcontainer braucht somit niemals als separater Container an den Enden angehoben zu werden, wenn er mit Masthähnchen gefüllt ist, so dass der Boden leichtgewichtig konstruiert sein kann.

Bevorzugt weisen die Masthähnchencontainer der Einheit obere korrespondierende Bereiche und untere korrespondierende Bereiche auf, wobei die oberen korrespondierenden Bereiche in die unteren korrespondierenden Bereiche auf einem weiteren Masthähnchencontainer passen, der auf den Masthähnchencontainer gestapelt wird, und auf einer Palettenauflage als Einheit gestapelte Masthähnchencontainer stützen sich über die oberen korrespondierenden Bereiche und unteren korrespondierenden Bereiche gegenseitig ab. Vorteilhafterweise stehen die oberen korrespondierenden Bereiche an den Seitenwänden an Zwischenabschnitten der Seitenwände nach oben vor und lassen Öffnungen zwischen oberen Enden der Zwischenabschnitte und einem weiteren Masthähnchencontainer, der auf den Masthähnchencontainer gestapelt ist. Dadurch wird eine besonders stabile und die Masthähnchen schonende Einheit geschaffen.

Eine erfindungsgemäße Anordnung umfasst mindestens eine Einheit nach einem der Ansprüche 1 bis 27 sowie mindestens ein Belüftungssystem, das zum aktiven Belüften der oder jeder Einheit ausgebildet und eingerichtet ist. Eine solche Anordnung bildet ein autarkes System, das nahezu beliebig platziert werden kann, nämlich insbesondere in einem Geflügelaufzuchtbetrieb, auf einem Transportanhänger, in einem Wartebereich vor dem Schlachthaus, in einer Beruhigungs- und /oder Betäubungskammer oder an jedem anderen Platz.

Vorzugsweise ist das Belüftungssystem zum Belüften der oder jeder Einheit mit einem Gas ausgebildet und eingerichtet. Als Gas wird jedes sauerstoffhaltige und/oder CO₂-haltige oder andere eine beruhigende oder betäubende Wirkung erzielende Gas/Gasgenmisch verstanden.

Besonders bevorzugt ist die Anordnung dadurch gekennzeichnet, dass sie weiterhin mindestens ein System zur Versorgung der oder jeder Einheit mit Nahrungsmitteln umfasst. Mit der erfindungsgemäßen Anordnung ist eine hochflexible Haltung der Masthähnchen in unterschiedlichen Stadien vom tagesalten Küken bis zum schlachtreifen Masthähnchen vom Zuchtbetrieb bis zum Schlachthaus mit ein und demselben System gewährleistet.

Es können Belüftungsgeräte wie Gebläse oder Kompressoren an dem individuellen Stapel oder der individuellen Transporteinheit vorgesehen werden, wie beispielsweise durch Positionieren einer Belüftungsvorrichtung auf dem Stapel oder am Boden eines Stapels oder durch Integrieren von wenigstens einer Belüftungsvorrichtung in die Transporteinheit. Vorzugsweise bildet das Belüftungsgerät Teil des Transportfahrzeugs, wo das Belüftungsgerät an der Decke und/oder am Boden des Transportfahrzeugs vorgesehen und zum Belüften eines gesamten Stapels über die Belüftungssäulen benutzt werden kann, so dass sich eine optimale Ausnutzung des auf dem Fahrzeug verfügbaren Raums ergibt, so dass in Kombination mit der verbesserten Belüftung mehr Masthähnchen auf dem Fahrzeug transportiert werden können, ohne die Stressniveaus zu erhöhen.

In solchen Ausführungsformen kann die Belüftungseinrichtung dem Masthähnchentransporteinheitsstapel folgen und auch dann für Belüftung sorgen, wenn das Transportfahrzeug oder der Transportanhänger nicht dabei ist.

Das Belüftungsgerät ist vorzugsweise Bestandteil des Transportfahrzeugs, wobei das Belüftungsgerät an der Decke und/oder am Boden des Transportfahrzeugs vorgesehen und zum Belüften eines gesamten Einheitsstapels über die gemeinsamen Belüftungssäulen verwendet werden kann, so dass sich eine optimale Nutzung des auf dem Fahrzeug verfügbaren Raums ergibt und somit, in Kombination mit der verbesserten Belüftung, mehr Masthähnchen auf dem Fahrzeug transportiert werden können, ohne dass deren Stressniveaus erhöht werden.

Der erfindungsgemäße Transportanhänger ist dadurch gekennzeichnet, dass der Transportanhänger ein Belüftungssystem umfasst, das zum Belüften von Einheiten, ausgebildet und eingerichtet zum Aufnehmen und Halten von lebenden Masthähnchen während der Aufzucht und/oder während des Transports der Masthähnchen zu einem Schlachthaus und/oder während des Wartens der lebenden Masthähnchen vor der Verarbeitung im Bereich des Schlachthauses, umfassend mindestens zwei Masthähnchencontainer, mit einem Boden und Seitenwänden, die ein Innenvolumen definieren, der zum Aufnehmen und Halten von wenigstens fünf lebenden Masthähnchen ausgebildet und eingerichtet ist, wobei die Masthähnchencontainer stapelfähig mit Masthähnchencontainern gleicher Bauart ausgebildet und eingerichtet sind und wenigstens eine Belüftungsöffnung und wenigstens eine Entlüftungsöffnung aufweisen, wobei jeder Masthähnchencontainer wenigstens ein Segment einer Belüftungs- oder Entlüftungssäule umfasst, das durch das Innenvolumen verläuft und wenigstens eine Belüftungs- oder Entlüftungsöffnung mit Abstand zu den Seitenwänden aufweist, wobei jedes Segment der Belüftungs- oder Entlüftungssäule zum Anschluss an korrespondierende Segmente von Masthähnchencontainern gleicher Bauart sowie zum Anschluss an ein aktives Belüftungssystem ausgebildet und eingerichtet ist, wobei korrespondierende Segmente der Belüftungs- oder Entlüftungssäulen der die Einheit bildenden und aneinander und/oder übereinander liegenden Masthähnchencontainer jeweils gemeinsame und durch alle Innenvolumina verlaufenden Belüftungs- oder Entlüftungssäulen bilden, und dass die Einheit weiterhin eine Palette zur Aufnahme des aus mindestens zwei Masthähnchencontainer gebildeten Stapels sowie ein Abdeckelement zum Schließen des im Stapel am weitest oben befindlichen Innenvolumens umfasst, wobei die Palette Adapter in Form von Belüftungs- oder Entlüftungssäulenabschnitten umfasst, die zum Verbinden der Belüftungs- oder Entlüftungssäulen zweier übereinander angeordneter Einheiten ausgebildet und eingerichtet sind, angepasst ist.

Vorzugsweise weist das Belüftungssystem Belüftungseinrichtungen zum Belüften von lebenden Masthähnchen in den Einheiten auf, die in Reihen auf dem Anhänger angeordnet sind, wobei der Transportanhänger so ausgebildet ist, dass die Einheiten in einer Anordnung von einzelnen Belüftungs- oder Entlüftungssäulenabschnitten in den Einheiten von wenigstens einer Reihe geladen werden können, die gemeinsame Belüftungs- oder Entlüftungssäulen bilden, die innerhalb der Innenvolumina der Einheiten verlaufen, wobei die gemeinsamen Belüftungs- oder Entlüftungssäulen Endöffnungen aufweisen, und dass das Belüftungssystem so ausgelegt ist, dass mehrere Endöffnungen über Ventilationseinrichtungen auf dem Transportanhänger belüftet werden. Im Hinblick auf die mit diesen Merkmalen erhaltenen Ergebnisse wird auf die allgemeinen Erläuterungen der oben erwähnten Beschreibungen in Bezug auf das Verfahren verwiesen. Es wird bemerkt, dass einige der einzelnen Belüftungssäulenabschnitte mit anderen Verfahren wie z.B. durch natürliche Belüftung in den äußersten Masthähnchentransporteinheiten auf dem Anhänger belüftet werden können.

Vorteilhafterweise umfassen die Einheiten in wenigstens einer Reihe wenigstens eine gemeinsame Eingangsbelüftungssäule zum Führen von Belüftungsluft zu den Innenvolumina in den Einheiten und wenigstens eine gemeinsame Ausgangsbelüftungssäule zum Führen von Belüftungsluft aus den Innenvolumina in den Einheiten, wobei das Belüftungssystem so ausgelegt ist, dass es wenigstens die Endöffnungen der gemeinsamen Eingangsbelüftungssäulen belüftet. Diese Ausführungsform erzeugt Belüftungszufluss und -abfluss, so dass es möglich ist, die Belüftungsluftströme in den Masthähnchentransporteinheiten unabhängig von den Umgebungsbedingungen zu steuern, die durch das Fahren des Masthähnchentransportanhängers verursacht werden. Bevorzugt ist das Belüftungssystem zum Belüften der Endöffnungen der gemeinsamen Eingangsbelüftungssäulen mit Belüftungsluft von den Belüftungseinrichtungen ausgelegt, wobei das Belüftungssystem steuerbare Klappen aufweist, die wenigstens an einem Ende, vorzugsweise einem unteren Ende, der gemeinsamen Ausgangsbelüftungssäulen angeordnet sind, um den Bereich der gemeinsamen Ausgangsbelüftungsöffnungen ganz oder teilweise zu öffnen oder zu schließen. Die steuerbaren Klappen können das Ausmaß an Umwälzung von Belüftungsluft auf einfache Weise regulieren.

Eine bevorzugte Weiterbildung zeichnet sich dadurch aus, dass Belüftungseinrichtungen unabhängig von der Fahrgeschwindigkeit des Transportanhängers individuell steuerbar sind, vorzugsweise zum Zuführen von wenigstens einer voreingestellten Belüftungsrate (m³ Luft pro Sekunde), vorzugsweise wenigstens 0,05 m³/s, z.B. wenigstens 0,12 m³/s, vorteilhafterweise wenigstens 0,18 m³/s, und wobei optional wenigstens eine Belüftungseinrichtung an der Endöffnung der von ihr belüfteten gemeinsamen Belüftungssäule montiert ist. Diese Belüftungsraten ergeben gute Bedingungen für das Wohlergehen der transportierten Masthähnchen.

Besonders bevorzugt ist es, wenn das Belüftungssystem ein Aufzeichnungssystem und Sensoren zum Erkennen und Aufzeichnen von Parametern umfasst, die aus der Gruppe von a) Belüftungslufttemperatur, b) Belüftungsluftfeuchtigkeit, c) Umgebungslufttemperatur, d) Umgebungsluftfeuchtigkeit, e) Auslasslufttemperatur, f) Auslassluftfeuchtigkeit, g) COz-Gehalt in Auslassluft, h) Transportdauer, i) Stallungsdauer, j) Vibrationspegel, k) Geräuschpegel und I) Lichtintensität ausgewählt sind. Das Aufzeichnen von einem oder mehreren dieser Parameter kann zur Dokumentation des Wohlergehens der Masthähnchen beitragen und kann beim Regeln des lokalen Klimas in den Masthähnchentransporteinheiten benutzt werden.

Vorteilhafterweise weist der Transportanhänger ein Belüftungssystem mit Belüftungseinrichtungen und Belüftungsöffnungen mit Zwangsbelüftung, wie z.B. Gebläse und Kanäle mit Öffnungen, zum Belüften der Einheiten auf, wobei die Einheiten im beladenen Zustand auf dem Anhänger mehrere Bodenflächen umfassen, die in Stapeln auf dem Transportanhänger angeordnet sind, und wobei über der individuellen Bodenfläche ein Innenvolumen zum Aufnehmen von Masthähnchen vorhanden ist, wobei das das Belüftungssystem auf dem Transportanhänger zum Zuführen von wenigstens 20 separaten Belüftungssäulenendöffnungen mit mechanischer Belüftung angeordnet ist, wobei sich die individuelle Belüftungssäulenendöffnung an einer Seitenfläche einer Einheit am Ende einer Belüftungs- oder Entlüftungssäule befindet, die in das oder die Innenvolumina der Einheit verläuft, während die Einheit temporär auf den Transportanhänger geladen wird. Effekte der Bereitstellung von mechanischer Belüftung zu Belüftungssäulen, die in die Innenvolumen der Geflügeltransporteinheit verlaufen, gehen aus der obigen Beschreibung hervor, und die Kapazität zum mechanischen Belüften von wenigstens 20 separaten Belüftungssäulen ergibt eine Mindestverteilung von Belüftungsluft zu den Innenvolumen. Das Vorsehen von Belüftungssäulen innerhalb der Geflügeltransporteinheiten ermöglicht eine gleichmäßigere Verteilung von Belüftungsluft, so dass Temperatur, Luftfeuchtigkeit und CO₂-Gehalt konstanter gehalten werden können als dies möglich ist, wenn der Belüftungsluftstrom von außerhalb der Seitenflächen in die Transporteinheiten eintreten muss. Die Belüftung von der Innenseite der Innenvolumen ist auch vorteilhaft, wenn die Transporteinheiten eine relativ geschlossene Konstruktion haben, und es wird ferner möglich, die Transporteinheiten nahe beieinander anzuordnen.

Vorzugsweise weist das Belüftungssystem auf dem Transportanhänger für jeden Stapel wenigstens zwei Belüftungsöffnungen auf, die so angeordnet sind, dass sie sich neben wenigstens zwei Belüftungssäulenendöffnungen auf dem Stapel befinden, wenn der Stapel auf den Transportanhänger geladen wurde. Bei vertikal verlaufenden Belüftungssäulen bieten wenigstens zwei Säulen pro Stapel gleichmäßigere Belüftung in jedem Innenvolumen. Bei horizontal verlaufenden Belüftungssäulen sollte wenigstens eine Belüftungssäule pro Innenvolumen vorhanden sein. Mit anderen Worten sollte die Anzahl der Säulen wenigstens mit der Zahl der Böden in dem Stapel vergleichbar sein. Wenn die Geflügeltransporteinheiten zwei bis fünf Belüftungssäulen aufweisen, ist es möglich, einen Überdruck in einer Belüftungssäule einer Transporteinheit und einen Unterdruck in einer anderen zu haben, so dass Luft von der einen zur anderen strömt, aber es ist üblicherweise zweckdienlich, die gleiche Art von Druck in allen Säulen zu haben, um Ventilationsöffnungen in den Seitenwänden oder dem Boden der Transporteinheit bereitzustellen, so dass Luft zwischen diesen Öffnungen und den Säulen strömt. Einige Säulen können sich innerhalb der Transporteinheiten befinden, während andere an den Seiten der Transporteinheit angeordnet sind und möglicherweise zwei benachbarten Transporteinheiten gleichzeitig Belüftungsluft zuführen.

Bevorzugt weist das Belüftungssystem wenigstens zwanzig Belüftungsöffnungen und/oder Belüftungseinrichtungen auf, die auf dem Dach des Transportanhängers oder am Boden des Transportanhängers in Positionen angeordnet sind, die nach oben weisenden Belüftungssäulenendöffnungen an den Einheiten entsprechen, die temporär auf dem Transportanhänger platziert sind.

Eine besonders bevorzugte Ausführungsform des Transportanhänger sieht vor, dass der Transportanhänger mit einem COz-Versorgungssystem versehen ist, das die Belüftungsluft mit COz-Gehalt vorzugsweise im Bereich von 3 bis 22 Vol.-% bereitstellt, und das COz-Versorgungssystem vorzugsweise CO₂ aus Ausatemluft vom Geflügel und/oder von Abgasen von dem Transportantriebsfahrzeug erhält.

Die Aufgabe wird auch durch ein Verfahren zum Belüften lebender Masthähnchen während der Aufzucht und/oder während des Transports der Masthähnchen zum Schlachthaus und/oder während des Wartens der lebenden Masthähnchen vor der Bearbeitung im Bereich des Schlachthauses gelöst, nämlich unter Verwendung mindestens einer Einheit nach einem oder mehreren der Ansprüche 1 bis 27 und/oder einer Anordnung nach einem oder mehreren der Ansprüche 28 bis 30 und/oder einem Transportanhänger nach einem oder mehreren der Ansprüche 31 bis 40. Das erfindungsgemäße Belüftungsverfahren der Masthähnchen kann somit besonders flexibel sowohl bei der Aufzucht der Masthähnchen in den landwirtschaftlichen Betrieben, als auch beim Transport zu den Schlachthäusern und auch vor und innerhalb des Schlachthauses eingesetzt werden. Der Einsatz des Verfahrens beschränkt sich dabei nicht auf die Zufuhr von sauerstoffhaltiger Luft, sondern kann auch zum Zuführen von Gasgemischen verwendet werden, mittels denen die Masthähnchen z.B. für den Transport beruhigt oder vor der eigentlichen Verarbeitung betäubt werden.

Vorzugsweise dient es zum Belüften von abladbaren Einheiten auf einem Transportanhänger, wobei die Einheiten auf dem Transportanhänger mehrere Bodenbereiche umfassen, die in Reihen auf dem Transportanhänger angeordnet sind, und wobei ein Innenvolumen zum Aufnehmen von Masthähnchen über dem einzelnen Bodenbereich vorhanden ist und wobei ein Belüftungssystem mit Belüftungseinrichtungen den Einheiten Zwangsbelüftungsluft zuführt, wobei das Belüftungssystem mehrere Belüftungs- oder Entlüftungssäulenabschnitte mit Zwangsbelüftung versorgt, dass der einzelne Belüftungs- oder Entlüftungssäulenabschnitt, der in das/die Innenvolumen der Einheit verlaufen, die Zwangsbelüftungsluft durch Belüftungs- oder Entlüftungsöffnungen leitet, die an dem Belüftungs- oder Entlüftungssäulenabschnitt im Innenvolumen der Einheit positioniert sind, und dass einzelne Belüftungs- oder Entlüftungssäulenabschnitte von Einheiten in einer Reihe gemeinsame Belüftungs- oder Entlüftungssäulen bilden, wobei diese gemeinsamen Belüftungs- oder Entlüftungssäulen die Zwangsbelüftungsluft zu in der Reihe befindlichen Belüftungs- oder Entlüftungssäulenabschnitten leiten.

Vorzugsweise leitet das Belüftungssystem des Transportanhängers Zwangsbelüftungsluft zu und/oder von Belüftungs- oder Entlüftungssäulenabschnitten in Einheiten, die sich an einem Ende von Reihen befinden, vorzugsweise einem oberen Ende von nach unten verlaufenden Reihen oder einem vorderen Ende von zum hinteren Ende des Transportanhängers verlaufenden Reihen oder einem Seitenende von in der Breitenrichtung des Transportanhängers verlaufenden Reihen.

Vorzugsweise werden die Einheiten in einem vorbestimmten Muster auf den Transportanhänger geladen, indem die Belüftungs- oder Entlüftungssäulenabschnitte zu gemeinsamen Belüftungs- oder Entlüftungssäulen aneinandergefügt werden.

Vorzugsweise wird wenigstens ein Belüftungs- oder Entlüftungsabschnitt des Belüftungssystems aktiviert und beginnt mit der Belüftung von geladenen Einheiten, während weitere Einheiten auf den Transportanhänger geladen werden.

Vorzugsweise strömt Belüftungs- oder Entlüftungsrohrleitungsabschnitten in den Einheiten zugeführte Belüftungs- oder Entlüftungsluft von den Belüftungs- oder Entlüftungsöffnungen innerhalb der Einheiten und aus den Belüftungs- oder Entlüftungsöffnungen an Seitenwänden der Einheiten.

Vorzugsweise strömt Belüftung- oder Entlüftungsrohrleitungsabschnitten in den Einheiten zugeführte Belüftungs- oder Entlüftungsluft von Belüftungs- oder Entlüftungsöffnungen an Seitenwänden der Einheiten zu den Belüftungs- oder Entlüftungsöffnungen innerhalb der Einheiten.

Vorzugsweise erhält das Belüftungssystem auf dem Transportanhänger Belüftungsluft von den Einheiten und führt wenigstens einen Teil der erhaltenen Belüftungsluft wieder als Belüftungsluft zu den Einheiten zurück.

Vorzugsweise wird/werden einer oder mehrere der Parameter a) Lufttemperatur, b) Luftfeuchtigkeit und c) CO₂-Gehalt in Luft in von den Einheiten erhaltener Belüftungsluft gemessen.

Vorzugsweise wird die Menge an zurückgeführter Luft in Abhängigkeit von wenigstens einem der gemessenen Parameter vorzugsweise so geregelt, dass die Menge zunimmt, wenn die Lufttemperatur unter einem vorbestimmten Temperaturwert liegt, oder die Menge abnimmt, wenn die Luftfeuchtigkeit über einem Grenzwert liegt, oder die Menge abnimmt, wenn der COz-Gehalt über einem vorbestimmten Wert liegt.

Vorzugsweise führt das Belüftungssystem allen Einheiten auf dem Transportanhänger Belüftungsluft in einer Menge im Bereich von 10.000 m³/h bis 100.000 m³/h, vorzugsweise im Bereich von 30.000 m³/h bis 80.000 m³/h zu.

Vorzugsweise dient das Verfahren zum Transportieren von lebendem Geflügel zu einem Schlachthaus und zum Aufnehmen von lebendem Geflügel am Schlachthaus, wobei Geflügel während des Transports in Einheiten mit wenigstens zwei Böden gehalten wird, wobei lebendes Geflügel in Einheiten auf einem Transportanhänger eines Fahrzeugs am Schlachthaus ankommt, wobei der Transportanhänger ein Belüftungssystem umfasst, das über Belüftungs- oder Entlüftungsöffnungen, die sich innerhalb der Innenvolumen über den Böden der das Geflügel tragenden Einheiten befinden, Belüftungsluft in die einzelne Geflügeltransporteinheit zuführt, wobei die Einheiten nach der Ankunft am Schlachthaus während der Stallung auf dem Transportanhänger verbleiben und das Belüftungssystem während der Stallung betrieben wird.

Vorzugsweise werden die Einheiten nach der Stallung vom Transportanhänger zu einer CAS-Vorrichtung (*Controlled Atmosphere Stunning* = Betäubung in kontrollierter Atmosphäre) übertragen und die kontrollierte Atmosphäre erfolgt durch mechanische Belüftung direkt in Belüftungsleitungen, die in das Innere der Einheit zu wenigstens einer Gasauslassöffnung in jedem Geflügel enthaltenden Innenvolumen in der Einheit verlaufen.

Vorzugsweise erfasst und zeichnet ein Aufzeichnungssystem Parameter auf, die ausgewählt sind aus der Gruppe von a) Belüftungslufttemperatur, b) Belüftungsluftfeuchtigkeit, c) Auslasslufttemperatur, d) Auslassluftfeuchtigkeit, e) CO₂-Gehalt in Auslassluft, f) Umgebungstemperatur, g) Umgebungsfeuchtigkeit, h) Transportdauer, i) Stallungsdauer, j) Vibrationspegel, k) Geräuschpegel und I) Lichtintensität.

Vorzugsweise werden wenigstens die Parameter c) Auslasstemperatur und d) Auslassluftfeuchtigkeit erfasst und aufgezeichnet.

Vorzugsweise nimmt der Transportanhänger mehrere Einheiten oder mehrere Stapel von Einheiten auf, wobei das Aufzeichnungssystem die gewählten Parameter für die individuelle Einheit oder den individuellen Stapel von Einheiten erfasst und aufzeichnet.

Das Belüftungssystem versorgt in das Innenvolumen der Masthähnchentransporteinheit verlaufende Belüftungssäulenabschnitte mit Belüftung, und die Zwangsbelüftungsluft strömt durch Belüftungsöffnungen, die sich innerhalb des Innenvolumens am Belüftungssäulenabschnitt befinden, wo eine wirksame Belüftung auch für Masthähnchen erzielt werden kann, die mit anderen Masthähnchen zwischen sich und den Seitenwänden der Masthähnchentransporteinheit stehen. Das Innenvolumen, oder die einzelnen Innenvolumen, wenn die Masthähnchentransporteinheit mehrere Böden hat, wird somit von innen nach außen belüftet, und alle Masthähnchen in der Transporteinheit erhalten eine gute Belüftung, und dies in Mengen, die ein akzeptables lokales Klima gewährleisten. Die sichere Belüftungsverteilung in den Innenvolumen lässt es zu, die Böden der Masthähnchentransporteinheiten recht dicht mit Masthähnchen zu füllen und dabei doch ein akzeptables Wohlergehen der Masthähnchen zwischen anderen Masthähnchen in den mittleren Bereichen der Böden zu wahren.

Das Belüftungssystem des Masthähnchentransportanhängers belüftet die Innenvolumen von hinter anderen Masthähnchentransporteinheiten befindlichen Transporteinheiten über den/die Belüftungssäulenabschnitt(e) in den genannten anderen Masthähnchentransporteinheiten. Die Belüftungssäulenabschnitte dienen als Teil des Belüftungssystems auf dem Anhänger. Die von den Belüftungssäulenabschnitten gebildeten gemeinsamen Belüftungssäulen verteilen Zwangsbelüftungsluft vom Belüftungssystem zu allen Masthähnchentransporteinheiten in der Reihe, durch die die gemeinsame Belüftungssäule verläuft. Die einzelnen Belüftungssäulenabschnitte dienen zum effektiven Belüften des Inneren der Masthähnchentransporteinheit, zu der der Abschnitt gehört, und zum Verteilen von Belüftung zu anderen Masthähnchentransporteinheiten in der Reihe.

Die gemeinsamen Belüftungssäulen werden beim Laden der Masthähnchentransporteinheiten auf den Transportanhänger auf diesem aufgebaut, und das Belüftungssystem auf dem Anhänger braucht daher nur Enden der gemeinsamen Belüftungssäulen mit Belüftungsluft zu versorgen, um alle Masthähnchentransporteinheiten in jedem Masthähnchen enthaltenden Innenvolumen zu belüften.

Ein weiterer Vorteil des vorliegenden Verfahrens zum Belüften von Masthähnchentransporteinheiten ist, dass die Seitenwände und/oder Böden der Transporteinheiten ohne oder mit nur begrenzten Öffnungen hergestellt werden können. Die Seitenwände können die Masthähnchen somit besser vor Umgebungseinflüssen wie Regen und Sonnenlicht abschirmen, und Böden ohne Öffnungen verhindern, dass Vogelausscheidungen von Böden darüber auf die Masthähnchen unter dem Boden fallen.

Die Belüftungsöffnungen in den Innenvolumen sind vorzugsweise in einem Abstand über den Böden und geeigneter Weise über der Brusthöhe von auf dem Boden stehenden Masthähnchen positioniert.

Es ist möglich, einen zentralen Belüftungsbereich so anzuordnen, dass er über die Länge des Anhängers verläuft, aber ein Ergebnis davon wäre, dass Masthähnchentransporteinheiten von beiden Seiten auf den Anhänger geladen werden müssten. Um das Beladen des Anhängers zu vereinfachen, wird es in einer Ausführungsform bevorzugt, dass das Belüftungssystem des Masthähnchentransportanhängers Zwangsbelüftungsluft zu und/oder von Belüftungssäulenabschnitten in Masthähnchentransporteinheiten zuführt, die sich an einem Ende von Reihen befinden, vorzugsweise einem oberen Ende von nach unten verlaufenden Reihen oder einem vorderen Ende von in Richtung auf das hintere Ende des Anhängers verlaufenden Reihen oder einem seitlichen Ende von in der Breitenrichtung des Anhängers verlaufenden Reihen.

Das Belüftungssystem des Anhängers kann mit den Masthähnchentransporteinheiten integriert werden, die in aufeinander gestellten Stapeln auf den Anhänger geladen werden, ohne die Stapel tatsächlich präzise in Bezug auf den Anhänger und zueinander zu platzieren; dann werden Belüftungseinrichtungen auf einzelnen vertikalen gemeinsamen Belüftungssäulen platziert, oder es kann ein positionierbarer Belüftungskanal oder Belüftungsschlauch auf einzelnen gemeinsamen Belüftungssäulen angeschlossen werden. Diese Vorgänge sind jedoch zeitaufwendig, daher wird es bevorzugt, dass die Masthähnchentransporteinheiten in einem vorbestimmten Muster auf den Masthähnchentransportanhänger geladen werden, bei dem die Belüftungssäulenabschnitte zu den gemeinsamen Belüftungssäulen zusammengefügt werden und diese gemeinsamen Belüftungssäulen dann mit Ventilationseinrichtungen oder Ventilationsöffnungen fluchten, die auf dem Anhänger in einem Muster angeordnet sind, das dem Beladungsmuster der Masthähnchentransporteinheiten entspricht. Das vorbestimmte Muster kann vorbestimmte Positionen auf dem Anhänger beinhalten, und solche vorbestimmten Positionen können durch Bereitstellen von Markierungen oder Vorsprüngen am Boden des Anhängers definiert werden, die als Führungen für Oberflächen der Masthähnchentransporteinheiten dienen oder mit Vertiefungen oder Aussparungen im Boden der Transporteinheiten übereinstimmen. Alternativ kann ein komplexeres System verwendet werden, bei dem die Transporteinheiten durch eine Roboterhandhabungsvorrichtung positioniert werden.

In einer Ausführungsform wird wenigstens ein Belüftungsabschnitt des Belüftungssystems aktiviert und beginnt mit der Belüftung von geladenen Masthähnchentransporteinheiten, während weitere Masthähnchentransporteinheiten auf den Anhänger geladen werden. Es kann einige Zeit dauern, um einen Anhänger voll zu beladen, z.B. eine Stunde, weil die Masthähnchen typischerweise in die Masthähnchentransporteinheiten geladen und die Einheiten dann auf den Lkw geladen werden. Es ist von Vorteil für das Wohlergehen von Masthähnchen, wenn die lokale Zwangsbelüftung zu den Masthähnchen in jeder Masthähnchentransporteinheit innerhalb von 15 Minuten nach dem Laden der Masthähnchentransporteinheit auf den Anhänger gestartet wird. Es ist somit vorteilhaft, wenn Masthähnchentransporteinheiten auf einen Abschnitt des Anhängers geladen und dann an das Belüftungssystem des Anhängers angeschlossen werden können, während andere Abschnitte des Anhängers mit Masthähnchentransporteinheiten beladen werden. Alternativ können viele Masthähnchentransporteinheiten mit Masthähnchen beladen und als gemeinsamer Satz auf den Anhänger geladen werden, und in diesem Fall kann die Zeit vom Laden von Masthähnchen in die Einheiten bis zum Ende des Anhängerbeladevorgangs und zum Anschließen der Belüftung so kurz sein, dass es allen Masthähnchen auch ohne abschnittsweises Anschließen von Belüftung gut geht. In einer anderen Ausführungsform können Masthähnchen in einem Stapel platziert und der Stapel dann auf den Anhänger geladen und an die Belüftung angeschlossen werden, wonach zum nächsten Stapel übergegangen wird.

Die den Belüftungsrohrabschnitten in den Masthähnchentransporteinheiten zugeführte Belüftungsluft strömt von den Belüftungsöffnungen in den Masthähnchentransporteinheiten aus Belüftungsöffnungen an Seitenwänden der Masthähnchentransporteinheiten. Die den Innenvolumen zugeführte Belüftungsluft kann aus dem Innenvolumen und durch eine oder mehrere Reihen von Belüftungsöffnungen hinaus in beispielsweise ein oder zwei Seitenwände der Masthähnchentransporteinheit strömen. Um das Ausströmen von Luft von den Masthähnchentransporteinheiten weg zu bewirken, könnten diese mit einem freien Abstand zur Nachbarreihe auf wenigstens einer Seite der Reihe angeordnet werden, so dass zwischen Säulen Raum für das Durchströmen von Belüftungsluft bleibt. Alternativ können die Reihen von Masthähnchentransporteinheiten dicht nebeneinander angeordnet werden, und die angrenzenden Seitenwände der Masthähnchentransporteinheiten in Nachbarreihen können zueinander passende Belüftungssäulenabschnitte haben, so dass die dicht gestapelten, aneinander gefügten Masthähnchentransporteinheiten gemeinsame Belüftungssäulen an den Seitenwänden zum Ausströmen von Belüftungsluft aus den Masthähnchentransporteinheiten definieren. Ein Vorteil ist, dass die Seitenwände der Masthähnchentransporteinheiten geschlossene Seitenwände sein können, mit Ausnahme der Belüftungssäulenabschnitte in den Wänden. Die geschlossenen Seitenwände machen die Masthähnchentransporteinheiten von den Umgebungsbedingungen nahezu unabhängig, abgesehen von den Bedingungen der Umgebungsluft.

Alternativ ist es möglich, dass Belüftungskanalabschnitten in den Masthähnchentransporteinheiten zugeführte Belüftungsluft aus Belüftungsöffnungen an Seitenwänden der Masthähnchentransporteinheiten zu den Belüftungsöffnungen in den Masthähnchentransporteinheiten strömt. Die Umkehr der Strömungsrichtungen ändert die Grundsätze kaum. Die soeben erwähnten Vorteile gelten auch für die entgegengesetzte Strömungsrichtung. Es ist auch möglich, zwischen der einen Strömungsrichtung und der anderen Strömungsrichtung abzuwechseln. Dies kann die Belüftung zu den Masthähnchen unabhängig von deren Ort auf dem Transportanhänger über einen Zeitraum noch gleichmäßiger machen.

Es ist auch möglich, die Strömungsrichtungen auf andere Weisen zu erhalten. Die Strömungsrichtungen können durch das Belüftungssystem durch Aufbringen eines Überdrucks auf die Enden einiger der gemeinsamen Belüftungssäulen gesteuert werden, während kein Druck oder ein Unterdruck auf andere der gemeinsamen Belüftungssäulen auf dem Anhänger aufgebracht wird. Belüftungssäulenabschnitte mit unterschiedlichem/r Druck und/oder Strömungsrichtung in derselben Masthähnchentransporteinheit sind mit dem Belüftungssystem möglich, aber es ist beispielsweise auch möglich, eine Belüftungssäule in einer Masthähnchentransporteinheit mit Überdruck und eine Belüftungssäule in einer anderen Masthähnchentransporteinheit mit Unterdruck zu beaufschlagen und Belüftungsluftstrom von der einen zur anderen Masthähnchentransporteinheit über Belüftungsöffnungen in den Seitenwänden der Einheiten zu erzielen. Es ist auch möglich, dass das Belüftungssystem einigen gemeinsamen Belüftungssäulen andere Ströme oder andere Belüftungsluftzusammensetzungen zuführt als anderen Belüftungssäulen. Ein Beispiel hierfür ist dort, wo es von Vorteil ist, Unterschiede in den Belüftungsströmen in unterschiedlichen Masthähnchentransporteinheiten zu haben, z.B. dann, wenn nur eine Seite des Anhängers durch Sonnenstrahlung erhitzt wird und gekühlt werden muss, während die andere Seite nicht gekühlt zu werden braucht.

Es ist möglich, dass das Belüftungssystem den Masthähnchentransporteinheiten Belüftungsluft nur auf der Basis von durch mechanische Belüftung angesaugter Umgebungsluft oder von durch den Luftdruck an der Fahrrichtung zugewandten Luftansaugöffnungen angesaugter Luft oder einer Kombination von beiden zuführt. Alternativ ist es jedoch auch möglich, die Belüftungsluft durch Mischen von verbrauchter Belüftungsluft mit der vom Belüftungssystem zugeführten Belüftungsluft zu klimatisieren. In einer Ausführungsform erhält das Belüftungssystem auf dem Masthähnchentransportanhänger Belüftungsluft von den Masthähnchentransporteinheiten und führt wenigstens einen Teil der empfangenen Belüftungsluft als Belüftungsluft zu den Masthähnchentransporteinheiten zurück. Dies kann unter kalten Umgebungsbedingungen relevant sein, bei denen die umgewälzte Belüftungsluft zumindest in den Anfangsphasen des Transports zu einer höheren Temperatur in den Masthähnchentransporteinheiten führt.

Es ist möglich, dass auf dem Anhänger wenigstens einer der Parameter a) Lufttemperatur, b) Luftfeuchtigkeit und c) COz-Gehalt in der Luft in von den Masthähnchentransporteinheiten empfangener Belüftungsluft gemessen wird. Diese Parameter können Informationen über das aktuelle Wohlergehen von Masthähnchen und darüber geben, ob in der Verbesserung der Belüftung zu den Masthähnchen Vorteile liegen. Wenn es den Masthähnchen zu warm wird, dann führen sie Wärme durch Aspiration ab, und die Aspiration setzt Feuchtigkeit frei, so dass Luftfeuchtigkeit und Lufttemperatur in der aus den Masthähnchentransporteinheiten strömenden Luft jeweils ein Indikator dafür sind, ob die Belüftung ausreicht oder angepasst werden muss. Der COz-Gehalt andererseits kann einen maximalen Grenzwert benötigen, und unter einigen Belüftungsbedingungen wird eine Rückführung möglicherweise durch den CO₂-Gehalt in der Luft beschränkt. Die Messung von einem oder mehreren der Parameter kann jedoch auch allein zu dem Zweck durchgeführt werden, das Wohlergehen der Masthähnchen während des Transports zu dokumentieren.

Die Menge an umgewälzter Luft kann in Abhängigkeit von wenigstens einem der gemessenen Parameter geregelt werden, vorzugsweise so, dass die Menge zunimmt, wenn die Lufttemperatur unter einem vorbestimmten Temperaturwert liegt, oder die Menge abnimmt, wenn die Luftfeuchtigkeit über einem Grenzwert liegt, oder die Menge abnimmt, wenn der CO2-Gehalt über einem vorbestimmten Wert ist.

In einer Ausführungsform stellt das Belüftungssystem Belüftungsluft zu allen Masthähnchentransporteinheiten auf dem Masthähnchentransportanhänger in einer Summenmenge im Bereich von 10.000 m³/h bis 100.000 m³/h, vorzugsweise im Bereich von 30.000 m³/h bis 80.000 m³/h bereit.

Die Aufgabe wird auch durch ein Geflügelschlachthaus mit einem Geflügelwartestallbereich für lebendes Geflügel unter Verwendung mindestens einer Einheit nach einem oder mehreren der Ansprüche 1 bis 27 und/oder einer Anordnung nach einem oder mehreren der Ansprüche 28 bis 30 und/oder einem Transportanhänger nach einem oder mehreren der Ansprüche 31 bis 40 gelöst.

Vorzugsweise kommt das lebende Geflügel in Geflügeltransporteinheiten auf einem Anhänger eines Fahrzeugs am Schlachthaus an, wobei der Anhänger ein Belüftungssystem zum Belüften der Geflügeltransporteinheiten umfasst, wobei der Geflügelwartestallbereich des Geflügelschlachthauses mehrere Parkbereiche mit Versorgungsbuchsen für den Betrieb der Belüftungssysteme auf Anhängern hat, die vorübergehend im Geflügelwartestallbereich platziert sind, wobei die Belüftungssysteme Belüftungssäulen belüften, die in die Innenvolumen der Geflügeltransporteinheiten verlaufen.

Vorzugsweise ist der Geflügelwartestallbereich wenigstens teilweise ein Außenbereich.

Vorzugsweise beinhaltet ein Geflügelaufnahmesystem am Geflügelschlachthaus halbautomatische oder automatische Aktuatoren, die zum Eingreifen in Geflügeltransporteinheiten auf einem Anhänger und zum Übertragen der Geflügeltransporteinheiten zu einem Förderer in dem Geflügelaufnahmesystem ausgelegt sind.

Vorzugsweise umfasst das Schlachthaus eine CAS-Vorrichtung (*Controlled Atmosphere Stunning* = Betäubung in kontrollierter Atmosphäre) mit einer Kammer mit wenigstens einer Belüftungsöffnung mit wenigstens einer Auslassöffnung, die zum temporären Anschließen an und Leiten von Gas mit kontrollierter Atmosphäre in wenigstens eine örtliche Belüftungsleitung ausgelegt ist, die zu wenigstens einer Belüftungsgasauslassöffnung führt, die sich in wenigstens einem Innenvolumen eines Geflügeltransportcontainers oder einer Geflügeltransporteinheit befindet, und wobei vorzugsweise die wenigstens eine Belüftungseinrichtung in der CAS-Vorrichtung Gas mit kontrollierter Atmosphäre durch Zwangsbelüftung zu jedem Geflügel aufnehmenden Innenvolumen in dem Geflügeltransportcontainer oder der Geflügeltransporteinheit leitet.

Vorzugsweise ist ein Zufuhrsystem für Geflügeltransporteinheiten zur CAS-Vorrichtung zum Aufnehmen von Geflügeltransporteinheiten von dem Anhänger und zum direkten Befördern von aufgenommenen Geflügeltransporteinheiten zur CAS-Vorrichtung angeordnet.

Mit der erfindungsgemäßen Ausbildung des Geflügelschlachthauses kann der Wartestallbereich mit geringeren Betriebskosten geführt werden, und vorzugsweise werden auch die Bauinvestitionskosten in Verbindung mit dem Einrichten des Wartestallbereichs reduziert.

Im Hinblick auf das Schlachthaus gemäß der vorliegenden Erfindung hat der Geflügelwartestallbereich des Geflügelschlachthauses mehrere Parkbereiche mit Versorgungsbuchsen zum Betreiben der Belüftungssysteme auf Anhängern, die vorübergehend im Geflügelwartestallbereich stehen, wobei die genannten Belüftungssysteme Belüftungssäulen belüften, die in die Innenvolumen der Geflügeltransporteinheiten verlaufen. Durch Bereitstellen von Parkbereichen für Anhänger und durch Benutzen von Anhängern mit einem Bord-Belüftungssystem, das Belüftungssäulen belüftet, die in die Geflügeltransporteinheiten verlaufen, können die das Geflügel enthaltenden Transporteinheiten auf dem Anhänger gehalten werden, bis sie direkt den Betäubungs- und Schlachtabschnitten oder dem Schlachthaus zugeführt werden können.

Somit entfällt die Notwendigkeit für ein Wartestallgebäude, das Transporteinheiten nach dem Abladen vom Anhänger belüftet, und für ein individuelles Platzieren der Transporteinheiten in dem belüfteten Gebäude. Es ist für die Möglichkeit des Haltens der Transporteinheiten auf dem Anhänger im Wartestallparkbereich wichtig, dass das den Anhänger belüftende Belüftungssystem Belüftungssäulen hat, die in die Innenvolumen der Transporteinheiten verlaufen. Nur mit solchen Belüftungssäulen ist es möglich, das in der Mitte eines individuellen Innenvolumens befindliche Geflügel ordnungsgemäß zu belüften, und für einen Stapel von Transporteinheiten, die sich im Innenbereich des Anhängerladebereichs zwischen anderen Stapeln von Transporteinheiten befinden, sind solche Belüftungssäulen innerhalb der Stapel sehr wichtig, um Überhitzung des Geflügels zu vermeiden.

Ein weiterer wichtiger Vorteil wird im Hinblick auf die Aktivitäten erzielt, die nötig sind, wenn ein beladener Geflügeltransportanhänger aufgenommen wird. Die Notwendigkeit zum Handhaben der Geflügeltransporteinheiten wird reduziert, da sie nicht mehr vom Anhänger abgeladen, ins Wartestallgebäude gebracht und dann wieder aus dem Wartestall heraus transportiert zu werden brauchen. Da jeder Handhabungsschritt Geräusche, Vibrationen und Veränderungen der Umgebung für das in den Geflügeltransporteinheiten gehaltene Geflügel bedeutet, ergibt sich unweigerlich ein erhöhtes Stressniveau für das Geflügel, und der Wegfall nur eines einzigen Handhabungsschritts bedeutet daher eine verbesserte Fleischqualität, z.B. weil die Häufigkeit von so genanntem PSE-Fleisch (pale, soft, exudative = blass, weich, nässend) reduziert wird. Wenn man eine einzige Geflügeltransporteinheit betrachtet, mag der Effekt gering sein, aber in der großen Perspektive der Gesamtproduktion eines modernen Geflügelschlachthauses summieren sich solche kleinen Verbesserungen zu einem erheblichen wirtschaftlichen Gewinn, und die Verbesserungen sind auch aus der Perspektive des Wohlergehens der Tiere deutlich von Vorteil.

Ein weiterer Vorteil ist, dass der die Geflügeltransporteinheiten zum Schlachthaus transportierende Fahrer nicht mehr auf das Abladen des Anhängers zu warten braucht. Er kann den Anhänger einfach geparkt und im Wartestallbereich angeschlossen lassen und einen anderen Anhänger nehmen, der zuvor entladen und eventuell mit leeren Transporteinheiten gefüllt wurde.

Der Anhänger selbst bietet ausreichenden Schutz für das Geflügel während der Wartezeit, so dass im Wartestallbereich tatsächlich kein Gebäude benötigt wird. Der Wartestallbereich kann somit ein Außenbereich sein, aber es ist auch möglich, den Wartestallbereich mit Sonnen- oder Windschutz oder mit einem Schutzgebäude für die Versorgungsbuchsen auszustatten. Der Geflügelwartestallbereich kann somit wenigstens teilweise ein Außenbereich sein. In einigen Klimazonen ist es zweckdienlich, dass die Parkbereiche überdacht sind, um die Anhänger vor Sonne und/oder Regen zu schützen. Eine offene Konstruktion lässt die Nutzung von natürlicher Belüftung als Ergänzung zur Zwangsbelüftung auf den Anhängern zu, aber in bestimmten Fällen ist es möglicherweise notwendig, vorübergehende oder permanente Seitenabdeckungen oder Wände vorzusehen, insbesondere zum Schützen der Versorgungsbuchsen.

Es ist natürlich weiterhin möglich, die Anhänger mit Gabelstaplern zu entladen, aber ein Geflügelaufnahmesystem am Geflügelschlachthaus kann auch halbautomatische oder automatische Aktuatoren aufweisen, die so ausgelegt sind, dass sie in Geflügeltransporteinheiten auf einem Anhänger eingreifen und die Geflügeltransporteinheiten zu einem Förderer im Geflügelaufnahmesystem befördern. So können die Geflügeltransporteinheiten direkt und problemlos zu einem Förderer befördert werden, der sie zum Betäubungsabschnitt bringt, was wiederum eine Verringerung der handhabungsbedingten Stressniveaus des Geflügels ergibt. Ein Beispiel für solche Aktuatoren ist ein Ausschubmechanismus, der im Boden des Anhängers vorgesehen ist und auf den Boden jeder Geflügeltransporteinheit drückt, so dass sie aus dem Anhänger und auf einen Aufnahmeförderer gedrückt wird, der permanent oder temporär auf einer Höhe mit dem Boden des Anhängers angeordnet ist. Dadurch wird nicht nur die Schwenk- und Drehbewegung eliminiert, die beim Entladen der Transporteinheiten mit Gabelstaplern auftritt, sondern es wird auch eine besser gesteuerte (langsamere) Beschleunigung und Verlangsamung ermöglicht. Es kann immer eine Transporteinheit zurzeit entladen werden, oder die gesamte Beladung auf einem Anhänger kann auf einmal entladen werden, je nach Konstruktion der Aktuatoren und des Aufnahmesystems und Kapazität der Betäubungs- und Schlachtabschnitte. In der halbautomatischen Version entscheidet ein Bediener, welche Transporteinheiten wann entladen werden und aktiviert dann die Aktuatoren, während im automatischen System die Anwesenheit eines vollen Anhängers registriert wird, beispielsweise anhand von mit einem Computersystem gekoppelten optischen Sensoren, und Transporteinheiten vorzugsweise als Reaktion auf Rückmeldedaten von den Betäubungs- und Schlachtabschnitten entladen werden. Wenn Geflügeltransporteinheiten auf dem Anhänger aufeinandergestapelt sind, dann kann es zweckdienlich sein, Aufnahmeförderer in verschiedenen Höhen zu haben und/oder höhenverstellbare Aufnahmeförderer zu benutzen. Alternativ kann ein Entstapeler vorgesehen werden.

Um die Zahl der Handhabungsschritte noch weiter zu reduzieren und die Fleischqualität zu verbessern, kann das Schlachthaus eine CAS-Vorrichtung (Controlled Atmosphere Stunning = Betäubung in kontrollierter Atmosphäre) mit einer Kammer mit wenigstens einer Belüftungseinrichtung mit wenigstens einer Auslassöffnung umfassen, die so ausgelegt ist, dass sie vorübergehend an Belüftungsgas mit kontrollierter Atmosphäre angeschlossen wird und dieses in wenigstens eine lokale Belüftungsleitung leitet, die zu wenigstens einer Belüftungsgasauslassöffnung führt, die sich in wenigstens einem Innenvolumen eines Geflügeltransportcontainers oder einer Geflügeltransporteinheit befindet. So wird vermieden, dass das Geflügel auf einen Förderer ausgeladen und in die Betäubungsvorrichtung transportiert wird, ein Vorgang, der das Geflügel in einen Zustand von Verwirrung und Unbehagen versetzen kann; aber was noch wichtiger ist, gewährleistet die Zufuhr von Gas in die lokalen Belüftungsleitungen, dass jeder Vogel dieselbe Gaszusammensetzung für die gewünschte Dauer erhält, da alle Vögel das Gas gleichzeitig erhalten. Dieser Effekt wird noch weiter gefördert, wenn vorzugsweise die wenigstens eine Belüftungseinrichtung in der CAS-Vorrichtung Gas mit kontrollierter Atmosphäre durch Zwangsbelüftung zu jedem Geflügel aufnehmenden Innenvolumen in dem Geflügeltransportcontainer oder in der Geflügeltransporteinheit leitet.

Die Transporteinheiten können direkt in die Betäubungsvorrichtung gebracht werden, ohne dass Fächer geleert zu werden brauchen wie in der EP 0 384 530 A1. Dadurch wird die Zahl der Handhabungsschritte reduziert, die das Geflügel vor dem Betäuben erfährt, und die mit der Handhabung assoziierten Arbeiten und die benötigte Gerätschaft werden vereinfacht.

In einer Ausführungsform ist ein Zuführungssystem für Geflügeltransporteinheiten zu der CAS-Vorrichtung zur Aufnahme von Geflügeltransporteinheiten vom Anhänger und zum direkten Befördern von aufgenommenen Geflügeltransporteinheiten zu der CAS-Vorrichtung angeordnet. Dies ergibt einen strukturell sehr einfachen Aufbau und eine sehr kurze Handhabungszeit, was zu dem Vorteil führt, dass die Stressniveaus des Geflügels niedrig gehalten werden.

Die Erfindung betrifft auch ein Verfahren zum Transportieren von lebendem Geflügel zu einem Schlachthaus und zum Aufnehmen von lebendem Geflügel am Schlachthaus, wobei das Geflügel während des Transports in Geflügeltransporteinheiten mit wenigstens zwei Böden gehalten wird, wobei das lebende Geflügel in Geflügeltransporteinheiten auf einem Anhänger eines Fahrzeugs am Schlachthaus ankommt, wobei der Anhänger ein Belüftungssystem umfasst.

Um das Wohlergehen und die Handhabung des Geflügels vor dem Schlachten zu optimieren, leitet das Belüftungssystem über Belüftungsöffnungen, die sich innerhalb der Innenvolumen über den Böden der das Geflügel tragenden Geflügeltransporteinheiten befinden, Belüftungsluft in die einzelnen Geflügeltransporteinheiten, wobei die Geflügeltransporteinheiten nach der Ankunft am Schlachthaus während der Stallung auf dem Anhänger verbleiben und das Belüftungssystem während der Stallung betrieben wird.

Die Vorteile mit Bezug auf eine reduzierte Zahl von Handhabungsschritten und einer reduzierten Gesamthandhabungszeit treffen gleichermaßen auf diesen Aspekt der Erfindung zu. In diesem Verfahren braucht der Anhänger jedoch nicht an eine Versorgungsbuchse am Schlachthaus angeschlossen zu werden, sondern kann alternativ seine eigene Bord-Energieversorgung benutzen und während der Stallungszeit möglicherweise an dem Lkw oder einem sonstigen Motor angeschlossen bleiben.

Wie mit Bezug auf das oben erwähnte Schlachthaus ausführlich beschrieben, ist es vorteilhaft, wenn die Geflügeltransporteinheiten nach der Stallung vom Anhänger auf eine CAS-Vorrichtung (Controlled Atmosphere Stunning = Betäubung in kontrollierter Atmosphäre) übertragen werden und die kontrollierte Atmosphäre durch mechanische Belüftung direkt in Belüftungsleitungen geleitet wird, die in das Innere der Transporteinheit zu wenigstens einer Gasauslassöffnung in jedem Geflügel aufnehmenden Innenvolumen in der Geflügeltransporteinheit verlaufen.

In einer Weiterentwicklung des Verfahrens gemäß der vorliegenden Erfindung werden durch ein Aufzeichnungssystem Parameter erfasst und aufgezeichnet, die ausgewählt sind aus der Gruppe von a) Belüftungslufttemperatur, b) Belüftungsluftfeuchtigkeit, c) Auslasslufttemperatur, d) Auslassluftfeuchtigkeit, e) CO₂-Gehalt in Auslassluft, f) Umgebungstemperatur, g) Umgebungsluftfeuchtigkeit, h) Transportdauer, i) Stallungsdauer, j) Vibrationspegel, k) Geräuschpegel und I) Lichtintensität.

Einige dieser Parameter sind potentielle Stressfaktoren für Geflügel, und eine Erfassung dieser Faktoren beim Transport und beim Parken kann dazu dienen, ein hohes Wohlergehen des Geflügels zu dokumentieren oder Bedingungen zu dokumentieren, die vermieden oder reduziert werden sollten. Das Erfassen und Aufzeichnen kann für bestimmte Parameter mit bestimmten Grenzwerten verglichen und mit einem Warnsystem gekoppelt werden, das z. B. den Fahrer oder ein Büro über den unerwünschten Zustand informiert, der durch die Überschreitung des Grenzwertes verursacht wurde, und dies kann zum Ändern oder Regulieren der die Warnung verursachenden Bedingungen genutzt werden. Ein Beispiel können Vibrationen sein, die durch zu schnelles Fahren auf einem Wirtschaftsweg verursacht werden, und die Warnung kann zu einer Verringerung der Geschwindigkeit führen.

Andere der angegebenen Parameter können zum Erfassen eines Geflügelzustands benutzt werden, wie z.B. ob es dem Geflügel zu warm ist. Die Auslassluftfeuchtigkeit in Kombination mit der Belüftungsluftfeuchtigkeit kann zeigen, ob es dem Geflügel zu warm zu werden beginnt, und diese Information kann beim Regulieren der Belüftung und beim Erzielen eines verbesserten Wohlergehens des Geflügels genutzt werden. Das Aufzeichnen von einem oder mehreren der Parameter kann nicht nur vom Spediteur benutzt werden, um seinem Kunden nachzuweisen, dass das Geflügel beim Transport ordnungsgemäß behandelt wurde, sondern es kann beispielsweise auch benutzt werden, um das fertige Fleischprodukt mit einem Tierschutzzertifikat zu versehen.

Wenn beschlossen wird, den Schwerpunkt auf eine begrenzte Anzahl von Faktoren zu legen, dann kann es vorteilhaft sein, dass wenigstens die Parameter c) Auslasslufttemperatur und d) Auslassluftfeuchtigkeit erfasst und aufgezeichnet werden, da diese Faktoren Einfluss auf die Fleischqualität nach dem Schlachten haben können.

Es wird bevorzugt, dass der Anhänger mehrere Geflügeltransporteinheiten oder mehrere Stapel von Geflügeltransporteinheiten aufnimmt und dass das Aufzeichnungssystem die gewählten Parameter für die einzelne Geflügeltransporteinheit oder den einzelnen Stapel von Geflügeltransporteinheiten erfasst und aufzeichnet. So können die Zustände in jeder Geflügeltransporteinheit oder jedem einzelnen Stapel unabhängig reguliert werden, um beispielsweise höhere Temperaturen in einem Endbereich des Anhängers als im gegenüberliegenden Endbereich zu kompensieren.

Es wird bemerkt, dass es möglich ist, entweder einen Überdruck oder einen Unterdruck auf die Belüftungssäulen aufzubringen, so dass Luft entweder aus den Belüftungssäulen und in die Innenvolumen gedrückt bzw. aus den Innenvolumen und in die Belüftungssäule gesaugt wird. Die Belüftungssäulen können an einem Ende geschlossen sein. Bei Verwendung von Transporteinheiten mit einer Palettenauflage können die Belüftungssäulen in die oder durch die Palette verlaufen.

In einer Ausführungsform sind die Belüftungsöffnungen und die Belüftungseinrichtungen am Dach des Anhängers oder am Boden des Anhängers angeordnet, und die Belüftungssäulen verlaufen vertikal innerhalb der Stapel. Die Belüftungseinrichtungen, wie z.B. Gebläse oder Kompressoren, der Belüftungsanordnung können dann an der Decke und/oder am Boden des Anhängers vorgesehen werden. Wenn sich Belüftungseinrichtungen sowohl an der Decke als auch am Boden befinden, können diese zusammenarbeiten, um Luftströme in den Belüftungssäulen zu erhöhen, oder sie können verschiedene Säulen belüften. Wenn mehrere Transporteinheiten aufeinander angeordnet sind, können Belüftungseinrichtungen an der Decke die oberen Transporteinheiten belüften, und Belüftungseinrichtungen am Boden können die unteren Transporteinheiten belüften. Belüftungseinrichtungen an der Decke und/oder am Boden bieten potentiell auch freien Zugang zum Anhänger, so dass Transporteinheiten von jeder Seite geladen und abgeladen werden können, aber Belüftungseinrichtungen können sich auch an den Seiten des Anhängers entweder alternativ oder zusätzlich zu Belüftungseinrichtungen an der Decke und/oder am Boden befinden. Ebenso ist es auch möglich, eine Kombination von horizontalen und vertikalen Belüftungssäulen zu benutzen.

In einer Ausführungsform weist das Belüftungssystem wenigstens zwanzig Belüftungsöffnungen und/oder Belüftungseinrichtungen auf, die an der Decke des Anhängers oder am Boden des Anhängers an Positionen angeordnet sind, die nach oben oder unten weisenden Belüftungssäulenendöffnungen an den Geflügeltransporteinheiten entsprechen, die temporär auf dem Geflügeltransportanhänger platziert sind. Die Anordnung am Dach macht es leichter, durch Anheben des Belüftungsabschnitts beim Be- oder Entladen Raum zum Laden der Geflügeltransporteinheiten zu schaffen.

In einer Ausführungsform ist der Anhänger mit wenigstens einer Belüftungseinrichtung pro Stapel und vorzugsweise mit einer Belüftungseinrichtung pro Belüftungssäule in dem Stapel versehen. Dies erlaubt eine sehr genaue Regelung der Belüftung zu lokalen Innenvolumen, wodurch beispielsweise kältere Luft zu Säulen in der Mitte des Anhängers geführt wird, wo die Temperatur tendenziell höher ist als an den Seiten, oder durch die Bewegung des Anhängers verursachte Drücke ausgeglichen werden können, die insbesondere den Transport von Transporteinheiten mit relativ offenen Seitenwänden beeinflussen können. So ist es vorteilhaft, wenn solche Belüftungseinrichtungen individuell regelbar sind, vorzugsweise so, dass wenigstens eine voreingestellte Belüftungsrate (m³ Luft pro Sekunde) zugeführt wird. Dies kann beispielsweise durch Bereitstellen eines Gebläses an jeder Belüftungssäule erzielt werden, aber es ist auch möglich, ein oder einige Gebläse vorzusehen, die mit Verteilungskanälen verbunden sind, die möglicherweise mit Ventilen zum Regeln der Luftströmung versehen sind. Das Vorsehen von mehr als einer Belüftungseinrichtung pro Stapel hat den Vorteil, dass die Belüftung nicht völlig unterbrochen wird, wenn eine Belüftungseinrichtung ausfällt.

In einer Ausführungsform wird der Anhänger mit einem CO₂-Zufuhrsystem ausgestattet, das die Belüftungsluft mit einem COz-Gehalt vorzugsweise im Bereich von 3 bis 22 Vol.-% bereitstellt, und das COz-Zufuhrsystem erhält CO₂ vorzugsweise von Ausatemluft von Geflügel und/oder von Abgas von dem Transportantriebsfahrzeug. CO₂ kann zum Betäuben von Geflügel benutzt werden, und die effektive Zufuhr in die Innenvolumen durch mechanische Belüftung wurde in der obigen Beschreibung als ein Vorteil für die Verteilung des Kohlendioxids über die Belüftungssäulen erwähnt. Während des Transports wird jedoch möglicherweise eine geringere CO₂-Konzentration benutzt, damit das Geflügel während des Transports ruhiger gehalten wird, ohne tatsächlich betäubt zu werden. Transportbeispiele des Standes der Technik in offenen Kisten haben hohe transportbedingte Gewichtsverluste gezeigt, wie beispielsweise einen Gewichtsverlust von 15 % des anfänglichen Körpergewichts zu Transportbeginn. Von Wärmeeinflüssen und dem resultierenden Hecheln abgesehen, ist das Geflügel aufgrund der beim Transport erfahrenen völlig neuen Umgebung - mit Geräuschen, Bewegungen, grellem Licht - möglicherweise auch verängstigt, und dies kann zur Folge haben, dass das Geflügel stressbedingt Energie verbraucht. Durch Steuern der Zusammensetzung der Belüftungsluft kann Geflügel ruhiggestellt werden, und dies ist sowohl für das Wohlergehen als auch für das Verringern des Gewichtsverlusts von Vorteil. Das Belüftungssystem auf dem Anhänger gemäß der vorliegenden Erfindung ist wirksam darin, die Belüftungsluft gleichmäßig zu verteilen, so dass Zusätze beispielsweise von Kohlendioxid in geringen Mengen regulierbar sind. Wenn der Kohlendioxidgehalt über 22 Vol.-% ansteigt, wird das Geflügel wahrscheinlich bewusstlos, was während des Transports nicht als Vorteil angesehen wird.

In einer Ausführungsform ist der Anhänger mit einem Aufzeichnungssystem zum Erfassen und Aufzeichnen von Parametern versehen, die ausgewählt sind aus der Gruppe a) Belüftungslufttemperatur, b) Belüftungsluftfeuchtigkeit, c) Umgebungslufttemperatur, d) Umgebungsluftfeuchtigkeit, e) Auslasslufttemperatur, f) Auslassluftfeuchtigkeit, g) CO₂-Gehalt in Auslassluft, h) Transportdauer, i) Stallungsdauer, j) Vibrationspegel, k) Geräuschpegel und l) Lichtintensität. Dieses Aufzeichnungssystem kann auf demselben Verarbeitungsgerät oder Computer laufen, das/der zum Steuern der Belüftungsanordnung verwendet wird, oder kann auf einem separaten Verarbeitungsgerät laufen, das mit dem genannten Prozessorgerät kommuniziert, und dann können Daten von dem Aufzeichnungssystem zum Steuern der Belüftungsanordnung verwendet werden, z.B. durch Bereitstellen eines erhöhten Luftstroms in einigen Belüftungssäulen, wenn eine nicht akzeptable Temperatur in der Nähe dieser Säule erfasst wird. Alternativ kann das Aufzeichnungssystem ein isoliertes System sein, das nur für Erfassungs- und Aufzeichnungszwecke verwendet wird. Das Aufzeichnungssystem kann auch ganz oder teilweise mit der Transporteinheit assoziiert sein, so dass ein oder mehrere der oben erwähnten Parameter selbst nach dem Abladen der Transporteinheit vom Anhänger erfasst und aufgezeichnet werden können.

Das Aufzeichnungssystem kann ein(en) oder mehrere separate Detektoren und Aufzeichnungsgeräte aufweisen, die über drahtlose Verbindung(en) kommunizieren können, aber es können auch kleinere lokale Einheiten verwendet werden, bei denen Detektor und Aufzeichnungsgerät Teil derselben Einheit sind. Solche Einheiten können den Transporteinheiten in Verbindung mit dem Füllen und Leeren der Transporteinheiten hinzugefügt und davon abgenommen werden, und sie können wegwerfbar oder wiederverwendbar sein.

Die Belüftungseinrichtungen können Bälge oder dergleichen zum Herstellen einer geeigneten luftdichten Verbindung mit den Belüftungssäulen umfassen, und/oder die Belüftungsanordnung kann Aktuatoren zum Bewegen der Belüftungseinrichtungen in den und aus dem Kontakt mit den Öffnungen der Belüftungssäulen umfassen.

Auf dem Anhänger kann ein Computersystem vorgesehen werden, das zum automatischen oder halbautomatischen Steuern der Belüftungsanordnung ausgelegt ist.

Es werden nachfolgend Beispiele von Ausführungsformen der Erfindung ausführlicher mit Bezug auf die schematischen Zeichnungen beschrieben. Dabei zeigt:
- Fig. 1: eine Ausführungsform eines Masthähnchentransportcontainers in einer Perspektivansicht von oben gesehen,
- Fig. 2: eine Masthähnchentransporteinheit, die aus Masthähnchentransportcontainern wie in Fig. 1 im Querschnitt entlang der Linie XX-XX in Fig. 1 zu sehen aufgebaut ist,
- Fig. 3: eine andere Ausführungsform eines Masthähnchentransportcontainers in einer Perspektivansicht von oben gesehen,
- Fig. 4: den Masthähnchentransportcontainer in Fig. 3 in einer Perspektivansicht von unten gesehen,
- Fig. 5: eine Ansicht entsprechend Fig. 4, aber aus einem geringfügig anderen Winkel gesehen,
- Fig. 6: fünf Container des in den Figuren 3 und 4 gezeigten Typs, die in einem Stapel auf einer Palette angeordnet sind,
- Fig. 7: einen Querschnitt entlang der Linie V-V in Fig. 6,
- Fig. 8: einen Querschnitt entlang der Linie VI-VI in Fig. 6,
- Fig. 8b: das mit VIB markierte Detail von der Seite, angedeutet durch den Pfeil in Figur 8,
- Fig. 9: die Palette in Fig. 6 in einer Perspektivansicht von oben,
- Fig. 10: eine andere Ausführungsform eines Masthähnchentransportcontainers in einer Perspektivansicht von oben gesehen,
- Fig. 11: den Masthähnchentransportcontainer in Fig. 10 in einer Perspektivansicht von unten gesehen,
- Fig. 12: noch eine andere Ausführungsform eines Masthähnchentransportcontainers in einer Perspektivansicht von oben gesehen,
- Fig.: 13den Masthähnchentransportcontainer in Fig. 12 in einer Perspektivansicht von unten gesehen,
- Fig. 14: noch eine andere Ausführungsform eines Masthähnchentransportcontainers in einer teilweise weggeschnittenen Perspektivansicht von oben gesehen und dicht an einem anderen Masthähnchentransportcontainer desselben Typs in einer paarweisen Konfiguration angeordnet,
- Fig. 15: eine Perspektivansicht einer Belüftungssäule wie in Fig. 14,
- Fig. 16: noch eine andere Ausführungsform eines Masthähnchentransportcontainers in einer teilweisen weggeschnittenen Perspektivansicht von oben gesehen, wobei drei solche Masthähnchentransportcontainer aufeinander angeordnet sind, wobei der Stapel auf zwei dicht nebeneinander angeordneten Paletten angeordnet ist und wobei zum Bilden einer Transporteinheit eine Abdeckung auf dem obersten Masthähnchentransportcontainer vorgesehen ist,
- Fig. 17: eine Perspektivansicht des mit XV markierten Details in Fig. 16,
- Fig. 18: drei Transporteinheiten, die wie in Fig. 16 illustriert aufgebaut sind, wobei jede zehn Masthähnchentransportcontainer umfasst, die auf einem Lkw-Anhänger mit höhenverstellbarem Dach mit einer Belüftungsanordnung angeordnet sind,
- Fig. 19: die Belüftung auf einem mit Transporteinheiten beladenen Lkw, die jeweils vier und fünf Masthähnchentransportcontainer des in den Figuren 10 und 11 gezeigten Typs beinhalten,
- Fig. 20: noch eine andere Ausführungsform eines Masthähnchentransportcontainers mit Seitentüren,
- Fig. 21: noch eine weitere Ausführungsform eines Masthähnchentransportcontainers in einer Perspektivansicht von oben gesehen,
- Fig. 22: einen Masthähnchentransportcontainer in Fig. 21 in einer Perspektivansicht von unten gesehen,
- Fig.: 23eine Gruppe von Masthähnchentransportcontainern wie in den Figuren 21 und 22 in einer Perspektivansicht von oben gesehen,
- Fig. 24: noch eine weitere Ausführungsform eines Masthähnchentransportcontainers in einer Perspektivansicht von oben gesehen,
- Fig. 25: vier verschiedene Querschnittsformen von Böden von Masthähnchentransportcontainern,
- Fig. 26: Transporteinheiten, die von auf einem LKW-Anhänger angeordneten Masthähnchentransportcontainer, wie in den Figuren 10 und 11 illustriert, aufgebaut sind,
- Fig. 27: eine Ausführungsform einer Transporteinheit gemäß der vorliegenden Erfindung in einer Perspektive von unten gesehen,
- Fig. 28: vier Transporteinheiten der Ausführungsform von Fig. 27, angeordnet mit zwei Transporteinheiten in einem Stapel und zwei solchen Stapeln nebeneinander platziert,
- Fig. 29: eine Perspektivansicht wie in Fig. 27 einer anderen Ausführungsform der Transporteinheit,
- Fig. 30: und 31 Perspektivansichten einer dritten und einer vierten Ausführungsform der Transporteinheit von oben,
- Fig. 32: einen mit Transporteinheiten gemäß der Ausführungsform der Fig. 30 beladenen Lkw,
- Fig. 33: einen LKW mit dem mit Transporteinheiten beladenen Anhänger, die jeweils vier oder fünf Masthähnchencontainer enthalten, von der Seite gesehen,
- Fig. 34: zwei LKWs mit Geflügeltransportanhängern und zwei geparkten Anhängern an einem Schlachthaus, in einer schematischen Ansicht von oben gesehen,
- Fig. 35: eine Vorrichtung zur Betäubung in kontrollierter Atmosphäre,
- Fig. 36: eine schematische Darstellung eines Aufzuchtbetriebs,
- Fig. 37: eine schematische Darstellung von zwei Einheiten, die zur Aufzucht von Masthähnchen mit einem Belüftungssystems und einer Zuführung für Nahrungsmittel verbunden sind,
- Fig. 38: einen einzelnen Container, der zur Aufzucht und zum Transport von Masthähnchen ausgebildet und eingerichtet ist, und
- Fig. 39: eine schematische Darstellung einer landwirtschaftlichen Anlage von der Brutstation bis zur Verladestation auf die Transportanhänger zum Abtransport an das Geflügelschlachthaus.

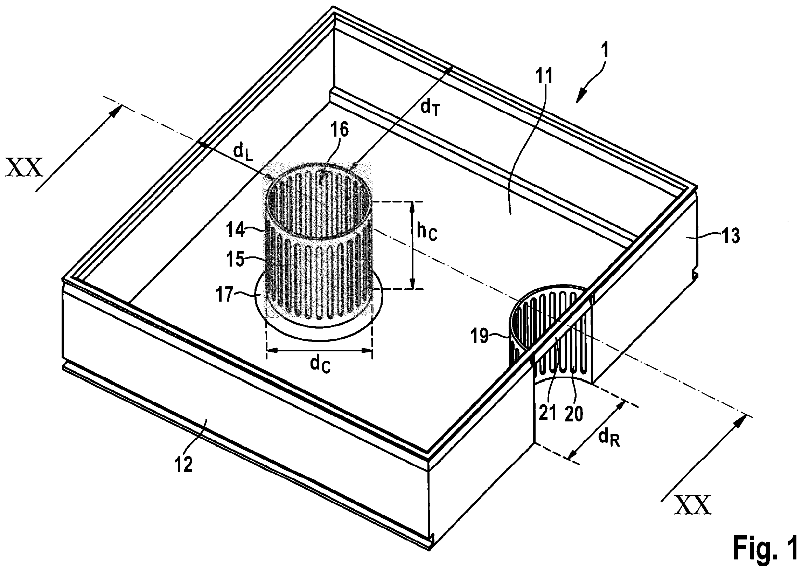

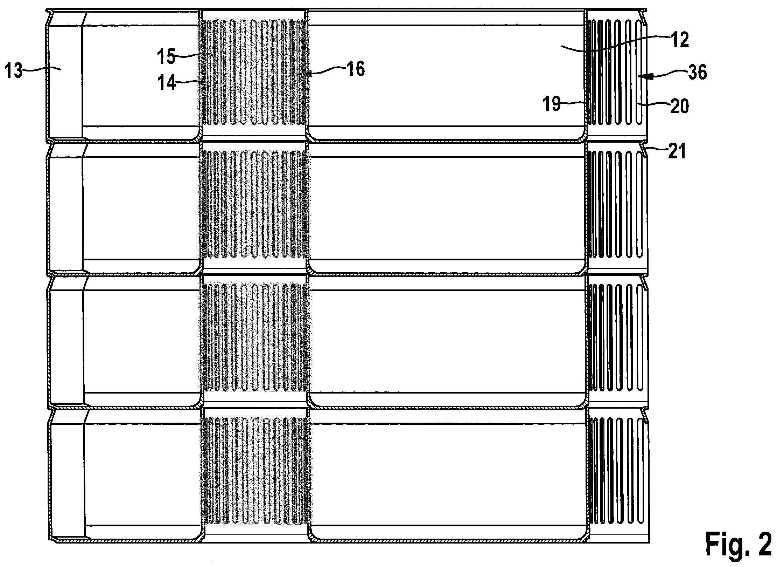

Eine Ausführungsform eines Masthähnchentransportcontainers 1 ist in den Figuren 1 und 2 dargestellt. Sie umfasst einen im Wesentlichen quadratischen Boden 11 und vier Seitenwände 12, 13, die zusammen ein Innenvolumen begrenzen, das zum Aufnehmen von wenigstens fünf lebenden Masthähnchen (nicht gezeigt) bemessen ist. Eine Belüftungssäule (als Belüftungsöffnung oder Entlüftungsöffnung) in dem Container kann auch als Belüftungssäulenabschnitt 14 oder Segment bezeichnet werden, weil sie zu einem Abschnitt einer gemeinsamen Belüftungssäule wird, die durch mehrere Masthähnchentransportcontainer verläuft, wenn diese zu einer Einheit gestapelt oder auf einen Transportanhänger geladen werden. Der Belüftungssäulenabschnitt 14 verläuft vom Boden 11 in das Innenvolumen in der Mitte des Bodens, und in einer der Seitenwände ist eine Aussparung 19 (als Entlüftungsöffnung oder Belüftungsöffnung) vorgesehen. Jeder Belüftungssäulenabschnitt 14 und jede Aussparung 19 ist mit länglichen Belüftungsöffnungen 15 versehen, die über fast die gesamte Höhe der Säule verlaufen.

Das "Segment" beschreibt im Zusammenhang mit der Belüftungs- oder Entlüftungssäule einen Abschnitt einer Säule, die als Belüftung- oder Entlüftungssäule dienen kann. Dabei handelt es sich sowohl um einen längsaxialen Abschnitt einer Säule als auch um einen Querschnittsabschnitt einer Säule. Das Zusammenfügen mehrerer Segmente bzw. mehrerer Säulenabschnitte benachbarter Container führt in allen Fällen zu einer gemeinsamen Säule. Jede Belüftungssäule kann auch Entlüftungssäule sein, abhängig davon, ob durch das Belüftungssystem ein Überdruck oder ein Unterdruck erzeugt wird. Von daher kann im Folgenden an den Positionen, an denen von einer Belüftungssäule die Rede ist, entsprechend auch die Entlüftungssäule gemeint sein und umgekehrt. Im Folgenden wird auch allgemein nur von der Säule gesprochen. Jedes Segment bzw. jeder Belüftungssäulenabschnitt 14 kann eine eigene Säule bilden bzw. darstellen. Eine besondere Bedeutung kommt jedem Segment allerdings in einer weiter unten beschriebenen Einheit aus mindestens zwei Containern zu, nämlich wenn mehrere Segmente eine gemeinsame Säule bilden.

Der Belüftungssäulenabschnitt 14 ist in einem Abstand d_{T} von einer Seitenwand 12 und einem Abstand d_{L} von den anderen Seitenwänden 13 angeordnet. Diese Abstände d_{T}, d_{L} sind so ausgelegt, dass Raum für wenigstens ein Masthähnchen zwischen jeder der Säulen 14 und den jeweiligen Seitenwänden 12, 13 entsteht, und betragen daher wenigstens 0,17 m. Dieser Abstand verhindert nicht nur, dass Masthähnchen eingeklemmt werden, sondern er bietet auch Belüftung für einen Bereich des Innenvolumens.

Der Belüftungssäulenabschnitt 14 hat in dieser Ausführungsform eine Höhe hc, die der Höhe der Seitenwände 12, 13 entspricht, und ist zylindrisch mit einem Hohlraum in der Mitte und einem konstanten Durchmesser dc, mit Ausnahme eines kleinen abgewinkelten Abschnitts 17, der an der Zusammenfügungsfläche mit dem Boden 11 vorgesehen ist. Wie erwähnt, kann jede Säule 14 eine Höhe h_{C} aufweisen, die etwa der Höhe der Seitenwände 12, 13 (einschließlich der Bodendicke) entspricht, so dass die Säulen 14 so ausgelegt sind, dass sie als Stützsäulen zum Stützen des Bodens 11 eines weiteren Masthähnchentransportcontainers 1 dienen, der auf den Masthähnchentransportcontainer 1 gestapelt wird, wie in Fig. 2 und 6-8 gezeigt.

Eine Seitenwand 13 ist mit einer halbkreisförmigen Aussparung 19 mit einem Durchmesser d_{R} versehen, der geringfügig größer ist als der des Säulenabschnitts 14, und diese Aussparung ist auch mit Belüftungsöffnungen 20 versehen. Um die Stabilität des Masthähnchentransportcontainers 1 selbst in einem mit Masthähnchen vollbeladenen Zustand zu gewährleisten, überspannt ein Träger 21 die Aussparung 19 in Fortsetzung der Ebene der Seitenwand 13. Dieser Träger ist auch zur Benutzung als Griff geeignet, wenn der Container entweder manuell oder automatisch gehandhabt wird.

Der Säulenabschnitt 14 ist so ausgelegt, dass er als Belüftungssäule dient, und die Öffnungen 15 sind als Belüftungsöffnungen ausgelegt, die ermöglichen, dass Belüftungsluft über den Hohlraum 16 in die Säule und durch die Belüftungsöffnungen in das Innenvolumen des Masthähnchentransportcontainers geleitet wird. Auf diese Weise können selbst Vögel mit Frischluft versorgt werden, die sich in einem Abstand von den Seitenwänden 12, 13 befinden, die herkömmlicherweise mit Belüftungsöffnungen versehen waren. Die Luftzufuhr kann auch zum Heizen oder Kühlen des Innenvolumens des Containers benutzt werden.

Durch die Belüftungsöffnungen 15 im Säulenabschnitt 14 zugeführte Belüftungsluft kann über die Öffnungen 20 in der Aussparung 19 in der Seitenwand austreten, und man wird verstehen, dass Luft auch in der entgegengesetzten Richtung von den Öffnungen 20 in der Seitenwand dem Belüftungssäulenabschnitt zugeführt werden kann, wenn die Säulen mit einem Unterdruck beaufschlagt werden.

Die ausgerundeten Flächen und der relativ große Durchmesser der Säulen 14 und Aussparungen 19 tragen zum Schutz der Masthähnchen beim Transport und beim Laden in den Container bei. Wenn ein Masthähnchen gegen die Seite einer Säule oder Aussparung schlägt, gibt es keine scharfen Kanten, die Prellungen verursachen könnten, und der Hohlraum kann den Säulen und Aussparungen eine gewisse stoßabsorbierende Elastizität verleihen.

Wenn Masthähnchentransportcontainer dieses Typs in einer Masthähnchentransporteinheit wie in Fig. 2 gezeigt aufeinander angeordnet werden, bilden die Säulenabschnitte 14 eine gemeinsame Belüftungssäule 16, die vertikal durch alle Einheiten verläuft, und die Aussparungen 19 bilden eine gemeinsame Belüftungssäule, die entlang einer der äußeren Seitenwände verläuft.

Der abgeschrägte Abschnitt 17 verstärkt nicht nur die Struktur, sondern lässt es auch zu, dass der obere Rand des Säulenabschnitts 14 eines unteren Masthähnchentransportcontainers geringfügig in den entsprechenden Säulenabschnitt 14 eines oberen Masthähnchentransportcontainers vorsteht, um so eine relativ enge Verbindung zwischen den Belüftungssäulenabschnitten zu erzielen. Es wird jedoch angemerkt, dass es keine Notwendigkeit für einen direkten Kontakt zwischen den oberen Enden der jeweiligen Belüftungssäulenabschnitte und den äußeren Unterseiten der Böden von darüber angeordneten Containern gibt, um eine gute Belüftung der Innenvolumen zu erzielen. Im Gegenteil, ein Spalt zwischen den Säulenabschnitten und dem Boden kann zur Verteilung von Belüftungsluft beitragen, weil der Spalt eine ringförmige Belüftungsöffnung bilden kann.

Der Masthähnchentransportcontainer in den Figuren 1 und 2 hat eine Länge und eine Breite von 120 cm, eine Höhe von 22,5 cm und einen Durchmesser der Belüftungssäulen 14 von 20 cm. Der Abstand d_{T} zu den Seitenwänden ohne Aussparungen beträgt 50 cm und der Abstand d_{L} zu der Seitenwand gegenüber der Seitenwand mit der Aussparung 19 beträgt 30 cm.

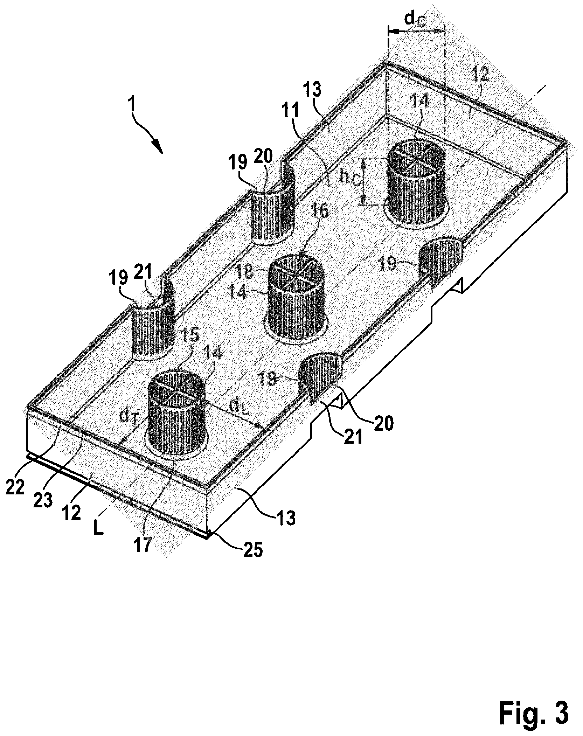

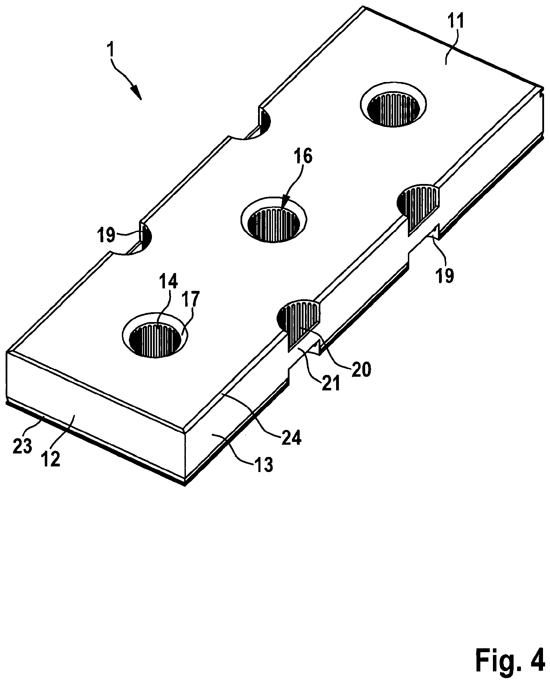

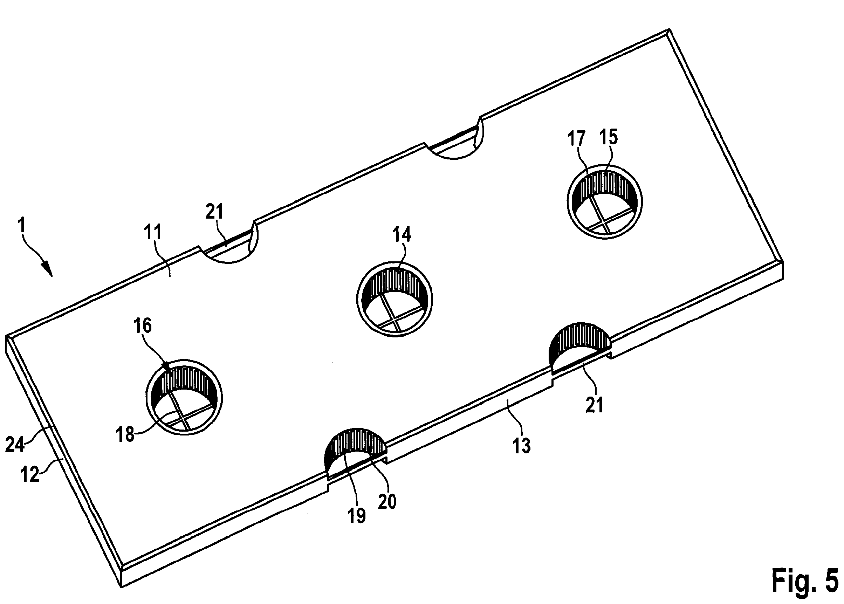

Eine andere Ausführungsform eines Masthähnchentransportcontainers ist in den Figuren 3-5 dargestellt. Dieser Container entspricht dem in den Figuren 1 und 2, mit der Ausnahme, dass er größer ist und eine andere Konfiguration der Belüftungssäulen hat, und es wurden daher die gleichen Bezugszahlen benutzt wie in den Figuren 1 und 2.

Der Container in den Figuren 3-5 umfasst einen rechteckigen Boden 11, zwei Querseitenwände 12 und zwei Längsseitenwände 13. Drei Säulenabschnitte 14 verlaufen in einem Abstand d_{T} von den Querseitenwänden 12 und einem Abstand d_{L} von den Längsseitenwänden 13 vom Boden 11 durch das Innenvolumen nach oben, wobei die Säulenabschnitte in einer Reihe entlang der mittleren Längsachse L des Containers angeordnet und gleichmäßig beabstandet sind. Die Belüftungssäulen in dem individuellen Masthähnchentransportcontainer können auch als Belüftungssäulenabschnitte 14 bezeichnet werden, weil die Belüftungssäulen in dem individuellen Masthähnchentransportcontainer zu einer gemeinsamen Belüftungssäule zusammengefügt werden, wenn die Container aufeinandergestapelt werden. Das Vorliegen von mehr als einem Belüftungssäulenabschnitt ergibt eine bessere Belüftung im Innenvolumen und ermöglicht es, unterschiedliche Drücke an den unterschiedlichen Säulenabschnitten 14 bereitzustellen, um einen Luftstrom von einer Säule zur anderen zu induzieren, so dass Belüftung selbst dann möglich ist, wenn die Öffnungen in den Seitenwänden blockiert sind oder überhaupt keine solchen Öffnungen vorhanden sind.

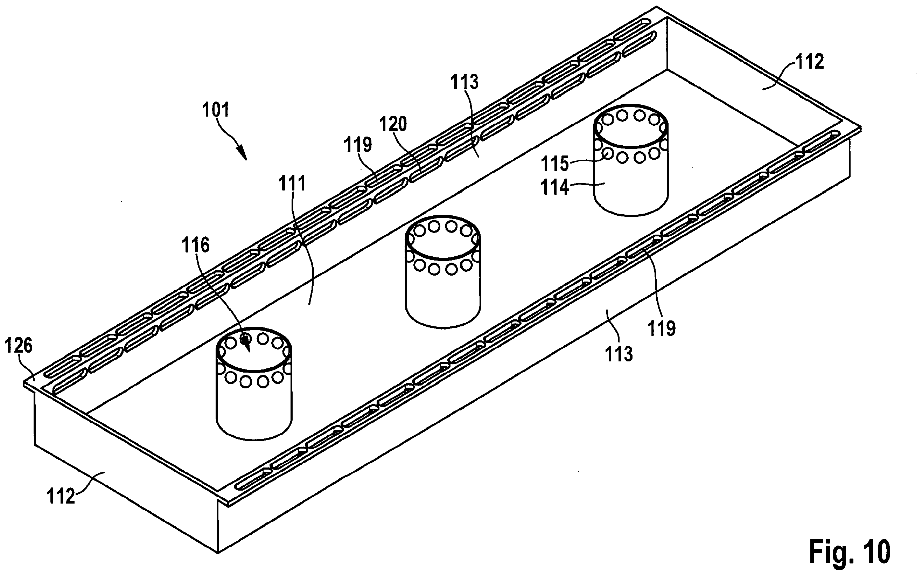

Die Belüftungssäulenabschnitte 14 sind wie in den Figuren 1 und 2 ausgestaltet, und hier haben die Belüftungsöffnungen 15 eine Gesamtöffnungsfläche, die etwa 40 % der Gesamtfläche der Säule entspricht, entsprechend etwa 9 % der Fläche des Bodens des Masthähnchentransportcontainers, aber wenn eine kleinere Öffnungsfläche gewünscht wird, können die Öffnungen auch kürzer und/oder schmaler sein. Der unterste Bereich der Säule kann einen ringförmigen Querschnitt ohne Öffnungen haben, wie die Säule in der Ausführungsform von Fig. 10.

Die Belüftungssäulenabschnitte 14 weisen im Zentrum einen Hohlraum 16 auf und sind zylindrisch mit einem konstanten Durchmesser d_{C}, mit Ausnahme eines an der Verbindungsstelle mit dem Boden 11 vorgesehenen kleinen abgeschrägten Abschnitts 17. Dieser abgeschrägte Abschnitt stärkt nicht nur die Struktur, sondern ermöglicht auch, dass ein Säulenabschnitt eines anderen Containers in den Hohlraum vorsteht, wie nachfolgend beschrieben.

In dieser Ausführungsform entspricht die Höhe hc der Belüftungsabschnitte 14 der Höhe der Seitenwände 12, 13, aber sie können auch geringfügig höher gemacht werden, so dass sie mit einem Säulenabschnitt eines anderen Containers in Eingriff gebracht werden können.

Am oberen Ende jeder Säule 14 überspannt ein Kreuz 18 die Öffnung des Hohlraums 16. Dieses Kreuz trägt zur Stabilität der Säule bei, aber fungiert, was genauso wichtig ist, auch als Masthähnchenbarriere, die verhindert, dass Masthähnchen beim Beladen des Masthähnchentransportcontainers in den Hohlraum der Säule geraten.

Jede der Längswände ist mit zwei Aussparungen 19 versehen, die Säulenabschnitte 36 bilden, und in dieser Ausführungsform entsprechen sie in ihrer Größe und Form der Hälfte einer Säule 14, und die Träger 21 sind in Bezug auf die Höhe der Längsseitenwand 13 zentriert, so dass sie noch besser zur Benutzung als Griff geeignet sind.

Es ist auch möglich, unterschiedliche Drücke an den verschiedenen Belüftungssäulen vorzusehen, um einen Strom von Luft von einer Säule zur anderen zu induzieren, so dass eine Belüftung selbst dann möglich ist, wenn es keine Öffnungen in den Seitenwänden gibt.

Beide Längswände sind mit Aussparungen 19 versehen, die in ihrer Größe und Form der Hälfte einer Säule 14 entsprechen, und sind auch mit Belüftungsöffnungen 20 versehen, aber es gibt keinen abgeschrägten Abschnitt und kein Kreuz. Zum Gewährleisten der Stabilität des Masthähnchentransportcontainers 1, selbst wenn er voll mit Masthähnchen beladen ist, ist ein jede Aussparung 19 überspannender Träger 21 in Fortsetzung der Ebene der Längsseitenwand 13 vorgesehen. Dieser Träger ist auch für die Verwendung als Griff beim manuellen oder automatischen Handhaben des Containers geeignet.

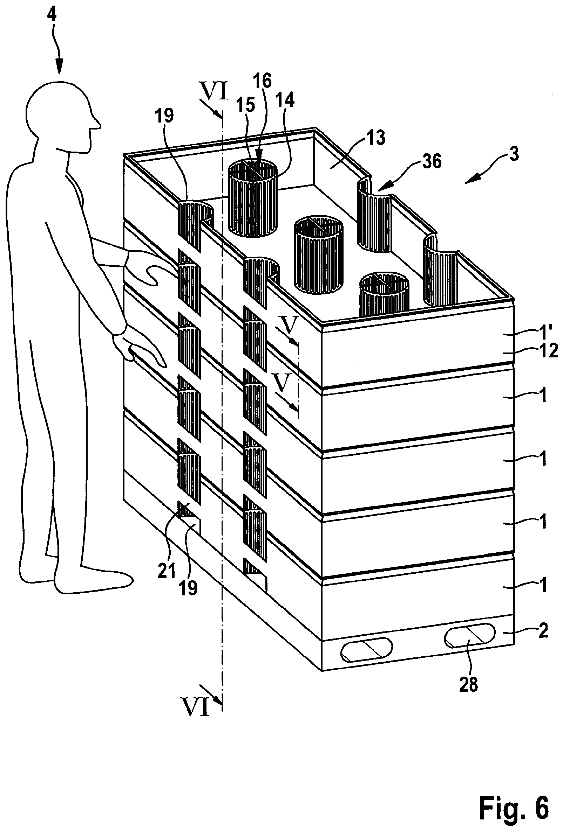

Der Masthähnchentransportcontainer in den Figuren 3-5 hat eine Länge von 240 cm, eine Breite entlang der Querseitenwände 12 von 80 cm und eine Höhe von 22,5 cm, und der Durchmesser der Belüftungssäulen 14 beträgt 20 cm. Gemäß den derzeitigen europäischen Vorschriften können die Container dadurch bis zu 50 Masthähnchen mit einem Gewicht von 3 kg aufnehmen. Es sind natürlich auch andere Größen möglich. Fig. 6 zeigt fünf Masthähnchentransportcontainer 1, wie den in den Figuren 3-5 gezeigt, auf einer Palette 2 aufeinandergestapelt, um eine Masthähnchentransporteinheit 3 zu bilden, die gewöhnlich ferner eine Abdeckung in Form eines Netzes oder eines Deckels (nicht gezeigt) auf dem oberen Container beinhaltet.

Ein Bediener 4, der soeben den vierten Masthähnchentransportcontainer von unten mit Masthähnchen (nicht gezeigt) gefüllt hat, hat einen fünften leeren Container auf diesen gestellt und ist zum Beladen mit Masthähnchen bereit.

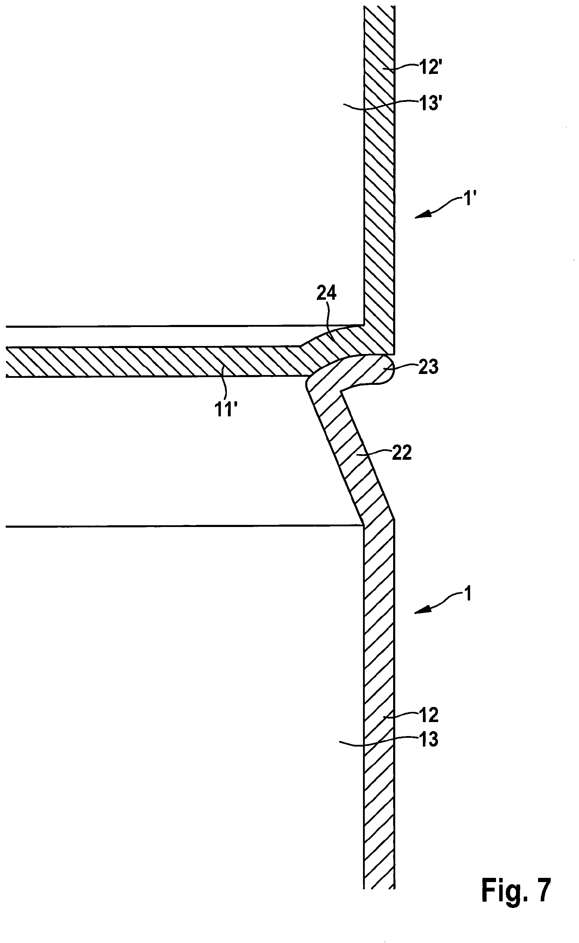

Wie ebenfalls in den Figuren 3-5 zu sehen ist, weisen die oberen Ränder der Seitenwände 12, 13 einen abgeschrägten Abschnitt 22, der geringfügig nach innen in Richtung auf das Innenvolumen des Containers vorsteht, und einen Flansch 23, der vom Innenvolumen weg nach außen vorsteht, auf. Diese sind für den Eingriff mit einem abgeschrägten Randabschnitt 24 des Bodens 11 ausgelegt, wenn Container 1,1' wie in Fig. 6 gezeigt aufeinander gestapelt werden, so dass der obere Container 1' auf dem unteren Container 1 ruhen kann, ohne dass ein Teil davon über die Ebenen der Außenseiten der Seitenwände 12, 13 hinaus vorsteht und im Wesentlichen ohne die Öffnung des Innenvolumens wie in Fig. 7 gezeigt zu begrenzen, die eine Querschnittsansicht des in Fig. 6 mit V-V markierten Details ist.

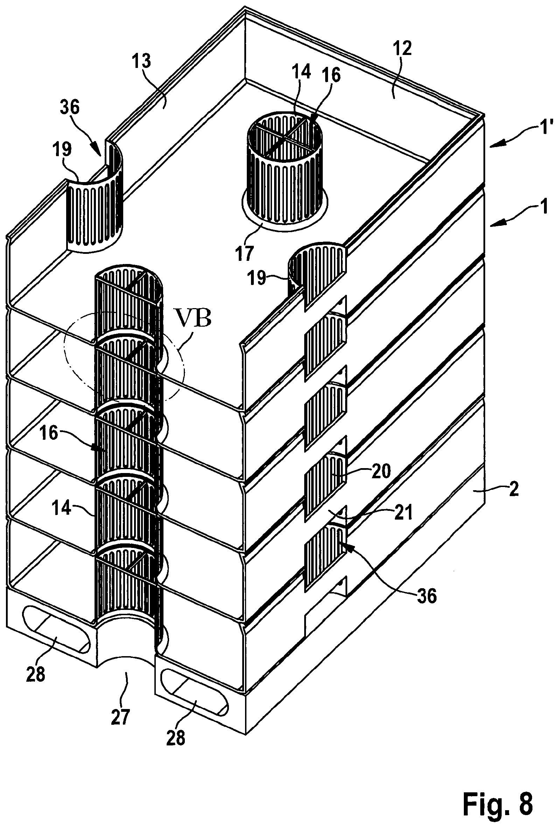

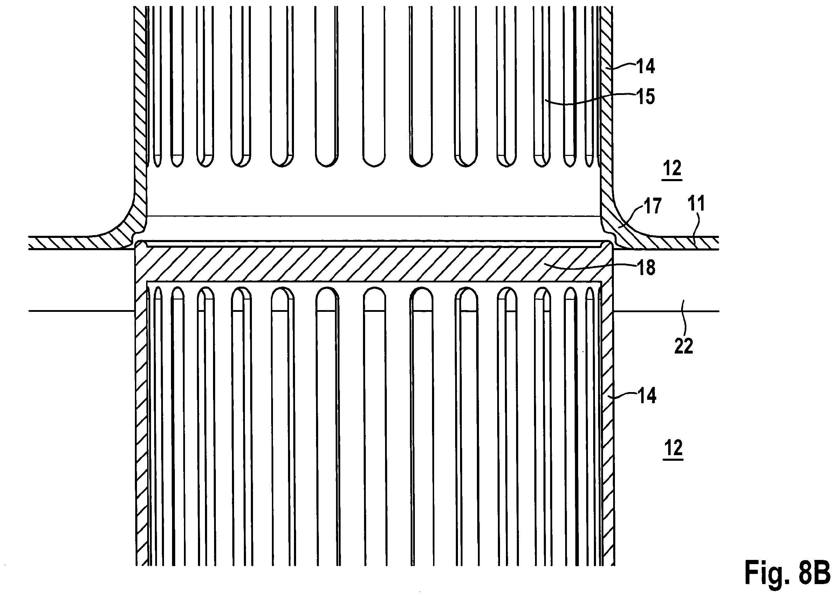

Fig. 8 zeigt einen Querschnitt durch die Transporteinheit 3 entlang der Linie VI-VI in Fig. 6. Wie ersichtlich ist, sind die Säulenabschnitte 14 der fünf Masthähnchentransportcontainer 1, 1' in Fortsetzung voneinander positioniert, wenn die Container gestapelt werden, so dass sie eine gemeinsame Belüftungssäule 16 in Form eines kontinuierlichen hohlzylindrischen Kanals durch die Transporteinheit bilden. Durch Aufbringen eines Luftdrucks auf die Kanäle 16 können alle Masthähnchentransportcontainer 1,1' in der Transporteinheit gleichzeitig belüftet werden.

Ebenso befinden sich die Aussparungen 19 in den Seitenwänden übereinander, wie auch in Fig. 6 gezeigt ist, so dass halbkreisförmige kontinuierliche hohle Säulen 36 an den Längsseitenwänden 13 gebildet werden, die zur Belüftung der gesamten Transporteinheit beitragen können. Wenn die Transporteinheit nahe an einer anderen von Masthähnchentransportcontainern desselben Typs aufgebauten Transporteinheit angeordnet ist und damit fluchtet, werden die Aussparungssäulen 36 in diesen Transporteinheiten ausgerichtet und bilden eine gemeinsame Belüftungssäule mit einem kreisförmigen Querschnitt, der dem des von den Belüftungssäulen gebildeten Kanals 16 ähnlich ist. Ein ähnlicher Effekt kann durch Anordnen der Transporteinheit mit der Längsseitenwand 13 nahe an einer Wand oder dergleichen erzielt werden, um dadurch die Aussparungen 19 zu schließen und einen halbkreisförmigen Belüftungskanal zu erzeugen.

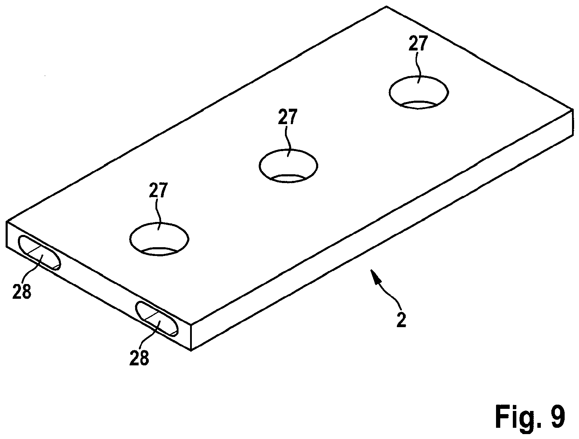

In dieser Ausführungsform setzt sich der durch die Säulen 14 gebildete Kanal 16 in die Palette 2 fort, die mit einer Reihe von Öffnungen 27 in den gleichen Positionen wie die Säulen in den Masthähnchentransportcontainern versehen ist, wie ebenfalls in Fig. 9 dargestellt, aber dies braucht nicht der Fall zu sein. Die von den Aussparungen 19 gebildeten Kanäle setzen sich nicht in die Palette fort, können dies in anderen Ausführungsformen aber tun. Horizontale Öffnungen 28 in der Palette 2 sind für einen Eingriff mit den Armen eines zum Handhaben der Transporteinheit 3 benutzten Gabelstaplers (nicht dargestellt) ausgelegt. Diese horizontalen Öffnungen können mit einem der Kanäle 16, 36 in Verbindung stehen, aber dies ist in der in den Figuren 6, 8 und 9 gezeigten Ausführungsform nicht der Fall. Diese Öffnungen können zum korrekten Positionieren des untersten Masthähnchentransportcontainers 1 eines Stapels durch Ausrichten der Säulen 14 darin mit den Öffnungen 27 und ferner zum Positionieren der (Transporteinheit 3 auf einem Lkw, einem Anhänger oder einem anderen Fahrzeug benutzt werden.

Das Bereitstellen von Paletten und/oder Abdeckungen und der Eingriff zwischen mit Bezug auf Fig. 7 beschriebenen Containern gilt auch für die Ausführungsform der Figuren 1 und 2.

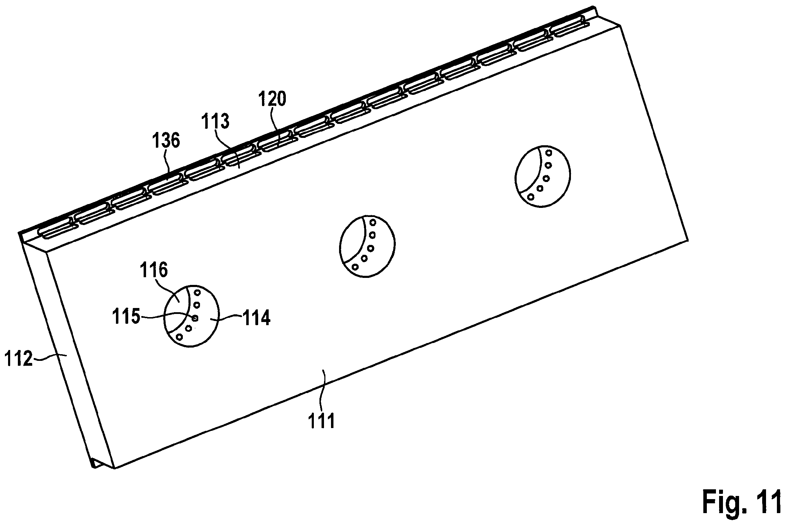

Eine andere Ausführungsform eines Masthähnchentransportcontainers 101 ist in den Figuren 10 und 11 dargestellt. Bezugszahlen, die denen in den Figuren 1-9 entsprechen, werden benutzt, aber mit addierter 100, und wenn nichts anderes angegeben ist, dann haben Merkmale mit solchen entsprechenden Bezugszahlen die gleiche Funktion.

Auch dieser Masthähnchentransportcontainer 101 weist drei Belüftungssäulenabschnitte 114 auf, die so angeordnet sind, dass sie vom Boden 111 vorstehen und eine Belüftungssäule 116 bilden, aber der Container ist von einer einfacheren Konstruktion, und die Belüftungsöffnungen 115 sind nur an den oberen Rändern der Säulenabschnitte vorgesehen. Diese Belüftungsöffnungen haben eine kleinere Gesamtöffnungsfläche als die in den Figuren 1-9 gezeigten und befinden sich in Kopfhöhe der Masthähnchen. Die Belüftungseffizienz ist in vielen Fällen jedoch dieselbe, da Körper und Gefieder der Masthähnchen (nicht gezeigt) in dem Container häufig untere Teile oder Belüftungsöffnungen blockieren oder die Verteilung von Luft entlang dem Boden behindern, während sich die Öffnungen in den Figuren 8 und 9 in Kopfhöhe der Masthähnchen befinden.

Form, Größe und Position der Öffnungen können stark variieren, ohne dass dies einen erheblichen negativen Einfluss auf die Belüftungseigenschaften hätte, daher sollten andere Fragen wie z.B., ob der Container besser oder schlechter zu reinigen, ist beim Fällen einer Entscheidung über eine bestimmte Konstruktion ebenfalls berücksichtigt werden. Es ist auch möglich, eine Regulierung der Öffnungen vorzusehen, indem zum Beispiel ermöglicht wird, einige Belüftungsöffnungen oder einen Teil von Belüftungsöffnungen abzudecken, wenn eine kleinere Fläche gewünscht wird, z.B. dann, wenn in verschiedenen Innenvolumen in einer Transporteinheit verschiedene Öffnungsflächen gewünscht werden. Dies gilt für alle Ausführungsformen und für alle Typen von Belüftungsöffnungen.

Der Container in den Figuren 10 und 11 hat keine Aussparungen in den Seitenwänden. Stattdessen ist er mit einer Serie von Öffnungen 120 im oberen Abschnitt der Längsseitenwände 113 versehen. Ein vom Innenvolumen des Containers weg vorstehender Flansch 126 dient als Abstandshalter, so dass es immer einen Belüftungsdurchgang entlang der Außenseite der Längsseitenwände gibt. Dies ermöglicht einen Belüftungsluftstrom in einer horizontalen Richtung, aber auch einen vertikalen Belüftungsstrom, da die Flansche mit Öffnungen 119 versehen sind.

Die vorstehenden Flansche 126 können auch als Griffe beim Handhaben der Container verwendet werden und lassen es zu, dass der Container, wenn gewünscht, in ein Rahmensystem eingesetzt und in einer Transporteinheit des Standes der Technik benutzt wird.

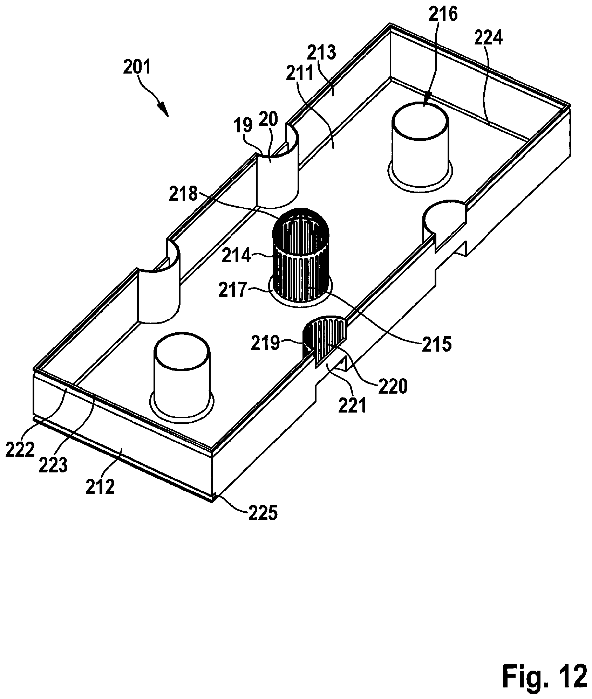

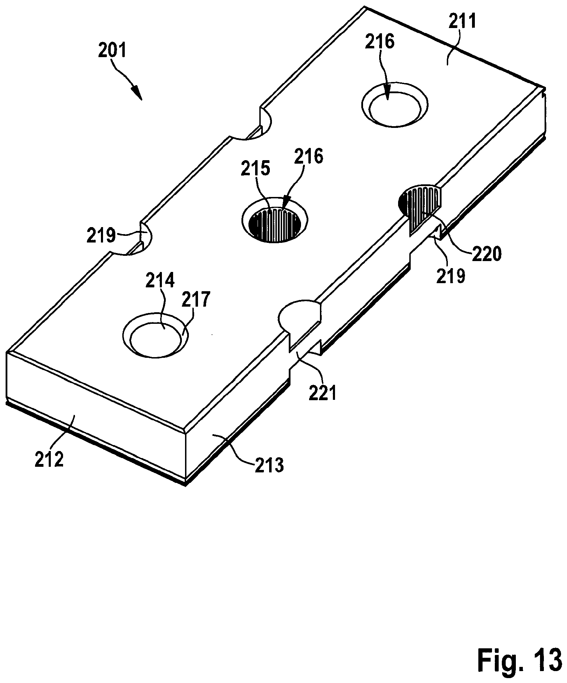

Die Figuren 12 und 13 zeigen noch eine weitere Ausführungsform eines Masthähnchentransportcontainers 201, und auch hier werden Bezugszahlen benutzt, die denen in den Figuren 1-9 entsprechen, aber mit addierter 200, und wenn nichts anderes angegeben ist, dann haben Merkmale mit solchen entsprechenden Bezugszahlen die gleiche Funktion. Es wird jedoch angemerkt, dass die Illustrationen in den Figuren 12 und 13 stark schematisch sind und dass Belüftungsöffnungen 215, 220 lediglich an einem Belüftungssäulenabschnitt 214 und einer Aussparung 219 vorgesehen sind, obwohl alle drei Säulenabschnitte 214 und alle vier Aussparungen 219 ähnliche Belüftungsöffnungen 215, 220 haben.

Diese Ausführungsform unterscheidet sich von der in den Figuren 1-9 dadurch, dass die Belüftungssäulenabschnitte 214 anstatt mit dem Kreuz 18 mit einer Kuppel 218 (nur an der mittleren Säule gezeigt) versehen sind. Diese Kuppel 218 verhindert nicht nur, dass Masthähnchen in die Belüftungssäulen 216 geraten, sondern sie steht auch über die Oberseite der Seitenwände 212, 213 hinaus vor, was bedeutet, dass, wenn Container dieses Typs gestapelt werden, die Kuppel in den Hohlraum der Belüftungssäule darüber eingefügt wird, was zum Fixieren der beiden Container in Bezug aufeinander und somit zur Stabilität des gesamten Stapels beiträgt.

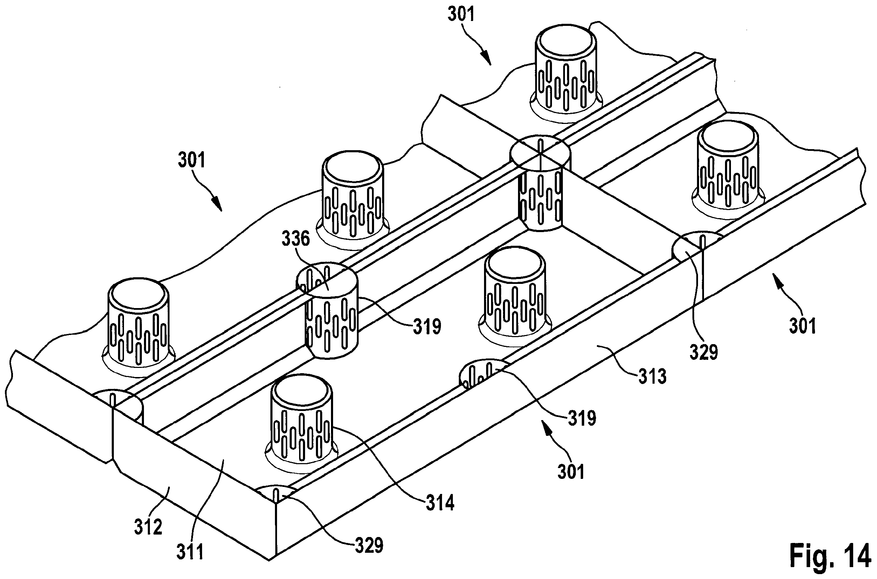

Eine noch stärker schematisierte Darstellung einer weiteren Ausführungsform eines Masthähnchentransportcontainers 301 ist in Fig. 14 dargestellt, und auch hier werden die Bezugszahlen entsprechend den in den Figuren 1-9 benutzt, aber mit addierter 300, und wenn nichts anderes angegeben ist, dann haben Merkmale mit solchen entsprechenden Bezugszahlen die gleiche Funktion. Diese Ausführungsform unterscheidet sich von der in den Figuren 1-9 dadurch, dass die vier Aussparungen durch zwei halbkreisförmige Säulen 336 ersetzt wurden, so dass die Außenseiten der Längsseitenwände 313 ununterbrochen sind, und vier Ecksäulen 329 jeweils durch einen Viertelkreis-Querschnitt ersetzt wurden. Wenn solche Container dicht nebeneinander wie in Fig. 14 illustriert angeordnet werden, dann werden diese Säulen 319, 329 nebeneinander platziert und bilden gemeinsam eine kreisförmige Säule, die mit einer gemeinsamen Belüftungseinrichtung belüftet werden kann. In dieser Ausführungsform werden, wenn die Außenseiten des Containers ununterbrochen sind, diese kreisförmigen Seitensäulen 319, 329 in unabhängige halbkreisförmige und viertelkreisförmige Untersäulen unterteilt, aber wenn gemeinsame Säulen mit einem gleichförmigen Luftdruck gewünscht werden, können auch Öffnungen in den Seitenwänden vorgesehen werden, entweder wie in den Figuren 1-9 oder in Form von kleineren Öffnungen, die den illustrierten Belüftungsöffnungen ähnlich sind.

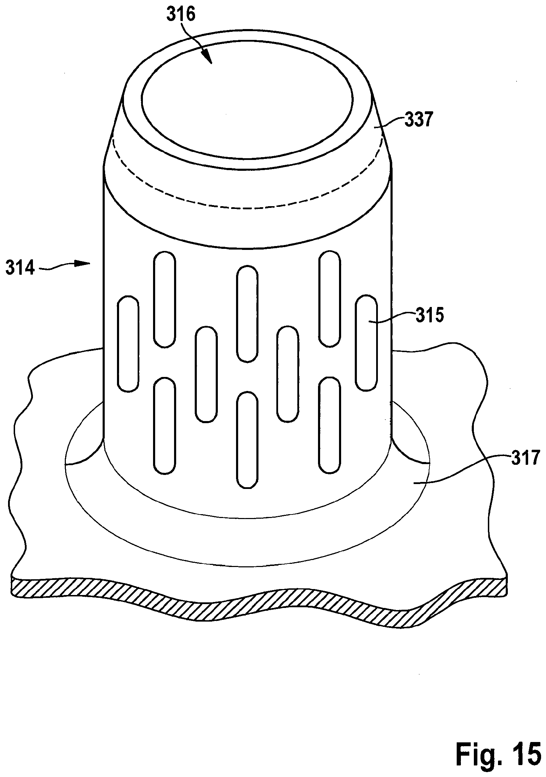

Die Ausführungsform in Fig. 14 unterscheidet sich noch weiter dadurch, dass es nur zwei Belüftungssäulenabschnitte 314 gibt, die jeweils im Wesentlichen wie in Fig. 15 gezeigt ausgestaltet sind. Wie ersichtlich ist, sind die Belüftungsöffnungen 315 in diesen Belüftungssäulenabschnitten länglich, aber kürzer als die in den Ausführungsformen der Figuren 1-9 und in einem gleichmäßigen Muster über die Belüftungssäulenabschnitte verteilt, so dass eine Kombination der mit Bezug auf die vorherigen Ausführungsformen beschriebenen Vorteile erzielt wird. Ein anderer Unterschied liegt in der Konstruktion des oberen Abschnitts 337 dieser Säulenabschnitte 314, der im Vergleich zum Rest der Säule einen reduzierten Durchmesser hat. So kann der obere Abschnitt 337 in den Hohlraum am Boden eines entsprechenden Säulenabschnitts eines anderen Containers eingeführt werden, wie mit Bezug auf die Kuppel in Fig. 12 beschrieben ist, und sie können bei geeigneter Dimensionierung der Säulenabschnitte sogar aneinander gerastet werden.

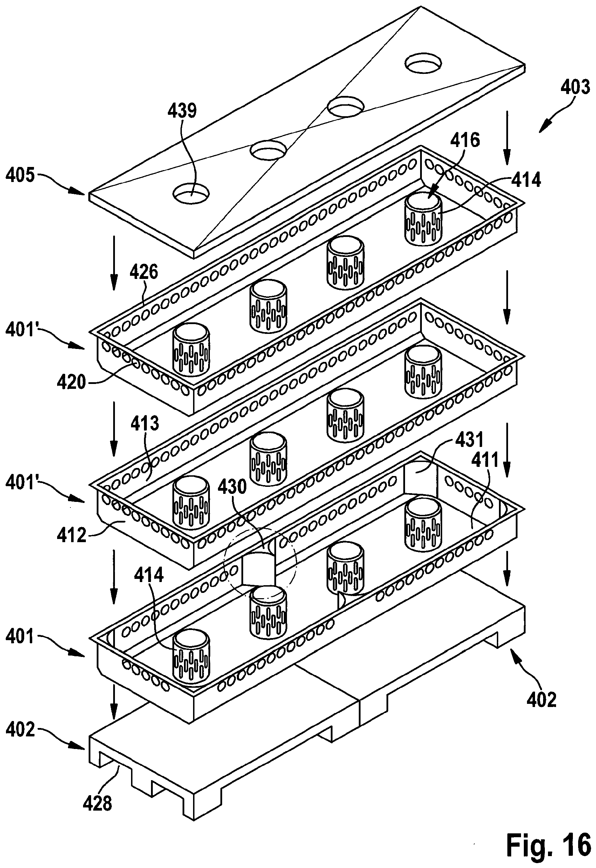

Noch zwei weitere Ausführungsformen von Masthähnchentransportcontainern 401, 401' sind in Fig. 16 dargestellt, wo ein Container 401 mit Verstärkungen auf zwei Paletten 402 angeordnet ist und wo zwei Container 401' einer relativ leichten Konstruktion darauf angeordnet und mit einem Deckel 405 bedeckt sind, um eine Transporteinheit 403 zu bilden. Auch hier werden Bezugszahlen benutzt, die denen der Figuren 1-9 entsprechen, aber mit addierter 400, und wenn nichts anderes angegeben ist, dann haben Merkmale mit solchen Bezugszahlen die gleiche Funktion.

Beide dieser Ausführungsformen des Containers sind mit Belüftungssäulenabschnitten 414 ähnlich denen in Fig. 15 und mit Belüftungsöffnungen 420 entlang den oberen Rändern der Seitenwände 412, 413 versehen. Diese Merkmale haben die gleichen Funktionen wie oben mit Bezug auf andere Ausführungsformen beschrieben und werden daher hier nicht ausführlicher beschrieben.

Die Verwendung von zwei nebeneinander angeordneten Paletten 402 erlaubt die Verwendung von kleineren Paletten und somit potentiell die Verwendung von Standardpaletten und/oder der gleichen Paletten für kleinere und größere Versionen des Masthähnchentransportcontainers. In dieser Ausführungsform sind die Öffnungen 428 in den Paletten für den Eingriff mit den Armen eines Gabelstaplers (nicht gezeigt) nach unten offen, was das Risiko reduziert, dass sie Schmutz fangen, und sie leichter zu reinigen macht als die Palette in Fig. 9. Obwohl dies nicht gezeigt ist, können auch diese Paletten Belüftungsöffnungen 27 entsprechend den in den Figuren 8 und 9 gezeigten aufweisen.

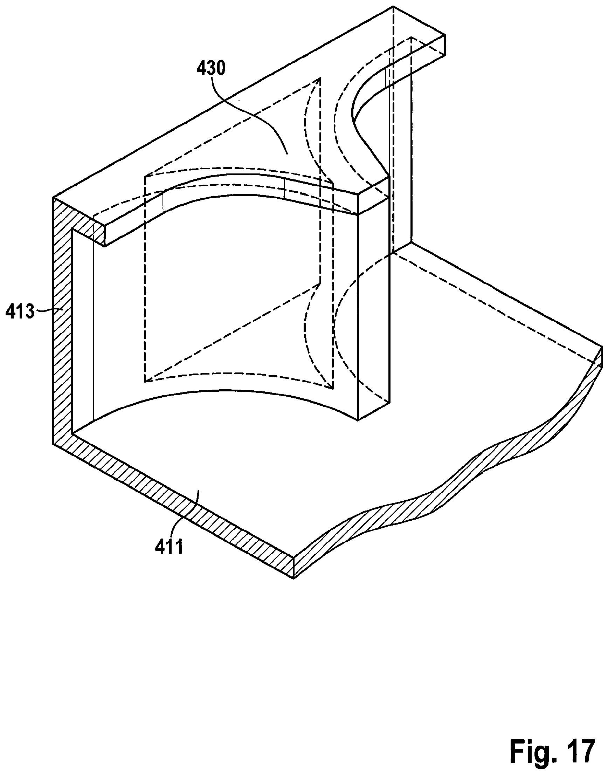

Der unterste Masthähnchentransportcontainer 401 unterscheidet sich von den zuvor beschriebenen darin, dass er Verstärkungsabschnitte 430, 431 an den Ecken und in der Mitte der Längsseitenwände 413 hat. In dieser Ausführungsform sind die Verstärkungsabschnitte, die massiv oder hohl wie durch die gestrichelten Linien in Fig. 17 angedeutet sein können, mit gerundeten Flächen versehen, die dem Innenvolumen des Containers zugewandt sind, um das Reinigen zu erleichtern und um Schäden an den Masthähnchen wie oben mit Bezug auf die Säulen beschrieben zu verhindern, aber es können auch andere Formen verwendet werden. Die Verstärkungsabschnitte können auch als Abstützung für den auf dem verstärkten Container 401 angeordneten Container 401' dienen.

Die Verstärkung ist zwar hier nur am untersten Container 401 in der Transporteinheit 403 dargestellt, aber es ist zu verstehen, dass solche Container höher im Stapel verwendet werden können, besonders dann, wenn der Stapel mehr als drei Container enthält und/oder wenn sie schwer beladen sind. Versuche haben gezeigt, dass der zweitunterste Container in einem Stapel häufig der ist, der den höchsten Belastungen ausgesetzt ist, da er das Gewicht aller beladenen Container darüber trägt und nicht die Oberflächenabstützung hat, die die Palette(n) bietet/bieten, sondern nur auf dem untersten Container ruht.

Wie weiter oben erwähnt, zeigt Fig. 8 einen Querschnitt durch die Transporteinheit 3 entlang der Linie VI-VI in Fig. 6. Wie ersichtlich ist, sind die Säulen 14 der fünf Masthähnchentransportcontainer 1, 1' in Fortsetzung voneinander positioniert, wenn die Container 1, 1' gestapelt werden, so dass sie eine kontinuierliche hohlzylindrische Säule 16 durch die Einheit bilden. Diese Säulen 16 ermöglichen es, die Last des Masthähnchentransportcontainers 1, 1' oben im Stapel über die Säulen 14 in den Transportcontainern 1, 1' darunter auf die Palette 2 in der Mitte der Transporteinheit 1, 1' zu übertragen, so dass die Lasten an den Seitenwänden und die Abstände zwischen Abstützungen, die von den Böden 11 überspannt werden, reduziert werden. Dies wiederum hat zur Folge, dass die Böden 11 und äußeren Seitenwände 12, 13 relativ dünn und ohne Verstärkungsrippen gefertigt werden können, wodurch Materialverbrauch und Gewicht des Containers 1 verringert werden und gleichzeitig die Reinigung erleichtert wird.

Wenn Masthähnchentransportcontainer 1 wie in den Figuren 3-8 gezeigt in einem Stapel wie in den Figuren 6 und 8 gezeigt angeordnet sind, dann lässt es der abgeschrägte Abschnitt 17 zu, dass der obere Rand der Säule 14 eines unteren Masthähnchentransportcontainers 1 geringfügig in die entsprechende Säule 14 eines oberen Masthähnchencontainers 1_vorsteht, wie in Fig. 8B ausführlich dargestellt. Jede Säule 14 weist ein oberes und ein unteres Ende auf, wobei sie mit einem oberen korrespondierenden Bereich am oberen Ende und einem unteren korrespondierenden Bereich am unteren Ende versehen ist. Anders ausgedrückt ist das obere Ende der Säule 14 eines ersten Containers 1 derart ausgebildet, dass es zu einer form- und/oder kraftschlüssigen Verbindung mit dem unteren Ende einer Säule 14 eines zweiten Containers 1 stapelbar ist und umgekehrt. Die Masthähnchentransportcontainer 1 sind hier im leeren Zustand dargestellt, aber wenn sie gefüllt sind, wird der Boden 11 etwas ausgelenkt, so dass die beiden Säulen 14 miteinander in Kontakt kommen und so eine lasttragende Säule wie oben beschrieben bilden. Es sind viele andere Ausführungsformen möglich, die einen Eingriff zwischen den Säulen 14 zulassen, von denen eine nachfolgend beschrieben wird. In der detaillierten Konstruktion ist vorzugsweise sorgfältig darauf zu achten, dass die Masthähnchentransportcontainer 1 leicht aufeinandergestellt, getrennt und gereinigt werden können.

Die Aussparungen 19 in den Seitenwänden befinden sich in derselben Weise wie die Säulen 14 übereinander, wie auch in Fig. 6 zu sehen ist, so dass halbkreisförmige kontinuierliche hohle Säulen an den Längsseitenwänden 13 gebildet werden. Diese Säulen 19 haben selbst Tragfähigkeit und tragen auch zur Stabilität von Abschnitten der Seitenwände zwischen den Säulen 14 bei, um somit Stärke und Stabilität der (Transporteinheit weiter zu erhöhen.

Diese Vorteile könnten im Prinzip auch mit massiven Säulen 14 erzielt werden, aber hohle Säulen 14 haben eine ausgezeichnete Tragfähigkeit bei sehr begrenztem Materialverbrauch und bieten daher nicht nur Stärke und Stabilität für den Masthähnchentransportcontainer 1 und die (Transport-)einheit, sondern gestatten es auch, das Gewicht der leeren (Transport-)einheit (das Tara-Gewicht) niedrig zu halten. Ein Vergleich mit Masthähnchentransporteinheiten 1 des Standes der Technik ist in den Tabellen 1 und 2 unten dargelegt.

Die Systeme ID1 und ID2, von der Anmelderin Linco Food Systems vermarktet, und ID3, von Anglia Autoflow Ltd., Diss, Norfolk, in England vermarktet, des Standes der Technik repräsentieren einen Typ von Transporteinheiten, bei dem lose Kisten oder Schubladen in einem Rahmen gehalten werden, während die Systeme ID4-ID7, von Meyn Food Processing Technology B.V., Amsterdam, Niederlande, vermarktet, einen anderen Typ ohne solche Schubladen repräsentieren. Die Verwendung von losen Schubladen erlaubt eine Trennung des Systems, was in Bezug auf die Reinigung der Transporteinheit vorteilhaft ist, und erlaubt ferner ein Abstapeln vor dem Betäuben der Masthähnchen, aber das Gewicht solcher Systeme ist relativ hoch. Wie aus Tabelle 2 ersichtlich ist, liegt das Verhältnis zwischen dem Grundeinheitsgewicht, d.h. dem Gesamtgewicht der leeren Transporteinheit, und der verfügbaren Gesamtfläche der Böden in der Einheit für solche Systeme zwischen 60-100 kg/m², während dieses Verhältnis für die Systeme ohne lose Schubladen etwa 30 kg/m² beträgt. Da Masthähnchentransporteinheiten typischerweise bis zum maximalen für den Lkw oder Anhänger zulässigen Gewicht beladen werden, lässt ein hohes Taragewicht der Transporteinheit weniger Kapazität zum Transportieren der Masthähnchen.

Bei einer (Transport-)einheit 3 wie in den Figuren 3-8 gezeigt ist das Verhältnis zwischen dem Grundeinheitsgewicht und der verfügbaren Gesamtfläche für die Masthähnchen sehr niedrig, wie in den Beispielen 1 und 2 (ID8 und ID9) illustriert, bei denen das Verhältnis 16-17 kg/m² beträgt.

Einige Ausführungsformen mögen zwar ein geringfügig höheres Verhältnis zwischen Grundeinheitsgewicht und verfügbarer Gesamtfläche haben, aber die vorliegende Erfindung bietet einen erheblichen Vorteil gegenüber dem Stand der Technik.

**Tabelle 1**

| Marken-ID | | Containergrundfläche | | Fläche | Gesamtgröße | Säulenfläche |
|---|---|---|---|---|---|---|
| | | L (m) | B (m) | F (m²) | LxBxH (m) | F_{C} (m²) |
| 1 | Linco Maxiload | 1,2 | 1,27 | 1,52 | 2,5 × 1,29 × 1,19 | |
| 2 | Linco Maxiload | 1,2 | 1,27 | 1,52 | 2,5 × 1,29 × 1,46 | |
| 3 | Anglia Autoflow | 1,16 | 0,76 | 0,88 | 2,44 × 1,17 × 1,3 | |
| 4 | Meyn EVO | 2,4 | 1,2 | 2,88 | 2,40 × 1,2 × 1,23 | |
| 5 | Meyn EVO | 2,4 | 1,2 | 2,88 | 2,40 × 1,2 × 1,48 | |
| 6 | Meyn Laco | 2,4 | 1,2 | 2,88 | 2,40 × 1,2 × 1,23 | |
| 7 | Meyn Laco | 2,4 | 1,2 | 2,88 | 2,40 × 1,2 × 1,48 | |
| 8 | Beispiel 1 | 0,8 | 2,4 | 1,76 | 2,40 × 0,8 × 1,16 | 5 × TT × 0,10² |
| 9 | Beispiel 2 | 0,8 | 2,4 | 1,76 | 2,40 × 0,8 × 1,41 | 5 × TT × 0,10² |

**Tabelle 2**

| Marken-ID | | Rahmengewicht | Grundeinheits-Gewicht (leer) | Anz. Lagen | verfügb. Ges. Fläche | Grundeinheitsgewicht/ verfügb. Gesamtfläche | Gesamtgewicht beladen | Lebendgewicht gesamt |
|---|---|---|---|---|---|---|---|---|
| | | kg | kg | | m² | kg/m² | kg | kg |
| 1 | Linco Maxiload | 224 | 400 | 4 | 6,08 | 65,8 | | |
| 2 | Linco Maxiload | 270 | 490 | 5 | 7,60 | 64,5 | 1340 | 850 |
| 3 | Anglia Autoflow | | 350 | 4 | 3,52 | 99,3 | 950 | 600 |
| 4 | Meyn EVO | | 340 | 4 | 11,52 | 29,5 | 1000 | 660 |
| 5 | Meyn EVO | | 395 | 5 | 14,4 | 27,4 | 1220 | 825 |
| 6 | Meyn Laco | | 360 | 4 | 11,52 | 31,3 | 1015 | 655 |
| 7 | Meyn Laco | | 415 | 5 | 14,4 | 28,9 | 1234 | 819 |
| 8 | Beispiel 1 | 40 | 120 | 4 | 7,05 | 17,0 | 600 | 480 |
| 9 | Beispiel 2 | 40 | 140 | 5 | 8,81 | 15,9 | 740 | 600 |

Das Anordnen der (Transport-)einheiten 3 nahe beieinander, so dass sie sich gegenseitig von den Seiten abstützen, trägt weiter zur Stabilität der Masthähnchentransportcontainer 1 während des Transports bei. Um eine solche dichte Aneinanderlage zu erleichtern, weisen die Seitenwände ein oberes Ende und ein unteres Ende auf, wobei sie mit oberen korrespondierenden Bereichen am oberen Ende und mit unteren korrespondierenden Bereichen am unteren Ende versehen sind. Insbesondere weisen die Oberränder der Seitenwände 12, 13 des Masthähnchentransportcontainers in den Figuren 3-8 einen abgeschrägten Abschnitt 22, der geringfügig in Richtung auf das Innenvolumen des Containers nach innen vorsteht, und einen Flansch 23, der vom Innenvolumen nach außen weg vorsteht, auf. Der Flansch ist für den Eingriff mit einem abgeschrägten Randabschnitt 24 des Bodens 11 ausgelegt, wenn Container 1,1' wie in Fig. 6 gezeigt aufeinander gestapelt werden, so dass der obere Container 1' auf dem unteren Container 1 ruhen kann, ohne dass ein Teil davon über die Ebenen von Außenseiten der Seitenwände 12, 13 vorsteht und im Wesentlichen ohne die Öffnung des Innenvolumens wie in Fig. 7 gezeigt zu begrenzen, die eine Querschnittsansicht des in Fig. 6 mit V-V markierten Details ist.

Die am Boden der Transporteinheit in den Figuren 6 und 8 benutzte Palette 2, wie in Fig. 9 gezeigt, soll eine stabile Abstützung für den Stapel von Masthähnchentransportcontainern 1 bieten und ist mit horizontalen Öffnungen 28 versehen, die für den Eingriff mit den Armen eines Gabelstaplers (nicht gezeigt) ausgelegt sind, der zum Handhaben der (Transport-)einheit 3 benutzt wird. In dieser Ausführungsform ist die Palette 2 mit einer Reihe von Öffnungen 27 in denselben Positionen wie die Säulen 14 in den Masthähnchentransportcontainern 1 versehen, ebenfalls wie in Fig. 9 gezeigt, aber dies braucht nicht der Fall zu sein.

Eine andere Ausführungsform eines Masthähnchentransportcontainers 101 ist in den Figuren 10 und 11 dargestellt. Bezugszahlen, die denen in den Figuren 3-9 entsprechen, werden benutzt, aber mit addierter 100, und wenn nichts anderes angegeben ist, dann haben Merkmale mit solchen entsprechenden Bezugszahlen die gleiche Funktion.

Dieser Masthähnchentransportcontainer 101 weist drei Stützsäulen 114 auf, die so angeordnet sind, dass sie vom Boden 111 vorstehen, aber der Container101 ist von einer einfacheren Konstruktion, und die Öffnungen 115 sind nur an den Oberrändern der Säulen 114 vorgesehen. Form, Größe und Position der Öffnungen können stark variieren, ohne dass dies einen erheblichen negativen Einfluss auf Festigkeit und/oder Steifigkeit der Säulen 114 hätte. Mit der Konstruktion in den Figuren 10 und 11 ist das Risiko, dass Masthähnchen steckenbleiben, sehr niedrig.

Wie oben beschrieben, bilden die Säulen 414 eine vertikale Säule, wenn sie aufeinander angeordnet sind, und der Deckel 405 ist hier mit einer Öffnung 439 in Fortsetzung der Säule versehen. Diese Öffnung kann zum Positionieren des Deckels verwendet werden, und es ist zu verstehen, dass ähnliche Öffnungen über den anderen Säulen 414 vorgesehen sind.

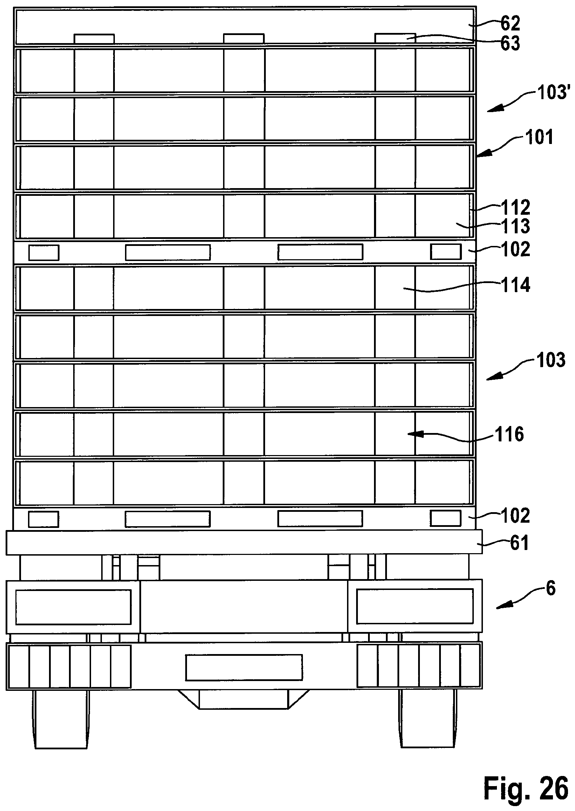

Das hintere Ende eines Lkws oder Anhängers 6, der mit Transporteinheiten 103, 103' beladen ist, die aus dem in den Figuren 10 und 11 gezeigten Typ von Masthähnchentransporteinheiten 101 aufgebaut sind, ist in Fig. 26 zu sehen. Zwei Etagen solcher Transporteinheiten sind auf dem Boden 61 aufeinander angeordnet. Die Transporteinheiten 103 in der unteren Etage umfassen jeweils fünf Masthähnchentransportcontainer, während die Transporteinheiten 103' in der oberen Etage jeweils vier Container beinhalten. Die Längsseitenwände 113, die der Rückseite des Anhängers zugewandt sind, sind nicht gezeigt, um die Innenvolumen der Masthähnchentransportcontainer freizulegen. Auch hier bilden die Säulen 114 vertikale gemeinsame Säulen 116.

Jede Transporteinheit 103, 103' hat eine Breite, die der Breite des Bodens 61 des Lkw-Anhängers entspricht, so dass lediglich eine Reihe von Transporteinheiten geladen zu werden braucht, aber man wird verstehen, dass auch Masthähnchentransportcontainer einer geringeren Größe benutzt werden können, die dann in zwei oder mehr Reihen angeordnet werden, die in der Längsrichtung des Bodens verlaufen.

Das Dach 62 des Lkw-Anhängers ist mit Eingriffsmitteln 63 versehen, die beim Transport jeweils mit einer der Säulen 116 im Eingriff sind. Um diesen Eingriff zu erzielen, kann das Dach mit Hydraulikaktuatoren angehoben und abgesenkt werden, wie von derzeitigen Masthähnchentransport-Lkws und -Anhängern bekannt ist, damit die Transporteinheiten befestigt werden können.

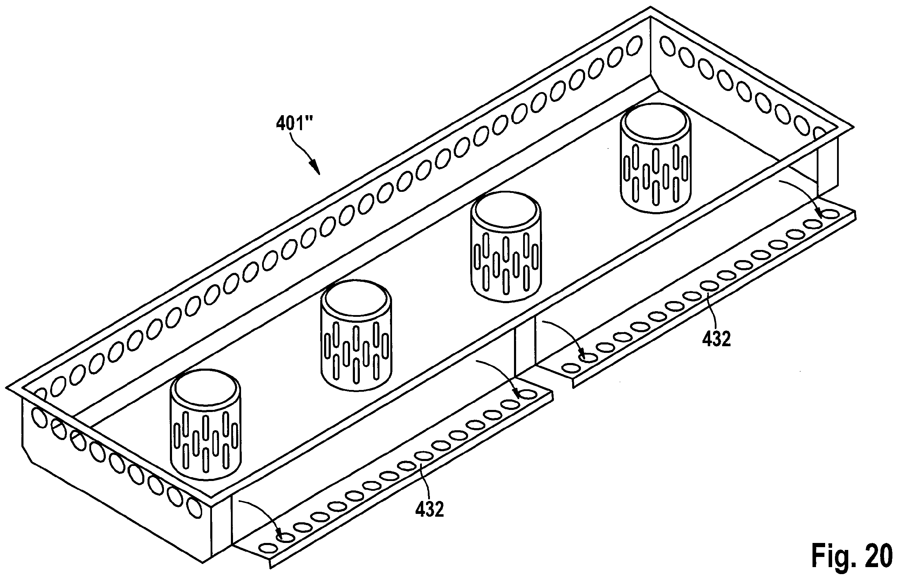

Nach der Ankunft am Schlachthaus werden die Masthähnchen gewöhnlich betäubt, und dies geschieht häufig, während sie sich noch im Masthähnchentransportcontainer befinden. Nach dem Betäuben müssen die Masthähnchentransporteinheiten recht schnell geleert werden, um zu verhindern, dass die Herzen der Masthähnchen aufhören zu schlagen, bevor sie geschlachtet werden. Um das Leeren zu erleichtern, kann der Masthähnchentransportcontainer 401" mit Klappen oder Türen 432 wie in Fig. 20 gezeigt versehen sein. Die Zahl der Klappen oder Türen kann variieren.

Alle oben beschriebenen Ausführungsformen beruhen auf der Verwendung von großen Masthähnchentransportcontainern mit drei oder mehr Säulen, aber es liegt auch im Rahmen der Erfindung, Container mit weniger Säulen zu benutzen.

Ein Beispiel für ein Masthähnchentransportcontainersystem mit nur einer Säule 14 und einer Aussparung 19 ist in den Figuren 1 und 2 illustriert. Wenn solche Masthähnchentransportcontainer in Stapeln wie in Fig. 2 gezeigt aufeinander angeordnet werden, bildet die Säule 14 eine gemeinsame Säule 16, die vertikal durch alle Einheiten verläuft, ebenso wie mit Bezug auf Fig. 8 und 8B gezeigt und beschrieben.

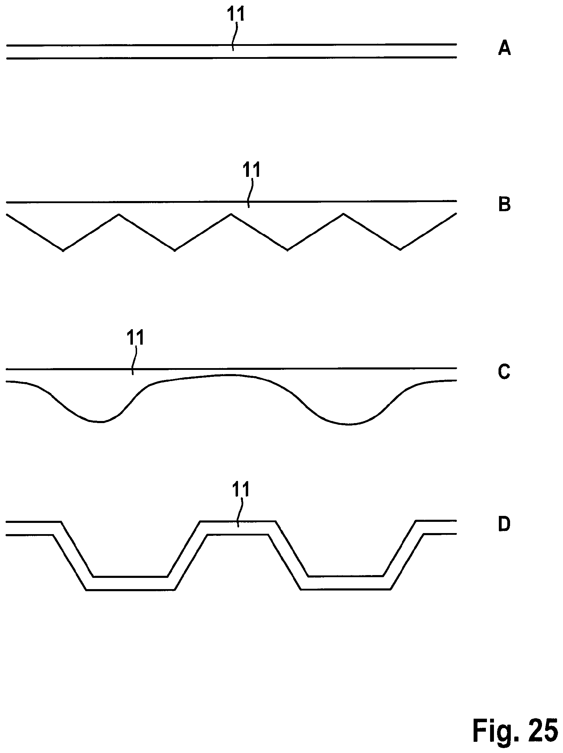

Oben wurden alle Masthähnchentransportcontainer mit einem ebenen Boden wie im Querschnitt im oberen Teil von Fig. 25 gezeigt dargestellt und beschrieben, aber es sind auch andere Formen mit dreieckigen oder gerundeten Verdickungen wie in der Mitte von Fig. 25 gezeigt oder unter Verwendung eines trapezförmigen Blechs wie am unteren Teil von Fig. 25 gezeigt möglich. Allen diesen Ausführungsformen ist gemeinsam, dass sie aus ebenen, plattenförmigen Abschnitten zusammengesetzt sind, so dass die Außenflächen leicht zu reinigen sind. Ähnliche Überlegungen gelten für die äußeren Seitenwände.

Wie oben beschrieben, bilden die Säulenabschnitte 414 eine vertikale Belüftungssäule, wenn sie aufeinander angeordnet sind, und der Deckel 405 ist hier mit einer Öffnung 439 in Fortsetzung der Belüftungssäule versehen. Diese Öffnung kann zum Leiten von Luft in die oder aus der Säule benutzt werden. Die Öffnung kann mit Ventilen, Bälgen oder ähnlichen Einrichtungen (nicht gezeigt) zum Verbinden mit einer Belüftungseinrichtung oder einem Belüftungssystem auf dem Transportanhänger versehen sein oder in Kontakt gebracht werden. Es ist zu verstehen, dass ähnliche Öffnungen über den anderen Säulenabschnitten 414 vorgesehen sind.

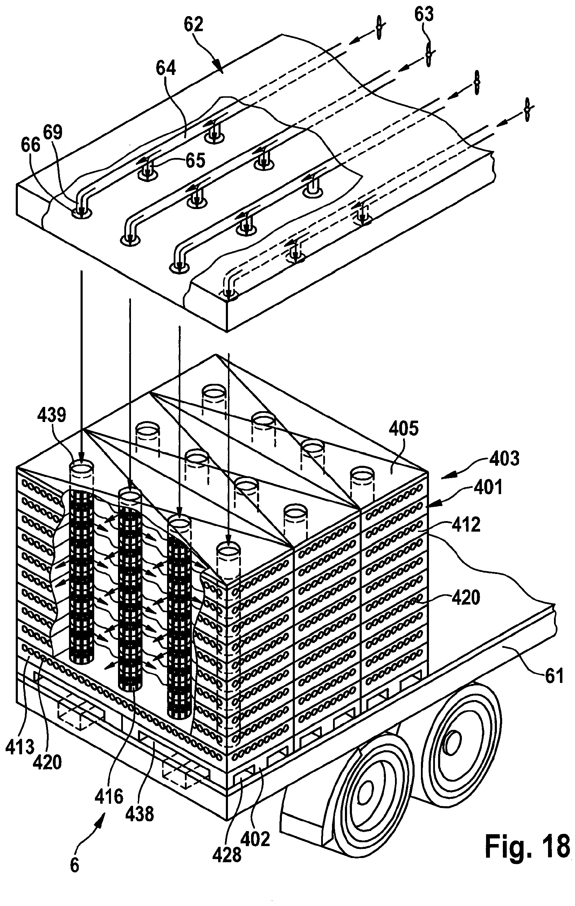

Das hintere Ende eines Lkws oder Anhängers 6, der mit Transporteinheiten des in Fig. 16 gezeigten Typs beladen ist, aber mit zehn Containern in jedem Stapel, ist in Fig. 18 dargestellt. Der Einfachheit halber werden hier ebenfalls die in Fig. 16 benutzten Bezugszahlen benutzt, obwohl die Zahl der Container in den Stapeln anders ist und die Verstärkungsabschnitte 430 weggelassen wurden.

Jede Transporteinheit 403 hat eine Breite, die der Breite des Bodens 61 des Lkws oder Anhängers entspricht, so dass lediglich eine Reihe von Transporteinheiten geladen zu werden braucht, aber man wird verstehen, dass auch Masthähnchentransportcontainer einer geringeren Größe benutzt und in zwei oder mehr Reihen angeordnet werden können, die in der Längsrichtung des Bodens verlaufen.

Das Dach 62 des Lkws oder Anhängers ist mit einer Belüftungsanordnung mit vier Ventilatoren 63 versehen, die jeweils einen Überdruck auf einem Belüftungsrohr 64 erzeugen, das über die Länge des Lkws oder Anhängers 6 verläuft. Jedes Belüftungsrohr 64 ist in eine Reihe von Auslässen 65 verzweigt, die jeweils direkt über einer der Belüftungssäulen 416 in den Transporteinheiten 403 vorgesehen sind. Wenn das Dach abgesenkt wird, kommen die Auslässe mit den Öffnungen 439 in den Deckeln in Eingriff, so dass Luft von den Belüftungsrohren 64 in die Belüftungssäulen 416 und von dort in die Innenvolumen der Masthähnchentransportcontainer strömen kann, wie durch die Pfeile angedeutet. Auf diese Weise wird jede Transporteinheit oder jeder Stapel von Einheiten mit Zwangsbelüftung versorgt. Ein Teil der Transporteinheit 403, die sich auf dem äußersten Ende des Lkws oder Anhängers befindet, wurde weggeschnitten, um einen Blick auf die Belüftungssäulen 416 darin und den Luftstrom zu ermöglichen.

Die Enden der Belüftungsrohre 64 wurden hier mit Flanschen 66 versehen, um einen festen Sitz an den Deckeln 405 zu ermöglichen.

Luft kann über die Belüftungsöffnungen 420 in den Seitenwänden 412, 413 aus den Masthähnchentransportcontainern ausströmen, und es ist auch möglich, dass sich die von den Belüftungssäulenabschnitten 414 gebildeten Belüftungssäulen 416 durch die Paletten 402 fortsetzen, so dass Luft über Palettenöffnungen 428, 438 entweichen kann. Hier sind Belüftungsöffnungen in allen vier Seiten der Container dargestellt, aber es kann zweckdienlich sein, sie nur in den Längsseitenwänden zu haben. Der Lkw- oder Anhängerboden kann ebenfalls mit Belüftungsöffnungen (nicht gezeigt) versehen sein.

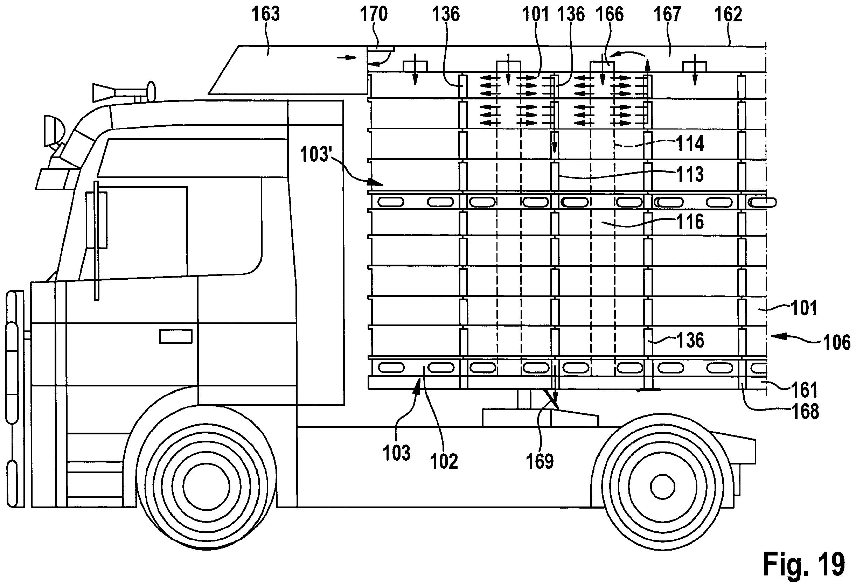

Fig. 19 zeigt ein weiteres Verfahren zum Belüften von Transporteinheiten, wenn sie auf einem Lkw oder Anhänger 106 angeordnet sind. Hier sind die Transporteinheiten 103, 103' aus dem in den Figuren 10 und 11 gezeigten Typ von Masthähnchentransportcontainern 101 aufgebaut, und zwei Etagen solcher Transporteinheiten sind auf dem Boden 161 aufeinander angeordnet. Die Transporteinheiten 103 in der untersten Etage beinhalten jeweils fünf Masthähnchentransportcontainer, während die Transporteinheiten 103' in der obersten Etage jeweils vier Container enthalten. Auf den Transporteinheiten in der zweiten und dritten Reihe von der Fahrerkabine wurden die Querseitenwände der Masthähnchentransportcontainer entfernt, um einen Blick auf die Innenvolumen und Belüftungssäulen 116 zu bieten. Öffnungen in den Deckeln und Paletten ermöglichen die Bildung von gemeinsamen Belüftungssäulen, die vom Dach 162 ganz bis zum Boden 161 verlaufen.

In dieser Ausführungsform hat das Dach 162 ein Innenvolumen 167, in dem mit einer über der Fahrerkabine angeordneten Belüftungseinrichtung 163 ein Überdruck oder ein Unterdruck erzeugt werden kann. Wenn im Innenvolumen 167 ein Überdruck erzeugt wird, wird vorzugsweise zwangsgeführt Luft in die Belüftungssäulen wie durch die Pfeile angedeutet und von dort in die Innenvolumen der Masthähnchentransportcontainer 101 und aus den Belüftungsöffnungen (nicht sichtbar) in den Seitenwänden 113 in einen Belüftungsdurchgang 136 zwischen den Transporteinheiten gedrückt. Wenn Öffnungen 168 im Boden 161 des Anhängers offen gelassen werden, kann eine konstante Zirkulation durch die Transporteinheiten erhalten werden. Diese Zirkulation kann durch den Unterdruck unterstützt werden, der gewöhnlich an der Unterseite eines fahrenden Lkws entsteht. Umgebungsluft kann den Innenvolumen direkt zugeführt werden, oder die Luft kann mit Bezug auf Temperatur und/oder Luftfeuchtigkeit und/oder chemischer Zusammensetzung in dem Belüftungssystem klimatisiert werden.

Ein Überdruck im Innenvolumen 167 im Dach 162 kann auch durch Offenlassen eines Dämpfers oder einer steuerbaren Klappe 170 in der Vorderseite des Dachs erzielt oder unterstützt werden, so dass bei der Vorwärtsfahrt des Lkws Luft in das Innenvolumen gedrückt wird.

Bei sehr kaltem Wetter müssen die Transporteinheiten möglicherweise aufgeheizt werden. Dies kann dadurch erzielt werden, dass wenigstens einige der Öffnungen 168 im Boden 161 mit Dämpfern 169 und potentiell auch der Einlass von der Belüftungseinrichtung 163 mit einem Dämpfer 170 geschlossen und die Luft wie durch die Pfeile angedeutet in der dritten Reihe von Transporteinheiten zurückgeführt wird. Auf diese Weise wird die Körperwärme der Masthähnchen zum allmählichen Erwärmen der Luft benutzt, aber es wird typischerweise eine gewisse Menge Frischluft zugemischt, um einen ausreichenden Sauerstoffgehalt zu gewährleisten und den Kohlendioxidgehalt zu regulieren. Die Rückführung erfordert eine zusätzliche Belüftungseinrichtung, die beispielsweise in Form von auf jeder Belüftungssäule 116 angeordneten lokalen Gebläsen 166 vorliegen kann. Solche lokalen Gebläse können auch allein benutzt werden, um Luftstrom in die Belüftungssäulen zu induzieren.

Das Regulieren der Belüftung kann auch als Reaktion auf die Messung beispielsweise von Temperatur und Luftfeuchtigkeit in aus den Belüftungsöffnungen kommender Belüftungsluft erfolgen, und es können Sensoren zum Messen dieser Parameter beispielsweise in den Belüftungsdurchgängen 136 oder an den Paletten 102 vorgesehen werden.

Es ist auch möglich, der Luft Zusätze wie Anästhetika beizumischen, um die Masthähnchen beim Transport ruhig zu halten. In einer Ausführungsform wird dies dadurch erzielt, dass beispielsweise CO₂-Tanks auf den Lkw oder Anhänger geladen werden und dieses Gas über die Belüftungssäulen in die Transporteinheiten geleitet wird, aber es ist auch möglich, Abgase vom Lkw-Motor aufzufangen, die Abgase durch Leiten durch Filter und Adsorptionseinrichtungen, die flüchtige organische Verbindungen NOx, SOx beseitigen, und möglicherweise einen Aktivkohlefilter ausreichend zu reinigen, und diese gereinigten Gase dann der den Transporteinheiten über das Belüftungssystem zugeführten Luft zuzugeben. Es ist auch möglich, die Vögel zu betäuben, während sie sich noch auf dem Lkw befinden, aber dies erfordert ein sehr rasches Abladen der Transporteinheiten, damit die Masthähnchen rechtzeitig geschlachtet werden.

Nach dem Betäuben der Masthähnchen müssen die Transporteinheiten recht schnell geleert werden, um zu verhindern, dass die Herzen der Masthähnchen aufhören zu schlagen, bevor sie geschlachtet sind. Um das Leeren der Masthähnchentransportcontainer 401" zu erleichtern, können sie mit Klappen oder Türen 432 wie in Fig. 20 gezeigt versehen sein. Die Zahl der Klappen oder Türen kann variieren.

Alle oben beschriebenen Ausführungsformen beruhen auf der Verwendung von Masthähnchentransportcontainern mit Belüftungssäulen, die sich vom Boden erstrecken, aber es liegt auch im Rahmen der Erfindung, horizontale Belüftungssäulen zu benutzen.

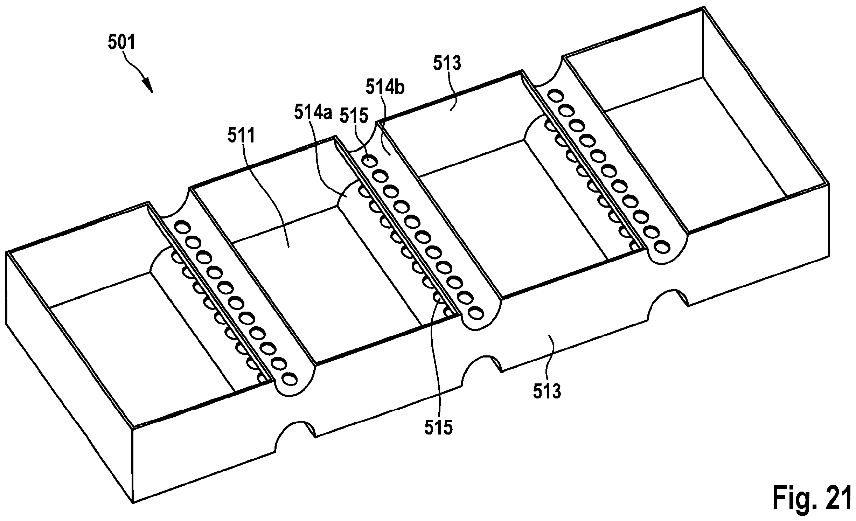

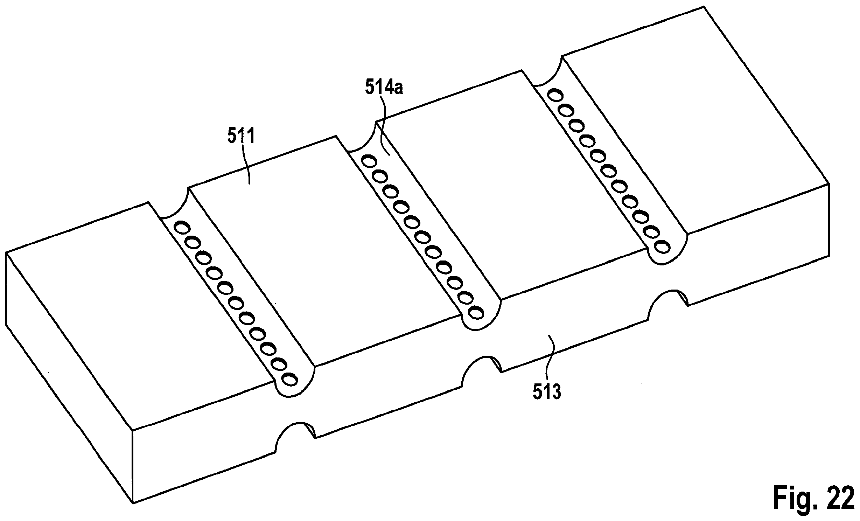

Ein Beispiel für ein Masthähnchentransportcontainersystem mit horizontalen Belüftungssäulen ist in den Figuren 21-23 dargestellt. Jeder Masthähnchentransportcontainer 501 umfasst hier zwei Typen von Säulenabschnitten 514a, 514b, die in das Innenvolumen verlaufen und jeweils eine Reihe von Belüftungsöffnungen 515 aufweisen. Ein Säulenabschnitt 514a ist als gekrümmter Teil des Bodens 511 vorgesehen, während der andere 514b von einer äußeren Längsseitenwand 513 zur anderen verläuft. Hier sind Belüftungsöffnungen über die gesamte Länge der Säulenabschnitte vorgesehen, aber es wäre auch möglich, Öffnungen nur in einem mittleren Abschnitt von einem oder beiden Säulenabschnitten und/oder Öffnungen mit einer länglicheren Form zu haben.

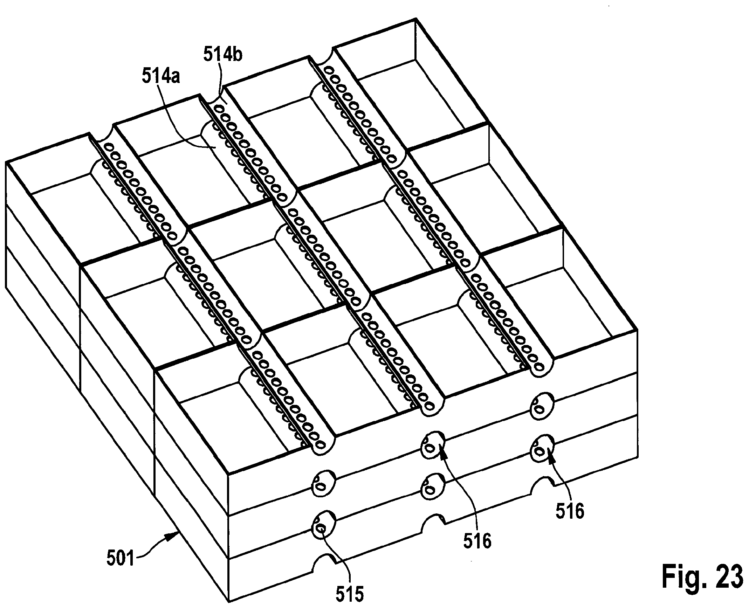

Wenn solche Masthähnchentransportcontainer aufeinandergestapelt und solche Stapel nebeneinander angeordnet werden wie in Fig. 23 gezeigt, verlaufen die Säulenabschnitte 514a, 514b von benachbarten Containern für gemeinsame Belüftungssäulen 516 horizontal durch alle Einheiten. Wenn jede zweite Belüftungssäule 516 in vertikaler Richtung mit einem Überdruck beaufschlagt wird, tritt Luft durch die Belüftungsöffnungen 515 in einer Säule jedes Containers ein und tritt über Öffnungen in der anderen Säule aus. Auf diese Weise können selbst Container ohne Belüftungsöffnungen im Boden oder den Seitenwänden belüftet werden, aber es ist natürlich auch möglich, in diesen Containern solche Öffnungen vorzusehen.

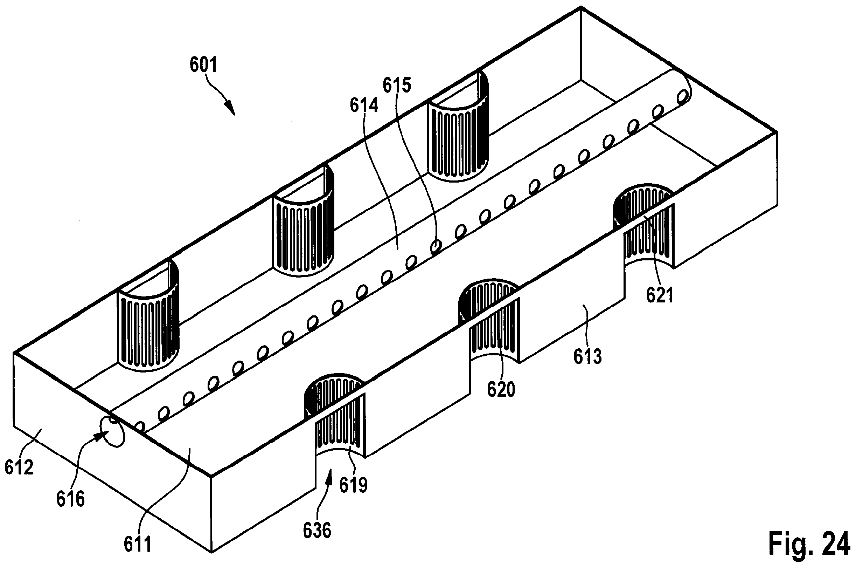

Fig. 24 zeigt eine weitere Ausführungsform eines Masthähnchentransportcontainers 601, in der Merkmale aus den Ausführungsformen in den Figuren 1-9 und den Figuren 21-22 kombiniert sind. Wie ersichtlich ist, beinhaltet dieser Container einen Säulenabschnitt 614, der von einer äußeren Endseitenwand 612 zur anderen verläuft und Belüftungsöffnungen 615 aufweist. Auch hier können Größe, Form und Verteilung unterschiedlich sein, aber wenn Container Ende an Ende angeordnet werden, bilden die Säulenabschnitte eine gemeinsame Belüftungssäule 616, die durch sie hindurch verläuft. Aussparungen 619 mit Öffnungen 620 wie mit Bezug auf die Figuren 1-9 beschrieben tragen zur Belüftung bei und bilden vertikale Belüftungssäulen, wenn Container aufeinander und nebeneinander gestapelt werden. Demgemäß ermöglicht diese Ausführungsform eines Masthähnchentransportcontainers die Kombination von horizontalen und vertikalen Belüftungssäulen.

Es wurden oben alle Masthähnchentransportcontainer mit einem ebenen Boden 11 wie im Querschnitt im oberen Teil von Fig. 25 gezeigt dargestellt und beschrieben, aber es sind auch andere Formen mit dreieckigen oder gerundeten Verdickungen wie in der Mitte von Fig. 25 gezeigt oder unter Verwendung eines trapezförmigen Blechs wie im unteren Teil von Fig. 25 gezeigt möglich. Allen diesen Ausführungsformen ist gemeinsam, dass sie aus ebenen, plattenförmigen Abschnitten zusammengesetzt sind, so dass die Außenflächen leicht zu reinigen sind. Ähnliche Überlegungen gelten für die äußeren Seitenwände.

Belüftungsgeräte wie Gebläse oder Kompressoren können an einem individuellen Stapel von Masthähnchentransportcontainern vorgesehen werden, wie z.B. durch Platzieren einer Belüftungseinrichtung oben auf dem Stapel an einer Endöffnung einer gemeinsamen Belüftungssäule, die sich aus den Belüftungssäulen in den einzelnen in dem Stapel übereinander stehenden Masthähnchentransportcontainern zusammensetzt, oder am Boden eines solchen Stapels, oder durch Integrieren einer Belüftungseinrichtung in eine Palettenauflage. In solchen Ausführungsformen kann die Belüftungseinrichtung dem Masthähnchentransporteinheitsstapel folgen und kann diesen auch dann belüften, wenn das Transportfahrzeug oder der Transportanhänger nicht dabei ist.

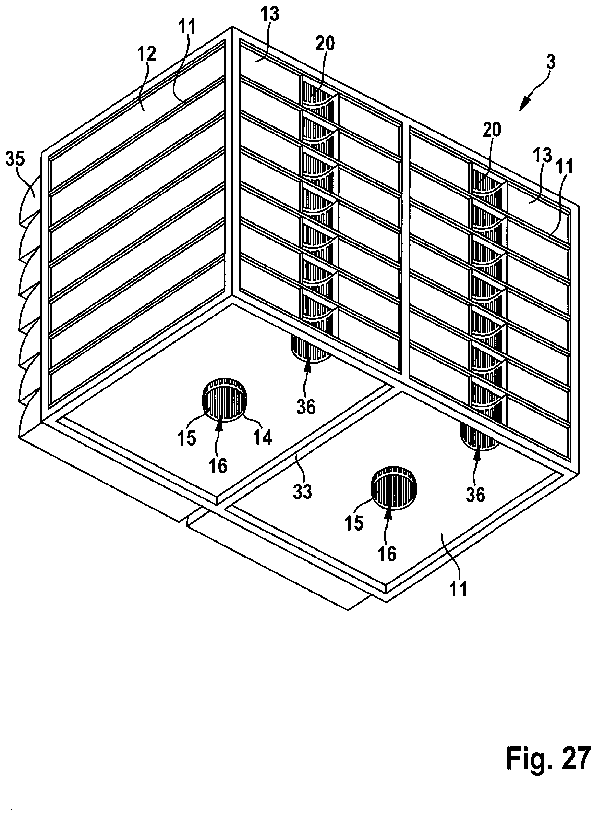

In einer Ausführungsform gemäß Figur 27 hat eine Masthähnchentransporteinheit 3 äußere Seitenwände 12, 13 und sieben Böden in Volllänge, durch eine vertikale innere Seitenwand 34 in der Mitte zwischen Seitenwänden 12 und 13 jeweils in zwei Böden 11 unterteilt. Vierzehn Innenvolumen befinden sich über den Böden, ein Innenvolumen über jedem Boden. Jedes Innenvolumen kann wenigstens fünf lebende Masthähnchen beim Transport zu einem Schlachthaus aufnehmen. Eine Belüftungssäule 14 verläuft vertikal durch die Innenvolumen und durch die Böden in der Mitte jedes Bodens. In der ersten Ausführungsform hat die Masthähnchentransporteinheit zwei solche Belüftungssäulen 14. Jede Belüftungssäule 14 ist mit Belüftungsöffnungen 15 versehen, die in das jeweilige Innenvolumen münden, so dass alle Innenvolumen gleichzeitig durch Aufbringen eines Luftdrucks auf Kanäle 16 in den Belüftungssäulen 14 belüftet werden können. Auf diese Weise kann Masthähnchen, die in einem Abstand von den Seitenwänden 12, 13 sitzen, Frischluft zugeführt werden.

Belüftungsöffnungen 15 sind länglich und verlaufen über fast die gesamte Höhe der Säule. Die Öffnungen in der ersten Ausführungsform haben eine Gesamtöffnungsfläche pro Innenvolumen, die etwa 40 % der Gesamtfläche der Säule in dem Volumen entspricht, entsprechend etwa 9 % der Fläche des Bodens der Masthähnchentransporteinheit, aber wenn eine kleinere Öffnungsfläche gewünscht wird, dann können die Öffnungen kürzer und/oder enger sein. Die Belüftungssäulen 14 sind zylindrisch mit einem konstanten Durchmesser.

Eine Seitenwand 13 ist mit einer Aussparung, die in Größe und Form der Hälfte einer Belüftungssäule 14 entspricht, und mit einem Abschnitt einer Belüftungssäulenwand, die mit Belüftungsöffnungen 20 versehen ist, versehen, um eine halbkreisförmige kontinuierliche hohle Belüftungssäule 36 zu bilden, die an die Seitenwand 13 gefügt ist. Über Belüftungsöffnungen 15 in den Säulen 14 eingeblasene Luft kann die Innenvolumen über Öffnungen 20 verlassen. Belüftungsluft kann auch in entgegengesetzter Richtung von Belüftungssäulen 36 über Öffnungen 20 zu Belüftungssäulen 16 strömen, wenn ein Unterdruck im Belüftungskanal 16 erzeugt wird. Es ist auch möglich, unterschiedliche Drücke in unterschiedlichen Belüftungssäulen 16 vorzusehen, um einen Strom von Luft von einem Belüftungskanal zum anderen zu induzieren, um dadurch selbst dann Belüftung zu ermöglichen, wenn die Seitenwände keine Öffnungen haben, aber die innere Seitenwand Öffnungen hat.

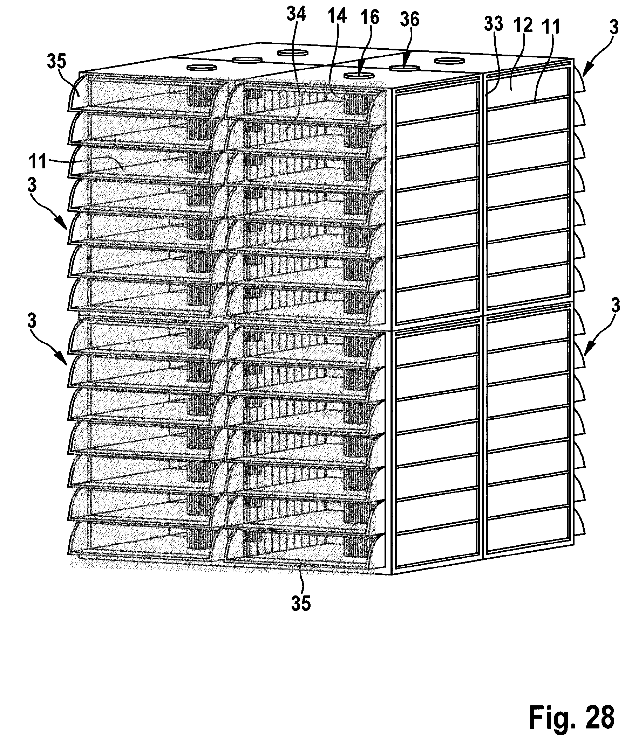

Wenn Transporteinheiten 3 der Ausführungsform wie in Fig. 28 gezeigt nahe beieinander angeordnet werden, sind die beiden halbkreisförmigen Belüftungssäulen 36 ausgerichtet und bilden einen gemeinsamen Belüftungskanal mit einem kreisförmigen Querschnitt, der dem des durch die Belüftungssäule 14 gebildeten Kanals 16 ähnlich ist. Zwei Transporteinheiten werden in einer gestapelten Konfiguration platziert, und die Belüftungssäulen 16 sind aneinandergereiht, um eine gemeinsame Belüftungssäule zu bilden. Dasselbe gilt für die Belüftungssäulen 36.

Die gerundeten Flächen und der relativ große Durchmesser von Belüftungssäulen 14 und Belüftungssäulen 36 tragen dazu bei, die Masthähnchen beim Transport und beim Laden in die Transporteinheit zu schützen. Wenn ein Masthähnchen gegen die Seite einer Säule oder Aussparung schlägt, gibt es keine scharfen Kanten, die sonst Prellungen verursachen könnten.

In der nachfolgenden Beschreibung weiterer Ausführungsformen wurden der Einfachheit halber dieselben Bezugszahlen wie in der Beschreibung der ersten Ausführungsform für Details mit derselben Funktion benutzt.

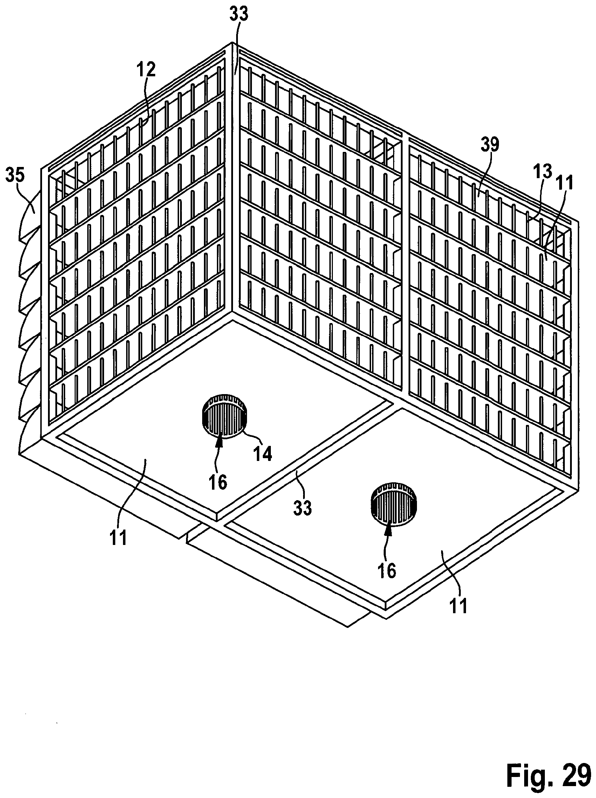

Die Ausführungsformen in den Figuren 27 und 28 haben geschlossene Seitenwände und eine offene Innenwand, die aus vertikalen Stäben gebildet ist. Es ist auch möglich, die Außenwände 12, 13 mit Öffnungen auszubilden oder die Wände mit Stäben zu bilden, wie in der in Fig. 29 illustrierten zweiten Ausführungsform. Die zweite Ausführungsform hat nur eine einzige Belüftungssäule 16, die zentral über die Böden 11 verläuft.

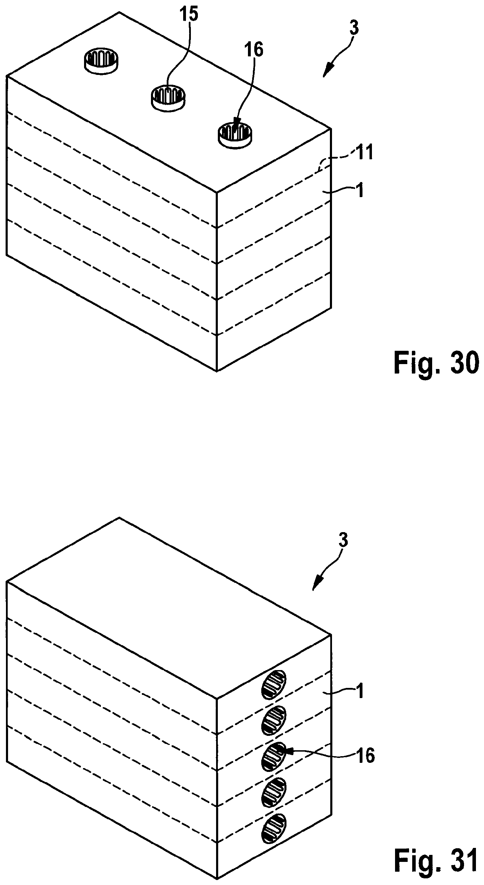

In der dritten Ausführungsform von Fig. 30 beinhaltet die Masthähnchentransporteinheit 3 fünf parallele Böden 11, die über die komplette Breite der Masthähnchentransporteinheit verlaufen. In dieser Ausführungsform hat die Masthähnchentransporteinheit drei Belüftungssäulen 14 mit Belüftungsöffnungen 15 in den Innenvolumen über jedem Boden. Die drei Belüftungsöffnungen verlaufen durch die Masthähnchentransporteinheit 13 über deren gesamte Höhe und haben offene untere Enden. Jede Belüftungssäule endet an einem ringförmigen Kragen, der einen geringfügig größeren Durchmesser hat als die Säule 14 und im Boden der Masthähnchentransporteinheit montiert ist, so dass sie das etwas nach oben vorstehende obere Ende der Säule 14 aufnehmen kann, wenn zwei Masthähnchentransporteinheiten in einer gestapelten Konfiguration platziert werden.

In einer vierten Ausführungsform von Fig. 31 hat die Masthähnchentransporteinheit eine Belüftungssäule, die in der horizontalen Richtung durch jedes Innenvolumen von einer Seitenwand 12 zur gegenüberliegenden Seitenwand 12 verläuft.

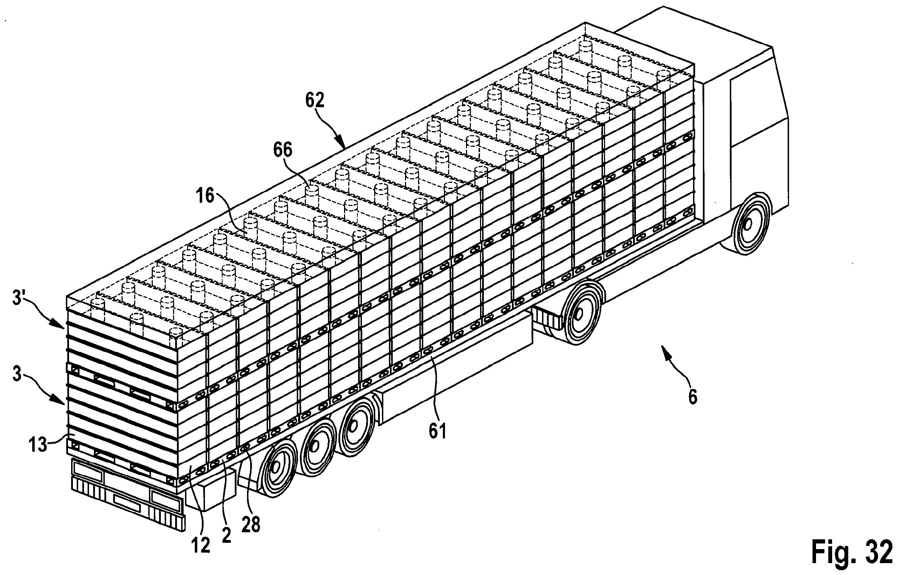

Fig. 32 illustriert Masthähnchentransporteinheiten, die auf ein Transportfahrzeug wie einen Anhänger oder einen Lkw 6 geladen werden, wo sich eine Masthähnchentransporteinheit mit fünf Böden in einer unteren Reihe und eine andere Masthähnchentransporteinheit mit vier Böden in einer oberen Reihe befinden, die auf die Einheiten in der unteren Reihe gestapelt ist. Die illustrierten Masthähnchentransporteinheiten haben eine Bodenstruktur 2 mit Löchern 28 für einen zum Heben der Einheit oder eines Stapels von zwei Einheiten benutzten Gabelstapler.

Jede Masthähnchentransporteinheit 3 hat eine Breite, die der Breite des Bodens 61 des Lkws oder Anhängers entspricht, so dass lediglich eine Reihe von Masthähnchentransporteinheiten geladen zu werden braucht, aber es ist auch möglich, Masthähnchentransporteinheiten einer geringeren Breite zu verwenden und sie dann in zwei oder mehr Reihen anzuordnen, die in der Längenrichtung des Bodens verlaufen.

In Fig. 19 ist der Dachabschnitt 162 des Lkws oder Anhängers mit einem Belüftungssystem versehen, bei dem sich eine Belüftungsvorrichtung 163 auf jeder Belüftungssäule 14 in den Masthähnchentransporteinheiten befindet. Das Belüftungssystem des Lkws oder Anhängers kann in einer Ausführungsform mehrere Abschnitte beinhalten, die individuell in Bezug auf eine Masthähnchentransporteinheit oder eine Gruppe von Masthähnchentransporteinheiten justierbar sind, so dass die Belüftung für eine Transporteinheit oder eine Gruppe von Transporteinheiten hergestellt und aktiviert werden kann, während zusätzliche Transporteinheiten auf den Lkw oder Anhänger geladen werden.

Die individuelle Belüftungsvorrichtung kann auch eine separate Vorrichtung sein, die unabhängig von dem Lkw oder Anhänger auf der Belüftungssäule auf der Masthähnchentransporteinheit vorgesehen ist und mit der Belüftungssäule verbundene Innenvolumen belüften kann, während die Masthähnchentransporteinheit auf den Transport oder auf eine weitere Handhabung wartet. Eine solche separate Belüftungsvorrichtung, oder ein Satz von solchen separaten Belüftungsvorrichtungen, kann mit Strom von einer Batterie oder einem Akku oder einem Stromversorgungsgerät versorgt werden, wie z.B. von einem Solarzellengerät. Alternativ kann die Belüftungsvorrichtung an eine Stromversorgung angeschlossen werden, wie z.B. über einen Stecker in eine stationäre Steckdose, die im Haltebereich der Masthähnchentransporteinheit vorgesehen ist, wie z.B. auf der Farm nach dem Laden von Masthähnchen oder am Schlachthaus nach dem Entladen aus dem Transportfahrzeug.

Das Belüftungssystem kann alternativ wie in Fig. 18 illustriert angeordnet sein, wo ein Belüftungsrohr 64 über die Länge des Lkws oder Anhängers 6 verläuft und einen vom Belüftungsrohr 64 abgezweigten Auslass 65 an jeder unter dem Belüftungsrohr befindlichen Belüftungssäule 416 hat. Eine Belüftungsvorrichtung 63 leitet Belüftungsluft zum Belüftungsrohr 64. Die in Fig. 18 illustrierten Masthähnchentransporteinheiten 403 haben jeweils vier Belüftungssäulen 416 und zehn Böden. Die Seitenwände 412, 413 haben eine Reihe von Belüftungsöffnungen 420, die sich im oberen Teil jedes Innenvolumens befinden.

Der Dachabschnitt 62 kann angehoben werden, um Raum zum Be- und Entladen von Masthähnchentransporteinheiten zu schaffen. Nach dem Laden kann der Dachabschnitt wieder in seine Position auf den Masthähnchentransporteinheiten abgesenkt werden, und die mechanische Zwangsbelüftung kann aktiviert werden. Belüftungsluft strömt von den Belüftungsrohren 64 in die Belüftungssäulen 416 und von dort in jedes Innenvolumen der Masthähnchentransporteinheiten, wie durch die Pfeile angedeutet. Auf diese Weise wird jede Transporteinheit oder jeder Stapel von Einheiten mit Zwangsbelüftung versorgt. Ein Abschnitt der Transporteinheit 403, die auf dem äußersten Ende des Lkws oder Anhängers sitzt, wurde weggeschnitten, um die Belüftungssäulen 416 darin und die Luftströme besser sichtbar zu machen. Luft kann aus den Masthähnchentransporteinheiten über die Belüftungsöffnungen 420 in den Seitenwänden strömen.

In Fig. 19 sind die Transporteinheiten in der zweiten und dritten Reihe von der Fahrerkabine nicht mit Querseitenwänden illustriert, um die Innenvolumen und Belüftungssäulen 116 besser sichtbar zu machen. In dieser Ausführungsform weist der Dachabschnitt 162 ein Innenvolumen 167 auf, in dem ein Überdruck oder ein Unterdruck mit einer Belüftungsvorrichtung 163 erzeugt werden kann, die über der Fahrerkabine angeordnet ist. Wenn ein Überdruck im Innenvolumen 167 erzeugt wird (Fig. 19), dann wird Luft in die Belüftungssäulen 116, wie durch die Pfeile angedeutet ist, und von dort in die Innenvolumen der Masthähnchentransporteinheiten 101 und durch die Belüftungsöffnungen (nicht sichtbar) in den Seitenwänden 113 hinaus in Belüftungsdurchgänge 136 zwischen den Masthähnchentransporteinheiten gedrückt. Wenn Öffnungen 168 im Boden 161 des Anhängers 106 offen gelassen werden, dann kann ein konstanter Strom von frischer Belüftungsluft durch die Transporteinheiten entstehen, möglicherweise unterstützt durch den Unterdruck, der gewöhnlich an der Unterseite eines fahrenden Lkws entsteht. Luft kann direkt aus der Umgebung genommen oder im Belüftungssystem mit Bezug auf Temperatur und/oder Luftfeuchtigkeit oder durch Umwälzen klimatisiert werden.

Wenn Masthähnchentransporteinheiten der Ausführungsform in Fig. 31 mit horizontalen Belüftungssäulen nebeneinander angeordnet werden, bilden die Säulenabschnitte 14 benachbarter Einheiten gemeinsame Belüftungssäulen 16, die horizontal durch die Einheiten verlaufen. Es kann auch wenigstens zwei, wie z.B. zwei bis sechs, horizontale Belüftungssäulen für jedes Innenvolumen geben. Die höheren Anzahlen an Belüftungssäulen sind dann am relevantesten, wenn die Masthähnchentransporteinheit eine Breite hat, die der Breite des Laderaums 161 entspricht, und die Belüftungssäulen in Längsrichtung des Laderaums angeordnet sind und zwischen den gegenüberliegenden Seitenwänden 13 der Einheit verlaufen. Wenn ein Überdruck auf jede zweite Belüftungssäule 16 aufgebracht wird, dann tritt Luft durch die Belüftungsöffnungen 15 in einer Säule ein und tritt über Öffnungen in der Zwischensäule aus. Auf diese Weise können sogar Masthähnchentransporteinheiten ohne Belüftungsöffnungen des Typs 20 im Boden oder in den Seitenwänden belüftet werden, aber es ist natürlich auch möglich, solche Öffnungen in diesen Containern vorzusehen.

In einer weiteren Ausführungsform beinhaltet eine Masthähnchentransporteinheit eine Belüftungssäule 14, die von einer Seitenwand 12 zur anderen in horizontaler Richtung verläuft, und eine Belüftungssäule, die in der vertikalen Richtung verläuft.

Alle in den oben beschriebenen Transporteinheiten verwendeten Masthähnchentransporteinheiten wurden mit flachen Böden ohne Öffnungen dargestellt und beschrieben. Details bestimmter Ausführungsformen können zu weiteren Ausführungsformen im Rahmen der Patentansprüche kombiniert werden. Die Masthähnchentransporteinheiten können mit einer dreieckigen Basisform mit drei Seitenwänden oder mit mehr als vier Seitenwänden in einer polygonalen Basisform gefertigt werden.

Die individuelle Belüftungssäule kann ganz durch die Böden verlaufen, oder die Belüftungssäule kann aus Abschnitten gefertigt sein, wobei der individuelle Abschnitt an einen beweglichen Teil des Bodens gefügt wird. Jeder Boden 11 kann in Bezug auf den Rahmen 33 oder Seitenwände 12, 13 beweglich sein. Die Verwendung von beweglichen Böden oder beweglichen Bodenabschnitten kann das Laden von Masthähnchen in die Masthähnchentransporteinheit erleichtern.

Die Böden, Seitenwände, obere Wand und Türen 35 können plattenförmig ohne Belüftungsöffnungen sein, ausgenommen an den Belüftungssäulen. Dies ergibt ein hohes Maß an Ruhe und Schutz für die Masthähnchen und schirmt die Masthähnchen auch vor intensivem Licht wie Sonnenlicht ab.

Anzahl und Position der Belüftungssäulen in Bezug auf die Seitenwände und die anderen Belüftungssäulen können variieren, und auch Größe, Form, Position und Anzahl der Belüftungsöffnungen in den Seitenwänden können variieren, einschließlich der Möglichkeit, dass Belüftungsöffnungen nur in den Belüftungssäulen vorgesehen werden. Es wird auch bemerkt, dass die verschiedenen Masthähnchentransporteinheiten nicht identisch zu sein brauchen und dass die Belüftungssäulen nicht kontinuierlich durch die Transporteinheit zu verlaufen brauchen. Zum Beispiel kann der unterste Boden einer Transporteinheit ohne einen Belüftungssäulenabschnitt sein, wobei das Innenvolumen über diesem Boden über einen hohlen Belüftungsabschnitt im Boden über der Öffnung in das unterste Innenvolumen belüftet werden kann.

Das hintere Ende eines Masthähnchentransportanhängers 6, der Masthähnchen zum Schlachthaus transportiert, ist in Fig. 18 mit Transporteinheiten 403 jeweils mit einer Breite illustriert, die der Breite des Bodens 61 des Anhängers entspricht. Im Zusammenhang der vorliegenden Erfindung ist der Begriff Transportanhänger in einem breiten Sinne zu verstehen. Der Transportanhänger kann ein Anhänger sein, der von einer Lkw-Antriebseinheit angetrieben wird und der in einem von der Lkw-Antriebseinheit abgetrennten Zustand geparkt werden kann. Der Transportanhänger kann Teil eines Sattelschleppers wie z.B. der Sattelanhänger sein, der mit dem Lkw verbunden und hinter dem Lkw oder hinter einem von der Lkw-Antriebseinheit angetriebenen Anhänger her laufen kann. Der Transportanhänger kann Zwillingsräder, mehrere Fahrgestelle oder einfach eine Radachse an beiden Enden haben. Der Transportanhänger kann eine Standardgröße oder eine Übergröße (XL), insbesondere eine große Länge haben. Der Transportanhänger kann auch eine geringere Größe haben, wie z.B. ein Lorry. Der Begriff Transportanhänger umfasst auch Eisenbahnwaggons.

Das Dach 62 des Anhängers ist mit einem Belüftungssystem versehen, das vier Belüftungseinrichtungen 63 in Form eines Ventilators umfasst, der von einem Elektromotor angetrieben wird, der mit Strom entweder von der Antriebseinheit des Anhängers, einem Akku am Anhänger oder über einen Stromanschluss versorgt wird, der an eine Stromversorgung auf der Farm, am Schlachthaus oder an einem anderen stationären Versorgungspunkt angeschlossen wird. Die Belüftungseinrichtung versorgt ein über die Länge des Anhängers 6 verlaufendes Belüftungsrohr 64 mit (mechanischer) Zwangsbelüftung. Das Belüftungsrohr 64 versorgt eine Reihe von abgezweigten Auslässen 65 mit Belüftungsluft. Der individuelle Auslass 65 befindet sich jeweils an einer Position, die einer Endöffnung einer Belüftungssäule 416 in den Transporteinheiten 403 entspricht. Wenn das Dach 62 auf die Masthähnchentransporteinheiten abgesenkt wird, fluchten die Auslässe mit Öffnungen 439 an den oberen Enden der Belüftungssäulen oder sind damit integriert oder kommen damit in Eingriff, so dass Belüftungsluft zwischen den Belüftungsrohren 64 und den Belüftungssäulen 416 und über die Säulen und Belüftungsöffnungen darin durch Innenvolumen der Masthähnchentransportcontainer wie durch die Pfeile angedeutet strömen kann. Auf diese Weise wird jede Masthähnchentransporteinheit oder jeder Stapel von Transporteinheiten mit Zwangsbelüftungsluft versorgt. Ein Abschnitt der Transporteinheit 403, die auf dem äußersten Ende des Lkws oder Anhängers sitzt, wurde weggeschnitten, um eine Ansicht der Belüftungssäulen 416 im Innern und des Luftstroms zu bieten.

In dieser Ausführungsform wurden die Enden der Belüftungsrohre 64 mit Flanschen 66 versehen, die einen festen Sitz an den Abdeckungen 5 ermöglichen.

Die Belüftungseinrichtungen können individuell gesteuert werden, um Belüftungsbedingungen zu erzielen, die an die örtlichen Bedingungen in der Belüftungssäule oder den Belüftungssäulen angepasst sind, die mit Belüftung von der Belüftungseinrichtung versorgt werden. Eine Gruppe von Belüftungseinrichtungen kann gemeinsam gesteuert werden, wie z.B. dann, wenn eine spezielle Belüftungsluftzusammensetzung zu allen Innenvolumen geführt werden soll oder wenn eine Seite des Anhängers Sonnenlicht stärker ausgesetzt ist als die andere Seite. Belüftungseinrichtungen können auch so gesteuert werden, dass weniger Belüftungsluft zugeführt wird, wenn die natürliche Belüftung hoch ist, z.B. beim Fahren mit hoher Geschwindigkeit, und mehr Belüftungsluft, wenn weniger oder keine durch die Fahrgeschwindigkeit bedingte Belüftungsluft zugeführt wird.

Luft kann aus den Masthähnchentransporteinheiten über die Belüftungsöffnungen 420 in den Seitenwänden 412, 413 strömen, und es ist auch möglich, dass die Belüftungssäulen 416 durch die Paletten 402 fortgesetzt werden, so dass Luft über Palettenöffnungen 428, 438 entweichen kann. Hier sind in allen vier Seiten der Masthähnchentransporteinheiten Belüftungsöffnungen 420 zu sehen, aber es kann zweckdienlich sein, sie nur in den Längsseitenwänden zu haben. Der Anhängerboden 61 kann ebenfalls mit Belüftungsöffnungen (nicht gezeigt) versehen sein.

In Fig. 18 füllt eine einzige Reihe von Masthähnchentransportcontainern der Boden des Anhängers aus, aber es ist auch möglich, Masthähnchentransporteinheiten einer geringeren Breite zu benutzen und sie in zwei, drei, vier oder mehr Reihen anzuordnen, die in Längenrichtung des Bodens verlaufen.

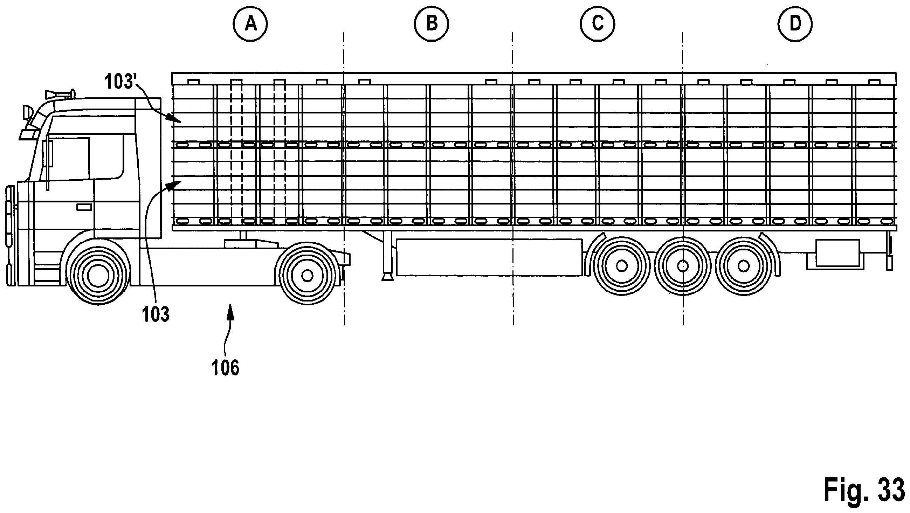

Das Belüftungssystem von beliebigen der beschriebenen Ausführungsformen sowie anderer Ausführungsform der Erfindung kann zum Gewährleisten einer ausreichenden Belüftung der Masthähnchentransporteinheiten 103 beim Beladen des Lkws benutzt werden. Das Beladen eines typischen Masthähnchentransport-Lkw 106 wie in seiner vollen Länge in Fig. 33 gezeigt dauert gewöhnlich etwa eine Stunde, und daher kann es zweckdienlich sein, die Belüftung in Abschnitte wie durch die gestrichelten Linien angedeutet zu unterteilen. Wenn Abschnitt A voll beladen ist, wird die Belüftung dieses Abschnitts gestartet, während die Beladung in Abschnitt B fortgesetzt wird, dann wird Abschnitt B an die Belüftung angeschlossen usw., bis schließlich die Belüftung in Abschnitt C gestartet wird. Dies kann einfach dadurch erzielt werden, dass Luftregulierungsmechanismen wie Dämpfer oder Ventile in Belüftungsrohren bereitgestellt werden, die wie in Fig. 18 illustriert über die Länge des Lkw oder in einem inneren Dachvolumen wie in Fig. 19 verlaufen. Die Anzahl der Reihen in jedem Belüftungsabschnitt A-D kann je nach der Größe der Masthähnchentransporteinheiten und der Größe des Anhängers variieren, und durch Bereitstellen von genügend Regulierungsmechanismen ist es sogar möglich, die Größe der einzelnen Abschnitte anzupassen, zum Beispiel je nach der Umgebungstemperatur und der Geschwindigkeit, mit der Masthähnchentransportcontainer geladen werden.

Die Belüftung kann als Reaktion auf die Messung beispielsweise von Lufttemperatur, Luftfeuchtigkeit und/oder CO₂-Gehalt entweder in der Luft in den Innenvolumen der Masthähnchentransporteinheiten oder in der aus den Masthähnchentransporteinheiten strömenden Belüftungsluft geregelt werden. Sensoren, die einen oder mehrere der erwähnten Luftwerte messen, können in den Masthähnchentransporteinheiten, möglicherweise in deren Paletten, oder in dem für diesen Zweck benutzten Lkw angeordnet werden.

Zum Steuern der Belüftung und/oder zum Aufzeichnen verschiedener Bedingungen des Belüftungssystems, der Masthähnchentransporteinheiten und/oder der Masthähnchen kann ein Aufzeichnungssystem benutzt werden. So können zum Beispiel Auslasslufttemperatur und Luftfeuchtigkeit und/oder CO₂-Gehalt an den Ausgängen als Indikatoren des Zustands der Masthähnchen benutzt werden, während Informationen über Umgebungslufttemperatur und Luftfeuchtigkeit zum Beurteilen eines zukünftigen Anpassungsbedarfs benutzt werden können. Andere Parameter wie Belüftungslufttemperatur und Luftfeuchtigkeit sowie die Transportdauer usw. können zum Berechnen von erwarteten Werten für andere Parameter und zum Vergleichen von echten und erwarteten Werten zum Anpassen der Belüftung benutzt werden.

Fig. 6 zeigt eine Ausführungsform einer Masthähnchentransporteinheit 3 mit äußeren Seitenwänden 12, 13 und fünf Böden 11, die fünf Innenvolumen definieren, die jeweils wenigstens fünf lebende Masthähnchen beim Transport zu einem Schlachthaus aufnehmen können. Drei Belüftungssäulen 14 an jedem Boden bilden zusammen drei kontinuierliche hohlzylindrische Belüftungskanäle 16, die sich aus den

Belüftungssäulen 14 der fünf Masthähnchentransporteinheiten 1, 1' zusammensetzen, die sich in der Verlängerung voneinander befinden. Jeder Säulenabschnitt 14 ist mit Belüftungsöffnungen 15 versehen, die in die jeweiligen Innenvolumen münden, so dass alle Masthähnchentransporteinheiten 1, 1' in der Transporteinheit durch Aufbringen eines Luftdrucks auf die Belüftungssäulen 16 gleichzeitig belüftet werden können. Auf diese Weise können selbst Vögel mit Frischluft versorgt werden, die sich in einem Abstand von den Seitenwänden 12, 13 befinden. Die Luftversorgung kann auch zum Erwärmen oder Kühlen des Innenvolumens des Containers benutzt werden.

Eine Belüftungssäule in einem Masthähnchentransportcontainer bzw. in einer Einheit kann als Belüftungssäulenabschnitt 14 bezeichnet werden, weil sie zu einem Abschnitt einer gemeinsamen Belüftungssäule wird, die durch mehrere Masthähnchentransportcontainer verläuft, wenn diese zu einer Einheit gestapelt werden, und möglicherweise zu einem Teil einer Belüftungssäule, die zwei oder mehr Masthähnchentransporteinheiten gemeinsam ist, wenn sie auf einen Transportanhänger geladen werden.

Die in den Figuren 6 und 8 gezeigte Masthähnchentransporteinheit setzt sich aus einer Serie von aufeinander gestapelten Masthähnchentransportcontainern 1 zusammen, und ein solcher Container ist in den Figuren 3-5 dargestellt. Der Boden 11 ist rechteckig mit zwei Querseitenwänden 12 und zwei Längsseitenwänden 13, die zusammen das Innenvolumen begrenzen. Die drei Säulen 14 verlaufen vom Boden 11 nach oben durch das Innenvolumen in einem Abstand d_{T} von den Querseitenwänden 12 und einem Abstand d_{L} von den Längsseitenwänden 13. Diese Abstände d_{T}, d_{L} sind so ausgelegt, dass Raum für wenigstens ein Masthähnchen zwischen jeder der Säulen 14 und den jeweiligen Seitenwänden 12, 13 entsteht. Die Belüftungssäulen sind in einer Reihe entlang der mittleren Längsachse L des Containers angeordnet und gleichmäßig beabstandet.

Jede Säule 14 ist so ausgelegt, dass sie als Belüftungssäule dient, indem sie mit länglichen Belüftungsöffnungen 15 versehen ist, die über fast die ganze Höhe der Säule verlaufen. Die Öffnungen haben hier einen Gesamtöffnungsbereich, der etwa 40 % der Gesamtfläche der Säule entspricht, entsprechend etwa 9 % der Fläche des Bodens der Masthähnchentransporteinheit, aber wenn ein kleinerer Öffnungsbereich gewünscht wird, können die Öffnungen auch kürzer und/oder schmaler sein.

Die Säulen 14 sind zylindrisch mit einem konstanten Durchmesser d_{C}, mit Ausnahme eines kleinen, an der Verbindungsstelle zum Boden 11 vorgesehenen abgeschrägten Abschnitts 17. Dieser abgeschrägte Abschnitt verstärkt nicht nur die Struktur, sondern lässt es auch zu, dass eine Säule eines anderen Containers geringfügig in den Hohlraum vorsteht, wie in Fig. 8 gezeigt. In dieser Ausführungsform entspricht die Höhe hc der Säulen 14 der Höhe der Seitenwände 12, 13, aber sie können auch geringfügig höher sein, so dass sie mit einer Säule eines anderen Containers in Eingriff kommen können.

Beide Längsseitenwände 13 der Masthähnchentransporteinheit in den Figuren 6 und 8 sind mit Aussparungen 19 versehen, die in Größe und Form der Hälfte einer Belüftungssäule 14 entsprechen, und sind auch mit Belüftungsöffnungen 20 versehen, aber es gibt keinen abgeschrägten Abschnitt und kein Kreuz. Um die Stabilität der Masthähnchentransporteinheit selbst dann zu gewährleisten, wenn sie mit Masthähnchen vollgeladen ist, ist ein jede Aussparung 19 überspannender Träger 21 in der Fortsetzung der Ebene der Längsseitenwand 13 vorgesehen. Dieser Träger kann auch als Griff benutzt werden, wenn der Container und/oder die Transporteinheit entweder manuell oder automatisch gehandhabt wird.

In der Masthähnchentransporteinheit 3 befinden sich die Aussparungen 19 in den Seitenwänden übereinander, wie auch aus den Figuren 6 und 8 hervorgeht, so dass sie eine halbkreisförmige, kontinuierliche, hohle Belüftungssäule 36 bilden, die an die Längsseitenwände 13 gefügt ist und Belüftungsöffnungen 20 aufweist. Über die Belüftungsöffnungen 15 in die Belüftungssäulen 14 geleitete Luft kann über Öffnungen 20 in den Aussparungen 19 in den Seitenwänden ausströmen. Belüftungsluft kann auch in der entgegengesetzten Richtung von den Öffnungen 20 in den Seitenwänden zu den Belüftungssäulen strömen, z.B. wenn ein Unterdruck im Belüftungskanal 16 erzeugt wird. Es ist auch möglich, unterschiedliche Drücke in verschiedenen Belüftungssäulen 16 bereitzustellen, um einen Luftstrom von einer Belüftungssäule zu einer anderen zu induzieren, so dass eine Belüftung selbst dann möglich ist, wenn es keine spezifischen Belüftungsöffnungen in den Seitenwänden gibt. Dies kann durch Versehen der einzelnen Belüftungssäule mit einer Belüftungseinrichtung erfolgen, die unabhängig von anderen Belüftungseinrichtungen für andere Belüftungssäulen in dem Belüftungssystem gesteuert werden kann.

Wenn eine Transporteinheit 3 des in den Figuren 6 und 8 gezeigten Typs nahe an und mit einer anderen Transporteinheit desselben Typs fluchtend angeordnet ist, dann fluchten die Aussparungskanäle 19 in diesen beiden Transporteinheiten miteinander und bilden einen gemeinsamen Belüftungskanal mit einem kreisförmigen Querschnitt entsprechend dem des durch die Belüftungssäulen 14 gebildeten Kanals 16. Ein ähnlicher Effekt kann durch Anordnen der Transporteinheit mit der Längsseitenwand 13 nahe an einer Wand oder dergleichen erzielt werden, um dadurch die Aussparungen 19 zu schließen und eine halbkreisförmige Belüftungssäule zu erzeugen. Die so gebildete Belüftungssäule 36 funktioniert in der gleichen Weise wie der Belüftungsdurchgang 136, der mit Bezug auf Fig. 19 beschrieben wurde.

Die Masthähnchentransporteinheit in den Figuren 3-6 und 8 hat eine Länge von 240 cm und eine Breite entlang den Querseitenwänden 12 von 80 cm und einen Durchmesser der Belüftungssäulen 14 von 20 cm, und die einzelnen Masthähnchentransporteinheiten haben eine Höhe von 22,5 cm. Eine solche Masthähnchentransporteinheit überspannt die gesamte Breite eines europäischen Standard-Lkw-Anhängers, wenn er wie in Fig. 18 angeordnet ist.

Die in den Figuren 6 und 8 benutzte Palette 2, in Fig. 9 allein dargestellt, ist mit einer Reihe von Öffnungen 27 in denselben Positionen wie die Säulen in den Masthähnchentransporteinheiten versehen, wie auch in Fig. 8 gezeigt, so dass sich die Belüftungssäulen 16 durch die Palette fortsetzen. Obwohl dies in dieser Ausführungsform nicht der Fall ist, können sich die durch die Aussparungen 19 gebildeten Belüftungssäulen ebenfalls in die Palette fortsetzen. Horizontale Öffnungen 28 in der Palette 2 sind für einen Eingriff mit den Armen eines Gabelstaplers (nicht gezeigt) ausgelegt, der zum Handhaben der Transporteinheit 3 benutzt wird. Diese horizontalen Öffnungen können zur Belüftung beitragen, indem sie mit einer der Belüftungssäulen 16, 19 in Verbindung gebracht werden, obwohl dies in der in den Figuren 6, 8 und 9 gezeigten Ausführungsform nicht der Fall ist.

Eine andere Ausführungsform eines Masthähnchentransportcontainers ist in Fig. 1 dargestellt. Dieser Container entspricht denen in den Figuren 3-6 und 8, abgesehen davon, dass er kleiner ist und eine andere Konfiguration der Belüftungssäulen aufweist, und daher werden dieselben Bezugszahlen verwendet.

Der Masthähnchentransportcontainer in Fig. 1 hat eine Länge und eine Breite von 120 cm, eine Höhe von 22,5 cm und einen Durchmesser der Belüftungssäulen 14 von 20 cm. Zwei Reihen von aus solchen Containern zusammengesetzten Reihen von Masthähnchentransporteinheiten füllen die Breite eines Anhängers, wenn sie nebeneinander angeordnet werden. Der Abstand d_{T} zu den Seitenwänden 12 ohne Aussparungen beträgt etwa 50 cm, und der Abstand d_{L} zu den Seitenwänden gegenüber der Seitenwand mit der Aussparung 19 beträgt in der illustrierten Ausführungsform etwa 30 cm.

Eine andere Ausführungsform eines Masthähnchentransportcontainers 101 ist in Fig. 10 dargestellt. Es werden Bezugszahlen benutzt, die denen in den Figuren 1, 3-6, 8, 9, 18, 19, 33 entsprechen, aber mit 100 addiert, und wenn nichts anderes angegeben ist, haben Merkmale mit solchen entsprechenden Bezugszahlen dieselbe Funktion.

Auch dieser Masthähnchentransportcontainer 101 hat drei Belüftungssäulenabschnitte 114, die so angeordnet sind, dass sie vom Boden 111 vorstehen und eine Belüftungssäule 116 bilden. Der Container ist einfacher aufgebaut, und die Belüftungsöffnungen 115 sind nur an den oberen Rändern der Belüftungsabschnitte vorgesehen. Diese Belüftungsöffnungen haben einen kleineren Gesamtöffnungsbereich als die in den Figuren 3-6 und 8 gezeigten und befinden sich in Kopfhöhe der Masthähnchen.

Der Behälter in Fig. 10 hat keine Aussparungen in den Seitenwänden. Stattdessen ist er mit einer Reihe von Öffnungen 120 im oberen Abschnitt der Längsseitenwände 113 versehen. Ein vom Innenvolumen des Containers weg vorstehender Flansch 126 dient als Abstandshalter, so dass immer ein Belüftungsdurchgang 136 entlang der Außenseite der Längsseitenwände vorhanden ist. Zusätzlich zu dem mit Bezug auf Fig. 19 beschriebenen vertikalen Strom, wo der Anhänger mit aus Containern dieses Typs aufgebauten Masthähnchentransporteinheiten beladen ist, ermöglicht dies einen Strom von Belüftungsluft in einer horizontalen Richtung entlang den Außenseiten der Seitenwände.

Die vorstehenden Flansche 126 können auch als Griffe beim Handhaben der Container verwendet werden und ermöglichen es, den Container in ein Rahmensystem einzufügen und ihn bei Bedarf in einer Transporteinheit des Standes der Technik zu verwenden.

Der Anhänger in Fig. 33 ist ebenfalls als mit Masthähnchentransporteinheiten beladen dargestellt, die aus Masthähnchentransportcontainern dieses Typs aufgebaut sind.

Alle oben beschriebenen Ausführungsformen beruhen auf der Verwendung von Masthähnchentransporteinheiten mit Belüftungssäulenabschnitten 14, 114, die sich vom Boden erstrecken, was bedeutet, dass die Belüftungssäulen 16, 116 der Masthähnchentransporteinheiten auch in einer im Wesentlichen vertikalen Richtung verlaufen, aber es liegt auch im Rahmen der Erfindung, horizontale Belüftungssäulen zu benutzen.

Ein Beispiel für ein Masthähnchentransportcontainersystem mit einer horizontalen Belüftungssäule ist in Fig. 24 dargestellt. Wie ersichtlich ist, umfasst dieser Container einen Säulenabschnitt 614, der von einer äußeren Endseitenwand 612 zur anderen verläuft und Belüftungsöffnungen 15 aufweist. Wenn solche Container Ende an Ende angeordnet sind, bilden die Säulenabschnitte eine gemeinsame Belüftungssäule 616, die durch sie hindurch verläuft, und das Belüftungssystem am Anhänger muss dann entlang der Seite des Anhängers angeordnet oder mit Verbindungsrohren oder Leitungen versehen werden, die entlang der Seite verlaufen. Auch hier sind Aussparungen 619 mit Öffnungen 620 wie mit Bezug auf die Figuren 3-6 und 8 beschrieben so ausgelegt, dass sie zur Belüftung beitragen und vertikale Belüftungssäulen 636 bilden, wenn Container aufeinander und nebeneinander gestapelt werden. Demgemäß ermöglicht diese Ausführungsform eines Masthähnchentransportcontainers die Kombination von horizontalen und vertikalen Belüftungssäulen. Alternativ können die Aussparungen weggelassen und durch einfache Öffnungen in den Seitenwänden oder durch eine zusätzliche horizontale Belüftungssäule ersetzt werden.

Wie weiter oben beschrieben, kann ein Aufzeichnungssystem zum Steuern der Belüftung und/oder zum Aufzeichnen verschiedener Bedingungen des Belüftungssystems, der Einheiten und/oder des Geflügels genutzt werden. Das Aufzeichnungssystem kann eine lokale Speichereinheit umfassen, die der individuellen Geflügeltransporteinheit folgt, um die Bedingungen des Wohlergehens der Tiere zu dokumentieren. Eine solche lokale Speichereinheit kann sich beispielsweise in der Palette oder in einer Abdeckung oder im Deckel der Geflügeltransporteinheit befinden und an eine Zentraleinheit für das Belüftungssystem auf dem Anhänger beim Transport angeschlossen werden. Alternativ kann das Aufzeichnungssystem mit den erfassten Werten gespeist werden, die in einem Speicher gespeichert werden, oder Ausdrucke von erfassten Werten sind eine andere Weise zum Speichern der Informationen. Es ist auch möglich, dass die erfassten Werte online an eine Zentraleinheit übertragen werden, die sich auf der Farm oder am Schlachthaus oder beim Einzelhandelslieferanten befindet, der das Geflügel an Kunden verkauft. Auf diese Weise können beispielsweise Endverbraucher Zugang zum Prüfen der Transportbedingungen für das Geflügel erhalten.

Die Geflügeltransporteinheiten 3 umfassen mehrere Böden in einer stapelähnlichen Konfiguration. Die mehreren Böden können in einer gemeinsamen Struktur enthalten sein, wie beispielsweise herkömmliche Container-Transportsysteme, wobei die äußeren Seitenwände allen Böden in der Transporteinheit gemein sind, und die Böden können wenigstens teilweise mit Bezug auf die Seitenwände entfernt werden, um Zugang für Geflügel zu bieten.

Die Belüftungssäulen 16 in den Geflügeltransporteinheiten 3 enden in Belüftungssäulenendöffnungen 39. Dies gilt sowohl für die horizontalen als auch für die vertikalen Belüftungssäulen. Das Belüftungssystem hat eine Belüftungsöffnung, die sich an der individuellen Belüftungssäulenendöffnung 39 befindet. In einer alternativen Ausführungsform des Belüftungssystems weist das Belüftungssystem eine Belüftungseinrichtung auf, die sich an der individuellen Belüftungssäulenendöffnung 39 befindet. Bei einer solchen Anordnung kann die Belüftung für jede Belüftungssäule individuell gesteuert werden, wenn das Belüftungssystem mit einer Regelung oder Steuerung für die individuelle Belüftungseinrichtung ausgestattet ist.

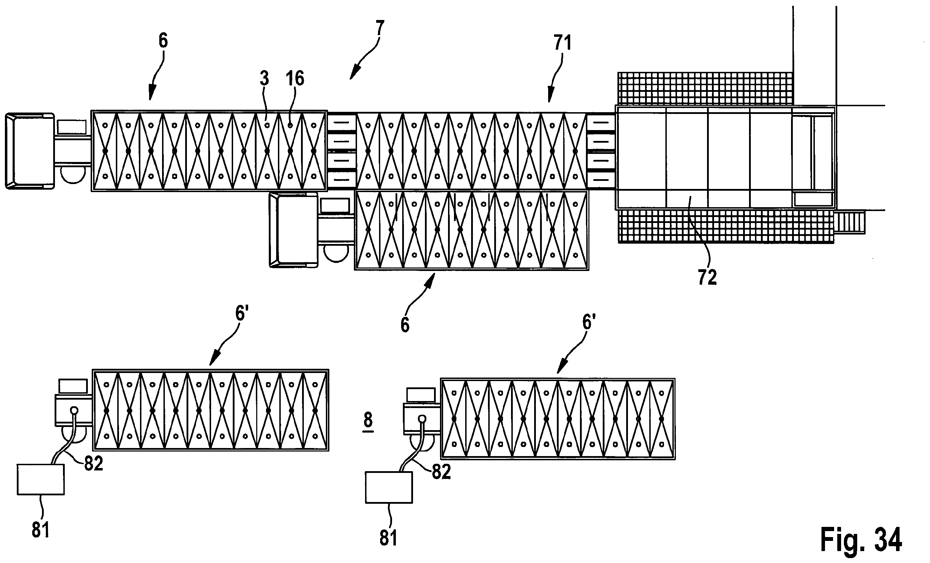

Bei der Ankunft an einem Schlachthaus müssen die Geflügeltransporteinheiten vom Anhänger abgeladen werden. Eine mögliche Art, dies zu tun, ist in Fig. 34 dargestellt, wo zwei Lkws mit Geflügeltransportanhängern 6 in einem Entladebereich neben einem Aufnahmesystem 7 geparkt sind.

Ein Anhänger 6 ist in direkter Fortsetzung eines Förderers 71 im Geflügelaufnahmesystem geparkt, so dass die Geflügeltransporteinheiten 3 auf dem Boden oder dem Anhänger direkt auf den Förderer übertragen werden können, indem sie in Längsrichtung des Anhängers geschoben oder gezogen werden. Dies kann mit halbautomatischen oder automatischen Aktuatoren erfolgen, die so ausgelegt sind, dass sie in Geflügeltransporteinheiten eingreifen, und die in den Anhänger oder in das Aufnahmesystem integriert sein können.

Der andere Anhänger 6 ist parallel zu dem Förderer geparkt, so dass die Transporteinheiten seitlich von dem Anhänger und auf den Förderer geschoben oder gezogen werden können. Dieses seitliche Entladen lässt ein schnelles Entladen des Systems zu, da an allen Geflügeltransporteinheiten gleichzeitig angegriffen werden kann und eine externe Einheit (nicht gezeigt) zum Schieben der Geflügeltransporteinheiten vom Anhänger an der Seite des Anhängers gegenüber dem Förderer angeordnet werden kann, aber es ist natürlich auch möglich, halbautomatische oder automatische Aktuatoren zu verwenden, die in den Anhänger oder in das Aufnahmesystem integriert sind.

Der Förderer 71 des Aufnahmesystems 7 dient hier auch als Zufuhrsystem für Geflügeltransporteinheiten zu einer CAS-Vorrichtung (Controlled Atmosphere Stunning = Betäubung in kontrollierter Atmosphäre) 72 durch Übertragen von den Anhängern empfangenen Geflügeltransporteinheiten direkt auf die CAS-Vorrichtung. Eine oder mehrere Geflügeltransporteinheiten können gleichzeitig in die CAS-Vorrichtung eintreten, und obwohl dies hier nicht gezeigt ist, ist es auch möglich, einen Entstapeler zum Unterteilen von aus Geflügeltransporteinheiten 1 aufgebauten Geflügeltransporteinheiten 3 in individuelle Geflügeltransporteinheiten 1 vor dem Eintritt in die CAS-Vorrichtung einzubeziehen.

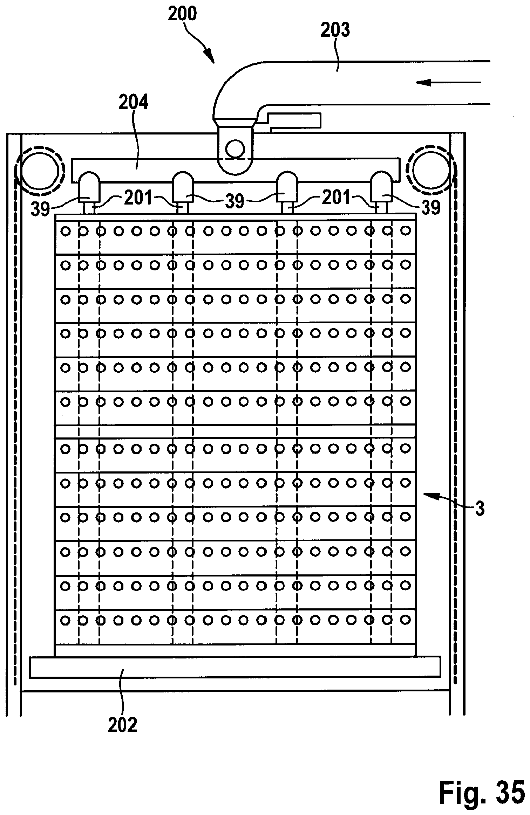

Fig. 35 illustriert eine Geflügeltransporteinheit 3, die sich in einer Kammer der CAS-Vorrichtung befindet. Die Vorrichtung weist eine Belüftungseinrichtung 200 mit einer Anordnung von vier Auslassöffnungen 201 auf, die so angeordnet sind, dass sie mit der Belüftungssäulenendöffnung 39 der Geflügeltransporteinheit verbunden werden, wenn eine bewegliche Auflage 202 in der Kammer die Geflügeltransporteinheit nach oben in eine Endposition bewegt hat. Gas mit kontrollierter Atmosphäre, wie Luft mit einem bestimmten Kohlendioxidgehalt, wird durch eine Zufuhrleitung 203 in einen Verteiler 204 geleitet, der das Gas mit kontrollierter Atmosphäre zu jeder Auslassöffnung 201 verteilt. Von der Auslassöffnung 201 wird das Gas in die Belüftungssäulen und hinaus über Belüftungsgasauslassöffnungen geleitet, die sich in den Innenvolumen der Geflügeltransporteinheit 3 befinden. Die Zahl der Auslassöffnungen 201 im Verteiler ist an die Zahl der Belüftungssäulenendöffnungen 39 in der Geflügeltransporteinheit angepasst, und falls die Belüftungssäulen horizontal sind, befindet sich der Verteiler an der Seite der Kammer, so dass er mit den Positionen von Belüftungssäulenendöffnungen 39 übereinstimmt.

In einer Ausführungsform (nicht gezeigt) weist die CAS-Vorrichtung eine Kammer auf, die zum Aufnehmen einer einzigen Geflügeltransporteinheit 1 mit einer einzigen Belüftungssäulenendöffnung bemessen ist, und in dieser Ausführungsform befindet sich die Zufuhrleitung ohne Verteiler in direkter Strömungsverbindung mit einer einzigen Auslassöffnung 201. Diese Ausführungsform ist sehr kompakt und ergibt ein effektives Betäuben. In einer anderen Ausführungsform weist die CAS-Vorrichtung eine Kammer auf, die zum Aufnehmen einer einzigen Geflügeltransporteinheit 1 mit zwei Belüftungssäulenendöffnungen bemessen ist, und in dieser Ausführungsform befindet sich die Zufuhrleitung in direkter Strömungsverbindung mit zwei Auslassöffnungen 201, indem eine einzige Abzweigungsleitung im Endbereich der Zufuhrleitung ohne eigentlichen Verteiler gebildet wird. In einer anderen Ausführungsform weist die CAS-Vorrichtung eine Kammer auf, die zum Aufnehmen einer einzigen Geflügeltransporteinheit 1 mit drei Belüftungssäulenendöffnungen bemessen ist, und in dieser Ausführungsform befindet sich die Zufuhrleitung in direkter Strömungsverbindung mit drei Auslassöffnungen 201, indem zwei Abzweigungsleitungen im Endbereich der Zufuhrleitung gebildet werden.

Zuweilen kommen Geflügeltransporte gleichzeitig am Schlachthaus an, wenn keine verfügbare Kapazität in der Betäubungsvorrichtung vorhanden ist, und die Anhänger werden dann in einem Geflügelstallungsbereich 8 geparkt, wie im unteren Teil von Fig. 34 gezeigt ist. Jeder Anhänger 6' wird über ein Kabel und/oder eine Leitungsverbindung 82 mit einer Versorgungseinheit 81 gekoppelt, wobei jede Versorgungseinheit eine oder mehrere Versorgungsbuchsen zum Betreiben des Belüftungssystems auf dem Anhänger aufweist, so dass die in die Innenvolumen der Geflügeltransporteinheiten verlaufenden Belüftungssäulen weiter wie oben beschrieben belüftet werden. Auf diese Weise können die Geflügeltransporteinheiten während der Stallung auf dem Anhänger gehalten werden.

Die Versorgungseinheiten versorgen typischerweise ein Bord-Belüftungssystem auf dem Anhänger mit Strom, sie können aber auch zusätzlich oder alternativ gekühlte oder entfeuchtete Luft oder andere Fluide zuführen. Vorzugsweise erfasst und dokumentiert das Bord-Aufzeichnungssystem, sofern vorhanden, weiterhin relevante Parameter während der Stallungsperiode, und die Zuführungseinheit kann auch Sensoren zum Erfassen solcher Parameter beinhalten und kann möglicherweise mit dem Bord-Aufzeichnungssystem in Kommunikation stehen.

Wenn die Betäubungs- und Schlachtabschnitte zum Aufnehmen der Geflügeltransporteinheiten bereit sind, wird die Verbindung 82 von den Versorgungsbuchsen der Versorgungseinheit abgetrennt, und der Anhänger wird in den Entladebereich 7 gebracht und wie oben beschrieben entladen. In dieser Ausführungsform sind nur zwei Versorgungseinheiten dargestellt, aber es können natürlich auch weitere vorgesehen werden. Ebenso wird bemerkt, dass der Wartestallbereich gewöhnlich ein Außenbereich ist, aber dass eine Abdeckung vorgesehen werden kann, um die Versorgungseinheiten vor der Witterung zu schützen.

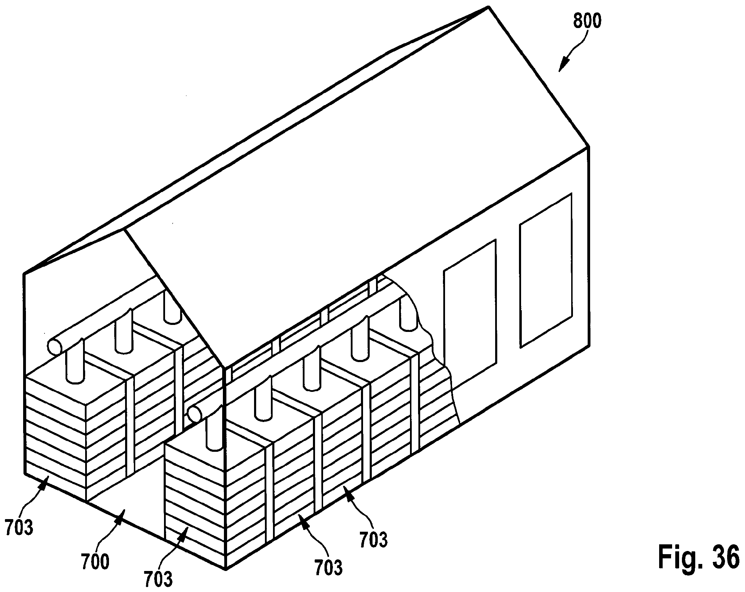

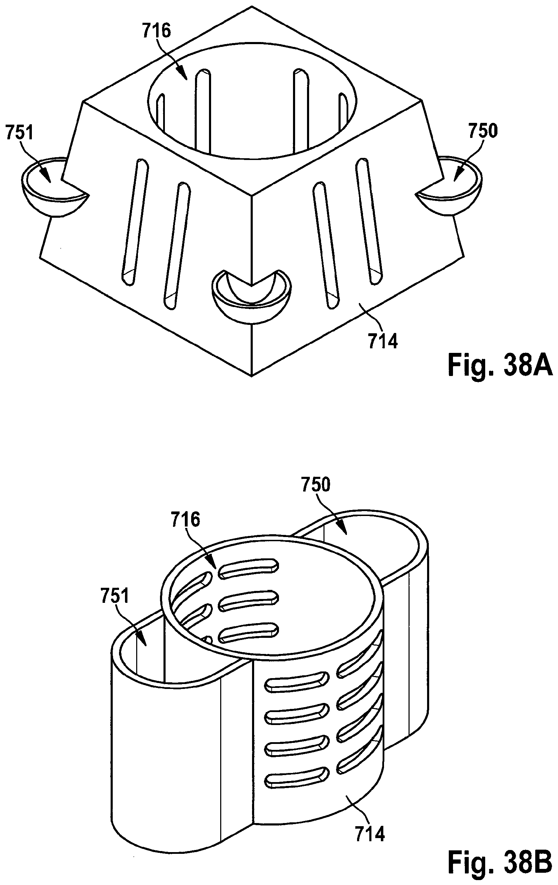

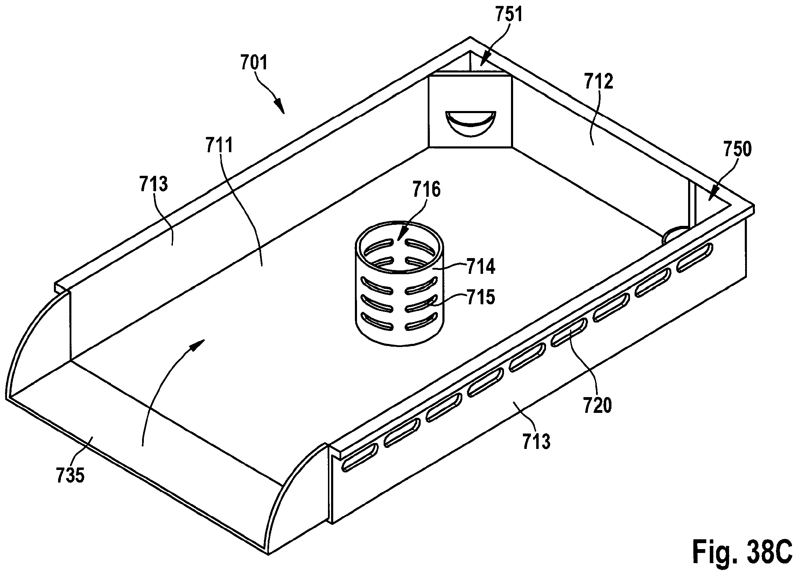

Wie ausführlich dargelegt, ist die Erfindung insbesondere auf den Transport der schlachtreifen Masthähnchen ausgerichtet. Anhand der Figuren 36 bis 39 wird aber ein weiteres bevorzugtes Einsatzgebiet der Erfindung beschrieben. Die weiter oben beschriebenen Container und Einheiten aus zwei oder mehr Container eignen sich insbesondere auch für die Aufzucht beginnend mit einen Tag alten Küken bis hin zu schlachtreifen Masthähnchen, die dann mit dem zuvor beschriebenen Transportanhänger zum Schlachthaus transportiert werden können.

Der Container 701 ist zur dauerhaften Haltung während der Aufzucht der Küken bis zum schlachtreifen Masthähnchen sowie zum Transport der Masthähnchen ausgebildet und eingerichtet. Der Container 701 umfasst einen Boden 711 und vier Seitenwände 712, 713. Mindestens eine der Seitenwände 735 ist als schwenkbare Klappe, Schwenktür, Schiebeelement oder dergleichen ausgebildet, um den Zugang zum Innenvolumen zu vereinfachen. Vorzugsweise mittig ist ein Säulenabschnitt 714 bzw. eine Säule 716 vorgesehen, die als Belüftungs- und Entlüftungssäule ausgebildet ist. Optional kann dieser Säulenabschnitt 714 bzw. die Säule 716 zusätzlich auch als Stützsäule ausgebildet sein, um die Stapelung mehrerer solcher Container 701 zu einer Einheit zu verbessern. Die Anzahl sowie die Position der Säulenabschnitte 714 bzw. Säulen 716 können variieren. In mindestens einer Seitenwand 713 sind Öffnungen 720 vorgesehen, um eine Belüftungszirkulation zu gewährleisten. Zusätzlich umfasst der Container 701 eine Zuführung zum Zuführen von Nahrungsmitteln. Im gezeigten Beispiel ist ein Behältnis 750 für Wasser und ein Behältnis 751 für Futter vorgesehen. Die Behältnisse 750, 751 sind vorzugsweise in Eckbereichen des Containers 701 angeordnet und von außen befüllbar. Die Behältnisse 750, 751 können auch als separate Komponenten oder und in Kombination mit dem Säulenabschnitt 714 bzw. der Säule 716 ausgebildet sein.

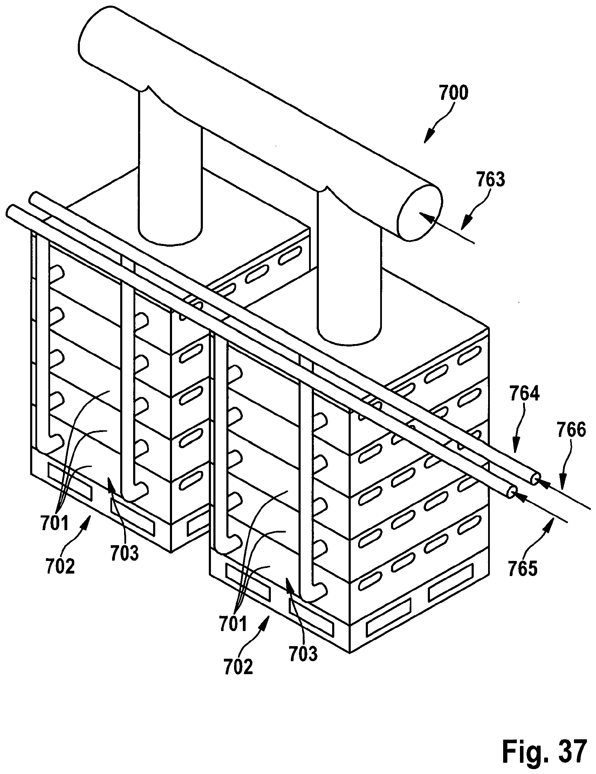

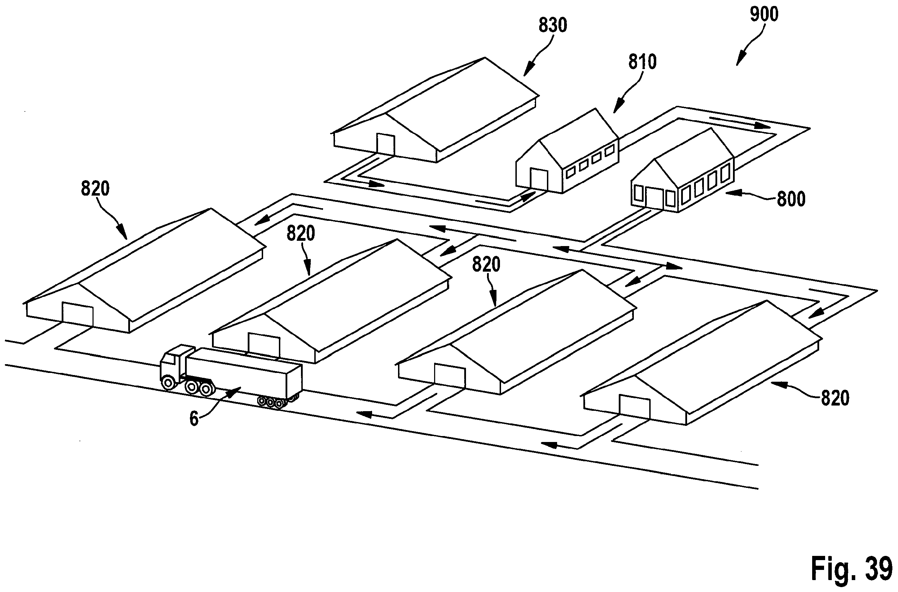

Mehrere solcher Container 701 können zu einer Einheit 703 gestapelt sein (siehe Figur 37). In dieser Darstellung sind zwei Einheiten 703 jeweils auf einer Palette 702 platziert und zum einen an ein zentrales Belüftungssystem 763 und zum anderen an eine zentrale Nahrungsmittelversorgung 764 angeschlossen und bilden die Anordnung 700, die beliebig platziert und beliebig erweiterbar ist. Bevorzugt ist eine separate Zuführung 765 für Wasser und eine separate Zuführung 766 für Futter vorgesehen. In der Figur 36 ist beispielhaft ein landwirtschaftlicher Betrieb 800 dargestellt. In einem geschützten Bereich, beispielsweise einer Scheune oder dergleichen, ist eine Anordnung 700 angeordnet. Mit Bezug zu der Figur 39 ist der landwirtschaftliche Betrieb 800 lediglich ein Bestandteil einer landwirtschaftlichen Anlage 900, die neben dem landwirtschaftlichen Betrieb 800 als Nisthaus vorgeordnet eine Brutstätte 810 und nachgeordnet ein Aufzuchthaus 820 umfasst. Optional kann auch ein Stall 830 für männliche und weibliche Zuchttiere zur Anlage 900 gehören. Ausgehend von der Brutstätte 810 können die einen Tag alten Küken durchgängig bis zum Abtransport und insbesondere auch während des Transports als schlachtreife Masthähnchen in ihren Containern 701 bleiben, da sie einerseits optimal belüftet und andererseits ausreichend mit Nahrungsmitteln versorgt sind. Insbesondere dienen die Container 701 allerdings zur Aufzucht der Masthähnchen für die ersten 20 Tage des Lebenszyklus eines Masthähnchens, bevor die Masthähnchen auf dem Boden des Stalls bis zur Schlachtreife ausgesetzt werden. Mit dem Container 701 als Basis und einer Anlage 900 ist eine besonders platzsparende und umweltverträgliche Haltung gewährleistet, einhergehend mit einer verbesserten Aufzuchtsituation für die einzelnen Masthähnchen. Durch das Halten der Masthähnchen zumindest während der ersten ca. 20 Tage wird auch ein schnelleres Wachstum der Masthähnchen erreicht.

Einzelheiten der verschiedenen Ausführungsformen können im Rahmen der Patentansprüche zu weiteren Ausführungsformen kombiniert werden.

## Patentansprüche

1. Einheit (3, 103, 403, 703), ausgebildet und eingerichtet zum Aufnehmen und Halten von lebenden Masthähnchen während der Aufzucht und/oder während des Transports der Masthähnchen zu einem Schlachthaus und/oder während des Wartens der lebenden Masthähnchen vor der Verarbeitung im Bereich des Schlachthauses, umfassend mindestens zwei Masthähnchencontainer (1, 101, 201, 301, 401, 401', 501, 601, 701), mit einem Boden (11, 111, 211, 311, 411, 511, 611, 711) und Seitenwänden (12, 13; 112, 113; 212, 213; 312, 313; 412, 413; 512, 513; 612, 613; 712, 713), die ein Innenvolumen definieren, der zum Aufnehmen und Halten von wenigstens fünf lebenden Masthähnchen ausgebildet und eingerichtet ist, wobei die Masthähnchencontainer (1, 101, 201, 301, 401, 401', 501, 601, 701) stapelfähig mit Masthähnchencontainern (1, 101, 201, 301, 401, 401', 501, 601, 701) gleicher Bauart ausgebildet und eingerichtet sind und wenigstens eine Belüftungsöffnung und wenigstens eine Entlüftungsöffnung aufweisen, **dadurch gekennzeichnet, dass** jeder Masthähnchencontainer (1, 101, 201, 301, 401, 401', 501, 601, 701) wenigstens ein Segment einer Belüftungs- oder Entlüftungssäule (14; 16; 114, 116; 214, 216; 314, 316; 414, 416; 514, 516; 614, 616; 714, 716) umfasst, das durch das Innenvolumen verläuft und wenigstens eine Belüftungs- oder Entlüftungsöffnung (15, 20; 115, 120; 215, 220; 315, 320; 415, 420; 515, 520; 615, 620, 715, 720) mit Abstand zu den Seitenwänden (12, 13; 112, 113; 212, 213; 312, 313; 412, 413; 512, 513; 612, 613; 712, 713) aufweist, wobei jedes Segment der Belüftungs- oder Entlüftungssäule (14; 16; 114, 116; 214, 216; 314, 316; 414, 416; 514, 516; 614, 616; 714, 716) zum Anschluss an korrespondierende Segmente von Masthähnchencontainern (1, 101, 201, 301, 401, 401', 501, 601, 701) gleicher Bauart sowie zum Anschluss an ein aktives Belüftungssystem ausgebildet und eingerichtet ist, wobei korrespondierende Segmente der Belüftungs- oder Entlüftungssäulen (14; 16; 114, 116; 214, 216; 314, 316; 414, 416; 514, 516; 614, 616; 714, 716) der die Einheit (3, 103, 403, 703) bildenden und aneinander und/oder übereinander liegenden Masthähnchencontainer (1, 101, 201, 301, 401, 401', 501, 601, 701) jeweils gemeinsame und durch alle Innenvolumina verlaufenden Belüftungs- oder Entlüftungssäulen (14; 16; 114, 116; 214, 216; 314, 316; 414, 416; 514, 516; 614, 616; 714, 716) bilden, und dass die Einheit weiterhin eine Palette (2, 102, 402, 702) zur Aufnahme des aus mindestens zwei Masthähnchencontainer (1, 101, 201, 301, 401, 401', 501, 601, 701) gebildeten Stapels sowie ein Abdeckelement zum Schließen des im Stapel am weitest oben befindlichen Innenvolumens umfasst, wobei die Palette (2, 102, 402, 702) Adapter in Form von Belüftungs- oder Entlüftungssäulenabschnitten umfasst, die zum Verbinden der Belüftungs- oder Entlüftungssäulen (14; 16; 114, 116; 214, 216; 314, 316; 414, 416; 514, 516; 614, 616; 714, 716) zweier übereinander angeordneter Einheiten (3, 103, 403, 703) ausgebildet und eingerichtet sind.

2. Einheit (3, 103, 403, 703) nach Anspruch 1, **dadurch gekennzeichnet, dass** mindestens zwei Masthähnchencontainer (1, 101, 201, 301, 401, 401', 501, 601, 701) übereinander gestapelt sind, wobei das oder jedes Segment einer Belüftungs- oder Entlüftungssäule (14; 16; 114, 116; 214, 216; 314, 316; 414, 416; 514, 516; 614, 616; 714, 716), das in dem individuellen Masthähnchencontainer (1, 101, 201, 301, 401, 401', 501, 601, 701) vom Boden (11, 111, 211, 311, 411, 511, 611, 711) nach oben verläuft, an wenigstens ein Segment einer Belüftungs- oder Entlüftungssäule (14; 16; 114, 116; 214, 216; 314, 316; 414, 416; 514, 516; 614, 616; 714, 716) in den anderen Masthähnchencontainern (1, 101, 201, 301, 401, 401', 501, 601, 701) des Stapels gefügt ist, so dass wenigstens eine gemeinsame Belüftungs- oder Entlüftungssäule (14; 16; 114, 116; 214, 216; 314, 316; 414, 416; 514, 516; 614, 616; 714, 716) in der Einheit (3, 103, 403, 703) gebildet ist.

3. Einheit (3, 103, 403, 703) nach Anspruch 1 oder 2, **dadurch gekennzeichnet, dass** sie wenigstens drei Böden (11, 111, 211, 311, 411, 511, 611, 711) aufweist, die die Innenvolumina definieren und in jedem Innenvolumen wenigstens eine Belüftungs- oder Entlüftungsöffnung der gemeinsamen Belüftungs- oder Entlüftungssäule (14; 16; 114, 116; 214, 216; 314, 316; 414, 416; 514, 516; 614, 616; 714, 716) vorgesehen ist.

4. Einheit (3, 103, 403, 703) nach einem oder mehreren der Ansprüche 1 bis 3, **dadurch gekennzeichnet, dass** sie zum Anschließen an ein zentrales System zur Versorgung der Masthähnchen mit Nahrung und/oder an ein zentrales System zur Zwangsbelüftung der Masthähnchen mit einem Gas ausgebildet und eingerichtet ist.

5. Einheit (3, 103, 403, 703) nach einem oder mehreren der Ansprüche 2 bis 4, **dadurch gekennzeichnet, dass** die wenigstens eine Belüftungs- oder Entlüftungssäule (14; 16; 114, 116; 214, 216; 314, 316; 414, 416; 514, 516; 614, 616; 714, 716) in Abschnitten gefertigt ist, und dass wenigstens einer der Böden (11, 111, 211, 311, 411, 511, 611, 711) beweglich ist und an einen Abschnitt der Belüftungs- oder Entlüftungssäule (14; 16; 114, 116; 214, 216; 314, 316; 414, 416; 514, 516; 614, 616; 714, 716) gefügt ist.

6. Einheit (3, 103, 403, 703) nach einem oder mehreren der Ansprüche 1 bis 5, **dadurch gekennzeichnet, dass** jeder Masthähnchencontainer zum Transport der Masthähnchen bemessen sowie ausgebildet und eingerichtet ist.

7. Einheit (3, 103, 403, 703) nach einem oder mehreren der Ansprüche 1 bis 6, **dadurch gekennzeichnet, dass** jeder Masthähnchencontainer (1, 101, 201, 301, 401, 401', 501, 601, 701) eine Tragfähigkeit von wenigstens 45 kg/m² hat und dass die wenigstens eine Belüftungs- oder Entlüftungsöffnung (15, 20; 115, 120; 215, 220; 315, 320; 415, 420; 515, 520; 615, 620; 715, 720) des Segments der Belüftungs- oder Entlüftungssäule (14; 16; 114, 116; 214, 216; 314, 316; 414, 416; 514, 516; 614, 616; 714, 716) sich in dem Innenvolumen in einem Abstand von wenigstens 0,17 m von den Seitenwänden (12, 13; 112, 113; 212, 213; 312, 313; 412, 413; 512, 513; 612, 613; 712, 713) befindet.

8. Einheit (3, 103, 403, 703) nach einem oder mehreren der Ansprüche 1 bis 7, **dadurch gekennzeichnet, dass** jeder Masthähnchencontainer vier Seitenwände (12, 13; 112, 113; 212, 213; 312, 313; 412, 413; 512, 513; 612, 613) aufweist, die zwei Paare von gegenüberliegenden Seitenwänden (12, 13; 112, 113; 212, 213; 312, 313; 412, 413; 512, 513; 612, 613, 712, 713) bilden, dass das wenigstens eine Segment zur Bildung wenigstens einer Belüftungs- oder Entlüftungssäule (14; 16; 114, 116; 214, 216; 314, 316; 414, 416; 514, 516; 614, 616; 714, 716) vom Boden (11, 111, 211, 311, 411, 511, 611, 711) nach oben durch das Innenvolumen verläuft, dass die wenigstens eine Belüftungs- oder Entlüftungssäule (14; 16; 114, 116; 214, 216; 314, 316; 414, 416; 514, 516; 614, 616; 714, 716) vorzugsweise einstückig mit dem Boden (11, 111, 211, 311, 411, 511, 611, 711) gebildet ist und dass sich die wenigstens eine Belüftungs- oder Entlüftungssäule (14; 16, 36; 114, 116, 136; 214, 216; 314, 316; 414, 416; 514, 516; 614, 616; 714, 716) optional in wenigstens einer Reihe zwischen einem Paar von gegenüberliegenden Seitenwänden (12, 13; 112, 113; 212, 213; 312, 313; 412, 413; 512, 513; 612, 613; 712, 713), mit einem Abstand von etwa D/(N+1) befindet, wobei D der Abstand zwischen dem einen Paar gegenüberliegender Seitenwänden (12, 13; 112, 113; 212, 213; 312, 313; 412, 413; 512, 513; 612, 613; 712, 713) ist, und N die Anzahl von Belüftungs- oder Entlüftungssäulen (14; 16; 114, 116; 214, 216; 314, 316; 414, 416; 514, 516; 614, 616; 714, 716) in der wenigstens einen Reihe ist.

9. Einheit (3, 103, 403, 703) nach einem oder mehreren der Ansprüche 1 bis 8, **dadurch gekennzeichnet, dass** die oder jede Belüftungs- oder Entlüftungssäule (14; 16; 114, 116; 214, 216; 314, 316; 414, 416; 514, 516; 614, 616; 714, 716) einen Außendurchmesser im Bereich von 7 cm bis 30 cm, wie z.B. im Bereich von 10 cm bis 24 cm, vorzugsweise im Bereich von 12 cm bis 21 cm hat.

10. Einheit (3, 103, 403, 703) nach einem oder mehreren der Ansprüche 1 bis 9, **dadurch gekennzeichnet, dass** die Öffnungsflächen in der oder jeder Belüftungs- oder Entlüftungssäule (14; 16; 114, 116; 214, 216; 314, 316; 414, 416; 514, 516; 614, 616; 714, 716) eine Gesamtfläche im Bereich von 0,5 % bis 10 % der Fläche des Bodens (11, 111, 211, 311, 411, 511, 611, 711) des Masthähnchencontainers (1, 101, 201, 301, 401, 401', 501, 601, 701), vorzugsweise im Bereich von 1,5 % bis 7 % der Fläche des Bodens (11, 111, 211, 311, 411, 511, 611, 711) und besonders bevorzugt im Bereich von 2 % bis 4 % der Fläche des Bodens (11, 111, 211, 311, 411, 511, 611, 711) hat.

11. Einheit (3, 103, 403, 703) nach einem oder mehreren der Ansprüche 1 bis 10, **dadurch gekennzeichnet, dass** zusätzlich zu der oder jeder Belüftungs- oder Entlüftungssäule (14; 16; 114, 116; 214, 216; 314, 316; 414, 416; 514, 516; 614, 616; 714, 716), die sich in einem Abstand von den Seitenwänden (12, 13; 112, 113; 212, 213; 312, 313; 412, 413; 512, 513; 612, 613, 712, 713) befindet, wenigstens eine Seitenwand mit wenigstens einer Belüftungssäulenteilwand mit Belüftungs- oder Entlüftungsöffnungen (15, 20; 115, 120; 215, 220; 315, 320; 415, 420; 515, 520; 615, 620) versehen ist.

12. Einheit (3, 103, 403, 703) nach einem oder mehreren der Ansprüche 1 bis 11, **dadurch gekennzeichnet, dass** zusätzlich zu dem oder jedem wenigstens eine Belüftungs- oder Entlüftungsöffnung aufweisenden Segment einer Belüftungs- oder Entlüftungssäule (14; 16; 114, 116; 214, 216; 314, 316; 414, 416; 514, 516; 614, 616; 714, 716), das zu allen Seitenwänden (12, 13; 112, 113; 212, 213; 312, 313; 412, 413; 512, 513; 612, 613, 712, 713) beabstandet ausgebildet ist, mindestens ein weiteres wenigstens eine Belüftungs- oder Entlüftungsöffnung (15, 20; 115, 120; 215, 220; 315, 320; 415, 420; 515, 520; 615, 620) aufweisendes Segment einer Belüftungs- oder Entlüftungssäule (36) vorgesehen ist, das in den Seitenwänden (12, 13; 112, 113; 212, 213; 312, 313; 412, 413; 512, 513; 612, 613, 712, 713) ausgebildet ist.

13. Einheit (3, 103, 403, 703) nach Anspruch 12, **dadurch gekennzeichnet, dass** das oder jedes Segment einer Belüftungs- oder Entlüftungssäule (14; 16; 114, 116; 214, 216; 314, 316; 414, 416; 514, 516; 614, 616; 714, 716), dessen Belüftungs- oder Entlüftungsöffnungen (15, 20; 115, 120; 215, 220; 315, 320; 415, 420; 515, 520; 615, 620) beabstandet zu den Seitenwänden (12, 13; 112, 113; 212, 213; 312, 313; 412, 413; 512, 513; 612, 613) ausgebildet sind, selbst beabstandet zu den Seitenwänden (12, 13; 112, 113; 212, 213; 312, 313; 412, 413; 512, 513; 612, 613, 712, 713) angeordnet ist und einen kreisförmigen Querschnitt aufweist, während das oder jedes Segment einer Belüftungs- oder Entlüftungssäule (14; 16; 114, 116; 214, 216; 314, 316; 414, 416; 514, 516; 614, 616; 714, 716), dessen Belüftungs- oder Entlüftungsöffnungen (15, 20; 115, 120; 215, 220; 315, 320; 415, 420; 515, 520; 615, 620) in den Seitenwänden ausgebildet sind, Teil einer Seitenwand (12, 13; 112, 113; 212, 213; 312, 313; 412, 413; 512, 513; 612, 613, 712, 713) ist und wahlweise einen halbkreisförmigen oder viertelkreisförmigen Querschnitt aufweist.

14. Einheit (3, 103, 403, 703) nach einem oder mehreren der Ansprüche 1 bis 13, **dadurch gekennzeichnet, dass** wenigstens eine Belüftungs- oder Entlüftungssäule (14; 16; 114, 116; 214, 216; 314, 316; 414, 416; 514, 516; 614, 616; 714, 716) von einer Seitenwand (12, 13; 112, 113; 212, 213; 312, 313; 412, 413; 512, 513; 612, 613, 712, 713) in das Innenvolumen in Richtung auf eine andere Seitenwand (12, 13; 112, 113; 212, 213; 312, 313; 412, 413; 512, 513; 612, 613, 712, 713) in dem Masthähnchencontainer (1, 101, 201, 301, 401, 401', 501, 601, 701) verläuft.

15. Einheit (3, 103, 403, 703) nach einem oder mehreren der Ansprüche 1 bis 14, **dadurch gekennzeichnet, dass** die oder jede Belüftungs- oder Entlüftungssäule (14; 16; 114, 116; 214, 216; 314, 316; 414, 416; 514, 516; 614, 616; 714, 716) einen im Wesentlichen hohlen Verteilungskanal, vorzugsweise ein hohles Zentrum aufweist, das über die Länge der Belüftungs- oder Entlüftungssäule (14; 16; 114, 116; 214, 216; 314, 316; 414, 416; 514, 516; 614, 616; 714, 716) verläuft.

16. Einheit (3, 103, 403, 703) nach einem oder mehreren der Ansprüche 1 bis 15, **dadurch gekennzeichnet, dass** die oder jede vom Boden (11, 111, 211, 311, 411, 511, 611, 711) nach oben durch das Innenvolumen verlaufende Belüftungs- oder Entlüftungssäule (14; 16; 114, 116; 214, 216; 314, 316; 414, 416; 514, 516; 614, 616; 714, 716) eine solche Höhe hat, dass sie an eine Belüftungs- oder Entlüftungssäule (14; 16; 114, 116; 214, 216; 314, 316; 414, 416; 514, 516; 614, 616; 714, 716) in einem weiteren Masthähnchencontainer (1, 101, 201, 301, 401, 401', 501, 601, 701) angefügt werden kann, der auf den Masthähnchencontainer (1, 101, 201, 301, 401, 401', 501, 601, 701) gestapelt wird.

17. Einheit (3, 103, 403, 703) nach einem oder mehreren der Ansprüche 1 bis 16, **dadurch gekennzeichnet, dass** jede Belüftungs- oder Entlüftungssäule (14; 16; 114, 116; 214, 216; 314, 316; 414, 416; 514, 516; 614, 616; 714, 716) an ihrem oberen Ende eine Masthähnchenbarriere umfasst, vorzugsweise eine Masthähnchenbarriere, die über die Endöffnung verläuft.

18. Einheit (3, 103, 403, 703) nach einem oder mehreren der Ansprüche 1 bis 17, **dadurch gekennzeichnet, dass** die Länge jedes Masthähnchencontainers (1, 101, 201, 301, 401, 401', 501, 601, 701) im Bereich von 0,50 m bis 1,30 m und vorzugsweise in einem der folgenden Bereiche liegt: a) 0,50 m bis 0,70 m, b) 0,70 m bis 0,90 m, und c) 1,10 m bis 1,30 m, vorzugsweise bei etwa 1,2 m, und dass die Breite jedes Masthähnchencontainers (1, 101, 201, 301, 401, 401', 501, 601, 701) im Bereich von 0,50 m bis 1,30 m und vorzugsweise in einem der folgenden Bereiche liegt: a) 0,50 m bis 0,70 m, b) 0,70 m bis 0,90 m, und c) 1,10 m bis 1,30 m, und besonders bevorzugt bei etwa 1,2 m.

19. Einheit (3, 103, 403, 703) nach einem oder mehreren der Ansprüche 1 bis 18, **dadurch gekennzeichnet, dass** wenigstens einige der Seitenwände (12, 13; 112, 113; 212, 213; 312, 313; 412, 413; 512, 513; 612, 613) plattenförmig sind und vorzugsweise alle Seitenwände und der Boden (11, 111, 211, 311, 411, 511, 611, 711) plattenförmig und geschlossen sind, abgesehen von Stellen für die Segmente der Belüftungs- oder Entlüftungssäulen (14; 16; 114, 116; 214, 216; 314, 316; 414, 416; 514, 516; 614, 616; 714, 716) und/oder Belüftungs- oder Entlüftungsöffnungen (15, 20; 115, 120; 215, 220; 315, 320; 415, 420; 515, 520; 615, 620).

20. Einheit (3, 103, 403, 703) nach einem oder mehreren der Ansprüche 1 bis 19, **dadurch gekennzeichnet, dass** jeder Masthähnchencontainer (1, 101, 201, 301, 401, 401', 501, 601, 701) aus einem Plastikmaterial besteht, vorzugsweise als spritzgegossenes integrales Teil.

21. Einheit (3, 103, 403, 703) nach einem oder mehreren der Ansprüche 1 bis 20, **dadurch gekennzeichnet, dass** mindestens zwei Belüftungs- oder Entlüftungssäulen (14; 16; 114, 116; 214, 216; 314, 316; 414, 416; 514, 516; 614, 616; 714, 716), die vom Boden (11, 111, 211, 311, 411, 511, 611, 711) nach oben durch das Innenvolumen verlaufen, vorgesehen sind.

22. Einheit (3, 103, 403, 703) nach einem oder mehreren der Ansprüche 1 bis 21, **dadurch gekennzeichnet, dass** die oder jede Belüftungs- oder Entlüftungssäule (14; 16; 114, 116; 214, 216; 314, 316; 414, 416; 514, 516; 614, 616; 714, 716) längliche Belüftungs- oder Entlüftungsöffnungen (15, 20; 115, 120; 215, 220; 315, 320; 415, 420; 515, 520; 615, 620) aufweist, jeweils mit einer Längsachse, die mit der Längsachse in Längsrichtung der Belüftungs- oder Entlüftungssäule (14; 16; 114, 116; 214, 216; 314, 316; 414, 416; 514, 516; 614, 616; 714, 716) orientiert ist.

23. Einheit (3, 103, 403, 703) nach einem oder mehreren der Ansprüche 1 bis 22, **dadurch gekennzeichnet, dass** die Länge jedes Masthähnchencontainers (1, 101, 201, 301, 401, 401', 501, 601, 701) im Bereich von 2,10 m bis 2,80 m, vorzugsweise bei etwa 2,4 m liegt, und dass die Breite jedes Masthähnchencontainers (1, 101, 201, 301, 401, 401', 501, 601, 701) im Bereich von 0,70 m bis 2,6 m, vorzugsweise im Bereich von 0,70 m bis 0,90 m und besonders bevorzugt bei etwa 0,80 m liegt.

24. Einheit (3, 103, 403, 703) nach einem oder mehreren der Ansprüche 1 bis 23, **dadurch gekennzeichnet, dass** jeder Masthähnchencontainer mindestens eine Zuführung (764) aufweist, die zum Zuführen von Nahrungsmitteln in das Innenvolumen ausgebildet und eingerichtet ist.

25. Einheit (3, 103, 403, 703) nach einem oder mehreren der Ansprüche 1 bis 24, **dadurch gekennzeichnet, dass** mindestens eine Seitenwand (12, 13; 112, 113; 212, 213; 312, 313; 412, 413; 512, 513; 612, 613) insbesondere als Inspektionsklappe (35, 735) bewegbar ausgebildet ist, derart, dass sie auf und zu klappbar ist.

26. Einheit (3, 103, 403, 703) nach einem oder mehreren der Ansprüche 1 bis 25, **dadurch gekennzeichnet, dass** jeweils eine Zuführung (765) für Wasser und eine Zuführung (766) für Futter im Bereich der Seitenwände (12, 13; 112, 113; 212, 213; 312, 313; 412, 413; 512, 513; 612, 613) vorgesehen ist.

27. Einheit (3, 103, 403, 703) nach einem oder mehreren der Ansprüche 1 bis 26, **dadurch gekennzeichnet, dass** mindestens eines der vom Boden (11, 111, 211, 311, 411, 511, 611, 711) nach oben durch das Innenvolumen verlaufende Segmente der beabstandet zu allen Seitenwänden (12, 13; 112, 113; 212, 213; 312, 313; 412, 413; 512, 513; 612, 613; 712, 713) angeordneten Belüftungs- oder Entlüftungssäulen (14; 16; 114, 116; 214, 216; 314, 316; 414, 416; 514, 516; 614, 616; 714, 716) als Stützelement ausgebildet ist, derart, dass das Stützelement die Höhe zum Abstützen des Bodens (11, 111, 211, 311, 411, 511, 611, 711) eines weiteren, gestapelten Masthähnchencontainers (1, 101, 201, 301, 401, 401', 501, 601, 701) aufweist.

28. Anordnung, umfassend mindestens eine Einheit (3, 103, 403, 703) nach einem der Ansprüche 1 bis 27 sowie mindestens ein Belüftungssystem, das zum aktiven Belüften der oder jeder Einheit (3, 103, 403, 703) ausgebildet und eingerichtet ist.

29. Anordnung nach Anspruch 28, **dadurch gekennzeichnet, dass** das Belüftungssystem zum Belüften der oder jeder Einheit (3, 103, 403, 703) mit einem Gas ausgebildet und eingerichtet ist.

30. Anordnung nach Anspruch 28 oder 29, **dadurch gekennzeichnet, dass** sie weiterhin mindestens ein System zur Versorgung der oder jeder Einheit mit Nahrungsmitteln umfasst.

31. Transportanhänger (6, 106), ausgebildet und eingerichtet zum Transportieren von Einheiten zum Aufnehmen und Halten von lebenden Masthähnchen zu einem Schlachthaus, **dadurch gekennzeichnet, dass** der Transportanhänger ein Belüftungssystem umfasst, das zum Belüften von Einheiten (3, 103, 403, 703), ausgebildet und eingerichtet zum Aufnehmen und Halten von lebenden Masthähnchen während der Aufzucht und/oder während des Transports der Masthähnchen zu einem Schlachthaus und/oder während des Wartens der lebenden Masthähnchen vor der Verarbeitung im Bereich des Schlachthauses, umfassend mindestens zwei Masthähnchencontainer (1, 101, 201, 301, 401, 401', 501, 601, 701), mit einem Boden (11, 111, 211, 311, 411, 511, 611, 711) und Seitenwänden (12, 13; 112, 113; 212, 213; 312, 313; 412, 413; 512, 513; 612, 613; 712, 713), die ein Innenvolumen definieren, der zum Aufnehmen und Halten von wenigstens fünf lebenden Masthähnchen ausgebildet und eingerichtet ist, wobei die Masthähnchencontainer (1, 101, 201, 301, 401, 401', 501, 601, 701) stapelfähig mit Masthähnchencontainern (1, 101, 201, 301, 401, 401', 501, 601, 701) gleicher Bauart ausgebildet und eingerichtet sind und wenigstens eine Belüftungsöffnung und wenigstens eine Entlüftungsöffnung aufweisen, wobei jeder Masthähnchencontainer (1, 101, 201, 301, 401, 401', 501, 601, 701) wenigstens ein Segment einer Belüftungs- oder Entlüftungssäule (14; 16; 114, 116; 214, 216; 314, 316; 414, 416; 514, 516; 614, 616; 714, 716) umfasst, das durch das Innenvolumen verläuft und wenigstens eine Belüftungs- oder Entlüftungsöffnung (15, 20; 115, 120; 215, 220; 315, 320; 415, 420; 515, 520; 615, 620, 715, 720) mit Abstand zu den Seitenwänden (12, 13; 112, 113; 212, 213; 312, 313; 412, 413; 512, 513; 612, 613; 712, 713) aufweist, wobei jedes Segment der Belüftungs- oder Entlüftungssäule (14; 16; 114, 116; 214, 216; 314, 316; 414, 416; 514, 516; 614, 616; 714, 716) zum Anschluss an korrespondierende Segmente von Masthähnchencontainern (1, 101, 201, 301, 401, 401', 501, 601, 701) gleicher Bauart sowie zum Anschluss an ein aktives Belüftungssystem ausgebildet und eingerichtet ist, wobei korrespondierende Segmente der Belüftungs- oder Entlüftungssäulen (14; 16; 114, 116; 214, 216; 314, 316; 414, 416; 514, 516; 614, 616; 714, 716) der die Einheit (3, 103, 403, 703) bildenden und aneinander und/oder übereinander liegenden Masthähnchencontainer (1, 101, 201, 301, 401, 401', 501, 601, 701) jeweils gemeinsame und durch alle Innenvolumina verlaufenden Belüftungs- oder Entlüftungssäulen (14; 16; 114, 116; 214, 216; 314, 316; 414, 416; 514, 516; 614, 616; 714, 716) bilden, und dass die Einheit weiterhin eine Palette (2, 102, 402, 702) zur Aufnahme des aus mindestens zwei Masthähnchencontainer (1, 101, 201, 301, 401, 401', 501, 601, 701) gebildeten Stapels sowie ein Abdeckelement zum Schließen des im Stapel am weitest oben befindlichen Innenvolumens umfasst, wobei die Palette (2, 102, 402, 702) Adapter in Form von Belüftungs- oder Entlüftungssäulenabschnitten umfasst, die zum Verbinden der Belüftungs- oder Entlüftungssäulen (14; 16; 114, 116; 214, 216; 314, 316; 414, 416; 514, 516; 614, 616; 714, 716) zweier übereinander angeordneter Einheiten (3, 103, 403, 703) ausgebildet und eingerichtet sind, angepasst ist.

32. Transportanhänger (6, 106) nach Anspruch 31, **dadurch gekennzeichnet, dass** das Belüftungssystem Belüftungseinrichtungen zum Belüften von lebenden Masthähnchen in den Einheiten (3, 103, 403, 703) aufweist, die in Reihen auf dem Anhänger (6, 106) angeordnet sind, wobei der Transportanhänger (6, 106) so ausgebildet ist, dass die Einheiten (3, 103, 403, 703) in einer Anordnung von einzelnen Belüftungs- oder Entlüftungssäulenabschnitten in den Einheiten (3, 103, 403, 703) von wenigstens einer Reihe geladen werden können, die gemeinsame Belüftungs- oder Entlüftungssäulen (14; 16; 114, 116; 214, 216; 314, 316; 414, 416; 514, 516; 614, 616; 714, 716) bilden, die innerhalb der Innenvolumina der Einheiten (3, 103, 403, 703) verlaufen, wobei die gemeinsamen Belüftungs- oder Entlüftungssäulen (14; 16; 114, 116; 214, 216; 314, 316; 414, 416; 514, 516; 614, 616; 714, 716) Endöffnungen aufweisen, und dass das Belüftungssystem so ausgelegt ist, dass mehrere Endöffnungen über Ventilationseinrichtungen auf dem Transportanhänger (6, 106) belüftet werden.

33. Transportanhänger (6, 106) nach Anspruch 32, wobei die Einheiten (3, 103, 403, 703) in wenigstens einer Reihe wenigstens eine gemeinsame Eingangsbelüftungssäule zum Führen von Belüftungsluft zu den Innenvolumina in den Einheiten (3, 103, 403, 703) und wenigstens eine gemeinsame Ausgangsbelüftungssäule zum Führen von Belüftungsluft aus den Innenvolumina in den Einheiten (3, 103, 403, 703) umfassen, und wobei das Belüftungssystem so ausgelegt ist, dass es wenigstens die Endöffnungen der gemeinsamen Eingangsbelüftungssäulen belüftet.

34. Transportanhänger (6, 106) nach Anspruch 32 oder 33, wobei das Belüftungssystem zum Belüften der Endöffnungen der gemeinsamen Eingangsbelüftungssäulen mit Belüftungsluft von den Belüftungseinrichtungen ausgelegt ist und wobei das Belüftungssystem steuerbare Klappen aufweist, die wenigstens an einem Ende, vorzugsweise einem unteren Ende, der gemeinsamen Ausgangsbelüftungssäulen angeordnet sind, um den Bereich der gemeinsamen Ausgangsbelüftungsöffnungen ganz oder teilweise zu öffnen oder zu schließen.

35. Transportanhänger (6, 106) nach einem oder mehreren der Ansprüche 32 bis 34, wobei Belüftungseinrichtungen unabhängig von der Fahrgeschwindigkeit des Transportanhängers (6, 106) individuell steuerbar sind, vorzugsweise zum Zuführen von wenigstens einer voreingestellten Belüftungsrate (m³ Luft pro Sekunde), vorzugsweise wenigstens 0,05 m³/s, z.B. wenigstens 0,12 m³/s, vorteilhafterweise wenigstens 0,18 m³/s, und wobei optional wenigstens eine Belüftungseinrichtung an der Endöffnung der von ihr belüfteten gemeinsamen Belüftungssäule montiert ist.

36. Transportanhänger (6, 106) nach einem oder mehreren der Ansprüche 32 bis 35, wobei das Belüftungssystem ein Aufzeichnungssystem und Sensoren zum Erkennen und Aufzeichnen von Parametern umfasst, die aus der Gruppe von a) Belüftungslufttemperatur, b) Belüftungsluftfeuchtigkeit, c) Umgebungslufttemperatur, d) Umgebungsluftfeuchtigkeit, e) Auslasslufttemperatur, f) Auslassluftfeuchtigkeit, g) CO₂-Gehalt in Auslassluft, h) Transportdauer, i) Stallungsdauer, j) Vibrationspegel, k) Geräuschpegel und I) Lichtintensität ausgewählt sind.

37. Transportanhänger (6, 106) nach einem oder mehreren der Ansprüche 31 bis 36, wobei der Transportanhänger (6, 106) ein Belüftungssystem mit Belüftungseinrichtungen und Belüftungsöffnungen mit Zwangsbelüftung, wie z.B. Gebläse und Kanäle mit Öffnungen, zum Belüften der Einheiten (3, 103, 403, 703) aufweist, wobei die Einheiten (3, 103, 403, 703) im beladenen Zustand auf dem Anhänger mehrere Bodenflächen umfassen, die in Stapeln auf dem Transportanhänger (6, 106) angeordnet sind, und wobei über der individuellen Bodenfläche ein Innenvolumen zum Aufnehmen von Masthähnchen vorhanden ist, wobei das das Belüftungssystem auf dem Transportanhänger (6, 106) zum Zuführen von wenigstens 20 separaten Belüftungssäulenendöffnungen mit mechanischer Belüftung angeordnet ist, wobei sich die individuelle Belüftungssäulenendöffnung an einer Seitenfläche einer Einheit am Ende einer Belüftungs- oder Entlüftungssäule (14; 16; 114, 116; 214, 216; 314, 316; 414, 416; 514, 516; 614, 616; 714, 716) befindet, die in das oder die Innenvolumina der Einheit verläuft, während die Einheit (3, 103, 403, 703) temporär auf den Transportanhänger (6, 106) geladen wird.

38. Transportanhänger (6, 106) nach einem oder mehreren der Ansprüche 31 bis 37, wobei das Belüftungssystem auf dem Transportanhänger (6, 106) für jeden Stapel wenigstens zwei Belüftungsöffnungen aufweist, die so angeordnet sind, dass sie sich neben wenigstens zwei Belüftungssäulenendöffnungen auf dem Stapel befinden, wenn der Stapel auf den Transportanhänger (6, 106) geladen wurde.

39. Transportanhänger (6, 106) nach einem oder mehreren der Ansprüche 31 bis 38, wobei das Belüftungssystem wenigstens zwanzig Belüftungsöffnungen und/oder Belüftungseinrichtungen aufweist, die auf dem Dach des Transportanhängers (6, 106) oder am Boden des Transportanhängers (6, 106) in Positionen angeordnet sind, die nach oben weisenden Belüftungssäulenendöffnungen an den Einheiten entsprechen, die temporär auf dem Transportanhänger (6, 106) platziert sind.

40. Transportanhänger (6, 106) nach einem oder mehreren der Ansprüche 31 bis 39, wobei der Transportanhänger (6, 106) mit einem CO₂-Versorgungssystem versehen ist, das die Belüftungsluft mit CO₂-Gehalt vorzugsweise im Bereich von 3 bis 22 Vol.-% bereitstellt, und das CO₂-Versorgungssystem vorzugsweise CO₂ aus Ausatemluft vom Geflügel und/oder von Abgasen von dem Transportantriebsfahrzeug erhält.

41. Verfahren zum Belüften lebender Masthähnchen während der Aufzucht und/oder während des Transports der Masthähnchen zum Schlachthaus und/oder während des Wartens der lebenden Masthähnchen vor der Bearbeitung im Bereich des Schlachthauses, unter Verwendung mindestens einer Einheit (3, 103, 403, 703) nach einem oder mehreren der Ansprüche 1 bis 27 und/oder einer Anordnung nach einem oder mehreren der Ansprüche 28 bis 30 und/oder einem Transportanhänger (6, 106) nach einem oder mehreren der Ansprüche 31 bis 40.

42. Verfahren nach Anspruch 41, **dadurch gekennzeichnet, dass** es zum Belüften von abladbaren Einheiten (3, 103, 403, 703) auf einem Transportanhänger (6, 106) dient, wobei die Einheiten (3, 103, 403, 703) auf dem Transportanhänger (6, 106) mehrere Bodenbereiche umfassen, die in Reihen auf dem Transportanhänger (6, 106) angeordnet sind, und wobei ein Innenvolumen zum Aufnehmen von Masthähnchen über dem einzelnen Bodenbereich vorhanden ist und wobei ein Belüftungssystem mit Belüftungseinrichtungen den Einheiten (3, 103, 403, 703) Zwangsbelüftungsluft zuführt, wobei das Belüftungssystem mehrere Belüftungs- oder Entlüftungssäulenabschnitte mit Zwangsbelüftung versorgt, dass der einzelne Belüftungs- oder Entlüftungssäulenabschnitt, der in das/die Innenvolumen der Einheit (3, 103, 403, 703) verlaufen, die Zwangsbelüftungsluft durch Belüftungs- oder Entlüftungsöffnungen leitet, die an dem Belüftungs- oder Entlüftungssäulenabschnitt im Innenvolumen der Einheit positioniert sind, und dass einzelne Belüftungs- oder Entlüftungssäulenabschnitte von Einheiten (3, 103, 403, 703) in einer Reihe gemeinsame Belüftungs- oder Entlüftungssäulen (14; 16; 114, 116; 214, 216; 314, 316; 414, 416; 514, 516; 614, 616; 714, 716) bilden, wobei diese gemeinsamen Belüftungs- oder Entlüftungssäulen (14; 16; 114, 116; 214, 216; 314, 316; 414, 416; 514, 516; 614, 616; 714, 716) die Zwangsbelüftungsluft zu in der Reihe befindlichen Belüftungs- oder Entlüftungssäulenabschnitten leiten.

43. Verfahren nach Anspruch 42, bei dem das Belüftungssystem des Transportanhängers (6, 106) Zwangsbelüftungsluft zu und/oder von Belüftungs- oder Entlüftungssäulenabschnitten in Einheiten (3, 103, 403, 703) leitet, die sich an einem Ende von Reihen befinden, vorzugsweise einem oberen Ende von nach unten verlaufenden Reihen oder einem vorderen Ende von zum hinteren Ende des Transportanhängers (6, 106) verlaufenden Reihen oder einem Seitenende von in der Breitenrichtung des Transportanhängers (6, 106) verlaufenden Reihen.

44. Verfahren nach Anspruch 43, wobei die Einheiten in einem vorbestimmten Muster auf den Transportanhänger (6, 106) geladen werden, in dem die Belüftungs- oder Entlüftungssäulenabschnitte zu gemeinsamen Belüftungs- oder Entlüftungssäulen (14; 16; 114, 116; 214, 216; 314, 316; 414, 416; 514, 516; 614, 616; 714, 716) aneinandergefügt werden.

45. Verfahren nach einem oder mehreren der Ansprüche 42 bis 44, wobei wenigstens ein Belüftungs- oder Entlüftungsabschnitt des Belüftungssystems aktiviert wird und mit der Belüftung von geladenen Einheiten (3, 103, 403, 703) beginnt, während weitere Einheiten (3, 103, 403, 703) auf den Transportanhänger (6, 106) geladen werden.

46. Verfahren nach einem oder mehreren der Ansprüche 42 bis 45, wobei Belüftungs- oder Entlüftungsrohrleitungsabschnitten in den Einheiten (3, 103, 403, 703) zugeführte Belüftungs- oder Entlüftungsluft von den Belüftungs- oder Entlüftungsöffnungen innerhalb der Einheiten (3, 103, 403, 703) und aus den Belüftungs- oder Entlüftungsöffnungen an Seitenwänden (12, 13; 112, 113; 212, 213; 312, 313; 412, 413; 512, 513; 612, 613; 712, 713) der Einheiten (3, 103, 403, 703) strömt.

47. Verfahren nach einem oder mehreren der Ansprüche 42 bis 46, wobei Belüftungs- oder Entlüftungsrohrleitungsabschnitten in den Einheiten (3, 103, 403, 703) zugeführte Belüftungs- oder Entlüftungsluft von Belüftungs- oder Entlüftungsöffnungen an Seitenwänden (12, 13; 112, 113; 212, 213; 312, 313; 412, 413; 512, 513; 612, 613; 712, 713) der Einheiten (3, 103, 403, 703) zu den Belüftungs- oder Entlüftungsöffnungen innerhalb der Einheiten (3, 103, 403, 703) strömt.

48. Verfahren nach einem oder mehreren der Ansprüche 42 bis 47, wobei das Belüftungssystem auf dem Transportanhänger (6, 106) Belüftungsluft von den Einheiten (3, 103, 403, 703) erhält und wenigstens einen Teil der erhaltenen Belüftungsluft wieder als Belüftungsluft zu den Einheiten (3, 103, 403, 703) zurückführt.

49. Verfahren nach einem oder mehreren der Ansprüche 42 bis 48, wobei einer oder mehrere der Parameter a) Lufttemperatur, b) Luftfeuchtigkeit und c) CO₂-Gehalt in Luft in von den Einheiten erhaltener Belüftungsluft gemessen wird/werden.

50. Verfahren nach Anspruch 48 oder 49, wobei die Menge an zurückgeführter Luft in Abhängigkeit von wenigstens einem der gemessenen Parameter vorzugsweise so geregelt wird, dass die Menge zunimmt, wenn die Lufttemperatur unter einem vorbestimmten Temperaturwert liegt, oder die Menge abnimmt, wenn die Luftfeuchtigkeit über einem Grenzwert liegt, oder die Menge abnimmt, wenn der CO₂-Gehalt über einem vorbestimmten Wert liegt.

51. Verfahren nach einem oder mehreren der Ansprüche 42 bis 50, wobei das Belüftungssystem allen Einheiten (3, 103, 403, 703) auf dem Transportanhänger (6, 106) Belüftungsluft in einer Menge im Bereich von 10.000 m³/h bis 100.000 m³/h, vorzugsweise im Bereich von 30.000 m³/h bis 80.000 m³/h zuführt.

52. Verfahren nach einem oder mehreren der Ansprüche 41 bis 51, das zum Transportieren von lebendem Geflügel zu einem Schlachthaus und zum Aufnehmen von lebendem Geflügel am Schlachthaus dient, wobei Geflügel während des Transports in Einheiten (3, 103, 403, 703) mit wenigstens zwei Böden (11,111,211,311,411,511,611,711) gehalten wird, wobei lebendes Geflügel in Einheiten (3, 103, 403, 703) auf einem Transportanhänger (6, 106) eines Fahrzeugs am Schlachthaus ankommen, wobei der Transportanhänger (6, 106) ein Belüftungssystem umfasst, das über Belüftungs- oder Entlüftungsöffnungen, die sich innerhalb der Innenvolumen über den Böden der das Geflügel tragenden Einheiten (3, 103, 403, 703) befinden, Belüftungsluft in die einzelne Geflügeltransporteinheit zuführt, wobei die Einheiten (3, 103, 403, 703) nach der Ankunft am Schlachthaus während der Stallung auf dem Transportanhänger (6, 106) verbleiben und das Belüftungssystem während der Stallung betrieben wird.

53. Verfahren nach Anspruch 52, wobei die Einheiten (3, 103, 403, 703) nach der Stallung vom Transportanhänger (6, 106) zu einer CAS-Vorrichtung (*Controlled Atmosphere Stunning* = Betäubung in kontrollierter Atmosphäre) übertragen werden und die kontrollierte Atmosphäre durch mechanische Belüftung direkt in Belüftungsleitungen erfolgt, die in das Innere der Einheit (3, 103, 403, 703) zu wenigstens einer Gasauslassöffnung in jedem Geflügel enthaltenden Innenvolumen in der Einheit verlaufen.

54. Verfahren nach Anspruch 52 oder 53, wobei ein Aufzeichnungssystem Parameter erfasst und aufzeichnet, die ausgewählt sind aus der Gruppe von a) Belüftungslufttemperatur, b) Belüftungsluftfeuchtigkeit, c) Auslasslufttemperatur, d) Auslassluftfeuchtigkeit, e) CO₂-Gehalt in Auslassluft, f) Umgebungstemperatur, g) Umgebungsfeuchtigkeit, h) Transportdauer, i) Stallungsdauer, j) Vibrationspegel, k) Geräuschpegel und l) Lichtintensität.

55. Verfahren nach Anspruch 54, wobei wenigstens die Parameter c) Auslasstemperatur und d) Auslassluftfeuchtigkeit erfasst und aufgezeichnet werden.

56. Verfahren nach Anspruch 54 oder 55, wobei der Transportanhänger (6, 106) mehrere Einheiten (3, 103, 403, 703) oder mehrere Stapel von Einheiten (3, 103, 403, 703) aufnimmt und wobei das Aufzeichnungssystem die gewählten Parameter für die individuelle Einheit (3, 103, 403, 703) oder den individuellen Stapel von Einheiten (3, 103, 403, 703) erfasst und aufzeichnet.

57. Geflügelschlachthaus mit einem Geflügelwartestallbereich für lebendes Geflügel unter Verwendung mindestens einer Einheit (3, 103, 403, 703) nach einem oder mehreren der Ansprüche 1 bis 27 und/oder einer Anordnung nach einem oder mehreren der Ansprüche 28 bis 30 und/oder einem Transportanhänger (6, 106) nach einem oder mehreren der Ansprüche 31 bis 40.

## Claims

1. Unit (3, 103, 403, 703), configured and adapted to receive and accommodate living broilers during rearing and/or during transport of the broilers to a slaughterhouse and/or while the living broilers are awaiting processing in the region of the slaughterhouse, comprising at least two broiler containers (1, 101, 201, 301, 401, 401', 501, 601, 701), having a floor (11, 111, 211, 311, 411, 511, 611, 711) and side walls (12, 13; 112, 113; 212, 213; 312, 313; 412, 413; 512, 513; 612, 613; 712, 713) defining an inner volume which is configured and adapted to receive and accommodate at least five living broilers, wherein the broiler containers (1, 101, 201, 301, 401, 401', 501, 601, 701) are configured and adapted to be stackable with broiler containers (1, 101, 201, 301, 401, 401', 501, 601, 701) of the same construction and have at least one ventilation opening and at least one air outflow opening, **characterised in that** each broiler container (1, 101, 201, 301, 401, 401', 501, 601, 701) comprises at least one segment of a ventilation or air outflow column (14; 16; 114, 116; 214, 216; 314, 316; 414, 416; 514, 516; 614, 616; 714, 716) which extends through the inner volume and has at least one ventilation or air outflow opening (15, 20; 115, 120; 215, 220; 315, 320; 415, 420; 515, 520; 615, 620, 715, 720) at a distance from the side walls (12, 13; 112, 113; 212, 213; 312, 313; 412, 413; 512, 513; 612, 613; 712, 713), wherein each segment of the ventilation or air outflow column (14; 16; 114, 116; 214, 216; 314, 316; 414, 416; 514, 516; 614, 616; 714, 716) is configured and adapted for connection to corresponding segments of broiler containers (1, 101, 201, 301, 401, 401', 501, 601, 701) of the same construction and also for connection to an active ventilation system, wherein corresponding segments of the ventilation or air outflow columns (14; 16; 114, 116; 214, 216; 314, 316; 414, 416; 514, 516; 614, 616; 714, 716) of the broiler containers (1, 101, 201, 301, 401, 401', 501, 601, 701) which form the unit (3, 103, 403, 703) and are located next to one another and/or above one another each form common ventilation or air outflow columns (14; 16; 114, 116; 214, 216; 314, 316; 414, 416; 514, 516; 614, 616; 714, 716) extending through all the inner volumes, and **in that** the unit further comprises a pallet (2, 102, 402, 702) for receiving the stack formed of at least two broiler containers (1, 101, 201, 301, 401, 401', 501, 601, 701), as well as a covering element for closing the uppermost inner volume in the stack, wherein the pallet (2, 102, 402, 702) comprises adapters in the form of ventilation or air outflow column sections which are configured and adapted for connecting the ventilation or air outflow columns (14; 16; 114, 116; 214, 216; 314, 316; 414, 416; 514, 516; 614, 616; 714, 716) of two units (3, 103, 403, 703) arranged one above the other.

2. Unit (3, 103, 403, 703) according to claim 1, **characterised in that** at least two broiler containers (1, 101, 201, 301, 401, 401', 501, 601, 701) are stacked one above another, wherein the or each segment of a ventilation or air outflow column (14; 16; 114, 116; 214, 216; 314, 316; 414, 416; 514, 516; 614, 616; 714, 716), which extends in the individual broiler container (1, 101, 201, 301, 401, 401', 501, 601, 701) from the floor (11, 111, 211, 311, 411, 511, 611, 711) upwards, is joined to at least one segment of a ventilation or air outflow column (14; 16; 114, 116; 214, 216; 314, 316; 414, 416; 514, 516; 614, 616; 714, 716) in the other broiler containers (1, 101, 201, 301, 401, 401', 501, 601, 701) of the stack, so that at least one common ventilation or air outflow column (14; 16; 114, 116; 214, 216; 314, 316; 414, 416; 514, 516; 614, 616; 714, 716) is formed in the unit (3, 103, 403, 703).

3. Unit (3, 103, 403, 703) according to claim 1 or 2, **characterised in that** it has at least three floors (11, 111, 211, 311, 411, 511, 611, 711) which define the inner volumes, and at least one ventilation or air outflow opening of the common ventilation or air outflow column (14; 16; 114, 116; 214, 216; 314, 316; 414, 416; 514, 516; 614, 616; 714, 716) is provided in each inner volume.

4. Unit (3, 103, 403, 703) according to one or more of claims 1 to 3, **characterised in that** it is configured and adapted for connection to a central system for supplying the broilers with feed and/or to a central system for forced ventilation of the broilers with a gas.

5. Unit (3, 103, 403, 703) according to one or more of claims 2 to 4, **characterised in that** the at least one ventilation or air outflow column (14; 16; 114, 116; 214, 216; 314, 316; 414, 416; 514, 516; 614, 616; 714, 716) is produced in sections, and **in that** at least one of the floors (11, 111, 211, 311, 411, 511, 611, 711) is movable and is joined to a section of the ventilation or air outflow column (14; 16; 114, 116; 214, 216; 314, 316; 414, 416; 514, 516; 614, 616; 714, 716).

6. Unit (3, 103, 403, 703) according to one or more of claims 1 to 5, **characterised in that** each broiler container is of a size and is also configured and adapted for transporting the broilers.

7. Unit (3, 103, 403, 703) according to one or more of claims 1 to 6, **characterised in that** each broiler container (1, 101, 201, 301, 401, 401', 501, 601, 701) has a carrying capacity of at least 45 kg/m², and **in that** the at least one ventilation or air outflow opening (15, 20; 115, 120; 215, 220; 315, 320; 415, 420; 515, 520; 615, 620; 715, 720) of the segment of the ventilation or air outflow column (14; 16; 114, 116; 214, 216; 314, 316; 414, 416; 514, 516; 614, 616; 714, 716) is situated in the inner volume at a distance of at least 0.17 m from the side walls (12, 13; 112, 113; 212, 213; 312, 313; 412, 413; 512, 513; 612, 613; 712, 713).

8. Unit (3, 103, 403, 703) according to one or more of claims 1 to 7, **characterised in that** each broiler container has four side walls (12, 13; 112, 113; 212, 213; 312, 313; 412, 413; 512, 513; 612, 613) which form two pairs of opposing side walls (12, 13; 112, 113; 212, 213; 312, 313; 412, 413; 512, 513; 612, 613, 712, 713), **in that** the at least one segment for forming at least one ventilation or air outflow column (14; 16; 114, 116; 214, 216; 314, 316; 414, 416; 514, 516; 614, 616; 714, 716) extends from the floor (11, 111, 211, 311, 411, 511, 611, 711) upwards through the inner volume, **in that** the at least one ventilation or air outflow column (14; 16; 114, 116; 214, 216; 314, 316; 414, 416; 514, 516; 614, 616; 714, 716) is preferably formed integrally with the floor (11, 111, 211, 311, 411, 511, 611, 711), and **in that** the at least one ventilation or air outflow column (14; 16, 36; 114, 116, 136; 214, 216; 314, 316; 414, 416; 514, 516; 614, 616; 714, 716) is optionally situated in at least one row between one pair of opposing side walls (12, 13; 112, 113; 212, 213; 312, 313; 412, 413; 512, 513; 612, 613; 712, 713) at a distance of approximately D/(N+1), where D is the distance between the one pair of opposing side walls (12, 13; 112, 113; 212, 213; 312, 313; 412, 413; 512, 513; 612, 613; 712, 713) and N is the number of ventilation or air outflow columns (14; 16; 114, 116; 214, 216; 314, 316; 414, 416; 514, 516; 614, 616; 714, 716) in the at least one row.

9. Unit (3, 103, 403, 703) according to one or more of claims 1 to 8, **characterised in that** the or each ventilation or air outflow column (14; 16; 114, 116; 214, 216; 314, 316; 414, 416; 514, 516; 614, 616; 714, 716) has an outside diameter in the range of from 7 cm to 30 cm, such as, for example, in the range of from 10 cm to 24 cm, preferably in the range of from 12 cm to 21 cm.

10. Unit (3, 103, 403, 703) according to one or more of claims 1 to 9, **characterised in that** the opening areas in the or each ventilation or air outflow column (14; 16; 114, 116; 214, 216; 314, 316; 414, 416; 514, 516; 614, 616; 714, 716) have a total area in the range of from 0.5% to 10% of the area of the floor (11, 111, 211, 311, 411, 511, 611, 711) of the broiler container (1, 101, 201, 301, 401, 401', 501, 601, 701), preferably in the range of from 1.5% to 7% of the area of the floor (11, 111, 211, 311, 411, 511,611,711) and particularly preferably in the range of from 2% to 4% of the area of the floor (11, 111, 211, 311, 411, 511, 611, 711).

11. Unit (3, 103, 403, 703) according to one or more of claims 1 to 10, **characterised in that**, in addition to the or each ventilation or air outflow column (14; 16; 114, 116; 214, 216; 314, 316; 414, 416; 514, 516; 614, 616; 714, 716) that is situated at a distance from the side walls (12, 13; 112, 113; 212, 213; 312, 313; 412, 413; 512, 513; 612, 613, 712, 713), at least one side wall is provided with at least one ventilation column part wall having ventilation or air outflow openings (15, 20; 115, 120; 215, 220; 315, 320; 415, 420; 515, 520; 615, 620).

12. Unit (3, 103, 403, 703) according to one or more of claims 1 to 11, **characterised in that**, in addition to the or each segment of a ventilation or air outflow column (14; 16; 114, 116; 214, 216; 314, 316; 414, 416; 514, 516; 614, 616; 714, 716) which has at least one ventilation or air outflow opening and is configured to be at a distance from all the side walls (12, 13; 112, 113; 212, 213; 312, 313; 412, 413; 512, 513; 612, 613, 712, 713), there is provided at least one further segment of a ventilation or air outflow column (36) which has at least one ventilation or air outflow opening (15, 20; 115, 120; 215, 220; 315, 320; 415, 420; 515, 520; 615, 620) and is formed in the side walls (12, 13; 112, 113; 212, 213; 312, 313; 412, 413; 512, 513; 612, 613, 712, 713).

13. Unit (3, 103, 403, 703) according to claim 12, **characterised in that** the or each segment of a ventilation or air outflow column (14; 16; 114, 116; 214, 216; 314, 316; 414, 416; 514, 516; 614, 616; 714, 716) whose ventilation or air outflow openings (15, 20; 115, 120; 215, 220; 315, 320; 415, 420; 515, 520; 615, 620) are formed at a distance from the side walls (12, 13; 112, 113; 212, 213; 312, 313; 412, 413; 512, 513; 612, 613) is itself arranged at a distance from the side walls (12, 13; 112, 113; 212, 213; 312, 313; 412, 413; 512, 513; 612, 613, 712, 713) and has a circular cross-section, while the or each segment of a ventilation or air outflow column (14; 16; 114, 116; 214, 216; 314, 316; 414, 416; 514, 516; 614, 616; 714, 716) whose ventilation or air outflow openings (15, 20; 115, 120; 215, 220; 315, 320; 415, 420; 515, 520; 615, 620) are formed in the side walls is part of a side wall (12, 13; 112, 113; 212, 213; 312, 313; 412, 413; 512, 513; 612, 613, 712, 713) and has either a semicircular or a quadrant-shaped cross-section.

14. Unit (3, 103, 403, 703) according to one or more of claims 1 to 13, **characterised in that** at least one ventilation or air outflow column (14; 16; 114, 116; 214, 216; 314, 316; 414, 416; 514, 516; 614, 616; 714, 716) extends in the broiler container (1, 101, 201, 301, 401, 401', 501, 601, 701) from one side wall (12, 13; 112, 113; 212, 213; 312, 313; 412, 413; 512, 513; 612, 613, 712, 713) into the inner volume towards another side wall (12, 13; 112, 113; 212, 213; 312, 313; 412, 413; 512, 513; 612, 613, 712, 713).

15. Unit (3, 103, 403, 703) according to one or more of claims 1 to 14, **characterised in that** the or each ventilation or air outflow column (14; 16; 114, 116; 214, 216; 314, 316; 414, 416; 514, 516; 614, 616; 714, 716) has a substantially hollow distribution channel, preferably a hollow centre, which extends over the length of the ventilation or air outflow column (14; 16; 114, 116; 214, 216; 314, 316; 414, 416; 514, 516; 614, 616; 714, 716).

16. Unit (3, 103, 403, 703) according to one or more of claims 1 to 15, **characterised in that** the or each ventilation or air outflow column (14; 16; 114, 116; 214, 216; 314, 316; 414, 416; 514, 516; 614, 616; 714, 716) extending from the floor (11, 111, 211, 311, 411, 511, 611, 711) upwards through the inner volume has a height such that it can be joined to a ventilation or air outflow column (14; 16; 114, 116; 214, 216; 314, 316; 414, 416; 514, 516; 614, 616; 714, 716) in a further broiler container (1, 101, 201, 301, 401, 401', 501, 601, 701) which is stacked on top of the broiler container (1, 101, 201, 301, 401, 401', 501, 601, 701).

17. Unit (3, 103, 403, 703) according to one or more of claims 1 to 16, **characterised in that** each ventilation or air outflow column (14; 16; 114, 116; 214, 216; 314, 316; 414, 416; 514, 516; 614, 616; 714, 716) comprises at its upper end a broiler barrier, preferably a broiler barrier that extends across the end opening.

18. Unit (3, 103, 403, 703) according to one or more of claims 1 to 17, **characterised in that** the length of each broiler container (1, 101, 201, 301, 401, 401', 501, 601, 701) is in the range of from 0.50 m to 1.30 m and preferably in one of the following ranges: a) from 0.50 m to 0.70 m, b) from 0.70 m to 0.90 m, and c) from 1.10 m to 1.30 m, preferably approximately 1.2 m, and **in that** the width of each broiler container (1, 101, 201, 301, 401, 401', 501, 601, 701) is in the range of from 0.50 m to 1.30 m and preferably in one of the following ranges: a) from 0.50 m to 0.70 m, b) from 0.70 m to 0.90 m, and c) from 1.10 m to 1.30 m, and particularly preferably approximately 1.2 m.

19. Unit (3, 103, 403, 703) according to one or more of claims 1 to 18, **characterised in that** at least some of the side walls (12, 13; 112, 113; 212, 213; 312, 313; 412, 413; 512, 513; 612, 613) are in sheet form and preferably all the side walls and the floor (11, 111, 211, 311, 411, 511, 611, 711) are in sheet form and closed, apart from locations for the segments of the ventilation or air outflow columns (14; 16; 114, 116; 214, 216; 314, 316; 414, 416; 514, 516; 614, 616; 714, 716) and/or ventilation or air outflow openings (15, 20; 115, 120; 215, 220; 315, 320; 415, 420; 515, 520; 615, 620).

20. Unit (3, 103, 403, 703) according to one or more of claims 1 to 19, **characterised in that** each broiler container (1, 101, 201, 301, 401, 401', 501, 601, 701) is made of a plastics material, preferably as an injection moulded integral part.

21. Unit (3, 103, 403, 703) according to one or more of claims 1 to 20, **characterised in that** there are provided at least two ventilation or air outflow columns (14; 16; 114, 116; 214, 216; 314, 316; 414, 416; 514, 516; 614, 616; 714, 716) which extend from the floor (11, 111, 211, 311, 411, 511, 611, 711) upwards through the inner volume.

22. Unit (3, 103, 403, 703) according to one or more of claims 1 to 21, **characterised in that** the or each ventilation or air outflow column (14; 16; 114, 116; 214, 216; 314, 316; 414, 416; 514, 516; 614, 616; 714, 716) has elongate ventilation or air outflow openings (15, 20; 115, 120; 215, 220; 315, 320; 415, 420; 515, 520; 615, 620), each having a longitudinal axis which is oriented with the longitudinal axis in the longitudinal direction of the ventilation or air outflow column (14; 16; 114, 116; 214, 216; 314, 316; 414, 416; 514, 516; 614, 616; 714, 716).

23. Unit (3, 103, 403, 703) according to one or more of claims 1 to 22, **characterised in that** the length of each broiler container (1, 101, 201, 301, 401, 401', 501, 601, 701) is in the range of from 2.10 m to 2.80 m, preferably approximately 2.4 m, and **in that** the width of each broiler container (1, 101, 201, 301, 401, 401', 501, 601, 701) is in the range of from 0.70 m to 2.6 m, preferably in the range of from 0.70 m to 0.90 m and particularly preferably approximately 0.80 m.

24. Unit (3, 103, 403, 703) according to one or more of claims 1 to 23, **characterised in that** each broiler container has at least one supply (764) which is configured and adapted for supplying feed into the inner volume.

25. Unit (3, 103, 403, 703) according to one or more of claims 1 to 24, **characterised in that** at least one side wall (12, 13; 112, 113; 212, 213; 312, 313; 412, 413; 512, 513; 612, 613) is configured to be movable in particular as an inspection flap (35, 735), in such a manner that it can be opened and shut.

26. Unit (3, 103, 403, 703) according to one or more of claims 1 to 25, **characterised in that** a supply (765) for water and a supply (766) for feed are each provided in the region of the side walls (12, 13; 112, 113; 212, 213; 312, 313; 412, 413; 512, 513; 612, 613).

27. Unit (3, 103, 403, 703) according to one or more of claims 1 to 26, **characterised in that** at least one of the segments, extending from the floor (11, 111, 211, 311, 411, 511, 611, 711) upwards through the inner volume, of the ventilation or air outflow columns (14; 16; 114, 116; 214, 216; 314, 316; 414, 416; 514, 516; 614, 616; 714, 716) arranged at a distance from all the side walls (12, 13; 112, 113; 212, 213; 312, 313; 412, 413; 512, 513; 612, 613; 712, 713) is in the form of a support element, in such a manner that the support element has the height to support the floor (11, 111, 211, 311, 411, 511, 611, 711) of a further, stacked broiler container (1, 101, 201, 301, 401, 401', 501, 601, 701).

28. Arrangement comprising at least one unit (3, 103, 403, 703) according to any one of claims 1 to 27 and at least one ventilation system which is configured and adapted to actively ventilate the or each unit (3, 103, 403, 703).

29. Arrangement according to claim 28, **characterised in that** the ventilation system is configured and adapted to ventilate the or each unit (3, 103, 403, 703) with a gas.

30. Arrangement according to claim 28 or 29, **characterised in that** it further comprises at least one system for supplying the or each unit with feed.

31. Transport trailer (6, 106) configured and adapted to transport units for receiving and accommodating living broilers to a slaughterhouse, **characterised in that** the transport trailer comprises a ventilation system which is adapted to ventilate units (3, 103, 403, 703), configured and adapted to receive and accommodate living broilers during rearing and/or during transport of the broilers to a slaughterhouse and/or while the living broilers are awaiting processing in the region of the slaughterhouse, comprising at least two broiler containers (1, 101, 201, 301, 401, 401', 501, 601, 701), having a floor (11, 111, 211, 311, 411, 511, 611, 711) and side walls (12, 13; 112, 113; 212, 213; 312, 313; 412, 413; 512, 513; 612, 613; 712, 713) defining an inner volume which is configured and adapted to receive and accommodate at least five living broilers, wherein the broiler containers (1, 101, 201, 301, 401, 401', 501, 601, 701) are configured and adapted to be stackable with broiler containers (1, 101, 201, 301, 401, 401', 501, 601, 701) of the same construction and have at least one ventilation opening and at least one air outflow opening, wherein each broiler container (1, 101, 201, 301, 401, 401', 501, 601, 701) comprises at least one segment of a ventilation or air outflow column (14; 16; 114, 116; 214, 216; 314, 316; 414, 416; 514, 516; 614, 616; 714, 716) which extends through the inner volume and has at least one ventilation or air outflow opening (15, 20; 115, 120; 215, 220; 315, 320; 415, 420; 515, 520; 615, 620, 715, 720) at a distance from the side walls (12, 13; 112, 113; 212, 213; 312, 313; 412, 413; 512, 513; 612, 613; 712, 713), wherein each segment of the ventilation or air outflow column (14; 16; 114, 116; 214, 216; 314, 316; 414, 416; 514, 516; 614, 616; 714, 716) is configured and adapted for connection to corresponding segments of broiler containers (1, 101, 201, 301, 401, 401', 501, 601, 701) of the same construction and also for connection to an active ventilation system, wherein corresponding segments of the ventilation or air outflow columns (14; 16; 114, 116; 214, 216; 314, 316; 414, 416; 514, 516; 614, 616; 714, 716) of the broiler containers (1, 101, 201, 301, 401, 401', 501, 601, 701) which form the unit (3, 103, 403, 703) and are located next to one another and/or above one another each form common ventilation or air outflow columns (14; 16; 114, 116; 214, 216; 314, 316; 414, 416; 514, 516; 614, 616; 714, 716) extending through all the inner volumes, and **in that** the unit further comprises a pallet (2, 102, 402, 702) for receiving the stack formed of at least two broiler containers (1, 101, 201, 301, 401, 401', 501, 601, 701), as well as a covering element for closing the uppermost inner volume in the stack, wherein the pallet (2, 102, 402, 702) comprises adapters in the form of ventilation or air outflow column sections which are configured and adapted for connecting the ventilation or air outflow columns (14; 16; 114, 116; 214, 216; 314, 316; 414, 416; 514, 516; 614, 616; 714, 716) of two units (3, 103, 403, 703) arranged one above the other.

32. Transport trailer (6, 106) according to claim 31, **characterised in that** the ventilation system has ventilation devices for ventilating living broilers in the units (3, 103, 403, 703), which are arranged in rows on the trailer (6, 106), wherein the transport trailer (6, 106) is so configured that the units (3, 103, 403, 703) can be loaded in an arrangement of individual ventilation or air outflow column sections in the units (3, 103, 403, 703) of at least one row, which form common ventilation or air outflow columns (14; 16; 114, 116; 214, 216; 314, 316; 414, 416; 514, 516; 614, 616; 714, 716) which extend within the inner volumes of the units (3, 103, 403, 703), wherein the common ventilation or air outflow columns (14; 16; 114, 116; 214, 216; 314, 316; 414, 416; 514, 516; 614, 616; 714, 716) have end openings, and **in that** the ventilation system is designed in such a way that a plurality of end openings are ventilated *via* ventilation devices on the transport trailer (6, 106).

33. Transport trailer (6, 106) according to claim 32, wherein the units (3, 103, 403, 703) in at least one row comprise at least one common inlet ventilation column for guiding ventilation air to the inner volumes in the units (3, 103, 403, 703) and at least one common outlet ventilation column for guiding ventilation air out of the inner volumes in the units (3, 103, 403, 703), and wherein the ventilation system is designed in such a way that it ventilates at least the end openings of the common inlet ventilation columns.

34. Transport trailer (6, 106) according to claim 32 or 33, wherein the ventilation system is designed to ventilate the end openings of the common inlet ventilation columns with ventilation air from the ventilation devices, and wherein the ventilation system has controllable flaps which are arranged at least at one end, preferably at a lower end, of the common outlet ventilation columns in order to open or close the region of the common outlet ventilation openings wholly or partially.

35. Transport trailer (6, 106) according to one or more of claims 32 to 34, wherein ventilation devices are individually controllable independently of the speed of travel of the transport trailer (6, 106), preferably for delivering at least a preset ventilation rate (m³ air per second), preferably at least 0.05 m³/s, for example at least 0.12 m³/s, advantageously at least 0.18 m³/s, and wherein optionally at least one ventilation device is mounted at the end opening of the common ventilation column ventilated thereby.

36. Transport trailer (6, 106) according to one or more of claims 32 to 35, wherein the ventilation system comprises a recording system and sensors for detecting and recording parameters selected from the group consisting of a) ventilation air temperature, b) ventilation air humidity, c) ambient air temperature, d) ambient air humidity, e) outlet air temperature, f) outlet air humidity, g) CO₂ content in outlet air, h) transport duration, i) lairage duration, j) vibration level, k) noise level and I) light intensity.

37. Transport trailer (6, 106) according to one or more of claims 31 to 36, wherein the transport trailer (6, 106) has a ventilation system having ventilation devices and ventilation openings with forced ventilation, such as, for example, fans and channels having openings, for ventilating the units (3, 103, 403, 703), wherein the units (3, 103, 403, 703) in the loaded state on the trailer comprise a plurality of floor surfaces which are arranged in stacks on the transport trailer (6, 106), and wherein an inner volume for receiving broilers is present above the individual floor surface, wherein the ventilation system on the transport trailer (6, 106) is arranged to supply at least 20 separate ventilation column end openings with mechanical ventilation, wherein the individual ventilation column end opening is situated on a side face of a unit at the end of a ventilation or air outflow column (14; 16; 114, 116; 214, 216; 314, 316; 414, 416; 514, 516; 614, 616; 714, 716) which extends into the inner volume or volumes of the unit while the unit (3, 103, 403, 703) is temporarily loaded onto the transport trailer (6, 106).

38. Transport trailer (6, 106) according to one or more of claims 31 to 37, wherein the ventilation system on the transport trailer (6, 106) has at least two ventilation openings for each stack, which ventilation openings are arranged in such a way that they are situated next to at least two ventilation column end openings on the stack when the stack has been loaded onto the transport trailer (6, 106).

39. Transport trailer (6, 106) according to one or more of claims 31 to 38, wherein the ventilation system has at least twenty ventilation openings and/or ventilation devices which are arranged on the roof of the transport trailer (6, 106) or on the floor of the transport trailer (6, 106) in positions which correspond to upwardly facing ventilation column end openings on the units which are temporarily placed on the transport trailer (6, 106).

40. Transport trailer (6, 106) according to one or more of claims 31 to 39, wherein the transport trailer (6, 106) is provided with a CO₂ supply system which provides the ventilation air with a CO₂ content preferably in the range of from 3 to 22 vol.%, and the CO₂ supply system preferably receives CO₂ from exhalation air of the poultry and/or from exhaust gases from the transport drive vehicle.

41. Method for ventilating living broilers during rearing and/or during transport of the broilers to the slaughterhouse and/or while the living broilers are awaiting processing in the region of the slaughterhouse, using at least one unit (3, 103, 403, 703) according to one or more of claims 1 to 27 and/or an arrangement according to one or more of claims 28 to 30 and/or a transport trailer (6, 106) according to one or more of claims 31 to 40.

42. Method according to claim 41, **characterised in that** it serves to ventilate offloadable units (3, 103, 403, 703) on a transport trailer (6, 106), wherein the units (3, 103, 403, 703) on the transport trailer (6, 106) comprise a plurality of floor regions which are arranged in rows on the transport trailer (6, 106), and wherein there is an inner volume above the individual floor region for receiving broilers, and wherein a ventilation system having ventilation devices supplies forced ventilation air to the units (3, 103, 403, 703), wherein the ventilation system supplies forced ventilation to a plurality of ventilation or air outflow column sections, **in that** the individual ventilation or air outflow column section extending into the inner volume(s) of the unit (3, 103, 403, 703) guides the forced ventilation air through ventilation or air outflow openings which are positioned on the ventilation or air outflow column section in the inner volume of the unit, and **in that** individual ventilation or air outflow column sections of units (3, 103, 403, 703) in a row form common ventilation or air outflow columns (14; 16; 114, 116; 214, 216; 314, 316; 414, 416; 514, 516; 614, 616; 714, 716), wherein these common ventilation or air outflow columns (14; 16; 114, 116; 214, 216; 314, 316; 414, 416; 514, 516; 614, 616; 714, 716) guide the forced ventilation air to ventilation or air outflow column sections situated in the row.

43. Method according to claim 42, wherein the ventilation system of the transport trailer (6, 106) guides forced ventilation air to and/or from ventilation or air outflow column sections in units (3, 103, 403, 703) which are situated at one end of rows, preferably at an upper end of rows extending downwards or at a front end of rows extending to the rear end of the transport trailer (6, 106) or at a side end of rows extending in the width direction of the transport trailer (6, 106).

44. Method according to claim 43, wherein the units are loaded onto the transport trailer (6, 106) in a predetermined pattern in which the ventilation or air outflow column sections are joined together to form common ventilation or air outflow columns (14; 16; 114, 116; 214, 216; 314, 316; 414, 416; 514, 516; 614, 616; 714, 716).

45. Method according to one or more of claims 42 to 44, wherein at least one ventilation or air outflow section of the ventilation system is activated and begins to ventilate loaded units (3, 103, 403, 703) while further units (3, 103, 403, 703) are being loaded onto the transport trailer (6, 106).

46. Method according to one or more of claims 42 to 45, wherein ventilation or air outflow air supplied to ventilation or air outflow pipe sections in the units (3, 103, 403, 703) flows from the ventilation or air outflow openings within the units (3, 103, 403, 703) and out of the ventilation or air outflow openings at side walls (12, 13; 112, 113; 212, 213; 312, 313; 412, 413; 512, 513; 612, 613; 712, 713) of the units (3, 103, 403, 703).

47. Method according to one or more of claims 42 to 46, wherein ventilation or air outflow air supplied to ventilation or air outflow pipe sections in the units (3, 103, 403, 703) flows from ventilation or air outflow openings at side walls (12, 13; 112, 113; 212, 213; 312, 313; 412, 413; 512, 513; 612, 613; 712, 713) of the units (3, 103, 403, 703) to the ventilation or air outflow openings within the units (3, 103, 403, 703).

48. Method according to one or more of claims 42 to 47, wherein the ventilation system on the transport trailer (6, 106) receives ventilation air from the units (3, 103, 403, 703) and recirculates at least a portion of the received ventilation air to the units (3, 103, 403, 703) as ventilation air.

49. Method according to one or more of claims 42 to 48, wherein one or more of the parameters a) air temperature, b) air humidity and c) CO₂ content in air is/are measured in ventilation air received from the units.

50. Method according to claim 48 or 49, wherein the amount of recirculated air, in dependence on at least one of the measured parameters, is preferably regulated in such a way that the amount increases if the air temperature is below a predetermined temperature value, or the amount decreases if the air humidity is above a threshold value, or the amount decreases if the CO₂ content is above a predetermined value.

51. Method according to one or more of claims 42 to 50, wherein the ventilation system supplies ventilation air to all the units (3, 103, 403, 703) on the transport trailer (6, 106) in an amount in the range of from 10,000 m³/h to 100,000 m³/h, preferably in the range of from 30,000 m³/h to 80,000 m³/h.

52. Method according to one or more of claims 41 to 51 which serves to transport living poultry to a slaughterhouse and to receive living poultry at the slaughterhouse, wherein poultry is accommodated during transport in units (3, 103, 403, 703) having at least two floors (11, 111, 211, 311, 411, 511, 611, 711), wherein living poultry arrives at the slaughterhouse in units (3, 103, 403, 703) on a transport trailer (6, 106) of a vehicle, wherein the transport trailer (6, 106) comprises a ventilation system which supplies ventilation air into the individual poultry transport unit *via* ventilation or air outflow openings situated within the inner volumes above the floors of the units (3, 103, 403, 703) carrying the poultry, wherein the units (3, 103, 403, 703), after arrival at the slaughterhouse, remain on the transport trailer (6, 106) during lairage and the ventilation system is operated during lairage.

53. Method according to claim 52, wherein the units (3, 103, 403, 703), after lairage, are transferred from the transport trailer (6, 106) to a CAS (controlled atmosphere stunning) apparatus, and the controlled atmosphere is effected by mechanical ventilation directly into ventilation lines extending into the interior of the unit (3, 103, 403, 703) to at least one gas outlet opening in each inner volume in the unit that contains poultry.

54. Method according to claim 52 or 53, wherein a recording system detects and records parameters selected from the group consisting of a) ventilation air temperature, b) ventilation air humidity, c) outlet air temperature, d) outlet air humidity, e) CO₂ content in outlet air, f) ambient temperature, g) ambient humidity, h) transport duration, i) lairage duration, j) vibration level, k) noise level and I) light intensity.

55. Method according to claim 54, wherein at least the parameters c) outlet air temperature and d) outlet air humidity are detected and recorded.

56. Method according to claim 54 or 55, wherein the transport trailer (6, 106) receives a plurality of units (3, 103, 403, 703) or a plurality of stacks of units (3, 103, 403, 703), and wherein the recording system detects and records the chosen parameters for the individual unit (3, 103, 403, 703) or the individual stack of units (3, 103, 403, 703).

57. Poultry slaughterhouse having a poultry lairage region for living poultry using at least one unit (3, 103, 403, 703) according to one or more of claims 1 to 27 and/or an arrangement according to one or more of claims 28 to 30 and/or a transport trailer (6, 106) according to one or more of claims 31 to 40.

## Revendications

1. Unité (3, 103, 403, 703), configurée et adaptée pour recevoir et maintenir des poulets de chair vivants pendant l'élevage et/ou pendant le transport des poulets de chair vers un abattoir et/ou pendant l'attente des poulets de chair vivants avant le traitement dans la zone de l'abattoir, comprenant au moins deux contenants pour poulets de chair (1, 101, 201, 301, 401, 401', 501, 601, 701), comprenant un fond (11, 111, 211, 311, 411, 511, 611, 711) et des parois latérales (12, 13 ; 112, 113 ; 212, 213 ; 312, 313 ; 412, 413 ; 512, 513 ; 612, 613 ; 712, 713), qui définissent un volume intérieur, qui est configuré et adapté pour recevoir et maintenir au moins cinq poulets de chair vivants, les contenants pour poulets de chair (1, 101, 201, 301, 401, 401', 501, 601, 701) étant configurés et adaptés de manière à pouvoir être empilés avec des contenants pour poulets de chair (1, 101, 201, 301, 401, 401', 501, 601, 701) de même type de construction et présentant au moins une ouverture de ventilation et au moins une ouverture d'aération, **caractérisée en ce que** chaque contenant pour poulets de chair (1, 101, 201, 301, 401, 401', 501, 601, 701) comprend au moins un segment d'une colonne de ventilation ou d'aération (14 ; 16 ; 114, 116 ; 214, 216 ; 314, 316 ; 414, 416 ; 514, 516 ; 614, 616 ; 714, 716), qui s'étend à travers le volume intérieur et présente au moins une ouverture de ventilation ou d'aération (15, 20 ; 115, 120 ; 215, 220 ; 315, 320 ; 415, 420 ; 515, 520 ; 615, 620, 715, 720) à distance des parois latérales (12, 13 ; 112, 113 ; 212, 213 ; 312, 313 ; 412, 413 ; 512, 513 ; 612, 613 ; 712, 713), chaque segment de la colonne de ventilation ou d'aération (14 ; 16 ; 114, 116 ; 214, 216 ; 314, 316 ; 414, 416 ; 514, 516 ; 614, 616 ; 714, 716) étant configuré et adapté pour le raccordement à des segments correspondants de contenants pour poulets de chair (1, 101, 201, 301, 401, 401', 501, 601, 701) de même type de construction ainsi que pour le raccordement à un système de ventilation actif, des segments correspondants des colonnes de ventilation ou d'aération (14 ; 16 ; 114, 116 ; 214, 216 ; 314, 316 ; 414, 416 ; 514, 516 ; 614, 616 ; 714, 716) des contenants pour poulets de chair (1, 101, 201, 301, 401, 401', 501, 601, 701) formant l'unité (3, 103, 403, 703) et situés les uns à côté des autres et/ou les uns au-dessus des autres formant respectivement des colonnes de ventilation ou d'aération (14 ; 16 ; 114, 116 ; 214, 216 ; 314, 316 ; 414, 416 ; 514, 516 ; 614, 616 ; 714, 716) communes et s'étendant à travers tous les volumes intérieurs, et **en ce que** l'unité comprend en outre une palette (2, 102, 402, 702) pour recevoir l'empilement formé d'au moins deux contenants pour poulets de chair (1, 101, 201, 301, 401, 401', 501, 601, 701) et un élément de recouvrement pour fermer le volume intérieur se trouvant le plus haut dans l'empilement, la palette (2, 102, 402, 702) comprenant des adaptateurs sous forme de sections de colonnes de ventilation ou d'aération qui sont configurées et adaptées pour relier les colonnes de ventilation ou d'aération (14 ; 16 ; 114, 116 ; 214, 216 ; 314, 316 ; 414, 416 ; 514, 516 ; 614, 616 ; 714, 716) de deux unités agencées l'une au-dessus de l'autre (3, 103, 403, 703).

2. Unité (3, 103, 403, 703) selon la revendication 1, **caractérisée en ce qu'**au moins deux contenants pour poulets de chair (1, 101, 201, 301, 401, 401', 501, 601, 701) sont empilés l'un au-dessus de l'autre, le ou chaque segment d'une colonne de ventilation ou d'aération (14 ; 16 ; 114, 116 ; 214, 216 ; 314, 316 ; 414, 416 ; 514, 516 ; 614, 616 ; 714, 716) qui s'étend vers le haut dans le contenant pour poulets de chair individuel (1, 101, 201, 301, 401, 401', 501, 601, 701) à partir du fond (11, 111, 211, 311, 411, 511, 611, 711) étant attaché à au moins un segment d'une colonne de ventilation ou d'aération (14 ; 16 ; 114, 116 ; 214, 216 ; 314, 316 ; 414, 416 ; 514, 516 ; 614, 616 ; 714, 716) dans les autres contenants pour poulets de chair (1, 101, 201, 301, 401, 401', 501, 601, 701) de l'empilement, de telle sorte qu'au moins une colonne de ventilation ou d'aération commune (14 ; 16 ; 114, 116 ; 214, 216 ; 314, 316 ; 414, 416 ; 514, 516 ; 614, 616 ; 714, 716) est formée dans l'unité (3, 103, 403, 703).

3. Unité (3, 103, 403, 703) selon la revendication 1 ou 2, **caractérisée en ce qu'**elle présente au moins trois fonds (11, 111, 211, 311, 411, 511, 611, 711), qui définissent les volumes intérieurs et, dans chaque volume intérieur, au moins une ouverture de ventilation ou d'aération de la colonne de ventilation ou d'aération commune (14 ; 16 ; 114, 116 ; 214, 216 ; 314, 316 ; 414, 416 ; 514, 516 ; 614, 616 ; 714, 716) est prévue.

4. Unité (3, 103, 403, 703) selon une ou plusieurs des revendications 1 à 3, **caractérisée en ce qu'**elle est configurée et adaptée pour être raccordée à un système central d'alimentation en nourriture des poulets de chair et/ou à un système central de ventilation forcée des poulets de chair avec un gaz.

5. Unité (3, 103, 403, 703) selon une ou plusieurs des revendications 2 à 4, **caractérisée en ce que** l'au moins une colonne de ventilation ou d'aération (14 ; 16 ; 114, 116 ; 214, 216 ; 314, 316 ; 414, 416 ; 514, 516 ; 614, 616 ; 714, 716) est fabriquée en sections, et **en ce qu'**au moins l'un des fonds (11, 111, 211, 311, 411, 511, 611, 711) est mobile et est attaché à une section de la colonne de ventilation ou d'aération (14 ; 16 ; 114, 116 ; 214, 216 ; 314, 316 ; 414, 416 ; 514, 516 ; 614, 616 ; 714, 716).

6. Unité (3, 103, 403, 703) selon une ou plusieurs des revendications 1 à 5, **caractérisée en ce que** chaque contenant pour poulets de chair est dimensionné, ainsi que configuré et adapté pour transporter les poulets de chair.

7. Unité (3, 103, 403, 703) selon une ou plusieurs des revendications 1 à 6, **caractérisée en ce que** chaque contenant pour poulets de chair (1, 101, 201, 301, 401, 401', 501, 601, 701) a une capacité de charge d'au moins 45 kg/m² et **en ce que** l'au moins une ouverture de ventilation ou d'aération (15, 20 ; 115, 120 ; 215, 220 ; 315, 320 ; 415, 420 ; 515, 520 ; 615, 620 ; 715, 720) du segment de la colonne de ventilation ou d'aération (14 ; 16 ; 114, 116 ; 214, 216 ; 314, 316 ; 414, 416 ; 514, 516 ; 614, 616 ; 714, 716) se trouve dans le volume intérieur à une distance d'au moins 0,17 m des parois latérales (12, 13 ; 112, 113 ; 212, 213 ; 312, 313 ; 412, 413 ; 512, 513 ; 612, 613 ; 712, 713).

8. Unité (3, 103, 403, 703) selon une ou plusieurs des revendications 1 à 7, **caractérisée en ce que** chaque contenant pour poulets de chair présente quatre parois latérales (12, 13 ; 112, 113 ; 212, 213 ; 312, 313 ; 412, 413 ; 512, 513 ; 612, 613) qui forment deux paires de parois latérales opposées (12, 13 ; 112, 113 ; 212, 213 ; 312, 313 ; 412, 413 ; 512, 513 ; 612, 613, 712, 713), **en ce que** l'au moins un segment pour former au moins une colonne de ventilation ou d'aération (14 ; 16 ; 114, 116 ; 214, 216 ; 314, 316 ; 414, 416 ; 514, 516 ; 614, 616 ; 714, 716) s'étend à partir du fond (11, 111, 211, 311, 411, 511, 611, 711) vers le haut à travers le volume intérieur, **en ce que** l'au moins une colonne de ventilation ou d'aération (14 ; 16 ; 114, 116 ; 214, 216 ; 314, 316 ; 414, 416 ; 514, 516 ; 614, 616 ; 714, 716) est de préférence formée d'une seule pièce avec le fond (11, 111, 211, 311, 411, 511, 611, 711) et **en ce que** l'au moins une colonne de ventilation ou d'aération (14 ; 16, 36 ; 114, 116, 136 ; 214, 216 ; 314, 316 ; 414, 416 ; 514, 516 ; 614, 616 ; 714, 716) se trouve éventuellement dans au moins une rangée entre une paire de parois latérales opposées (12, 13 ; 112, 113 ; 212, 213 ; 312, 313 ; 412, 413 ; 512, 513 ; 612, 613 ; 712, 713), avec une distance d'environ D/(N+1), où D est la distance entre la paire de parois latérales opposées (12, 13 ; 112, 113 ; 212, 213 ; 312, 313 ; 412, 413 ; 512, 513 ; 612, 613 ; 712, 713), et N est le nombre de colonnes de ventilation ou d'aération (14 ; 16 ; 114, 116 ; 214, 216 ; 314, 316 ; 414, 416 ; 514, 516 ; 614, 616 ; 714, 716) dans l'au moins une rangée.

9. Unité (3, 103, 403, 703) selon une ou plusieurs des revendications 1 à 8, **caractérisée en ce que** la ou chaque colonne de ventilation ou d'aération (14 ; 16 ; 114, 116 ; 214, 216 ; 314, 316 ; 414, 416 ; 514, 516 ; 614, 616 ; 714, 716) a un diamètre extérieur dans la plage allant de 7 cm à 30 cm, tel que p. ex. dans la plage allant de 10 cm à 24 cm, de préférence dans la plage allant de 12 cm à 21 cm.

10. Unité (3, 103, 403, 703) selon une ou plusieurs des revendications 1 à 9, **caractérisée en ce que** les surfaces d'ouverture dans la ou chaque colonne de ventilation ou d'aération (14 ; 16 ; 114, 116 ; 214, 216 ; 314, 316 ; 414, 416 ; 514, 516 ; 614, 616 ; 714, 716) ont une surface totale dans la plage allant de 0,5 % à 10 % de la surface du fond (11, 111, 211, 311, 411, 511, 611, 711) du contenant pour poulets de chair (1, 101, 201, 301, 401, 401', 501, 601, 701), de préférence dans la plage allant de 1,5 % à 7 % de la surface du fond (11, 111, 211, 311, 411, 511, 611, 711) et de manière particulièrement préférée dans la plage allant de 2 % à 4 % de la surface du fond (11, 111, 211, 311, 411, 511, 611, 711).

11. Unité (3, 103, 403, 703) selon une ou plusieurs des revendications 1 à 10, **caractérisée en ce qu'**en plus de la ou de chaque colonne de ventilation ou d'aération (14 ; 16 ; 114, 116 ; 214, 216 ; 314, 316 ; 414, 416 ; 514, 516 ; 614, 616 ; 714, 716) qui se trouve à une distance des parois latérales (12, 13 ; 112, 113 ; 212, 213 ; 312, 313 ; 412, 413 ; 512, 513 ; 612, 613, 712, 713), au moins une paroi latérale est pourvue d'au moins une paroi partielle de colonne de ventilation avec des ouvertures de ventilation ou d'aération (15, 20 ; 115, 120 ; 215, 220 ; 315, 320 ; 415, 420 ; 515, 520 ; 615, 620).

12. Unité (3, 103, 403, 703) selon une ou plusieurs des revendications 1 à 11, **caractérisée en ce qu'**en plus du ou de chaque segment d'une colonne de ventilation ou d'aération (14 ; 16 ; 114, 116 ; 214, 216 ; 314, 316 ; 414, 416 ; 514, 516 ; 614, 616 ; 714, 716) présentant au moins une ouverture de ventilation ou d'aération, qui est configuré à distance de toutes les parois latérales (12, 13 ; 112, 113 ; 212, 213 ; 312, 313 ; 412, 413 ; 512, 513 ; 612, 613, 712, 713), au moins un autre segment d'une colonne de ventilation ou d'aération (36) présentant au moins une ouverture de ventilation ou d'aération (15, 20 ; 115, 120 ; 215, 220 ; 315, 320 ; 415, 420 ; 515, 520 ; 615, 620) est prévu, qui est formé dans les parois latérales (12, 13 ; 112, 113 ; 212, 213 ; 312, 313 ; 412, 413 ; 512, 513 ; 612, 613, 712, 713).

13. Unité (3, 103, 403, 703) selon la revendication 12, **caractérisée en ce que** le ou chaque segment d'une colonne de ventilation ou d'aération (14 ; 16 ; 114, 116 ; 214, 216 ; 314, 316 ; 414, 416 ; 514, 516 ; 614, 616 ; 714, 716), dont les ouvertures de ventilation ou d'aération (15, 20 ; 115, 120 ; 215, 220 ; 315, 320 ; 415, 420 ; 515, 520 ; 615, 620) sont configurées à distance des parois latérales (12, 13 ; 112, 113 ; 212, 213 ; 312, 313 ; 412, 413 ; 512, 513 ; 612, 613), est lui-même agencé à distance des parois latérales (12, 13 ; 112, 113 ; 212, 213 ; 312, 313 ; 412, 413 ; 512, 513 ; 612, 613, 712, 713) et présente une section transversale en forme de cercle, tandis que le ou chaque segment d'une colonne de ventilation ou d'aération (14 ; 16 ; 114, 116 ; 214, 216 ; 314, 316 ; 414, 416 ; 514, 516 ; 614, 616 ; 714, 716), dont les ouvertures de ventilation ou d'aération (15, 20 ; 115, 120 ; 215, 220 ; 315, 320 ; 415, 420 ; 515, 520 ; 615, 620) sont configurées dans les parois latérales, fait partie d'une paroi latérale (12, 13 ; 112, 113 ; 212, 213 ; 312, 313 ; 412, 413 ; 512, 513 ; 612, 613, 712, 713) et présente au choix une section transversale en forme de demi-cercle ou en forme de quart de cercle.

14. Unité (3, 103, 403, 703) selon une ou plusieurs des revendications 1 à 13, **caractérisée en ce qu'**au moins une colonne de ventilation ou d'aération (14 ; 16 ; 114, 116 ; 214, 216 ; 314, 316 ; 414, 416 ; 514, 516 ; 614, 616 ; 714, 716) s'étend à partir d'une paroi latérale (12, 13 ; 112, 113 ; 212, 213 ; 312, 313 ; 412, 413 ; 512, 513 ; 612, 613, 712, 713) dans le volume intérieur en direction d'une autre paroi latérale (12, 13 ; 112, 113 ; 212, 213 ; 312, 313 ; 412, 413 ; 512, 513 ; 612, 613, 712, 713) dans le contenant pour poulets de chair (1, 101, 201, 301, 401, 401', 501, 601, 701).

15. Unité (3, 103, 403, 703) selon une ou plusieurs des revendications 1 à 14, **caractérisée en ce que** la ou chaque colonne de ventilation ou d'aération (14 ; 16 ; 114, 116 ; 214, 216 ; 314, 316 ; 414, 416 ; 514, 516 ; 614, 616 ; 714, 716) présente un canal de distribution essentiellement creux, de préférence un centre creux, qui s'étend sur la longueur de la colonne de ventilation ou d'aération (14 ; 16 ; 114, 116 ; 214, 216 ; 314, 316 ; 414, 416 ; 514, 516 ; 614, 616 ; 714, 716).

16. Unité (3, 103, 403, 703) selon une ou plusieurs des revendications 1 à 15, **caractérisée en ce que** la ou chaque colonne de ventilation ou d'aération (14 ; 16 ; 114, 116 ; 214, 216 ; 314, 316 ; 414, 416 ; 514, 516 ; 614, 616 ; 714, 716) s'étendant à partir du fond (11, 111, 211, 311, 411, 511, 611, 711) vers le haut à travers le volume intérieur a une hauteur telle qu'elle peut être jointe à une colonne de ventilation ou d'aération (14 ; 16 ; 114, 116 ; 214, 216 ; 314, 316 ; 414, 416 ; 514, 516 ; 614, 616 ; 714, 716) dans un autre contenant pour poulets de chair (1, 101, 201, 301, 401, 401', 501, 601, 701), qui est empilé sur le contenant pour poulets de chair (1, 101, 201, 301, 401, 401', 501, 601, 701).

17. Unité (3, 103, 403, 703) selon une ou plusieurs des revendications 1 à 16, **caractérisée en ce que** chaque colonne de ventilation ou d'aération (14 ; 16 ; 114, 116 ; 214, 216 ; 314, 316 ; 414, 416 ; 514, 516 ; 614, 616 ; 714, 716) comprend à son extrémité supérieure une barrière pour poulets de chair, de préférence une barrière pour poulets de chair qui s'étend au-dessus de l'ouverture d'extrémité.

18. Unité (3, 103, 403, 703) selon une ou plusieurs des revendications 1 à 17, **caractérisée en ce que** la longueur de chaque contenant pour poulets de chair (1, 101, 201, 301, 401, 401', 501, 601, 701) se situe dans la plage allant de 0,50 m à 1,30 m et de préférence dans l'une des plages suivantes : a) 0,50 m à 0,70 m, b) 0,70 m à 0,90 m, et c) 1,10 m à 1,30 m, de préférence à environ 1,2 m, et **en ce que** la largeur de chaque contenant pour poulets de chair (1, 101, 201, 301, 401, 401', 501, 601, 701) se situe dans la plage allant de 0,50 m à 1,30 m et de préférence dans l'une des plages suivantes : a) 0,50 m à 0,70 m, b) 0,70 m à 0,90 m, et c) 1,10 m à 1,30 m, et de préférence à environ 1,2 m.

19. Unité (3, 103, 403, 703) selon une ou plusieurs des revendications 1 à 18, **caractérisée en ce que** au moins certaines des parois latérales (12, 13 ; 112, 113 ; 212, 213 ; 312, 313 ; 412, 413 ; 512, 513 ; 612, 613) sont en forme de plaque et, de préférence, toutes les parois latérales et le fond (11, 111, 211, 311, 411, 511, 611, 711) sont en forme de plaque et fermés, à l'exception d'emplacements pour les segments des colonnes de ventilation ou d'aération (14 ; 16 ; 114, 116 ; 214, 216 ; 314, 316 ; 414, 416 ; 514, 516 ; 614, 616 ; 714, 716) et/ou d'ouvertures de ventilation ou d'aération (15, 20 ; 115, 120 ; 215, 220 ; 315, 320 ; 415, 420 ; 515, 520 ; 615, 620).

20. Unité (3, 103, 403, 703) selon une ou plusieurs des revendications 1 à 19, **caractérisée en ce que** chaque contenant pour poulets de chair (1, 101, 201, 301, 401, 401', 501, 601, 701) est constitué d'un matériau plastique, de préférence sous la forme d'une partie intégrale moulée par injection.

21. Unité (3, 103, 403, 703) selon une ou plusieurs des revendications 1 à 20, **caractérisée en ce qu'**au moins deux colonnes de ventilation ou d'aération (14 ; 16 ; 114, 116 ; 214, 216 ; 314, 316 ; 414, 416 ; 514, 516 ; 614, 616 ; 714, 716), qui s'étendent à partir du fond (11, 111, 211, 311, 411, 511, 611, 711) vers le haut à travers le volume intérieur, sont prévues.

22. Unité (3, 103, 403, 703) selon une ou plusieurs des revendications 1 à 21, **caractérisée en ce que** la ou chaque colonne de ventilation ou d'aération (14 ; 16 ; 114, 116 ; 214, 216 ; 314, 316 ; 414, 416 ; 514, 516 ; 614, 616 ; 714, 716) présente des ouvertures de ventilation ou d'aération allongées (15, 20 ; 115, 120 ; 215, 220 ; 315, 320 ; 415, 420 ; 515, 520 ; 615, 620), ayant chacune un axe longitudinal, qui est orienté avec l'axe longitudinal dans la direction longitudinale de la colonne de ventilation ou d'aération (14 ; 16 ; 114, 116 ; 214, 216 ; 314, 316 ; 414, 416 ; 514, 516 ; 614, 616 ; 714, 716).

23. Unité (3, 103, 403, 703) selon une ou plusieurs des revendications 1 à 22, **caractérisée en ce que** la longueur de chaque contenant pour poulets de chair (1, 101, 201, 301, 401, 401', 501, 601, 701) est se situe dans la plage allant de 2,10 m à 2,80 m, de préférence à environ 2,4 m, et **en ce que** la largeur de chaque contenant pour poulets de chair (1, 101, 201, 301, 401, 401', 501, 601, 701) se situe dans la plage allant de 0,70 m à 2,6 m, de préférence dans la plage allant de 0,70 m à 0,90 m et de manière particulièrement préférée à environ 0,80 m.

24. Unité (3, 103, 403, 703) selon une ou plusieurs des revendications 1 à 23, **caractérisée en ce que** chaque contenant pour poulets de chair présente au moins une amenée (764) qui est configurée et adaptée pour amener des aliments dans le volume intérieur.

25. Unité (3, 103, 403, 703) selon une ou plusieurs des revendications 1 à 24, **caractérisée en ce qu'**au moins une paroi latérale (12, 13 ; 112, 113 ; 212, 213 ; 312, 313 ; 412, 413 ; 512, 513 ; 612, 613) est configurée sous forme mobile, notamment sous forme de trappe d'inspection (35, 735), de telle sorte qu'elle peut être ouverte et fermée par rabattement.

26. Unité (3, 103, 403, 703) selon une ou plusieurs des revendications 1 à 25, **caractérisée en ce que** respectivement une amenée (765) pour l'eau et une amenée (766) pour le fourrage sont prévues dans la zone des parois latérales (12, 13 ; 112, 113 ; 212, 213 ; 312, 313 ; 412, 413 ; 512, 513 ; 612, 613).

27. Unité (3, 103, 403, 703) selon une ou plusieurs des revendications 1 à 26, **caractérisée en ce qu'**au moins l'un des segments s'étendant vers le haut depuis le fond (11, 111, 211, 311, 411, 511, 611, 711) à travers le volume intérieur des colonnes de ventilation ou d'aération (14 ; 16 ; 114, 116 ; 214, 216 ; 314, 316 ; 414, 416 ; 514, 516 ; 614, 616 ; 714, 716) agencées à distance de toutes les parois latérales (12, 13 ; 112, 113 ; 212, 213 ; 312, 313 ; 412, 413 ; 512, 513 ; 612, 613 ; 712, 713) est configuré en tant qu'élément de support, de telle sorte que l'élément de support présente la hauteur pour supporter le fond (11, 111, 211, 311, 411, 511, 611, 711) d'un autre contenant pour poulets de chair empilé (1, 101, 201, 301, 401, 401', 501, 601, 701).

28. Agencement, comprenant au moins une unité (3, 103, 403, 703) selon l'une quelconque des revendications 1 à 27 ainsi qu'au moins un système de ventilation, qui est configuré et adapté pour ventiler activement la ou chaque unité (3, 103, 403, 703).

29. Agencement selon la revendication 28, **caractérisé en ce que** le système de ventilation est configuré et adapté pour ventiler la ou chaque unité (3, 103, 403, 703) avec un gaz.

30. Agencement selon la revendication 28 ou 29, **caractérisé en ce qu'**il comprend en outre au moins un système pour alimenter en aliments la ou chaque unité.

31. Remorque de transport (6, 106) configurée et adaptée pour transporter des unités de réception et de maintien de poulets de chair vivants vers un abattoir, **caractérisée en ce que** la remorque de transport comprend un système de ventilation qui est ajusté pour ventiler les unités (3, 103, 403, 703), configurées et adaptées pour recevoir et maintenir des poulets de chair vivants pendant l'élevage et/ou pendant le transport des poulets de chair vers un abattoir et/ou pendant l'attente des poulets de chair vivants avant le traitement dans la zone de l'abattoir, comprenant au moins deux contenants pour poulets de chair (1, 101, 201, 301, 401, 401', 501, 601, 701), comprenant un fond (11, 111, 211, 311, 411, 511, 611, 711) et des parois latérales (12, 13 ; 112, 113 ; 212, 213 ; 312, 313 ; 412, 413 ; 512, 513 ; 612, 613 ; 712, 713), qui définissent un volume intérieur qui est configuré et adapté pour recevoir et maintenir au moins cinq poulets de chair vivants, les contenants pour poulets de chair (1, 101, 201, 301, 401, 401', 501, 601, 701) étant configurés et adaptés pour pouvoir être empilés avec des contenants pour poulets de chair (1, 101, 201, 301, 401, 401', 501, 601, 701) de même type de construction et présentant au moins une ouverture de ventilation et au moins une ouverture d'aération, chaque contenant pour poulets de chair (1, 101, 201, 301, 401, 401', 501, 601, 701) comprenant au moins un segment d'une colonne de ventilation ou d'aération (14 ; 16 ; 114, 116 ; 214, 216 ; 314, 316 ; 414, 416 ; 514, 516 ; 614, 616 ; 714, 716) qui s'étend à travers le volume intérieur et présente au moins une ouverture de ventilation ou d'aération (15, 20 ; 115, 120 ; 215, 220 ; 315, 320 ; 415, 420 ; 515, 520 ; 615, 620, 715, 720) à distance des parois latérales (12, 13 ; 112, 113 ; 212, 213 ; 312, 313 ; 412, 413 ; 512, 513 ; 612, 613 ; 712, 713), chaque segment de la colonne de ventilation ou d'aération (14 ; 16 ; 114, 116 ; 214, 216 ; 314, 316 ; 414, 416 ; 514, 516 ; 614, 616 ; 714, 716) étant configuré et adapté pour le raccordement à des segments correspondants de contenants pour poulets de chair (1, 101, 201, 301, 401, 401', 501, 601, 701) de même type de construction ainsi que pour le raccordement à un système de ventilation actif, des segments correspondants des colonnes de ventilation ou d'aération (14 ; 16 ; 114, 116 ; 214, 216 ; 314, 316 ; 414, 416 ; 514, 516 ; 614, 616 ; 714, 716) des contenants pour poulets de chair (1, 101, 201, 301, 401, 401', 501, 601, 701) formant l'unité (3, 103, 403, 703) et situés les uns à côté des autres et/ou les uns au-dessus des autres formant respectivement des colonnes de ventilation ou d'aération (14 ; 16 ; 114, 116 ; 214, 216 ; 314,316; 414, 416 ; 514, 516 ; 614, 616 ; 714, 716) communes et s'étendant à travers tous les volumes intérieurs, et **en ce que** l'unité comprend en outre une palette (2, 102, 402, 702) pour recevoir l'empilement formé d'au moins deux contenants pour poulets de chair (1, 101, 201, 301, 401, 401', 501, 601, 701) et un élément de recouvrement pour fermer le volume intérieur se trouvant le plus haut dans l'empilement, la palette (2, 102, 402, 702) comprenant des adaptateurs sous forme de sections de colonnes de ventilation ou d'aération qui sont configurées et adaptées pour relier les colonnes de ventilation ou d'aération (14 ; 16 ; 114, 116 ; 214, 216 ; 314, 316 ; 414, 416 ; 514, 516 ; 614, 616 ; 714, 716) de deux unités agencées l'une au-dessus de l'autre (3, 103, 403, 703).

32. Remorque de transport (6, 106) selon la revendication 31, **caractérisée en ce que** le système de ventilation présente des appareils de ventilation pour ventiler des poulets de chair vivants dans les unités (3, 103, 403, 703) qui sont agencées en rangées sur la remorque (6, 106), la remorque de transport (6, 106) étant configurée de telle sorte que les unités (3, 103, 403, 703) peuvent être chargées dans un agencement de sections de colonnes de ventilation ou d'aération individuelles dans les unités (3, 103, 403, 703) d'au moins une rangée qui forment des colonnes de ventilation ou d'aération communes (14 ; 16 ; 114, 116 ; 214, 216 ; 314, 316 ; 414, 416 ; 514, 516 ; 614, 616 ; 714, 716) qui s'étendent à l'intérieur des volumes intérieurs des unités (3, 103, 403, 703), les colonnes de ventilation ou d'aération communes (14 ; 16 ; 114, 116 ; 214, 216 ; 314, 316 ; 414, 416 ; 514, 516 ; 614, 616 ; 714, 716) présentant des ouvertures d'extrémité, et **en ce que** le système de ventilation est conçu de telle sorte que plusieurs ouvertures d'extrémité sont ventilées par des appareils de ventilation sur la remorque de transport (6, 106).

33. Remorque de transport (6, 106) selon la revendication 32, dans laquelle les unités (3, 103, 403, 703) dans au moins une rangée comprennent au moins une colonne de ventilation d'entrée commune pour diriger l'air de ventilation vers les volumes intérieurs dans les unités (3, 103, 403, 703) et au moins une colonne de ventilation de sortie commune pour diriger l'air de ventilation hors des volumes intérieurs dans les unités (3, 103, 403, 703), et dans laquelle le système de ventilation est conçu de telle sorte qu'il ventile au moins les ouvertures d'extrémité des colonnes de ventilation d'entrée communes.

34. Remorque de transport (6, 106) selon la revendication 32 ou 33, dans laquelle le système de ventilation est conçu pour ventiler les ouvertures d'extrémité des colonnes de ventilation d'entrée commune avec de l'air de ventilation provenant des appareils de ventilation, et dans laquelle le système de ventilation présente des volets commandables qui sont agencés au moins à une extrémité, de préférence une extrémité inférieure, des colonnes de ventilation de sortie communes, pour ouvrir ou fermer totalement ou partiellement la zone des ouvertures de ventilation de sortie communes.

35. Remorque de transport (6, 106) selon une ou plusieurs des revendications 32 à 34, dans laquelle des appareils de ventilation peuvent être commandés individuellement indépendamment de la vitesse de déplacement de la remorque de transport (6, 106), de préférence pour amener au moins un débit de ventilation préréglé (m³ d'air par seconde), de préférence au moins 0,05 m³/s, p. ex. au moins 0,12 m³/s, avantageusement au moins 0,18 m³/s, et dans laquelle, en option, au moins un appareil de ventilation est monté sur l'ouverture d'extrémité de la colonne de ventilation commune qu'il ventile.

36. Remorque de transport (6, 106) selon une ou plusieurs des revendications 32 à 35, dans laquelle le système de ventilation comprend un système d'enregistrement et des capteurs pour détecter et enregistrer des paramètres choisis dans le groupe de a) la température de l'air de ventilation, b) l'humidité de l'air de ventilation, c) la température de l'air ambiant, d) l'humidité de l'air ambiant, e) la température de l'air de sortie, f) l'humidité de l'air de sortie, g) la teneur en CO₂ de l'air de sortie, h) la durée du transport, i) la durée de la stabulation, j) le niveau de vibration, k) le niveau sonore et I) l'intensité lumineuse.

37. Remorque de transport (6, 106) selon une ou plusieurs des revendications 31 à 36, dans laquelle la remorque de transport (6, 106) présente un système de ventilation avec des appareils de ventilation et des ouvertures de ventilation à ventilation forcée, tels que p. ex. des ventilateurs et des canaux avec des ouvertures, pour ventiler les unités (3, 103, 403, 703), dans laquelle les unités (3, 103, 403, 703), à l'état chargé sur la remorque, comprennent plusieurs surfaces de fond qui sont agencées en empilements sur la remorque de transport (6, 106), et dans laquelle un volume intérieur pour recevoir des poulets de chair est présent au-dessus de la surface de fond individuelle, le système de ventilation étant agencé sur la remorque de transport (6, 106) pour amener au moins 20 ouvertures d'extrémité de colonne de ventilation séparées avec une ventilation mécanique, l'ouverture d'extrémité de colonne de ventilation individuelle se trouvant sur une surface latérale d'une unité à l'extrémité d'une colonne de ventilation ou d'aération (14 ; 16 ; 114, 116 ; 214, 216 ; 314, 316 ; 414, 416 ; 514, 516 ; 614, 616 ; 714, 716) qui s'étend dans le ou les volumes intérieurs de l'unité pendant que l'unité (3, 103, 403, 703) est temporairement chargée sur la remorque de transport (6, 106).

38. Remorque de transport (6, 106) selon une ou plusieurs des revendications 31 à 37, dans laquelle le système de ventilation sur la remorque de transport (6, 106) présente, pour chaque empilement, au moins deux ouvertures de ventilation agencées de manière à se trouver à côté d'au moins deux ouvertures d'extrémité de colonne de ventilation sur l'empilement lorsque l'empilement a été chargé sur la remorque de transport (6, 106).

39. Remorque de transport (6, 106) selon une ou plusieurs des revendications 31 à 38, dans laquelle le système de ventilation présente au moins vingt ouvertures de ventilation et/ou appareils de ventilation agencés sur le toit de la remorque de transport (6, 106) ou sur le fond de la remorque de transport (6, 106) dans des positions correspondant à des ouvertures d'extrémité de colonne de ventilation orientées vers le haut sur les unités placées temporairement sur la remorque de transport (6, 106).

40. Remorque de transport (6, 106) selon une ou plusieurs des revendications 31 à 39, dans laquelle la remorque de transport (6, 106) est pourvue d'un système d'alimentation en CO₂ qui fournit l'air de ventilation avec une teneur en CO₂ de préférence dans la plage allant de 3 à 22 % en volume, et le système d'alimentation en CO₂ obtient de préférence du CO₂ à partir de l'air expiré par les volailles et/ou des gaz d'échappement provenant du véhicule d'entraînement de transport.

41. Procédé de ventilation de poulets de chair vivants pendant l'élevage et/ou pendant le transport des poulets de chair vers l'abattoir et/ou pendant l'attente des poulets de chair vivants avant le traitement dans la zone de l'abattoir, utilisant au moins une unité (3, 103, 403, 703) selon une ou plusieurs des revendications 1 à 27 et/ou un agencement selon une ou plusieurs des revendications 28 à 30 et/ou une remorque de transport (6, 106) selon une ou plusieurs des revendications 31 à 40.

42. Procédé selon la revendication 41, **caractérisé en ce qu'**il sert à ventiler des unités (3, 103, 403, 703) déchargeables sur une remorque de transport (6, 106), les unités (3, 103, 403, 703) sur la remorque de transport (6, 106) comprenant plusieurs zones de fond, qui sont agencées en rangées sur la remorque de transport (6, 106), et dans lequel un volume intérieur pour recevoir des poulets de chair est présent au-dessus de la zone de fond individuelle, et un système de ventilation avec des appareils de ventilation amenant de l'air de ventilation forcée aux unités (3, 103, 403, 703), le système de ventilation alimentant en ventilation forcée plusieurs sections de colonne de ventilation ou d'aération, **en ce que** la section de colonne de ventilation ou d'aération individuelle s'étendant dans le(s) volume(s) intérieur(s) de l'unité (3, 103, 403, 703) dirige l'air de ventilation forcée à travers des ouvertures de ventilation ou d'aération, positionnés sur la section de colonne de ventilation ou d'aération dans le volume intérieur de l'unité, et **en ce que** des sections de colonne de ventilation ou d'aération individuelles d'unités (3, 103, 403, 703) dans une rangée forment des colonnes de ventilation ou d'aération communes (14 ; 16 ; 114, 116 ; 214, 216 ; 314, 316 ; 414, 416 ; 514, 516 ; 614, 616 ; 714, 716), ces colonnes de ventilation ou d'aération communes (14 ; 16 ; 114, 116 ; 214, 216 ; 314, 316 ; 414, 416 ; 514, 516 ; 614, 616 ; 714, 716) dirigeant l'air de ventilation forcée vers des sections de colonnes de ventilation ou d'aération se trouvant dans la rangée.

43. Procédé selon la revendication 42, dans lequel le système de ventilation de la remorque de transport (6, 106) dirige de l'air de ventilation forcée vers et/ou depuis des sections de colonne de ventilation ou d'aération dans des unités (3, 103, 403, 703) se trouvant à une extrémité de rangées, de préférence une extrémité supérieure de rangées s'étendant vers le bas ou une extrémité avant de rangées s'étendant vers l'extrémité arrière de la remorque de transport (6, 106) ou une extrémité latérale de rangées s'étendant dans la direction de la largeur de la remorque de transport (6, 106).

44. Procédé selon la revendication 43, dans lequel les unités sont chargées sur la remorque de transport (6, 106) selon un motif prédéterminé, dans lequel les sections de colonne de ventilation ou d'aération sont jointes les unes aux autres en colonnes de ventilation ou d'aération communes (14 ; 16 ; 114, 116 ; 214, 216 ; 314, 316 ; 414, 416 ; 514, 516 ; 614, 616 ; 714, 716).

45. Procédé selon une ou plusieurs des revendications 42 à 44, dans lequel au moins une section de ventilation ou d'aération du système de ventilation est activée et commence à ventiler des unités chargées (3, 103, 403, 703) pendant que d'autres unités (3, 103, 403, 703) sont chargées sur la remorque de transport (6, 106).

46. Procédé selon une ou plusieurs des revendications 42 à 45, dans lequel de l'air de ventilation ou d'aération amené à des sections de conduite de ventilation ou d'aération dans les unités (3, 103, 403, 703) provient des ouvertures de ventilation ou d'aération à l'intérieur des unités (3, 103, 403, 703) et des ouvertures de ventilation ou d'aération sur les parois latérales (12, 13 ; 112, 113 ; 212, 213 ; 312, 313 ; 412, 413 ; 512, 513 ; 612, 613 ; 712, 713) des unités (3, 103, 403, 703).

47. Procédé selon une ou plusieurs des revendications 42 à 46, dans lequel de l'air de ventilation ou d'aération amené à des sections de conduite de ventilation ou d'aération dans les unités (3, 103, 403, 703) provient d'ouvertures de ventilation ou d'aération sur des parois latérales (12, 13 ; 112, 113 ; 212, 213 ; 312, 313 ; 412, 413 ; 512, 513 ; 612, 613 ; 712, 713) des unités (3, 103, 403, 703) vers les ouvertures de ventilation ou d'aération à l'intérieur des unités (3, 103, 403, 703).

48. Procédé selon une ou plusieurs des revendications 42 à 47, dans lequel le système de ventilation sur la remorque de transport (6, 106) reçoit de l'air de ventilation des unités (3, 103, 403, 703) et renvoie au moins une partie de l'air de ventilation reçu vers les unités (3, 103, 403, 703) en tant qu'air de ventilation.

49. Procédé selon une ou plusieurs des revendications 42 à 48, dans lequel un ou plusieurs des paramètres a) température de l'air, b) humidité de l'air et c) teneur enCO₂ de l'air sont mesurés dans l'air de ventilation obtenu par les unités.

50. Procédé selon la revendication 48 ou 49, dans lequel la quantité d'air recyclé est de préférence régulée en fonction d'au moins un des paramètres mesurés de telle sorte que la quantité augmente lorsque la température de l'air est inférieure à une valeur de température prédéterminée, ou la quantité diminue lorsque l'humidité de l'air est supérieure à une valeur limite, ou la quantité diminue lorsque la teneur en CO₂ est supérieure à une valeur prédéterminée.

51. Procédé selon une ou plusieurs des revendications 42 à 50, dans lequel le système de ventilation amène de l'air de ventilation à toutes les unités (3, 103, 403, 703) sur la remorque de transport (6, 106) en une quantité dans la plage allant de 10 000 m³/h à 100 000 m³/h, de préférence dans la plage allant de 30 000 m³/h à 80 000 m³/h.

52. Procédé selon une ou plusieurs des revendications 41 à 51, qui sert à transporter des volailles vivantes vers un abattoir et à recevoir des volailles vivantes à l'abattoir, dans lequel les volailles sont maintenues pendant le transport dans des unités (3, 103, 403, 703) avec au moins deux fonds (11, 111, 211, 311, 411, 511, 611, 711), les volailles vivantes arrivant à l'abattoir en unités (3, 103, 403, 703) sur une remorque de transport (6, 106) d'un véhicule, dans lequel la remorque de transport (6, 106) comprend un système de ventilation qui amène de l'air de ventilation dans l'unité de transport de volaille individuelle par l'intermédiaire d'ouvertures de ventilation ou d'aération qui se trouvent à l'intérieur des volumes intérieurs au-dessus des fonds des unités (3, 103, 403, 703) portant la volaille, dans lequel les unités (3, 103, 403, 703) restent sur la remorque de transport (6, 106) après l'arrivée à l'abattoir pendant la stabulation et le système de ventilation est actionné pendant la stabulation.

53. Procédé selon la revendication 52, dans lequel les unités (3, 103, 403, 703) sont transférées de la remorque de transport (6, 106) à un dispositif CAS (*Controlled Atmosphère Stunning* = étourdissement sous atmosphère contrôlée) après la stabulation, et l'atmosphère contrôlée est obtenue par ventilation mécanique directement dans des conduites de ventilation s'étendant à l'intérieur de l'unité (3, 103, 403, 703) vers au moins une ouverture de sortie de gaz dans chaque volume intérieur contenant des volailles dans l'unité.

54. Procédé selon la revendication 52 ou 53, dans lequel un système d'enregistrement détecte et enregistre des paramètres choisis dans le groupe de a) la température de l'air de ventilation, b) l'humidité de l'air de ventilation, c) la température de l'air de sortie, d) l'humidité de l'air de sortie, e) la teneur en CO₂ de l'air de sortie, f) la température ambiante, g) l'humidité ambiante, h) la durée du transport, i) la durée de stabulation, j) le niveau de vibration, k) le niveau sonore et I) l'intensité lumineuse.

55. Procédé selon la revendication 54, dans lequel au moins les paramètres c) température de l'air de sortie et d) humidité de sortie sont détectés et enregistrés.

56. Procédé selon la revendication 54 ou 55, dans lequel la remorque de transport (6, 106) reçoit plusieurs unités (3, 103, 403, 703) ou plusieurs empilements d'unités (3, 103, 403, 703) et dans lequel le système d'enregistrement détecte et enregistre les paramètres sélectionnés pour l'unité individuelle (3, 103, 403, 703) ou l'empilement individuel d'unités (3, 103, 403, 703).

57. Abattoir de volailles avec une zone de stabulation d'attente de volailles pour volailles vivantes utilisant au moins une unité (3, 103, 403, 703) selon une ou plusieurs des revendications 1 à 27 et/ou un agencement selon une ou plusieurs des revendications 28 à 30 et/ou une remorque de transport (6, 106) selon une ou plusieurs des revendications 31 à 40.
